(19) Europäisches Patentamt
European Patent Office
Office européen des brevets

(11) EP 1 727 119 A1

(12) **EUROPEAN PATENT APPLICATION**
published in accordance with Art. 158(3) EPC

(43) Date of publication:
**29.11.2006 Bulletin 2006/48**

(21) Application number: **04788039.8**

(22) Date of filing: **22.09.2004**

(51) Int Cl.:
***G09G 3/36*** *(2006.01)* ***G09G 3/20*** *(2006.01)*
***G02F 1/133*** *(2006.01)*

(86) International application number:
**PCT/JP2004/013856**

(87) International publication number:
**WO 2005/081217 (01.09.2005 Gazette 2005/35)**

(84) Designated Contracting States:
**DE FR GB NL**

(30) Priority: **19.02.2004 JP 2004043596**
**19.02.2004 JP 2004043600**

(71) Applicant: **SHARP KABUSHIKI KAISHA**
**Osaka-shi, Osaka 545-8522 (JP)**

(72) Inventors:
- **ITOH, Hiroshi**
**Chiba-shi, Chiba 262-0032 (JP)**
- **SEO, Mitsuyoshi**
**Chiba 273-0034 (JP)**

(74) Representative: **Müller, Frithjof E.**
**Müller Hoffmann & Partner**
**Patentanwälte**
**Innere Wiener Strasse 17**
**81667 München (DE)**

(54) **VIDEO DISPLAY DEVICE**

(57) A first light emission component is emitted which accounts for D% of the vertical cycle of a video signal in terms of duration and S% of the light emission intensity of a pixel over the vertical cycle. A second light emission component is emitted which accounts for (100-D)% of the vertical cycle in terms of duration and (100-S)% of the light emission intensity. Settings are made so that D and S meet a set of conditions A, $62 \leq S < 100$, $0 < D < 100$, and $D < S$; or a set of conditions B, $48 < S < 62$ and $D \leq (S-48)/0.23$.

FIG. 2

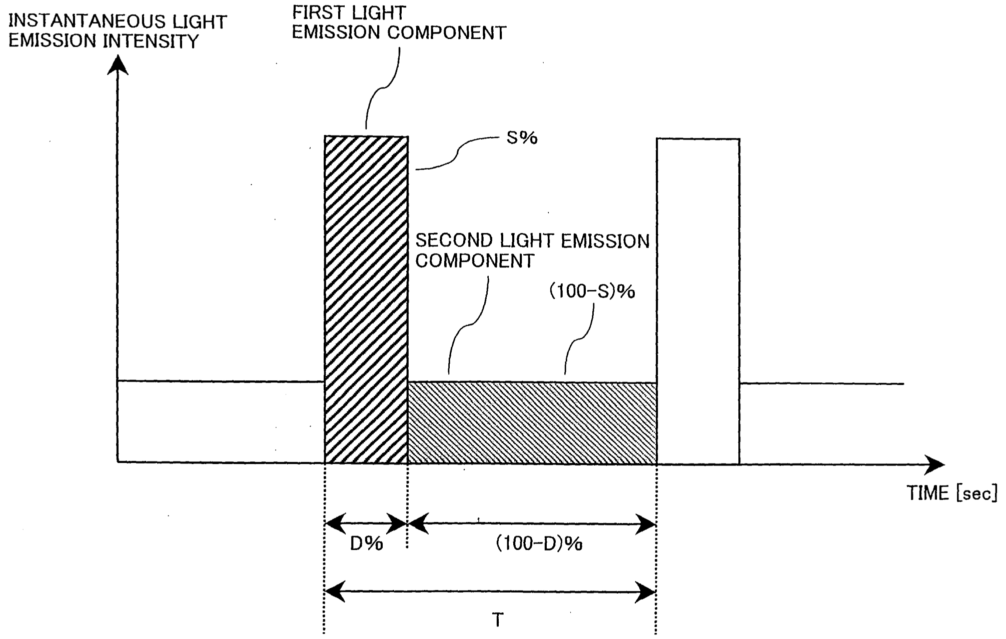


EP 1 727 119 A1

**Description**

TECHNICAL FIELD

The present invention relates to video display devices, and particularly to methods for improving display quality of a video display device having hold-type electro-optical conversion properties, the typical example of which being a liquid crystal display device.

BACKGROUND ART

Display devices which have recently become very popular, of which a typical example is the LCD (liquid crystal display), have found a wide variety of applications including compact mobile terminals and large screen televisions.

Active matrix LCDs and organic EL (electroluminescent) displays differ in electro-optical conversion properties from CRTs (cathode ray tubes). In principle, the former maintain a substantially constant light emission luminance of a display screen throughout one frame of video display. Such a light emission property is referred to as a hold type.

Current challenges are the hold-type driving causing blurs, trailing and bleeding, which lead to image quality degradation of moving images. Image quality degradation of moving images on LCDs is discussed in documents including non-patent document 1 ("LCDs offer better moving image display, PDPs fight back with lower power consumption," article in Nikkei Electronics, p. 110, Nov. 18 Issue, 2002) and non-patent document 2 ("High quality moving image display technology on LCDs," Display Device Monthly, p. 100, June, 2003).

A solution to the trailing in the LCD is to simulate intermittent switch on/off of light emission properties (impulse light emission). For example, the "liquid crystal display device" patent document 1 (Japanese Unexamined Patent Publication 11-202285/1999 [Tokukaihei 11-202285; published on July 30, 1999]) turns on/off a backlight for impulse light emission to illuminate a liquid crystal display device section, thereby producing clear outlines for moving images. The "display panel and drive method therefore and video projector" in patent document 2 (Japanese Unexamined Patent Publication 3-284791/1991 [Tokukaihei 3-284791; published on December 16, 1991]) suggests that light from a projector lamp be blocked with a shutter to provide impulse light emission.

Now, referring to Figure 114, the following will describe principles of trailing caused by hold-type driving. Figure 114 is a schematic illustration of a white object being displayed on a black background on an LCD. The object is 3 pixels high. Its width is arbitrary. The object is moving downward on the screen at a constant rate of one pixel per frame.

Figure 114(a) shows a light emission waveform for a light source. The vertical axis indicates light emission luminance. The horizontal axis indicates time. Note that the light source is a continuous light emission type with a constant light emission luminance with time.

Figure 114(b) shows the outline of an object being displayed on an LCD at an instant (an area shaded with vertical stripes) in Figure 114(c). The horizontal axis indicates space. The vertical axis indicates transmittance. As shown in Figure 114(b), the transmittance abruptly changes with space.

Figure 114(c) is a schematic illustration of an object moving. The horizontal axis indicates time, and the vertical axis space. The object is displayed moving over time from a crosshatched region to next in Figure 114(c). Light is emitted in the region at a screen luminance determined by the transmittance of the pixels.

The object is moving in the direction indicated by arrow 1 in Figure 114(c) relative to the space axis. As the observer closely follows the moving object with his eyes, the observer moves his eyes in the direction indicated by arrow 2 to follow the object. Thus, luminance changes along arrow 2 are integrated (averaged) on the observer's retina. Consequently, the observer perceives the object as shown in Figure 114(d).

As shown in Figure 114(e), the object appears to the observer as if it had a constant luminance at the middle, but gradually decreasing luminance closer to an edge of the object. In Figure 114(e), the horizontal axis indicates space, and the vertical axis indicates luminance.

This is how trailing occurs with a moving image. A comparison of Figures 114(b) and 114(e) demonstrates that the object, as perceived by the observer, has low luminance near edges, that is, its outline distorted. The observer recognizes the luminance tilting as image quality degradation, such as blurring, trailing, or bleeding.

A solution to trailing caused by the hold-type driving is to turn on/off a light source to produce impulses. The following will present a prior art example of impulse light emission.

The "image display device" in patent document 3 (Japanese Unexamined Patent Publication 9-325715/1997 [Tokukaihei 9-325715; published on December 16, 1997]) provides a shutter along an optical path running from a light source to the observer to restrict the length of the light emission period in the second half of a field period of the image signal.

The "matrix display system and drive method therefore" in patent document 4 (Published Japanese Translation of PCT Application 8-500915/1996 [Tokuhyohei 8-500915; published on January 30, 1996]) suggests that display information be addressed in a time shorter than a field period of a video signal and the panel be illuminated after a stable response of the liquid crystal.

Next, referring to Figure 115, the following will describe principles in reducing trailing in impulse light emission. Figure 115 shows an object moving downward on screen similarly to Figure 114. In impulse light emission, as shown in Figure 115(a), a light source flashes. The luminance of the LCD is a product of the luminance of the light source and the transmittance of pixels on the LCD panel. Thus, the LCD screen luminance is obtained only while the light source is lit.
Therefore, as shown in Figure 115(c), the crosshatched part of the object emits light. The luminance in the crosshatched regions appears as being integrated to the observer's eye. The object is perceived as shown in Figure 115(d).
Figure 115(e) shows the luminance of the object in Figure 115(d). Figure 115(e) shows that the observer perceives the object having decreasing luminance closer to its edges. A comparison of Figures 115(e) and 114(e) however demonstrates that the luminance changes in Figure 115(e) takes place more abruptly. Therefore, impulse light emission reduces trailing (blurred outlines).
The phase of light emission with respect to a video signal in conventional impulse light emission occurs in a second half of a repeated cycle in which the pixel transmittance is updated. The temporal response of liquid crystal is an exponential function with a time constant. The transmittance therefore does not instantly reach a desirable value. Therefore, the best light emission phase in conventional art occurs in the second half of a transmittance update timing. The liquid crystal, while changing, is hardly visible to the observer's eye.
The "display device" in patent document 5 (Japanese Unexamined Patent Publication [Tokukai] 2002-287696 [published on October 4, 2002]) is an active-drive organic EL display device which contains, in each pixel, a TFT between a storage capacitor and the gate of another TFT driving an organic EL element. Within less than one frame period into a non-select period for that non-driver pixel, the TFT is turned on to pass current to the organic EL element. The current to the organic EL element is cut off by turning off the TFT after a predetermined time. With this arrangement, light emission properties of the hold-type display elements are made similar to those of the impulse-type display elements in order to prevent the occurrence of motion blur.
As described above, since the organic EL display device has a quick response unlike typical liquid crystal, the organic EL display device often employs an approach to simulate impulse light emission using hold light emission where a desired current is passed for light emission immediately after the start of a non-select time, followed by terminating or restricting the light emission by an arbitrary means.

DISCLOSURE OF INVENTION

However, the impulse-type display above results in artifacts called flickering. The disruptive flickering causes eye strain and otherwise negatively affects the observer. Especially, with increased screen luminance and size, as well as other improvements in LCD display quality, the artifact becomes more likely to be recognized by the observer. Since there is a tradeoff between reduction of flickering and reduction of trailing, there is no way addressing both motion trailing and disruptive flickering. The following will describe the tradeoff relationship more specifically in reference to Figures 116(a) to 116(i) and 117.
Figures 116(a), 116(b), and 116(c) show shows a light emission pulse waveform, an amount of motion trailing, and an amount of flickering respectively for cases where the duty ratio is 25%. Similarly, Figures 116(d), 116(e), and 116(f) shows a light emission pulse waveform, an amount of motion trailing, and an amount of flickering respectively for cases where the duty ratio is 50%. Figures 116(g), 116(h), and 116(i) a light emission pulse waveform, an amount of motion trailing, and an amount of flickering respectively for cases where the duty ratio is 75%. The duty ratio is a ratio of an ON period to a pulse cycle.
The pulse waveforms in Figures 116(a), 116(d), and 116(g) are ON waveforms of a light source. When a waveform indicates a HIGH, the light source is ON. The maximum luminance is adjusted between different duty ratios to equalize the integrations of light emission luminance.
Figures 116(b), 116(e), and 116(h) show amounts of trailing after reducing trailing by the impulse light emission described in reference to Figure 115 for the foregoing duty ratios. The sharper the tilt indicating a luminance change in the figures, the further the moving image quality is improved, and the less the trailing (motion image blurs).
Figures 116(c), 116(f), and 116(i) show amounts of flickering. The vertical axis indicates spectrum intensity with respect to frequency, and the horizontal axis indicates frequency. The amount of flickering is derived by Fourier transforming the pulse waveforms in Figures 116(a), 116(d), and 116(g) into the frequency domain.
For example, if the video signal input to the display device is an NTSC video signal, the pulse waveform repeats at a 60-Hz cycle. Therefore, the first harmonic, obtained from the Fourier transform, is also 60 Hz. The greater the ratio of the first harmonic to the DC component, the greater the disruptive flickering.
As can be understood from Figure 116, there is a tradeoff between the amount of trailing and the amount of flickering. In other words, if the duty ratio is increased to reduce the amount of flickering, the amount of flickering is indeed reduced. The amount of trailing however is increased, and the moving image quality improvement effects are lessened. Conversely, if the duty ratio is reduced to reduce the amount of trailing, the amount of flickering is increased.

Figure 117(a) illustrates the relationship between the amount of flickering and the duty ratio of the pulse waveform of light emission of a light source. Here, the magnitude of the first harmonic of the pulse waveform for the duty ratio of x is given by a sampling function: sin(x)/x. Therefore, the smaller the duty ratio, the greater the flickering.

Figure 117(b) illustrates the relationship between the amount of trailing and the duty ratio of the pulse waveform of light emission of a light source. Here, the amount of trailing is defined as the tilt of a luminance change at an object outline when the eye recognizes the moving object. As shown in Figure 117(b), the amount of trailing is inversely proportional to the duty ratio x. Therefore, the smaller the duty ratio, the greater the moving image quality improvement effects.

Figure 118 shows Figures 117(a) and 117(b) in a single figure with horizontal axis indicating the amount of trailing and the vertical axis indicating the amount of flickering. However, thresholds from 15% to 85% are specified with respect to the vertical axis of the waveform described in Figure 114(e) in consideration of the sensitivity of the human eye, and the amount of trailing is defined as a spatial extent of trailing in that range.

On the curve in Figure 118, the point where the amount of trailing is 0.7, and the amount of flickering is 0 represents properties of a general hold-type LCD. Applying conventional intermittent switch-on/off technology will cause the amount of trailing and the amount of flickering to move on the Figure 118 curve in accordance with duty ratio. In other words, the smaller the duty ratio, the more the amount of trailing is decreased, and the further the moving image properties are improved, whereas the more the amount of flickering is increased.

Clearly from Figures 117 and 118, there is a tradeoff between the amount of trailing and the amount of flickering in relation to the duty ratio. It is impossible to simultaneously reduce motion trailing and disruptive flickering. However, if the curve is moved as indicated by the white arrow in Figure 118, it is possible to simultaneously reduce motion trailing and disruptive flickering.

The invention, in view of the conventional problems, has an objective to provide a video display device capable of simultaneously reducing motion trailing and disruptive flickering between which there is a tradeoff.

A video display device of the present invention, to solve the problems, is characterized as follows. The device modulates luminances of pixels in accordance with a video signal to display video. The device emits a first light emission component and a second light emission component. The first light emission component accounts for D% of a vertical cycle of the video signal in terms of duration and S% of a light emission intensity of a pixel over the vertical cycle. The second light emission component accounts for (100-D)% of the vertical cycle in terms of duration and (100-S)% of the light emission intensity. D and S meet either a set of conditions A: $62 \leq S < 100$, $0 < D < 100$, and $D < S$; or a set of conditions B: $48 < S < 62$, and $D \leq (S-48)/0.23$.

According to the arrangement, D indicates the duty ratio of the first light emission component and that of the second light emission component, while S indicates the light emission intensity ratio. The inventors of the present invention examined the amounts of trailing and the amounts of flickering obtained for various duty ratios D and light emission intensity ratios S, which led the inventors to conclude that the amount of trailing and the amount of flickering are simultaneously reduced by setting the duty ratio D and the light emission intensity ratio S so that D and S meet the set of conditions A or the set of conditions B. Therefore, with the video display device arranged as above, the amount of trailing and the amount of flickering are reduced at the same time.

Another video display device of the present invention, to solve the problems, is characterized as follows. The device modulates luminances of pixels in accordance with a video signal to display video. The device includes video display means setting transmittances of pixels in accordance with the video signal. The device also includes a first light source body emitting intermittent light represented by a pulsed light emission intensity waveform which is in synchronism with the video signal and a second light source body emitting continuous light represented by constant light emission intensity. The video display means is illuminated by illumination light obtained by mixing the intermittent light and the continuous light.

According to the arrangement, the illumination light is obtained by mixing the intermittent light emitted from the first light source body and the continuous light emitted from the second light source body. Therefore, the illumination light obtained from the light source body of the present invention has a light emission intensity maintained at a constant level by the continuous light and also has the light emission intensity intermittently shoot up when the intermittent light is emitted.

Therefore, when a moving object is displayed with the video display means of the present invention, the outline of the object is illuminated with light emission intensities corresponding to two types of light emission intensities: the continuous light and the intermittent light. Accordingly, the outline of the moving object is displayed with two types of luminance changes: those corresponding only to the continuous light and those corresponding to both the intermittent light and the continuous light.

As a result, in a video displaying the outline of a moving object, the observer cannot identify contrast for luminance changes corresponding only to the continuous light and can identify only contrast for luminance changes corresponding to the intermittent light and the continuous light. Thus, the motion trailing which occurs when displaying a moving object can be reduced.

In addition, the inventors of the present invention have verified that, as to the illumination light emitted from the light source body of the present invention, the amount of flickering can be lowered by adjusting the duty ratio of the intermittent light. For example, it has been verified that the amount of flickering, which was conventionally 90%, can be lowered to 75% if the duty ratio of the intermittent light is set to 20%, and the luminance of the continuous light with respect to the luminance of the illumination light is set to 20%.

As described in the foregoing, the video display device of the present invention uses a mixture of the intermittent light and the continuous light as the illumination light and is therefore capable of simultaneously reducing motion trailing and the disruptive flickering.

Especially, the intermittent light and the continuous light are emitted from the respective light sources corresponding to the first light source body and the second light source body.

Therefore, it is sufficient to optimize the first light source body in order to optimize the light emission state of the intermittent light and optimize the second light source body in order to optimize the light emission state of the continuous light. In this manner, the light emission states of the intermittent light and the continuous light can be individually optimized, which facilitates cost cuts and circuit reliability improvements by simplifying circuit arrangement.

Another video display device of the present invention, to solve the problems, is characterized as follows. The device modulates luminances of pixels in accordance with a video signal to display video. The device emits a first light emission component and a second light emission component. The first light emission component accounts for D% of a vertical cycle of the video signal in terms of duration and S% of a light emission intensity of a pixel over the vertical cycle. The second light emission component accounts for (100-D)% of the vertical cycle in terms of duration and (100-S)% of the light emission intensity. The device includes scene change detect means detecting an amount of scene change in the video from the video signal. The value of S or D is changed in accordance with the amount of scene change.

Frame period delay is performed on the video signal using a frame memory, etc. The amount of scene change is calculated from a differential from the delayed signal. Alternatively, an average luminance level of video is calculated. Detection is made by calculating the amount of scene change by means of an interframe differential of the average luminance level.

The detected amount of scene change is the amount of motion of the video signal per screen. The optimal amount of trailing and amount of flickering can be reduced through the control of the light emission intensity ratio S and the duty ratio D by means of the amount of scene change.

Another video display device of the present invention, to solve the problems, is characterized as follows. The device modulates luminances of pixels in accordance with a video signal to display video. The device emits a first light emission component and a second light emission component. The first light emission component accounts for D% of a vertical cycle of the video signal in terms of duration and S% of a light emission intensity of a pixel over the vertical cycle. The second light emission component accounts for (100-D)% of the vertical cycle in terms of duration and (100-S)% of the light emission intensity. The device includes average luminance detect means detecting an average luminance level of the video from the video signal. The value of S or D is changed in accordance with the average luminance level.

Another video display device of the present invention, to solve the problems, is characterized as follows. The device modulates luminances of pixels in accordance with a video signal to display video. The device emits a first light emission component and a second light emission component. The first light emission component accounts for D% of a vertical cycle of the video signal in terms of duration and S% of a light emission intensity of a pixel over the vertical cycle. The second light emission component accounts for (100-D)% of the vertical cycle in terms of duration and (100-S)% of the light emission intensity. The device includes histogram detect means detecting a histogram of the video from the video signal. The value of S or D is changed in accordance with the histogram.

In other words, the optimal amount of trailing and amount of flickering can be reduced by obtaining information as to whether the screen is bright or dark not only from the amount of motion (interframe differential of the average luminance level) of the video to be displayed, but also from the absolute value of the average luminance level and the histogram of luminance distribution.

Another video display device of the present invention, to solve the conventional problems, is characterized as follows. The device modulates luminances of pixels in accordance with a video signal to display video. The device emits a first light emission component and a second light emission component. The first light emission component accounts for D% of a vertical cycle of the video signal in terms of duration and S% of a light emission intensity of a pixel over the vertical cycle. The second light emission component accounts for (100-D)% of the vertical cycle in terms of duration and (100-S)% of the light emission intensity. $D/2 \leq P \leq (100-D/2)$, and $0 < D < 100$, where P is a ratio in percentages of a duration to the vertical cycle, the duration beginning at a start of the vertical cycle and ending at a midpoint of a light emission period associated with the first light emission component.

According to the arrangement, the light emission phase P% and the duty ratio D% of the first light emission component in the first light emission component and the second light emission component are such that $D/2 \leq P \leq (100-D/2)$ and set up to meet the condition: $0 < D < 100$. Therefore, motion trailing is reduced, and at the same time disruptive flickering is lowered. Disruptive flickering is not only unpleasant to the user, but causes insufficient attention and eye strain or otherwise negatively affects the user. According to the present invention, however, these negative effects are preventable. Furthermore, lowering disruptive flickering is essential in improving display quality of a high-luminance/large-screen video display device. In this manner, according to the present invention, the observer is given optimal display quality.

The video display devices of the present invention are applicable to liquid crystal display devices, whether transmissive or reflective, in which a liquid crystal element as a non-luminous element is used as a display element. The devices are also applicable to display devices in which a self-luminous display panel (e.g., organic EL panel) is used.

Additional objects, advantages and novel features of the invention will be set forth in part in the description which follows, and in part will become apparent to those skilled in the art upon examination of the following or may be learned by practice of the invention.

BRIEF DESCRIPTION OF DRAWINGS

[Figure 1] Figure 1 is a block diagram illustrating the configuration of a video display device in accordance with an embodiment of the present invention.

[Figure 2] Figure 2 is a waveform for the temporal response of light emission of a given pixel in the video display device in Figure 1.

[Figure 3] Figure 3(a) and Figure 3(b) illustrate examples of a light emission waveform for a pixel in the video display device in Figure 1.

[Figure 4] Figure 4 qualitatively illustrates effects of the video display device in Figure 1.

[Figure 5] Figures 5(a) to 5(i) quantitatively illustrate effects of the video display device in Figure 1.

[Figure 6] Figure 6 is a summary of properties of the light emission patterns of Figure 5.

[Figure 7] Figure 7 illustrates properties of the light emission patterns shown in Figure 5.

[Figure 8] Figures 8(a) to 8(c) illustrate the relationship among the duty ratio D, the amount of trailing, and the amount of flickering when the light emission intensity ratio S is fixed at 70% or 90% in the video display device of Figure 1.

[Figure 9] Figures 9(a) to 9(c) illustrate the relationship among the light emission intensity ratio S of the first light emission component, the amount of trailing, and the amount of flickering when the duty ratio D is fixed at 10% or 70% in the video display device of Figure 1.

[Figure 10] Figures 10(a) and 10(b) illustrate the relationship among the duty ratio D, the amount of trailing, and the amount of flickering when the light emission intensity ratio S is fixed at 40% in the video display device in Figure 1.

[Figure 11] Figures 11(a) and 11(b) illustrate the relationship among the duty ratio D, the amount of trailing, and the amount of flickering when the light emission intensity ratio S is fixed at 60% in the video display device in Figure 1.

[Figure 12] Figure 12 illustrates conditions on a duty ratio D and a light emission intensity ratio S under which the amounts of trailing and flickering are simultaneously lowered.

[Figure 13] Figures 13(a) and 13(b) illustrate the relationship between the amounts of trailing and flickering when the light emission intensity ratio S = 62% in the video display device of Figure 1.

[Figure 14] Figures 14(a) and 14(b) illustrate the relationship between the amounts of trailing and flickering when the light emission intensity ratio S = 48% in the video display device of Figure 1.

[Figure 15] Figures 15(a) and 15(b) illustrate upper limits of the duty ratio D for which the amounts of trailing and flickering are simultaneously lowered for $48 < S\% < 62$ in the video display device of Figure 1.

[Figure 16] Figures 16(a) to 16(c) illustrate how trailing and flickering are reduced, as represented by 6 points selected from the regions where the light emission intensity ratio S and the duty ratio D meet the set of conditions B.

[Figure 17] Figures 17(a) and 17(b) illustrate an example of the light emission waveform applicable to the video display device in Figure 1.

[Figure 18] Figures 18(a) and 18(b) illustrate another example of the light emission waveform applicable to the video display device in Figure 1.

[Figure 19] Figure 19 illustrates another example of the light emission waveform applicable to the video display device in Figure 1.

[Figure 20] Figure 20 illustrates another example of the light emission waveform applicable to the video display device in Figure 1.

[Figure 21] Figure 21 illustrates the duty ratio D and the light emission intensity ratio S at which the amount of trailing and the amount of flickering are simultaneously reduced, on an assumption that the human eye responds to the luminance level range of trailing of 10% to 90% (see Figure 5).

[Figure 22] Figures 22(a) to 22(c) illustrate the relationship between the amount of trailing and the amount of flickering when light emission intensity ratio S = 69% and when S = 79%, on an assumption that the human eye responds to the luminance level range of trailing of 10% to 90% (see Figure 5).

[Figure 23] Figures 23(a) and 23(b) illustrate upper limits of the duty ratio D for which the amounts of trailing and flickering are simultaneously lowered for 69% < S% < 79%, on an assumption that the human eye responds to the luminance level range of trailing of 10% to 90%.
[Figure 24] Figure 24 explains the flicker lowering effect by the video display device in Figure 1 by results of subjective evaluation.
[Figure 25] Figure 25 is a cross-sectional view of a video display device in accordance with another embodiment of the present invention.
[Figure 26] Figure 26 illustrates the relationship between the waveform modulated by an arbitrary pixel in the video display device in Figure 25 and the light emission waveform of the light source.
[Figure 27] Figure 27 qualitatively illustrates effects of the video display device in Figure 25.
[Figure 28] Figure 28(a) illustrates changes in transmittance of a pixel when liquid crystal response is considered. Figure 28(b) illustrates changes in luminance which occur on an edge in the moving direction of the object. Figure 28(c) illustrates changes in luminance which occur on a rear edge of a moving object.
[Figure 29] Figure 29 illustrates the phase of the first light emission component with respect to respond of liquid crystal.
[Figure 30] Figures 30(a) to 30(c) illustrate effects of the video display device in Figure 25 where Duty Ratio D = 30%, Light Emission Intensity Ratio S = 70%, and Time Constant of Liquid Crystal = 3.5 milliseconds.
[Figure 31] Figure 31 illustrates the phase of the first light emission component where Duty Ratio D = 30%, Light Emission Intensity Ratio S = 70%, and Time Constant of Liquid Crystal = 3.5 milliseconds.
[Figure 32] Figure 32 illustrates the arrangement around a pixel in an organic panel of a video display device in accordance with another embodiment of the present invention.
[Figure 33] Figure 33 is a timing chart regarding operation of an organic EL having pixels shown in Figure 32.
[Figure 34] Figure 34 illustrates the arrangement of a video display device in accordance with another embodiment of the present invention.
[Figure 35] Figure 35 is a time chart depicting operations of the video display device in Figure 34.
[Figure 36] Figure 36 illustrates the arrangement of a video display device in accordance with another embodiment of the present invention.
[Figure 37] Figure 37 illustrates the arrangement of a video display device in accordance with another embodiment of the present invention.
[Figure 38] Figure 38 is a timing chart describing operation of the video display device in Figure 37.
[Figure 39] Figures 39(a) and 39(b) illustrate the relationship between the continuous light and the intermittent light and the relationship between the first light emission component and the second light emission component.
[Figure 40] Figure 40 illustrates the arrangement of a video display device in accordance with another embodiment of the present invention.
[Figure 41] Figure 41 is a timing chart depicting operations of the video display device in Figure 40.
[Figure 42] Figures 42(a) and 42(b) illustrate examples of the structure of the scene change detect circuit.
[Figure 43] Figure 43 schematically illustrates one vertical cycle of the light emission intensity of the illumination light illuminating the display panel in Figure 40.
[Figure 44] Figures 44(a) to 44(c) illustrate example procedures to control illumination light illuminating a display panel in Figure 40 using a scene change detection signal.
[Figure 45] Figures 45(a) to 45(d) illustrate procedures to control the light emission intensity ratio S2 using a scene change detection signal.
[Figure 46] Figures 46(a) and 46(b) illustrate procedures to control the duty ratio D or the light emission intensity ratio S2 by using the APL information and the amount of scene change obtained from the scene change detect circuit arranged as in Figure 42(b) together.
[Figure 47] Figure 47 illustrates the structure of a video display device in accordance with another embodiment of the present invention.
[Figure 48] Figure 48 illustrates the structure of a video display device in accordance with another embodiment of the present invention.
[Figure 49] Figure 49 is a time chart depicting operations of the LCD in Figure 48.
[Figure 50] Figure 50 illustrates the structure of a video display device in accordance with another embodiment of the present invention.
[Figure 51] Figure 51 illustrates the structure of a video display device in accordance with another embodiment of the present invention.
[Figure 52] Figure 52 is a time chart depicting operations of the LCD in Figure 51.
[Figure 53] Figure 53 illustrates a light emission waveform for a second light emission component applicable to the present invention.
[Figure 54] Figure 54 illustrates effects of lowering the amount of trailing when the light emission waveform in Figure 53(a) is used.

[Figure 55] Figure 55(a) to Figure 55(c) show results of calculation of Fourier series of the light emission waveform in Figure 54(a) and a light emission waveform of conventional art.

[Figure 56] Figure 56 is a block diagram illustrating the structure of a video display device in accordance with another embodiment of the present invention.

[Figure 57] Figure 57 is a timing chart depicting operations of the video display device in Figure 56.

[Figure 58] Figure 58 is a block diagram illustrating the structure of a video display device in accordance with another embodiment of the present invention.

[Figure 59] Figure 59 is a timing chart depicting operations of a video display device in accordance with another embodiment of the present invention.

[Figure 60] Figure 60 is a timing chart depicting operations of a video display device in accordance with another embodiment of the present invention.

[Figure 61] Figure 61 illustrates a light emission waveform for a video display device in accordance with an embodiment of the present invention.

[Figure 62] Figure 62 is a block diagram illustrating the structure of a video display device in accordance with an embodiment of the present invention.

[Figure 63] Figure 63 is a cross-sectional view of the video display device in Figure 62.

[Figure 64] Figure 64 is a timing chart depicting operations of the video display device in Figure 62.

[Figure 65] Figure 65 qualitatively illustrates operations of lowering trailing and disruptive flickering in the video display device in Figure 62.

[Figure 66] Figures 66(a) to 66(i) quantitatively illustrate effects of the video display device in Figure 62.

[Figure 67] Figure 67 quantitatively illustrates effects of the video display device in Figure 62.

[Figure 68] Figure 68 quantitatively illustrates effects of the video display device in Figure 62.

[Figure 69] Figures 69(a) to 69(f) illustrate the relationship between the duty ratio D and the intermittent light emission phase P of an intermittent light emission component in Figure 61.

[Figure 70] Figures 70(a) to 70(f) illustrate the relationship between the duty ratio D and the intermittent light emission phase P of the intermittent light emission component in Figure 61.

[Figure 71] Figures 71 (a) to 71(f) illustrate the relationship between the duty ratio D and the intermittent light emission phase P of the intermittent light emission component in Figure 61.

[Figure 72] Figure 72 illustrates a preferred relationship between the duty ratio D and the intermittent light emission phase P of the intermittent light emission component in Figure 61.

[Figure 73] Figures 73(a) to 73(e) illustrate the phase of a light emission waveform in relation to the video display device in Figure 62.

[Figure 74] Figure 74 illustrates effects of the video display device in Figure 62 through subjective evaluation.

[Figure 75] Figure 75 is a block diagram illustrating the structure of a video display device in accordance with another embodiment of the present invention.

[Figure 76] Figure 76 is a timing chart depicting operations of the video display device in Figure 75.

[Figure 77] Figure 77 is a timing chart depicting operations of a video display device in accordance with another embodiment of the present invention.

[Figure 78] Figures 78(a) to 78(d) illustrate the best light emission phase of an intermittent light emission component when the liquid crystal has a response time constant of 3.5 milliseconds.

[Figure 79] Figures 79(a) to 79(d) illustrate the best light emission phase of an intermittent light emission component when the liquid crystal has a time constant of 2.2 milliseconds.

[Figure 80] Figure 80 is a block diagram illustrating the structure of a video display device in accordance with another embodiment of the present invention.

[Figure 81] Figure 81 is a timing chart depicting operations of the EL pixel in Figure 80.

[Figure 82] Figure 82 illustrates another structure of the EL pixel in Figure 80.

[Figure 83] Figure 83 is a timing chart depicting operations of the pixel in Figure 82.

[Figure 84] Figure 84 is a timing chart depicting operations of a video display device in accordance with another embodiment of the present invention.

[Figure 85] Figures 85(a) to 85(c) illustrate the relationship between a duty ratio D, an amount of trailing, and an amount of flickering when the light emission intensity ratio S is fixed at 70% or 90%.

[Figure 86] Figures 86(a) to 86(c) illustrate the relationship between a light emission intensity ratio S of the first light emission component, an amount of trailing, and an amount of flickering when the duty ratio D is fixed at 10% or 70%.

[Figure 87] Figures 87(a) and 87(b) illustrate the relationship between a duty ratio D, an amount of trailing, and an amount of flickering when the light emission intensity ratio S is fixed at 40%.

[Figure 88] Figures 88(a) and 88(b) illustrate the relationship between a duty ratio D, an amount of trailing, and an amount of flickering when the light emission intensity ratio S is fixed at 60%.

[Figure 89] Figure 89 illustrates the relationship between a preferred duty ratio D and a light emission intensity ratio S in the present invention.

[Figure 90] Figures 90(a) and 90(b) illustrate the relationship between an amount of trailing and an amount of flickering when the light emission intensity ratio S = 62%.

[Figure 91] Figures 91 (a) and 91(b) illustrate the relationship between an amount of trailing and an amount of flickering when the light emission intensity ratio S = 48%.

[Figure 92] Figures 92(a) and 92(b) illustrate a maximum duty ratio D at which the amount of trailing and the amount of flickering are simultaneously lowered when 48 < S < 62. The ratio D is calculated based on a trailing model and flicker analysis.

[Figure 93] Figures 93(a) to 93(c) illustrate how much of the trailing and flickering have been reduced, by plotting typical 6 points selected from the areas which meets the set of conditions A and the set of conditions B.

[Figure 94] Figures 94(a) and 94(b) illustrate an example of a light emission waveform applicable to a video display device of the present invention.

[Figure 95] Figures 95(a) and 95(b) illustrate another example of a light emission waveform applicable to a video display device of the present invention.

[Figure 96] Figure 96 illustrates another example of a light emission waveform applicable to a video display device of the present invention.

[Figure 97] Figure 97 illustrates another example of a light emission waveform applicable to a video display device of the present invention.

[Figure 98] Figure 98 illustrates a duty ratio D and a light emission intensity ratio S at which the amount of trailing and the amount of flickering are simultaneously lowered, provided that the human eye responds to trailing where luminance changes 10% to 90%.

[Figure 99] Figures 99(a) to 99(c) illustrate an amount of trailing and an amount of flickering when S is fixed at 69 or 79 under the set of conditions A1 or the set of conditions B1 shown in Figure 98.

[Figure 100] Figures 100(a) and 100(b) illustrate a maximum duty ratio D at which the amount of trailing and the amount of flickering are simultaneously lowered when 69 < S < 79 as under the set of conditions B1 in Figure 98. The ratio D is calculated based on a trailing model and flicker analysis.

[Figure 101] Figure 101 is a block diagram illustrating the structure of a video display device in accordance with another embodiment of the present invention.

[Figure 102] Figure 102 is a block diagram illustrating the structure of an ON signal generating circuit in the LCD in Figure 101.

[Figure 103] Figure 103 illustrates an operation waveform for an ON signal generating circuit in relation to Figure 102.

[Figure 104] Figure 104 illustrates a pulse signal waveform output to the gate lines g0 to g7 and the lines for ON signals p0 to p3 in the LCD in Figure 101.

[Figure 105] Figure 105 illustrates a light emission waveform and an electric power waveform for a lamp in the LCD in Figure 101.

[Figure 106] Figure 106 qualitatively illustrates the LCD in Figure 101 reducing blurring of a moving image.

[Figure 107] Figure 107 quantitatively illustrates flickers occurring with the LCD in Figure 101.

[Figure 108] Figure 108 illustrates a light emission waveform for a lamp in a video display device based on conventional art.

[Figure 109] Figure 109 is a block diagram illustrating another example of the structure of the ON signal generating circuit in the LCD in Figure 101.

[Figure 110] Figure 110 is a block diagram illustrating another example of the structure of the ON signal generating circuit in the LCD in Figure 101.

[Figure 111] Figure 111 illustrates an operation waveform for an ON signal generating circuit associated with Figure 110.

[Figure 112] Figure 112 is a block diagram illustrating another example of the structure of the ON signal generating circuit in the LCD in Figure 101.

[Figure 113] Figure 113 is a block diagram illustrating another example of the structure of the ON signal generating circuit in the LCD in Figure 101.

[Figure 114] Figure 114 illustrates principles in trailing occurring from hold-type drive.

[Figure 115] Figure 115 illustrates principles in reducing trailing with impulse light emission.

[Figure 116] Figures 116(a) to 116(i) quantitatively illustrate challenges facing conventional motion trailing reducing technology.

[Figure 117] Figures 117(a) and 117(b) quantitatively illustrate challenges facing conventional motion trailing reducing technology.

[Figure 118] Figure 118 shows Figures 117(a) and 117(b) in a single figure.

BEST MODE FOR CARRYING OUT INVENTION

The present invention restricts disruptive flickering by displaying an image with continuous light while reducing motion trailing (disruptive motion blur) by displaying an image with intermittent light. Specifically, the invention is able to lower occurrences of both of these artifacts, between which there is a tradeoff affecting image quality, by creating images with the display light disclosed in the embodiments below. The following will describe embodiments of the present invention in reference to accompanying figures.

[Embodiment 1]

Figure 1 is an illustration of the configuration of a video display device 1 in accordance with an embodiment of the present invention. As shown in Figure 1, the video display device 1 include a display panel (video display means) 2, a video decoder 3, column driver 4, a row driver 5, column electrodes 6, row electrodes 7, and an input terminal 9.
The input terminal 9 receives a video signal, for example, an NTSC video signal. The video decoder 3 performs demodulation on the incoming video signal. The decoder 3 outputs video data to the column driver 4 and a synchronization signal to the row driver 5.
The column driver 4 supplies the video data to the plurality of column electrodes 6. The row driver 5 sequentially selects the plurality of row electrodes 7 in accordance with the synchronization signal. Supposing a 1/60 second cycle for the synchronization signal and 525 row electrodes, for example, a row electrode is selected for 32 microseconds (= 1/60/525).
A pixel 8 is provided at each intersection of the column electrodes 6 and the row electrodes 7. The average light emission luminance of the pixels 8 is modulated and updated according to the video data supplied to the column electrodes 6 while the row electrodes 7 are selected. During periods other than the selection period when the average light emission luminance is modulated according to the video data, the pixels 8 maintain the updated average light emission luminance. The pixels 8 continues to maintain the average light emission luminance until a next selection period in which the row electrodes corresponding to the pixels 8 are selected.
This series of operations is repeated for every vertical synchronization signal of the video signal. A video image is displayed by a collection of the pixels modulated and updated by the operations.
Figure 2 is a waveform for the temporal response of an instantaneous light emission luminance of a pixel. T represents a vertical cycle of a video signal expressed in seconds. For example, for the NTSC system, T is 1/60 seconds. The pixel in the video display device of the present embodiment uses light with a first light emission component and a second light emission component to display video. The first light emission component accounts for D% of the cycle T in terms of duration and is S% of the average light emission luminance of the pixel over one vertical cycle in terms of intensity. The second light emission component accounts for (100-D)% in terms of duration and is (100-S)% of the average light emission luminance of the pixel over one vertical cycle in terms of intensity.
Here, the light emission of a pixel at a point in time is referred to as a peak light emission level, a light emission peak level, an instantaneous light emission luminance, an instantaneous light emission intensity, an instantaneous light emission peak, or simply a luminance. Strictly, "luminance" in general is used to indicate instantaneous light emission luminance expressed in units of nits or candelas per square meter ($cd/m^2$). The human eye perceives the instantaneous light emission luminance which is integrated and smoothed. This is called the average luminance, average screen luminance, screen luminance, average intensity, or average luminance level. Although, strictly speaking, its unit is not nits, this unit is widely used as an equivalent. For example, for liquid crystal televisions, the average luminance of a white display is used to show its specifications in product catalogs. The instantaneous light emission luminance times the duration ratio (or duration), for example, "S" in Figure 2, is referred to as the light emission intensity ratio (or light emission intensity), light emission component, or amount of light emission. In Figure 2, The area enclosed by the vertical and horizontal axes and the light emission waveform represents the light emission intensity.
In other words, the first light emission component is represented by the area shaded with oblique lines which rise to the right in Figure 2. The second light emission component is represented by the area shaded with oblique lines which falls to the right in Figure 2. Furthermore, the instantaneous light emission intensity of the first light emission component is greater than that of the second light emission component.
A viewer recognizes the waveform in Figure 2 averaged (integrated) by the eye as the luminance of a screen. The screen luminance of a video display device is typically defined as that of a white display. For example, for television (TV) video display devices, the screen luminance is set to 250 nits (nits are a unit of luminance). When the screen is adjusted to higher brightness, the screen luminance is set to 500 nits.
Figures 3(a) and 3(b) show examples of a light emission waveform for a pixel in accordance with the present embodiment. Each figure shows a light emission waveform for one vertical cycle. Figure 3(a) illustrates a case where the screen luminance is set to 450 nits. For the first light emission component, the instantaneous light emission intensity is set to 900 nits, and the duty ratio to 30%. For the second light emission component, the instantaneous light emission intensity is set to 260 nits, and the duty ratio to 70%.

Therefore, the ratio of the light emission intensity of the first light emission component to that of the second light emission component is $900 \times 0.3 : 260 \times 0.7 = 6:4$.

Since the luminance as perceived by the human eye is the average of the light emission intensity of the first light emission component and that of the second light emission component, it is $900 \times 0.3 + 260 \times 0.7 = 450$ nits. Supposing that a collection of pixels each having a 450-nit luminance provides the screen luminance, the luminance of a pixel equals that of the screen: the screen luminance is also 450 nits.

Figure 3(b) illustrates a light emission waveform for a pixel in a case where the screen luminance is set to 200 nits. For the first light emission component, the instantaneous light emission intensity is set to 800 nits, and the duty ratio to 20%. For the second light emission component, the instantaneous light emission intensity is set to 50 nits, and the duty ratio to 80%.

Therefore, the ratio of the light emission intensity of the first light emission component to that of the second light emission component is $800 \times 0.2 : 50 \times 0.8 = 8:2$.

As detailed above, the video display device of the present embodiment is characterized in that it produces image display light made up of the first light emission component and the second light emission component in a pixel update repeat unit (vertical cycle). This feature arrangement makes it possible to both reduce trailing and lower disruptive flickering as will be described later.

Figure 4 qualitatively illustrates effects of the video display device of the present embodiment. Specifically, these graphs show a white object being displayed on a black background on a display panel. The object measures 3 pixels in height. Its width may be arbitrary. The object is moving toward the bottom of the screen at a constant velocity of one pixel per frame.

Figure 4(a) shows how the instantaneous light emission intensity of a pixel changes with time. The vertical axis indicates an instantaneous light emission intensity ratio, and the horizontal axis indicates time. In Figure 4(a), the light emission intensity corresponding to the first light emission component is shaded with vertical stripes. The light emission intensity corresponding to the second light emission component is crosshatched.

Figure 4(b) shows the outline of an object displayed on the display panel 2 at a certain moment. The horizontal axis indicates pixels. The vertical axis indicates a relative level. The 0% relative level is black, and 100% is white. Figure 4(c) shows the object in Figure 4(b) moving. The horizontal axis indicates time, and the vertical axis indicates space.

Although the actual display screen of the display panel 2 is a two-dimensional plane, Figure 4(c) omits one of two spatial coordinate axes, i.e., the horizontal coordinate axis. Referring to Figure 4(c), the object is displayed moving over time. The figure depicts the luminance of the object as either one of two intensity levels based on the relationship between the motion and the light emission waveform in Figure 4(a).

As shown in Figure 4(a), the instantaneous light emission intensity is high while the pixel is emitting the first light emission component. Therefore, the instantaneous light emission intensity is also high as shown by vertical stripes in Figure 4(c).

As the observer follows the object with their eyes as indicated by arrow 2, the two types of light emission states are added up (integrated) so that the object appears on the retina of the observer as shown in Figure 4(d). Figure 4(e) changes in instantaneous luminance of the object shown in Figure 4(d). In Figure 4(e), the horizontal axis indicates space, and the vertical axis indicates a luminance ratio.

Referring to Figure 4(e), on the video display device 1 of the present embodiment, the observer recognizes the luminance outline of the object as having three types of slopes: slope 1, slope 2, and slope 3 in Figure 4(e). What is important here is that slope 1 and slope 3 in Figure 4(e) are moderate, whereas slope 2 is steep.

Changes in luminance corresponding to moderate slopes 1 and 3 are difficult to recognize to the human eye, because the observer cannot generally identify contrast for a moving object so well as he/she can for an ordinary, stationary object. In other words, the human eye is not able to recognize changes in contrast of a moving object where the contrast ratio is low. Therefore, for a moving image, it is not necessary to display contrast accurately into small details of the image.

It is therefore only slope 2 that the observer can recognize in the luminance outline of the object. The motion trailing in Figure 114(e) which occurs when the pixels emits light at a constant luminance (hold-type display device) can be sufficiently reduced.

Figures 5(a) to 5(i) quantitatively illustrate effects of the video display device 1 of the present embodiment. The figures show properties of a temporal response waveform of the luminance of a pixel, an amount of trailing, and an amount of flickering for each of three types of light emission patterns.

Figures 5(a) to 5(c) illustrate the properties of a light emission luminance waveform, amount of trailing, and amount of flickering in a case where a conventional impulse light emission pattern is used with a 25% duty ratio. Figure 5(d) to Figure 5(f) illustrate a case where an impulse light emission pattern is used with a 40% duty ratio. Figure 5(g) to Figure 5(i) illustrate a case where the video display device of the present embodiment is used. For the first light emission component of the video display device of the present embodiment, the duty ratio D is set to 20%, and the intensity ratio S to the total light emission luminance to 80%.

Figures 5(a), 5(d), and 5(g) show light emission luminance waveforms for the associated patterns. Figure 5(b), 5(e), and 5(h) show amounts of trailing for the associated patterns after trail-reducing light emission processing by applying the trailing model described in reference to Figure 4.

The amount of trailing is defined as a spatial length when the luminance ratio of trailing to a spatial waveform change from 15% to 85%. The thresholds, defined as 15% and 85%, were obtained through subjective evaluation experiments on the assumption that the human eye has poor sensitivity to the contrast of a moving object. The ranges indicated with arrows in Figures 5(b), 5(e), and 5(h) correspond to the amounts of trailing.

Figures 5(c), 5(f), and 5(i) show amounts of flickering for the associated patterns. The figures show the ratio of the O-order DC component (average level) and the first harmonic component of the luminance temporal response waveforms shown in Figures 5(a), 5(d), and 5(g) which are Fourier transformed into the frequency domain. For example, the first harmonic is 60 Hz if the vertical synchronization signal is a 60-Hz NTSC video signal. The greater the first harmonic component relative to the O-order DC component, the more conspicuous the disruptive flickering.

Here, the light emission patterns are set so that the light emission luminances in Figures 5(a), 5(d), and 5(g), if integrated over time (i.e., average luminance), become all equal. Since the average luminances are made equal, the energies of the average level components (O-order DC components) in Figures 5(c), 5(f), and 5(i) are all equal regardless of light emission pattern. Thus, the first harmonic component becomes comparable from one light emission pattern to the other.

Figure 6 is a summary of properties of the light emission patterns of Figure 5. In Figure 6, the duty ratio D of the first light emission component in column 1 is the ratio of the ON period of the first light emission component to a vertical cycle. The light emission intensity ratio S of the first light emission in column 2 is the ratio of the light emission intensity of the first light emission component to the total light emission luminance. The light emission intensity here refers to the instantaneous light emission intensity integrated over time.

As indicated by the light emission waveforms in Figures 5(a) and 5(d), the light emission pattern in conventional art contains a simple pulse light emission component. This is equivalent to the video display device of the present embodiment with the intensity ratio S the first light emission component being 100%. As mentioned earlier, emitting light by way of the first light emission component and the second light emission component is a feature of the video display device of the present embodiment.

The amounts of trailing in col. 3 of Figure 6 are the lengths of the arrows in Figures 5(b), 5(e), and 5(h), that is, the spatial lengths of trailing as calculated from the model defined in Figure 4. The amounts of flickering in col. 4 in Figure 6 are the ratios of the 60-Hz components (first harmonic) to the average levels (O-order DC component). The rows 1 to 3 in Figure 6 correspond respectively to the light emission patterns 1 to 3 in Figure 5.

For light emission with no measures taken to address trailing as in the description in reference to Figure 114, the amount of trailing (the length of trailing per pixel) is 0.7. In contrast, in the conventional example shown in row 1 in Figure 6, the duty ratio is 25%, and the amount of trailing is reduced to 0.18. The amount of trailing is reduced by 75% when compared with the case where no measures are taken to address trailing. However, in the conventional example in row 1 in Figure 6, the 60-Hz harmonic component, which is the major cause for flicker, occurs at a rate of 90%.

In the conventional example in row 2, the duty ratio is increased to 40% to lower the amount of flickering. This has reduced the 60-Hz component, which is the major cause of flicker, to 75%. The amount of trailing however has increased to 0.28. In other words, in the impulse light emission of the conventional example in row 2, the amount of trailing is reduced by only 60% when compared with the case where no measures are taken to address trailing.

Row 3 shows the amounts of trailing and flickering when the duty ratio D of the first light emission component is 20% and the light emission intensity ratio S is 80%.

As can be seen from Figure 6, the video display device of the present embodiment is capable of reducing the amount of flickering from 90% to 70% when compared with the conventional example in row 1. The video display device is capable of reducing the amount of trailing to 0.18, which is comparable to the conventional example in row 1. In this manner, the present embodiment greatly lowers disruptive flickering while sufficiently reducing trailing. Thus, the present embodiment provides viewers with video of optimal quality.

Figure 7 shows properties of the light emission patterns in Figure 5. The horizontal axis indicates the amount of trailing; the smaller the value, the higher the image quality. The vertical axis indicates the amount of flickering; the smaller the value, the less the flicker, and the higher the image quality. With an image display device of conventional technology, the amounts of flickering and trailing change as indicated by the line in Figure 7 when the duty ratio D is altered. The amounts do not change in the ideal direction as indicated by the white arrow. There is a tradeoff between the amount of flickering and the amount of trailing. The two amounts cannot be reduced simultaneously. However, the light emission display properties of the video display device of the present embodiment, indicated by a circle in Figure 7, has both the amount of trailing and the amount of flickering reduced when compared to conventional art.

Figures 8(a) to 8(c) show the relationship among the duty ratio D, the amount of trailing, and the amount of flickering when the light emission intensity ratio S is fixed at 70% or 90% in the video display device in the present embodiment. If the duty ratio D are equal to the light emission intensity ratio S, the light emission waveform is a DC; these cases are excluded from Figures 8(a) to 8(c). If the duty ratio D is greater than the light emission intensity ratio S, the instantaneous light emission intensity of the first light emission component is lower than that of the second light emission component; these cases are also excluded because effects of the present embodiment do not need to be described.

Figures 8(a) to 8(c) show the amounts of trailing shown in the model of Figure 4 and the amounts of flickering shown in Figure 5 which are calculated for possible duty ratios D under conditions that the duty ratio D is less than the light emission intensity ratio S, and the light emission intensity ratio is fixed at 70% or 90%. The properties shift to the lower left from those for the conventional art for all the duty ratios D. See Figure 8(a). The shifts indicate that the video display device of the present embodiment simultaneously lowers the amount of trailing and the amount of flickering.

Figures 9(a) to 9(c) show the relationship among the light emission intensity ratio S of the first light emission component, the amount of trailing, and the amount of flickering when the duty ratio D is fixed at 10% or 70% in the video display device of the present embodiment. Figures 9(a) to 9(c) clearly show the amounts of trailing shown in the model of Figure 4 and the amounts of flickering shown in Figure 5 which are calculated for light emission intensity ratios S from a light emission intensity ratio (here, 70%) to less than 100% under conditions that the duty ratio D is less than the light emission intensity ratio S, and the duty ratio D is fixed at 10% or 70%. The amount of trailing and the amount of flickering are simultaneously lowered. See Figure 9(a).

Figures 9(b) and 9(c) consider no light emission intensity ratios S less than 70%, because the amount of trailing and the amount of flickering are not simultaneously lowered for particular combinations of light emission intensity ratios S and duty ratios D. Of slopes 1, 2, 3 in Figure 4(e), the tilt increases and the amount of trailing increases at slopes 1, 3 depending on the combination of the light emission intensity ratio S and the duty ratio D. Therefore, the present embodiment does not consider the 40% light emission intensity ratio S.

Figures 10(a) and 10(b) show the relationship among the duty ratio D, the amount of trailing, and the amount of flickering when the light emission intensity ratio S is fixed at 40% in the video display device of the present embodiment. As shown in Figure 10(a), the amount of trailing and the amount of flickering are not simultaneously lowered under these conditions.

Figures 11 (a) and 11(b) show the relationship among the duty ratio D, the amount of trailing, and the amount of flickering when the light emission intensity ratio S is fixed at 60%. Under these conditions, there may or may not be effects depending on the duty ratio D.

Summarizing the properties shown in Figures 8 to Figure 11, Figure 12 shows conditions on the duty ratio D and the light emission intensity ratio S under which the video display device of the present embodiment achieves the effects. In the Figure 12 graph, the horizontal axis indicates the duty ratio D, the vertical axis indicates the light emission intensity ratio S. For the video display device of the present embodiment to achieve the effects, the duty ratio D and the light emission intensity ratio S meet either the set of conditions A, $62\% \leq S\% < 100\%$, $0\% < D\% < 100\%$, and $D\% < S\%$, or the set of conditions B, $48\% < S\% < 62\%$ and $D \leq (S-48)/0.23$. In Figure 12, the region where the set of conditions A is met is dotted, and the region where the set of conditions B is met is shaded with oblique lines.

Setting S to 100% means the use of intermittent light emission (impulse-type display) of conventional art. This setting is therefore excluded from the sets of conditions A and B. Setting S to equal D means that the instantaneous light emission intensity of the first light emission component equals that of the second light emission component. This setting is excluded from the sets of conditions A and B. Setting S to 0% or D to 0% means that no first light emission component is generated. This setting is excluded from the sets of conditions A and B. Furthermore, setting D to 100% means that no second light emission component is generated. The setting is excluded from the sets of conditions A and B.

For the light emission intensity ratios S meeting the set of conditions A, the amounts of trailing and flickering are simultaneously lowered for all possible duty ratios D as described in reference to Figures 8(a) to 8(c). For the range outside the sets of conditions A and B, the amounts of trailing and flickering are not simultaneously lowered as described in reference to Figure 10(a).

As described in reference to Figures 11(a) and 11(b), when the light emission intensity ratio S meets the set of conditions B, the amounts of trailing and flickering are simultaneously lowered for some duty ratios D.

Figures 13(a) and 13(b) show the relationship between the amount of trailing and the amount of flickering when the light emission intensity ratio S = 62%. In these case, as shown in Figure 13(b), the amounts of trailing and flickering are simultaneously lowered for possible duty ratios D.

Figures 14(a) and 14(b) show the relationship between the amount of trailing and the amount of flickering when the light emission intensity ratio S = 48%. In these cases, as shown in Figures 14(a) and 14(b), there is no duty ratio D for which the amounts of trailing and flickering are simultaneously lowered. In this manner, it is understood from Figures 11, 13, and 14 that 48 < light emission intensity ratio S% < 62 meets the set of conditions B.

Figure 15(b) shows upper limits of the duty ratio D at which the amounts of trailing and flickering are simultaneously lowered being calculated from a trailing model and flicker analysis for $48 < S\% < 62$.

The values for the duty ratio D and the light emission intensity ratio S calculated from a trailing model are shown in Figure 15(b). The values are plotted in the Figure 15(a) graph and indicated by ♦. The properties indicated by ♦ can be approximated using a straight line: S = 0.23D + 48. If the duty ratio is less than the values indicated by the approximation straight line, the amounts of trailing and flickering are simultaneously lowered. Therefore, D ≤ (S-48)/0.23 is a part of the set of conditions B.

Figure 16(a) to Figure 16(c) show how much trailing and flickering are reduced, as represented by 6 points selected from the regions where the light emission intensity ratio S and the duty ratio D meet the set of conditions A or B. Points P1 to P6 meeting the set of conditions A or B are selected from Figure 16(a). The values of D and S at those points are shown in Figure 16(b). The amounts of trailing and flickering are calculated from the model shown in Figure 4 and plotted to draw a trailing vs. flickering graph which is shown in Figure 16(c). As shown in Figure 16(c), the amounts of trailing and flickering at P1 to P6 are located to the lower left of the line obtained with conventional intermittent switch-on/off (impulse-type display). Therefore, both artifacts (trailing and flickering) are simultaneously reduced if D and S are set to meet the set of conditions A or B.

The light emission waveform is not limited to those shown in Figures 3(a) and 3(b). Any waveform may be used so long as the relationship between the duty ratio D and the light emission intensity ratio S of the first light emission component and the second light emission component satisfies either the set of conditions A or the set of conditions B.

Figures 17(a) and Figure 17(b) show such examples of the light emission waveform. In Figures 17(a) and 17(b), the horizontal axis indicates time, and the vertical axis indicates instantaneous light emission intensity. Each figure shows one vertical cycle of a light emission waveform. Figure 17(a) shows an about 2.4-KHz sawtooth wave (40 oscillations in 16.7 milliseconds) being added to provide a brightness control function for the video display device (which allows the user to adjust brightness of the entire screen) or due to the control scheme of the video display device. Since the human eye cannot discern the frequency of 2.4 KHz, this light emission waveform is equivalent to the light emission waveform shown in Figure 17(b), and achieves the effects of the present embodiment by simultaneously reducing trailing and flickering.

For simple description of the temporal response waveform of the light emission from the pixel of the present embodiment, in Figures 2 and 3 among others, the waveforms of the first light emission component and the second light emission component are shown as rectangles. However, the present invention is by no means limited to such rectangular waves. As described in reference to Figure 4, the problem with a hold-type display device is that the human eye integrates light emission from pixels in a different direction from a correct integration direction. The integration direction and deviated integration path occur because the eye follows the moving object. Conventional impulse-type display devices reduce disruptive trailing by partly restricting light emission. In contrast, the present embodiment reduces the amount of flickering while simultaneously reducing the amount of trailing. The light emission waveform of the present embodiment is attained by concentrating light emission intensity, or "light emission energy," at the light emission intensity ratio S over the period specified by the duty ratio D. Therefore, needless to say, the effects are not reduced even if the wave is not purely rectangular.

Figures 18(a) and 18(b) show another example of the light emission waveform which simultaneously reduces trailing and flickering. As shown in Figures 18(a) and 18(b), the second light emission component may be made up of narrow pulses. In Figures 18(a) and 18(b), the horizontal axis indicates time, and the vertical axis indicates instantaneous light emission intensity. Each figure shows one vertical cycle of a light emission waveform.

If the light emission waveforms in Figures 18(a) and 18(b) is used, the human eye does not discern the frequency of the second light emission component similarly to the light emission waveform shown in Figure 17(a). The light emission waveform of the second light emission component is equivalent the light emission waveform indicated by the broken line. Trailing and flickering are both reduced. If the light emission intensity ratio (100-S)% of the second light emission component is to be adjusted, the ON period T0 of the pulse may be adjusted as in Figure 18(a). Alternatively, the intensity L0 of the pulse may be changed as in Figure 18(b).

The repetition frequency of the second light emission component may be set to any value so long as the human eye cannot discern that frequency. For example, the frequency may be a few kHz like the sawtooth wave in Figure 17(a) or a few times the video vertical frequency, or about 150 Hz. Depending on the properties, viewing environment, and other conditions for the video viewed on the video display device, the frequency of 80 Hz may work well. In some cases, 100 Hz may work well too. For example, the human eye may recognize pulses of about 120 Hz, which is twice the frequency of an NTSC video signal, as continuous light on a video display device with a screen luminance of about 250 nits. For example, on a video display device with a screen luminance of 500 nits, the eye may perceive flickers when the pulse frequency is 120 Hz and may not recognize pulses as continuous light if the frequency is less than 300 Hz. Minute screen luminance variations may be disruptive if the video viewed on the video display device contains many still images. Screen variations to some degree may not be disruptive if the video contains many moving images. In short, the frequency may be set to any value so long as the value is suitably chosen for the system configuration of the video display device.

Figure 19 shows another example of the light emission waveform which simultaneously reduces trailing and flickering. As shown in Figure 19, the light emission waveform of the first light emission component and the second light emission component may be triangular. In Figure 19, the horizontal axis indicates time, and the vertical axis indicates instantaneous light emission intensity. The figure shows one vertical cycle of the light emission waveform. The triangular waveform can be regarded as equivalent to the light emission response indicated by the broken line. Applying the triangular light emission waveform in Figure 19 to the Figure 4 model, slopes 1, 3 in Figure 4(e) are not straight, but curved. Slope 2, as opposed to slopes 1 and 3, is determined by the duty ratio D and light emission intensity ratio S of the first light emission component and the second light emission component. Therefore, the two artifacts, trailing and flickering, are simultaneously reduced if the values of D and S satisfy the set of conditions A or B.

In Figure 20, the light emission waveform of the first light emission component and the second light emission component changes exponentially. This light emission waveform is equivalent to the light emission properties indicated by the broken line similarly to Figure 19. The effects of the present embodiment are achieved.

In reference to Figure 2, the instantaneous light emission intensity of the first light emission component was described as being higher than the instantaneous light emission intensity of the second light emission component. This does not mean that the instantaneous light emission intensity of the second light emission component does not exceed the instantaneous light emission intensity of the first light emission component in, for example, Figure 18(a) and Figure 18(b). The description means that considering the nature of the human eye, the equivalent to the instantaneous light emission intensity of the second light emission component, indicated by the dotted line, is lower than the instantaneous light emission intensity of the first light emission component Figures 18(a) and 18(b).

The description so far defined the amount of trailing as a 15%-85% luminance change. When, for example, the screen luminance of the video display device is set to a value as high as 600 nits or the viewing environment is dark, the observer may recognize slopes 1, 3 shown in Figure 4(e), rendering trailing reduction less effective, if the duty ratio D and the light emission intensity ratio S assume such values that the tilts of slopes 1, 3 are relatively large. When this is the case, the light emission response waveform may be determined in such a range that conditions for the duty ratio D and the light emission intensity ratio S shown in Figure 21 are satisfied.

Figure 21 shows the best duty ratio D and light emission intensity ratio S for the present embodiment on an assumption that the human eye responds to the luminance level range of trailing of 10% to 90% (see Figure 5).

In this case, D and S satisfy the set of conditions A1 ($79\% \leq S\% < 100\%$, $0\% < D\% < 100\%$, and $D\% < S\%$) or the set of conditions B1 ($69\% < S\% < 79\%$ and $D \leq (S-69)/0.127$). In Figure 21, the dotted region represents the set of conditions A1, and the shaded region with oblique lines represents the set of conditions B1.

Figures 22(a) to 22(c) show the relationship between the amount of trailing and the amount of flickering when light emission intensity ratio S = 69% and when S = 79%. Similarly to the settings of conditions for D and S shown in Figure 21, the luminance level range of trailing to which the human eye responds is assumed to be from 10% to 90%.

In this case, as shown in Figure 22(a), when S = 79%, the amount of trailing and the amount of flickering are simultaneously lowered, but to a less extent, for possible duty ratios D. As shown in the figure, when S = 69%, the amount of trailing and the amount of flickering are simultaneously lowered at no duty ratio D. In this manner, the light emission intensity ratio S meeting the set of conditions B 1 is $69\% < S\% < 79\%$ from Figure 22(a).

Figures 23(a) and 23(b) show upper limits of the duty ratio D at which the amounts of trailing and flickering are simultaneously lowered being calculated from a trailing model and flicker analysis for $69\% < S\% < 79\%$, on an assumption that the human eye responds to the luminance level range of trailing of 10% to 90%.

The values for the duty ratio D and the light emission intensity ratio S calculated based on the trailing model are shown in Figure 23(b). These values are plotted in the Figure 23(a) graph and indicated by ♦. The properties indicated by ♦ can be approximated using a straight line: $S = 0.127D + 69$. If the duty ratio is less than the values indicated by the approximation straight line, the amounts of trailing and flickering are simultaneously lowered. Therefore, $D \leq (S-69)/0.127$ is a part of the set of conditions B1.

Figure 24 explains the flicker lowering effect of the video display device of the present embodiment by results of subjective evaluation. As to the screen luminance of the video display device, its white color luminance (screen luminance when a white color is displayed on screen) was set to 450 nits, which is a sufficiently bright level for a television (TV). Nits (nt) are a unit of luminance. Three images A, B, C with different APLs (Average Picture Level; average luminance level) were used in the evaluation. These images were still images.

More specifically, image A was a dark image, for example, a night view. The APL was 20%, and its average screen luminance about 100 nits. Image B consisted primarily of mid-level tones with a 50% APL. Its average screen luminance was 250 nits. Image C was a bright image, for example, blue sky. The APL was 80%, and its average screen luminance 350 nits.

Images A, B, C were displayed on the video display device by switching between the light emission waveform of conventional art shown in Figure 5(a) and the light emission waveform of the present embodiment shown in Figure 5(g). It was checked whether the observer perceived image flickering, and if he did, whether the image flickers felt disruptive. The subjective evaluation was done on a scale of 1 to 5. The higher the score, the higher the image quality.

As can be seen in Figure 24, the subjective evaluation gave overall higher scores to the video display device of the present embodiment than conventional art. With conventional art, disruptive flickering became increasingly visible with higher screen luminance. In contrast, the video display device of the present embodiment lowered flickering to a bearable level to the observer. This flicker lowering effect was commonly achieved with the three APL values, that is, the three images of different brightness.

As mentioned earlier, the video display device of the present embodiment reduces trailing by exploiting the low sensitivity of the human eye to the contrast of a moving object. Therefore, even if the screen luminance produced by the second light emission component becomes visible to the human eye at a point in time, it does not affect trailing reducing capability.

As described in the foregoing, the present embodiment produces a high quality image display by simultaneously restricting disruptive flickering and suppressing trailing of a moving object to display a clear outline. This is achieved through the use of the light emission response waveform which is made up of the first light emission component and the second light emission component. The embodiment exploits the low sensitivity of the human eye to the contrast of a moving image to reduce the trailing of a moving image.

Flickers become easier to perceive when the video display device has high screen luminance (Ferry-Porter's law). Therefore, disruptive flickering will likely occur if an image is displayed at high luminance with a conventional intermittent switch-on/off scheme. Among the visual cells of the human eye, the rod cells are more sensitive to flickers than the pyramidal cells. That is, the human eye is more sensitive to flickers along the periphery than at the center of the field of vision. Therefore, disruptive flickering is more likely to be perceived on a video display device with a larger display panel. Therefore, the video display device of the present embodiment is especially effective to improve display quality on a video display device of high luminance or with a large screen.

The conditions for the duty ratio D and the light emission intensity ratio S described in reference to Figure 12 were calculated based on simple modeling of the amounts of trailing and flickering. The evaluation of image quality of a video display device varies largely with the subjectivity of the observer and depends also on viewing environment. Strict quantification is difficult. The inventors however have confirmed, in subjective evaluation experiment (see Figure 24) based on obtained conditions, that evaluation results do not differ significantly from those conditions obtained by modeling.

The conditions for the duty ratio D and the light emission intensity ratio S described in reference to Figure 12 were calculated based on simple modeling of the amounts of trailing and flickering. As conditions for the simple modeling are assumed the amount of trailing which occurs when a white object has moved and the amount of flickering which occurs when white is displayed. Meanwhile, a 100% white signal is rarely found in typical video. Therefore, when the video display device has a screen luminance of 500 nits, and the average luminance level of the video actually displayed is about 50%, for example, an effective method is to equivalently setting the screen luminance of the video display device to 250 nits (= 500/2) to obtain the optimal values for the duty ratio D and the light emission intensity ratio S.

When this is the case, the values of D and S may be determined from a histogram for display video (distribution of video data) or like information. Alternatively, a video feature value, such as a luminance histogram and an average luminance level, may be automatically detected from an input video signal to enable automatic changes to be made to light emission properties of pixels.

The amount of flickering is determined from the 60-Hz component, or the first harmonic. In practice, harmonics with multiple frequencies of 60 Hz are produced. The inventors, however, have confirmed through experiment that attention should be paid only to the 60-Hz component and that it would suffice if that component is restrained. For example, the 120-Hz harmonic may also be perceived as causing an artifact on a larger screen or at high luminance; it is sufficient in these cases too if the light emission waveform is Fourier transformed to obtain conditions for the duty ratio D and the light emission intensity ratio S while paying attention to both the amounts of the 60-Hz and 120-Hz components as described in the present embodiment.

The present embodiment has so far assumed that the video signal is an NTSC signal. However, the video display device of the present embodiment is suitable for display of a video signal for a personal computer, for example. When the video display device has a vertical frequency of 75 Hz, for example, the observer perceives a smaller amount of flickering because the human eye is less sensitive to that frequency. Flickers however could be observed as causing an artifact depending on screen luminance or another condition. In these cases, again, attention should be paid to the 75-Hz component and it would suffice if conditions for the duty ratio D and the light emission intensity ratio S are obtained as in the present embodiment.

The relationship between the duty ratio D and the light emission intensity ratio S of the present embodiment was described in reference to Figure 12 for cases where trailing was defined by means of thresholds which are 15% and 85% of a change in luminance. The relationship was also described in reference to Figure 21 for cases where trailing was defined by means of thresholds which are 10% and 90% of the change. However, there are no single absolute thresholds. The thresholds are variable because the image quality of the video display device is evaluated by the observer's subjectivity. The thresholds also depend on atmospheric brightness, viewing distance, and other viewing environments. Furthermore, the thresholds can vary depending on whether the display image is a still image or a moving image. In short, although the video display device have many applications, an optimal value should be determined for individual applications of the video display device. The optimal value is then qualitatively and quantitatively evaluated by the methodology of the present embodiment. The value is subjected to a subjectivity test as a final stage of evaluation.

The average luminance level of the display image may be by detected to dynamically or adaptively control the duty ratio D, the light emission intensity ratio S, the light emission phase of the first light emission, and other parameters. The parameters may be controlled based on an image histogram. Interframe differential or like motion information may be used. The parameters may be controlled by obtaining brightness information from, for example, a brightness sensor which measures atmospheric brightness around the video display device. Furthermore, their temporal variation information may be used. Maximum and minimum luminance values contained in the displayed video may be used. Motions in the image may be detected as vectors so that the parameters can be controlled based on that information. A different parameter may be used for the control every time the screen luminance is changed, in conjunction with a function allowing the viewer to change the screen luminance. The parameters may be controlled by detecting the overall power consumption by the video display device for reductions in the power consumption. The parameters may be controlled by detecting successive operating time from the turn-on of power supply so that the screen luminance is lowered after the display device has been in operation for an extended period of time.

The present embodiment has so far assumed that the light emission waveform of a pixel contains two light emission components: i.e., the first light emission component and the second light emission component. Light emission components are by no means limited to two. Optimal properties may be achieved, depending on pixel modulation means, by defining another, third light emission component and individually controlling the components. A fourth light emission component and a fifth light emission component may also be defined.

When this is the case, in the model described in reference to Figure 4, a waveform by means of divided light emission is specified in the part of Figure 4(a), and information on displayed video is specified in the part of Figure 4(b). Information is calculated on changes in luminance in association with the vertical direction of Figure 4(c). Then, integration is performed in the direction indicated by arrow 2 to obtain luminance change waveform for corresponding trailing. Cases involving three or more types of light emission can be analyzed based on the model of the present embodiment. Optimal operating conditions can be obtained from results of the analysis.

If the light emitting element of a pixel has a finite response time, that temporal response information may be incorporated into the Figures 4(a) or 4(b) part. They can be analyzed from the items described in the present embodiment above. Optimal operating conditions can be derived.

The present embodiment defines the amount of flickering by means of the ratio of DC and the first harmonic in the results of Fourier transform. Absolute values may be introduced here to give weight to the harmonic ratio for each absolute value. The absolute value corresponds, for example, to the average screen luminance of the video display device. Tolerable amounts of flickering vary with average screen luminance: for example, the amounts decrease (conditions becomes more stringent) with brighter screen luminance. Therefore, the accuracy of the amount of flickering improves by regarding the ratio of the DC and the first harmonic as a function of the screen luminance. Furthermore, the amount of flickering may be defined considering up to the second harmonic.

[Embodiment 2]

A video display device in accordance with another embodiment of the present invention will be described in reference to Figures 25 to 31. Figure 25 is a cross-sectional view of a video display device in accordance with the present embodiment. Referring to Figure 25, a video display 10 of the present embodiment contains a light source (light source body) 11, a display panel (video display means) 12, a diffusion plate 13, and a chassis 14. Pixels (not shown) are defined on the display panel 12.

Inside the video display 10 configured as above, a space is provided between the diffusion plate 13 and the chassis 14. The light source 11 is disposed in the lower part of the space. The light source 11 emits illumination light onto the bottom surface of the diffusion plate 13.

The display panel 12 is, for example, a transmissive liquid crystal panel which modulates the illumination light having passed through the diffusion plate 13 when it passes through the panel 12. The illumination light is modulated in accordance with a display video signal. The modulation is repeated in accordance with the vertical synchronization signal of the video signal. The light emitted through the upper surface of the display panel 12 is the light originating at the light source 11, but modulated by the display panel 12. The observer recognizes a collection of light modulated by each pixel as a display video.

Figure 26 illustrates the relationship between the waveform modulated by an arbitrary pixel (temporal variation of a modulation rate of the pixel) and the light emission waveform of the light source 11. Data is written when the vertical timing signal in Figure 26(a) is HIGH. The pixel modulation rate is changed to D0, D1, D2 in accordance with a video displayed as in Figure 26(b). For example, with an NTSC video signal, this modulation operation by the pixel is repeated for each T of about 1/60 sec.

It is assumed here that the pixel has ideal response time characteristics and that the response finishes within a write period. When the vertical timing signal is LOW, other pixels are selected, and the pixels under consideration holds the data written to them.

The light source 11 repeats at least two types of turn-on modes in accordance with the vertical timing signal. The regions identified by vertical stripes in Figure 26(c) represent a first light emission component with a duty ratio of D% and a light emission intensity of S% relative to the total light emission intensity. The crosshatched regions represent a second light emission component with a duty ratio of (100-D)% and a light emission intensity of (100-S)% relative to the total light emission intensity.

The present embodiment reduces inherent trailing (motion image blurs) in hold-type display devices, of which the liquid crystal display device is a typical example, by means of the light emission waveform in Figure 26(c). The embodiment also decreases disruptive flickering which is a tradeoff of trailing reduction.

In reference to Figure 27, the following will describe why trailing and disruptive flickering are simultaneously reduced. Figure 27 shows the same model as Figure 4. The graphs show a white object being displayed on a black background. The object measures 3 pixels in height. Its width is arbitrary. The object is moving toward the bottom of the screen at a constant velocity of one pixel per frame.

Figure 27(a) shows how the light emission waveform of the light source 11 changes with time. The vertical axis indicates an instantaneous light emission intensity ratio, and the horizontal axis indicates time. In Figure 27(a), the light emission intensity ratio corresponding to the first light emission component is shaded with vertical stripes. The light emission intensity ratio corresponding to the second light emission component is crosshatched.

Figure 27(b) shows a spatial response of the transmittance of pixels. The horizontal axis indicates pixels, and the vertical axis indicates the transmittance. Figure 27(c) shows the object in Figure 27(b) moving. The horizontal axis indicates time, and the vertical axis indicates space.

Although the display screen of the display panel 12 is a two-dimensional plane, Figure 27(c) omits one of two spatial coordinate axes, i.e., the horizontal coordinate axis. The light leaving the pixels is a product of the light emission from the light source and the transmittance. Referring to Figure 27(c), the object is displayed moving over time. The figure depicts the luminance of the object as either one of two intensity levels based on the relationship between the motion and the light emission waveform in Figure 27(a).

As shown in Figure 27(a), the light emission intensity is high while the pixel is emitting the first light emission component. Therefore, the instantaneous light emission intensity is also high as shown by vertical stripes in Figure 27(c).

Referring to Figure 27(e), on video display 10 of the present embodiment, the observer recognizes the luminance outline of the object as having three types of slopes: slope 1, slope 2, and slope 3 in Figure 27(e). What is important here is that slope 1 and slope 3 in Figure 27(e) are moderate, whereas slope 2 is steep.

Changes in luminance corresponding to moderate slopes 1 and 3 are difficult to recognize to the human eye, because the observer cannot generally identify contrast for a moving object so well as he/she can for an ordinary, stationary object. In other words, the human eye is not able to recognize changes in contrast of a moving object where the contrast ratio is low. Therefore, for a moving image, it is not necessary to display contrast accurately into small details of the image.

It is therefore only slope 2 that the observer can recognize in the luminance outline of the object. The disruptive motion trailing in Figure 114(a) which occurs when the light source which emits light at a constant light emission intensity illuminates the display panel can be sufficiently reduced.

Now, let us incorporate a time constant which represents a response property of liquid crystal as a parameter into the trailing model. Liquid crystal normally responds with a time constant on the order of milliseconds and cannot respond instantly. In Figure 27, the time constant for liquid crystal is assumed to be 0 seconds for calculation.

Here, the liquid crystal response is approximated with an exponential function:

$$y = A0 * (1 - \exp(-t/\tau))$$

where y is the transmittance, and A0 is any given constant. $\tau$ is the time constant, indicating the time the response takes, from the start of the response, to reach about 63% the final value. The response takes about 2.3 times the time constant to reach 90% of the target transmittance. Here, we assume liquid crystal with a time constant from about 2 milliseconds to about 5 milliseconds. Slow response liquid crystals do exist which have a time constant of 10 milliseconds or even slower. We do not consider these liquid crystals. The present embodiment is intended to reduce amounts of trailing. Before reducing the amount of trailing, it is necessary to improve both hold-type display properties and the liquid crystal response time. If hold light emission is modified to achieve impulse light emission with slow response liquid crystal, edges crack, and other artifacts occur. Therefore, here, the liquid crystal is assumed to have a time constant no greater than 5 milliseconds

For example, assuming that Time Constant $\tau$ = 2.2 milliseconds (it takes 5 milliseconds to reach 90%), when a 3-pixel long object is moving, the transmittance of a pixel changes as in Figure 28(a).

The luminance changes in Figure 27(c) correspond to values on an axis normal to the plane of the page. A spatial and temporal luminance change, that is, the instantaneous light emission intensity of the light transmitting through a pixel, is the product of the instantaneous light emission intensity ratio of a light source in Figure 27(a), the transmittance of a pixel in Figure 27(b), and the temporal response of a pixel in Figure 28(a).

Calculating the response properties in Figure 28(a) and integrating in the direction indicated by arrow 2 in Figure 27(c) in this manner, spatial changes in luminance of trailing are as shown in Figure 28(b) and Figure 28(c). Figure 28(b) shows changes in luminance which occur on an edge in the moving direction of the object. Figure 28(c) shows changes in luminance which occur on a rear edge of a moving object.

Here, in the light emission waveform of the light source 11 shown in Figure 27(a), the duty ratio D = 30%, the light emission intensity ratio S = 70%. As is clearly understood from a comparison of Figure 28(b), Figure 28(c), and Figure 27(e), calculating trailing with the time constant of the liquid crystal being taken into consideration, slopes 1, 3 are no longer straight.

However, these slopes are moderate when compared to slope 2. The slopes therefore do not degrade the effects described in embodiment 1 of the present invention, that is, simultaneous reduction of trailing and flickering. Specifically, the amount of trailing is 0.32, and the amount of flickering is 0.49 in Figure 28(b) and Figure 28(c). Plotting these values in Figure 118, it is understood that the amount of trailing and the amount of flickering can be both reduced with respect to conventional intermittent light emission.

The phase of the first light emission component with respect to a response of the liquid crystal here is shown in Figure 29. The horizontal axis in Figure 29 indicates time expressed in units of vertical cycles of video display. For a NTSC video signal, the vertical cycle is 16.7 milliseconds T1 indicates the time from when the pixel is selected and starts responding to when the light source emits the first light emission component. Here, T1 = 8.1 milliseconds T2 is the time from when the pixel is selected to when the first light emission ends light emission. T2 is about 13.1 milliseconds

In conventional intermittent switch-on/off, typically, the liquid crystal is allowed to respond before an intermittent component is turned on. Therefore, depicting conventional intermittent switch-on/off as in Figure 29, for example, T1 = 11.7 milliseconds and T2 = 16.7 milliseconds

However, the present embodiment is aimed at striking a suitable balance between slopes 1, 3 and slope 2 as shown in Figure 27(e) to render trailing less visually distinct. Therefore, it is preferable if the light emission phase of the first light emission component with respect to a write operation of a pixel is dictated by the time constant of the liquid crystal, and the phase is set to exist in the second half of the response waveform (repetition timing for a refresh (rewrite) operation) of the liquid crystal.

Figures 30(a) to Figure 30(c), and 31 depicts effects of the present embodiment for a light emission pattern where the duty ratio D = 30% and the light emission intensity ratio S = 70%. Here, it is assumed that Time Constant $\tau$ = 3.5 milliseconds (taking 8 milliseconds to reach 90%) as shown in Figure 30(a). Calculations are done based on the model in Figure 27 under these conditions. As to the phase of the first light emission component, as shown in Figure 31, when T1 = 10.5 milliseconds and T2 = 15.6 milliseconds the amount of trailing takes a minimum value of about 0.37 pixels.

A spatial trailing waveform in this situation is shown in Figures 30(b) and 30(c). The amount of flickering in this situation is 0.49 from a Fourier transform of a temporal response waveform of the light emission of the pixel. Plotting the amount of trailing, 0.37, and the amount of flickering, 0.49, in Figure 8(a), it is understood that the amount of trailing and the amount of flickering are simultaneously reduced in comparison with conventional art.

The present embodiment has so far assumed that the display panel 12 is a transmissive display panel. The panel 12 however may be of a reflective type. When this is the case, the light source 11 may be disposed on the same side as the display surface of the display panel 12.

The present embodiment has so far described direct backlights in which the light source 11 is disposed right under the display panel 12. The embodiment however is suited to general applications in edge-lit backlights. That is, the display panel 12 may be illuminated by guiding illumination light to the display panel 12 from the light source 11 disposed opposite an end face of a light guide plate made primarily of acrylic material via that light guide plate.

As mentioned above, the present embodiment is capable of reducing both artifacts (trailing and flickering) by creating, with a light source, the light emission temporal response properties which correspond to the first light emission component and the second light emission component. Here, the light source 11 may be a semiconductor light emitting element, such as a light emitting diode (LED), or a cold cathode fluorescent lamp (CCFL).

[Embodiment 3]

The present embodiment will describe applications of the present invention where the display panel in the video display device is, for example, a self-luminous active matrix organic EL panel.

Each pixel 20 in the organic EL panel provided in the video display device of the present embodiment contains, as shown in Figure 32, a selector TFT 21 for selecting the pixel, a capacitor 22, an EL element 23, an EL drive TFT 24 to supply electric current to the EL element 23, and a luminance switching TFT 25.

The capacitor 22, coupled to the drain of the selector TFT 21, is receives from an external power supply a voltage (or electric charge) corresponding to the video to be displayed in the selection period for the pixel. The drain of the selector TFT 21 is coupled to the gate of the EL drive TFT 24. In the non-selection period, a current determined by the voltage built up across the capacitor 22 flows across the source and drain of the EL drive TFT 24.

The drain of the EL drive TFT 24 is coupled to the EL element 23. The drain current of the EL drive TFT 24 flows through the EL element 23, causing the EL element 23 to emit light at a light emission intensity corresponding to the electric current.

The drain and source of the luminance switching TFT 25 is inserted between the gate of the EL drive TFT 24 and ground. A scan electrode 26 is connected to the gate of the luminance switching TFT 25. Similarly, a scan electrode 27 is connected to the gate of the selector TFT 21.

Figure 33 is a timing chart showing operations of the organic EL containing pixels shown in Figure 32. As shown in Figure 33, pulses on the scan electrode 27 and those on the scan electrode 26 are out of phase by the duty ratio D. Turning on the luminance switching TFT 25 with a D% time delay grounds the gate of the EL drive TFT 24. When the selector TFT 21 is on, the capacitor 22 discharges.

Therefore, the gate potential of the EL drive TFT 24 falls as much as that discharge, causing changes to the current flow through the EL element 23. As a result, the EL light emission intensity changes, which creates the light emission waveform shown in Figure 33(c). The vertical axis in Figure 33(c) indicates instantaneous light emission intensity. The waveform is identical to the one in Figure 2. Therefore, the amounts of flickering and trailing can be both reduced when the display panel is an organic EL.

The light emission intensity ratio S is controllable so that it takes a desired value, by adjusting, for example, the charge buildup in the capacitor 22 through the HIGH pulse duration on the scan electrode 26. Alternatively, a current limiter element may be provided on the path from the gate of the EL drive TFT 24 through the source and drain of the luminance switching TFT 25 to ground, and the voltage across the capacitor 22 may be adjusted so that the ratio S takes a desired value by adjusting discharge from the capacitor 22.

The drain of the luminance switching TFT 25 is grounded; the drain may however be connected to a negative power supply, for example. This would add to the discharge rate for the capacitor 22.

The drain and source of the luminance switching TFT 25 may be coupled across the capacitor 22 so as to adjust the charge buildup by shorting across the capacitor while the scan electrode 26 is HIGH.

It has been assumed in the above description that the display panel is an organic EL panel. However, for example, a non-luminous transmissive liquid crystal panel may be used with a separate light source. Illumination light from the light source is modulated by pixels, in the panel, to which data is written in a controlled manner so as to create the pixel light emission waveform described in embodiment 1 of the present invention. In liquid crystal panels, each pixel is made of a pixel selector TFT and a capacitor. However, a luminance switching TFT may be added to control the charge held in the capacitor similarly to Figure 32. Thus, the transmittance of the liquid crystal may be altered to specify the luminance of the pixel. Alternatively, without the additional luminance switching TFT, data corresponding to different luminance levels may be written by accessing the pixel selector TFT twice per frame or more often (frames are units which make up a screen).

[Embodiment 4]

A video display device of another embodiment in accordance with the present invention will be described in reference to Figures 34 to Figure 36. Referring to Figure 34, a video display device 30 of the present embodiment contains a display panel (video display means) 31, a controller 32, a column driver 33, a row driver 34, a light source controller 35, a lamp (light source body, third light source body) 36, a shutter (light control means, shutter means) 37, a light guide plate (light mixing means) 38, and a shutter controller 39.

Note that although Figure 34 shows the display panel 31 and the light guide plate 38 are not aligned, the panel and plate are disposed on top of each other in actual use. An "edge-lit" backlight involves a line light source or point sources arranged along a line which emit light entering the light guide plate 38 through an end face. The light guide plate 38 converts the light to area light to illuminate the display panel 31.

The display panel 31 is, for example, a transmissive liquid crystal panel. The display panel 31 contains thereon a matrix of non-luminous pixels (not shown) which change its optical transmittance in accordance with an input video signal.

The controller 32 outputs a video signal to the column driver 33. The pixels are modulated according to the video signal. The controller 32 also outputs a display timing signal to the row driver 34 and a vertical synchronization signal 41 to the shutter controller 39. The shutter controller 39 outputs a control signal 42 to control the shutter 37.

A feature of the present embodiment is to control light which illuminates the display panel 31 by means of the shutter 37 in order to simultaneously reduce the amounts of trailing and flickering as described in embodiments 1, 2 in the present invention. In other words, the shutter 37 optically controls the output of the lamp 36. The shutter 37 transmits the entire or almost entire illumination light from the lamp 36 while the display panel 31 is being illuminated with the first light emission component.

In contrast, the shutter 37 transmits part of the illumination light from the lamp 36 while the display panel 31 being illuminated with the second light emission component. From Figure 2, the transmittance for the partial transmission is (100-S)/S * D/(100-D).

Figure 35 is a time chart depicting operations of the video display device 30 shown in Figure 34. Figure 35(a) shows the signal waveform of the vertical synchronization signal 41. Figure 35(b) shows a temporal change waveform of transmittance for the shutter 37 as controlled by the control signal 42. Figure 35(c) shows a light emission waveform for the lamp 36 with instantaneous light emission intensity ratios being plotted on the vertical axis. Figure 35(d) shows temporal response waveform of illumination light having passed through the shutter 37 with instantaneous light emission intensity ratios being plotted on the vertical axis. The illumination light in Figure 35(d) illuminates pixels after traveling down the light guide plate 38. The lamp 36 emits light with a certain constant luminance as shown in Figure 35(c). The light emission waveform of the lamp 36 may include variations of a frequency which the human eye does not respond as described in reference to Figure 17, that is, a waveform which the human eye, due to its nature, recognizes as having a constant luminance.

As shown in Figure 35(b), the control signal 42 controls the shutter between full and partial transmission. Illumination light illuminating the pixels is converted from what is shown in Figure 35(c) to what is shown in Figure 35 (d). Here, the transmittance is about 30% in partial transmission. The waveform in Figure 35(d)corresponds to a case where the duty ratio D of the first light emission component is about 33% and the light emission intensity ratio S is about 60%. The same effects are achieved in Figure 35(d) as in embodiment 1. As shown in Figure 35(d), the video display device 30 of the present embodiment again relies on the first light emission component and the second light emission component to display video. Hence, trailing and flickering are simultaneously reduced.

The shutter 37 can be implemented using a static-drive liquid crystal panel, for example. It is difficult to make an optical shutter with zero transmittance, that is, an optical shutter which completely blocks light. The present embodiment requires the shutter 37 to transmit part of the illumination light, not the whole light. The shutter 37 can be chosen not only from optical shutters, but also from a variety of other kinds of shutters.

In the present embodiment, the lamp 36 needs only to emit light at a constant luminance. The lamp 36 dose not need to be turned on/off repeatedly. Therefore, the lamp may be a light source body which has its lifetime cut short when turned off, for example, the CCFL. Since the lamp 36 emits light at a constant luminance, non-uniform luminance is unlikely to occur, which makes it easy to design the light guide plate 38.

Furthermore, since the lamp 36 is always turned on, the light source controller 35 is subjected to little electrical stress. This reduces chances of fuse malfunctioning and breakoff, as well as occurrences of other like inconveniences. Ripple current in the electrolytic capacitor inside the light source controller 35 (not shown) is lowered, which improves the reliability of the light source controller 35.

The video display device of the present embodiment has been described as being provided with the shutter 37 between the lamp 36 and the light guide plate 38. The shutter 37 may be provided at another position. For example, needless to say, the shutter 37 may be provided between the light guide plate 38 and the display panel 31.

The shutter 37 works with all illumination light. However, even in a case where, for example, part of the illumination light enters the light guide plate 38 without passing through the shutter, since the light can be used as illumination light, strictly speaking, the shutter 37 does not need to be made to work with all the illumination light.

The shutter 37 has been described as being disposed between the lamp 36 and the light guide plate 38 so that the shutter 37 works with illumination light from the light source. However, for example, a process may be carried out which corresponds to a shutter with respect to a display video signal by signal processing.

For example, a multiplication circuit is disposed in a video processing circuit, and the video signal is multiplied by a factor, 1.0, in the periods corresponding to intermittent light emission. That is, the video signal is transmitted as such. In contrast, in the periods corresponding to continuous light emission, the video signal is multiplied by a factor, 0.3. That is, the video signal is output with its tone luminance level being compressed. In such cases, the light source illuminates with constant continuous light emission. Owing to these operations, the screen luminance of displayed video is equivalent to Figure 35(d).

Furthermore, the video display device of the present embodiment may be configured as shown in Figure 36. Identical parts are given identical reference numerals in Figures 34 and 36. As shown in Figure 36, shutters (light control means, shutter means) 43 are provided to block part of illumination light from the lamp 36. In other words, part of illumination light from the lamp 36 is neither blocked nor transmitted through the shutters 43, but guided directly to the light guide plate 38.

The shutters 43 transmit 0% of light from the lamp 36 when they are closed and 100% when they are open. The shutters 43 repeat transmission/block according to the waveform shown in Figure 35(b). The lamp 36 emits light at constant luminance as shown in Figure 35(c).

The shutters 43 intermittently repeat transmission/block in this manner to act on part of illumination light from the lamp 36. Therefore, the illumination light from the lamp 36 has the waveform shown in Figure 35(d). The shutters 43 only need to be provided to block/transmit part of the illumination light from the lamp 36. Therefore, the shutters 43 do not have to be of large size. The mechanical strength of the shutters can be improved with respect to a large-size display device. Figure 36 shows the shutters 43 as if there is a one-to-one correspondence between the shutters 43 and the individual light sources in the lamp 36. The shutters 43 are not necessarily provided in this manner. A shutter may be provided for a group of individual light sources.

In the video display device 30 of the present embodiment, the lamp 36 does not turn on/off. The CCFL can be used as the light source, although the CCFL is not practical for intermittent switch-on/off operation due to reliability and lifetime. LEDs may of course be used as the light source.

The shutter 43 has been described as having a 0% block property. However, for example, the shutter 43 may have an about 3% block property, because the light transmitted through the shutter 43 can be used as illumination light. Therefore, the block property does not need to be strictly 0%.

As described in the foregoing, in the present embodiment, the shutter 37 or the shutters 43 are used to generate illumination light of temporal response corresponding to the first light emission component and the second light emission component. Since the video display device of the present embodiment does not directly control the lamp 36, the lamp and power supply does not have to bear heavy workload. Furthermore, the video display device of the present embodiment displays a moving object with reduced trailing and a clear outline while lowering disruptive flickering, similarly to the video display device of embodiment 1 above of the present invention.

[Embodiment 5]

The following will describe a video display device in accordance with another embodiment of the present invention. A video display device 50 of the present embodiment, as shown in Figure 37, contains a display panel (video display means) 51, an intermittent light emission device (light source body) 52, a continuous light emission device (light source body) 53, and a timing generating device 54.

The display panel 51 contains, for example, a non-luminous transmissive liquid crystal display device which does not emit light by itself, but transmits and modulates illumination light from a light source. The panel 51 is fed with a video signal 55.

A matrix of pixels (not shown) modulated in accordance with the video signal 55 are provided on the display panel 51. This modulation operation occurs in synchronism with a vertical synchronization signal of the video signal 55. For example, when the video signal 55 is an NTSC video signal, the frame cycle (repeated cycle of the vertical synchronization signal) is 60 Hz.

The timing generating device 54 generates a vertical timing signal 56 which is in synchronism with the vertical synchronization signal of the video signal 55 for output to the intermittent light emission device 52. The intermittent light emission device 52 is a light source which emits light in synchronism with the vertical timing signal 56 and shines intermittent light 58 as illumination light illuminating the display panel 51 onto the display panel 51. The intermittent light 58 is in synchronism with the vertical timing signal 56. The light 58 is intermittent light which has light emission intensity in ON state and light emission intensity in OFF state represented by a rectangular-pulse-like waveform.

The continuous light emission device 53 is a light source which outputs continuous light (continuous light) 57 to the display panel 51 as illumination light illuminating the display panel 51. The intensity of the continuous light 57 is, regardless of the vertical timing signal 56, either constant or variable at the repetition frequency of the vertical timing signal 56, for example, 150 Hz or greater.

The observer's eye has poor sensitivity to flickers of about 150 Hz. The eye is hardly responsive to flickers in excess of about 300 Hz. Therefore, the human eye recognizes the continuous light 57 as light with a constant intensity even if, strictly speaking, the light 57 actually varies or flickers at a certain cycle.

The pixels on the display panel 51 modulate illumination light from the intermittent light emission device 52 or the continuous light emission device 53 in accordance with the video signal 55. The illumination light modulated in this manner is projected from the display screen of the display panel 51 and recognized by the observer as display video.

Figure 38 is a timing chart depicting operations of the video display device 50 in Figure 37. The figure illustrates temporal changes of the light emission intensity of a signal and light transmitted in various paths. In Figure 38, the horizontal axis indicates time expressed in units of frames of the video signal 55.

Figure 38(a) is a signal waveform of the vertical synchronization signal of the video signal 55. As shown in Figure 38(a), a rectangular wave is output in every frame as the vertical synchronization signal of the video signal 55. Figure 38(b) is a signal waveform of the vertical timing signal 56 output from the timing generating device 54. As shown in Figure 38(b), the vertical timing signal 56 repeatedly turns on/off in synchronism with the vertical synchronization signal.

In Figure 38(c), the vertical axis indicates instantaneous light emission intensity, and shows temporal changes in instantaneous light emission intensity of the continuous light 57 output from the continuous light emission device 53. As shown in Figure 38(c), the continuous light 57 emits light, which is not at all related with the vertical synchronization signal.

In Figure 38(d), the vertical axis indicates instantaneous light emission intensity and shows the instantaneous light emission intensity of the intermittent light 58 output from the intermittent light emission device 52. As shown in Figure 38(d), The intermittent light emission device 52 turns on/off the intermittent light 58 in synchronism with the vertical synchronization signal. In other words, the instantaneous light emission intensity of the intermittent light 58 is specified to repeat the instantaneous light emission intensity in on state (about 0.7) and the instantaneous light emission intensity in off state (0) in synchronism with the video signal. The intensity of the light 58 sharp rises and falls, forming rectangular pulses.

Figure 38(e) shows the transmittance of a given pixel as dictated by the video signal 55. The vertical axis indicates transmittance. As shown in Figure 38(e), white video is fed to the pixel of the display panel 51 in a certain frame period (for example, between a first vertical period and a third vertical period). In the other frame periods (for example, 0th and 4th periods), black video is fed.

The sum of the instantaneous light emission intensity of the continuous light 57 in Figure 38(c) and the instantaneous light emission intensity of the intermittent light 58 in Figure 38(d) multiplied by the transmittance of a pixel in Figure 38(e) equals the luminance of the display image in Figure 38(f).

In this manner, a feature of the video display device 50 of the present embodiment is to illuminate the display panel 51 with two kinds of illumination light with different properties, that is, the intermittent light 58 and the continuous light 57, as shown in Figure 38(f). The effects of the feature is, as described in embodiment 1 of the present invention above, to reduce both trailing and disruptive flickering.

The definition of the first light emission component and the second light emission component described in embodiment 1 of the present invention above differs from the definition of the intermittent light emission component (shaded with vertical stripes in Figure 38(f)) and the continuous light emission component (crosshatched in Figure 38 (f)) described in the present embodiment. The definitions can however be converted as described below in reference to Figures 39(a) and 39(b). Figure 39(a) indicates the first light emission component and the second light emission component of embodiment 1. Figure 39(b) indicates one vertical cycle the intensity of mixture of the continuous light 57 and the intermittent light 58. In Figures 39(a) and 39(b), "a," "b," and "c" indicate luminance (instantaneous light emission intensity).

As shown in Figure 39(b), $S1 = c * D = (a-b) * D\%$. Also, as shown in Figure 39(a), $a = S/D$ and $b = (100-S)/(100-D)$. Therefore, $S1 = \{S/D- (100-S)/(100-D)\} * D$. Converting the conditions for the duty ratio D and the light emission intensity ratio S described embodiment 1 gives S1. The duty ratio D is the same as embodiment 1.

In this manner, it can be said that the mixture of the continuous light 57 and the intermittent light 58 is substantially identical to the mixture of the first light emission component and the second light emission component. In the video display device 50 of the present embodiment, the light from the light source contains two components: the continuous light 57 and the intermittent light 58. The components are driven with different properties. Accordingly, drive circuits and drive power supplies can be provided which are dedicated to the continuous light emission or the intermittent light emission. This allows simple circuit structure and cost reduction. Furthermore, since the emission of the two components can be controlled by individual circuits, circuit reliability improves.

Assume, for example, use of LEDs as the light source. Some commercially available LEDs have a low absolute maximum current rating when emitting continuous light and a low instantaneous maximum current rating when emitting pulsed light. In the video display device 50 of the present embodiment, two classes of LEDs, i.e., those for continuous light emission and those for intermittent light emission, can be used for appropriate purposes in accordance with these electrical properties of the LEDs.

LEDs may be used for intermittent light emission, whilst a cold cathode fluorescent lamp (CCFL) may be used for continuous light emission. The LED is a light source suitable for quick light emission response, and the cold cathode fluorescent lamp for continuous emission. A light source may be selected and mounted to the video display device, with these light source properties considered.

As described in the foregoing, in the present embodiment, the light from the continuous light emission device 53 is mixed with the light from the intermittent light emission device 52 to illuminate the display panel 51. Hence, an image display device is realized which displays a moving object with reduced trailing and a clear outline while lowering disruptive flickering. In other words, the light emission properties shown in Figure 2 are readily obtainable by using a light source having suitable properties for continuous light emission and a light source having suitable properties for intermittent light emission.

Flickers become easier to perceive when the display panel 51 has high luminance (Ferry-Porter’s law). Therefore, disruptive flickering will likely occur if an image is displayed at high luminance. In addition, among the visual cells of the human eye, the rod cells are more sensitive flickers than the pyramidal cells. That is, the human eye is more sensitive to flickers along the periphery than at the center of the field of vision. Therefore, disruptive flickering is more likely to be perceived on a video display device with a larger display panel. Therefore, the video display device 50 of the present embodiment is especially effective to improve display quality on a video display device of high luminance or with a large screen.

The (100-S1)% component which is the light emission intensity ratio of the continuous light 57 may be of a level that is readily visible. The instantaneous light emission luminance needs be increased to produce identical screen luminance with a reduced duty ratio in impulse light emission of conventional art. If the light source is such that the instantaneous light emission luminance cannot be increased sufficiently, there should be provided two or more light sources for extra cost. Unless more light sources are provided, the average screen luminance falls. The present embodiment enables both the amount of trailing and the amount of flickering to be simultaneously reduced even when the continuous light 57 is visible. Therefore, the instantaneous light emission luminance of the intermittent light 58 can be maintained at low values.

For example, in Figure 3(a), the instantaneous light emission luminance of the continuous light emission component is 260 nits. In Figure 3(b), the instantaneous light emission luminance of the continuous light emission component is 50 nits. Luminance of 250 nits and 50 nits is sufficiently perceptible to the human eye. In the light emission in Figure 3(a), the light emission intensity ratio (100-S1)% of the continuous light emission component is 58%.

Figure 3(a) assumes a screen luminance of 450 nits. Therefore, Light Emission Intensity (100-S1) = 260. The intensity is readily visible. In Figure 3(b), (100-S1) = 25%. Figure 3(b) assumes an average screen luminance of 200 nits. Therefore, Light Emission Intensity (100-S1) = 50. The light emission intensity of 50, although dim, is indeed visible.

The present embodiment has assumed that the display panel 51 in Figure 37 is a non-luminous transmissive type. The same illumination method as the video display device 50 of the present embodiment is applicable to non-luminous reflective display panels which modulates projection light from a light source through reflection.

The same functions as the intermittent light emission device 52 and the continuous light emission device 53 in Figure 37 can be realized on the display panel 51 for example, by TFTs (thin film transistors), etc. with respect to a self-luminous hold-drive display device, such as an organic EL display.

Furthermore, the present embodiment has assumed that the vertical synchronization signal of the video signal is a 60-Hz NTSC video signal. However, the illumination method by means of the intermittent light emission device 52 and the continuous light emission device 53 of the present embodiment is applicable, for example, to a 75-Hz video signal such as the RGB video signal for personal computers.

The present embodiment has described that light emission by the continuous light emission device 53 is constant regardless of the vertical timing signal 56. The present embodiment, however, is still applicable even if the light emission varies independently of the vertical timing signal 56. If there exists a light source control circuit which controls a light source (in terms of brightness), for example, with 500 Hz PWM (pulse width modulate), one can employ as the continuous light emission device 53 of the present embodiment, also for such a light source and its control circuit. This is because the human eye cannot follow the 500-Hz frequency and perceives as if the light source emits light at a constant light emission intensity.

In the present embodiment, as shown in Figure 38, the midpoint of the vertical synchronization signal of the video signal 55 shown in Figure 38(a) matches the midpoint of the light emission phase of the intermittent light 58 shown in Figure 38(d) in each frame period. In this manner, it is preferable if the intermittent light 58 occurs at a phase which is the midpoint for a repetition timing of the refresh (rewrite) operation of the video signal. In other words, the phase relationships shown in Figures 38(a) and 38 (d) are preferred for the head line of the video signal, that is, for the video near the rise of the vertical synchronization signal in Figure 38(a).

Conventionally, the light emission timing relative to the repetition timing of the refresh operation (update operation for display data) of the video signal should match a termination period of the refresh operation because the material making up pixels, like liquid crystal material, responds as an exponential function with a time constant.

However, in the present embodiment, among slopes 1, 2, and 3 in Figure 4(e), slopes 1 and 3 are made invisible by using the fact that the observer's eye has a poor dynamic contrast response.

The tilts of slopes 1 and 3 are determined by the phase of the intermittent light 58 with respect to the refresh operation of the video signal. Therefore, to produce well-balanced slopes 1 and 3 so that the observer cannot recognize them, the phase of the intermittent light 58 is positioned at the midpoint of the rewrite repetition operation of the video signal. In other words, the pulse waveform of the light emission intensity of the intermittent light 58 should be positioned at the midpoint with respect to the video signal pulse.

[Embodiment 6]

A video display device in accordance with another embodiment of the present invention will be described in reference to Figures 40 to 46.

Figure 40 is a block diagram illustrating the arrangement of a video display device in accordance with another embodiment of the present invention. As shown in the figure, a video display device 60 contains a display panel (video display means) 61, a video controller 62, a data driver 63, a scan driver 64, column electrodes 65, row electrodes 66, a lamp drive circuit (first light source body drive means) 67, another lamp drive circuit (second light source body drive means) 68, a lamp (first light source body) 69, another lamp (second light source body) 70, and a scene change detect circuit (scene change detect means) 77.

On the display panel 61 are there provided column electrodes 65 arranged like columns and row electrodes 66 arranged like rows. The display panel 61 is of a transmissive type which modulates illumination light from the light source as the light transmits therethrough. A plurality of pixels (not shown) are provided at intersections of the column electrodes 65 and the row electrodes 66 to form a matrix.

The data driver 63 drives the pixels based on the data signal 72, so as to set the transmittance of the pixels to a state determined by the data signal 72. The scanning signal 73 indicates sets of information: the horizontal synchronization signal and the vertical synchronization signal of the video signal 71. The horizontal synchronization signal is a unit of display in the column direction (horizontal direction) of the display screen. The vertical synchronization signal is a unit of display in the row direction (vertical direction) of the screen. The frequency of the vertical synchronization signal is 60 Hz in the NTSC system, for example.

The scan driver 64 performs scanning so as to sequentially select the row electrodes 66 from the top to the bottom of the screen, based on the timing indicated by the horizontal synchronization signal of the scanning signal 73. At the timing indicated by the vertical synchronization signal of the scanning signal 73, the scanning of the row electrodes 66 starts again from the top.

Paying attention to one pixel on the display panel 61, the pixel is selected in every 16.7 milliseconds if the vertical synchronization signal has a frequency of 60 Hz. The video controller 62 generates a lamp control signal 74 based on the vertical synchronization signal of the video signal 71, and supplies the lamp control signal 74 to the lamp drive circuit 67. The lamp drive circuit 67 controls the lamp 69 based on the lamp control signal 74. The lamp 69 emits intermittent light (intermittent light emission component) 75 controlled by the lamp control signal 74. The lamp 69 may be, for example, one or more LEDs (light emitting diodes). The intermittent light 75 illuminates the display panel 61.

The lamp drive circuit 68 controls the lamp 70. The lamp 70 emits continuous light (continuous light emission component) 76. The lamp 70 may be, for example, one or more fluorescent lamps, such as a CCFL (cold cathode fluorescent lamp). Being similar to the lamp 69, the lamp 70 may be LEDs. The continuous light 76 also illuminates the display panel 61, as is the case of the intermittent light 75. The intermittent light 75 and the continuous light 76 are mixed together in the space extending from the lamps 69, 70 to the display panel 61.

The scene change detect circuit 77 determines the degree of scene change in a display video, in other words, the amount of scene change (amount of change) from the video signal 71. A detected scene change signal 78 is fed to the lamp drive circuit 67/lamp drive circuit 68.

Figure 41 is a timing chart depicting operations of the video display device 60 shown in Figure 40. The figure illustrates temporal changes of the waveforms of a signal and light transmitted through paths. The horizontal axis indicates time expressed in frames for the video signal 71. Here, a frame is a unit of display screen for the video signal 71 and is determined by vertical synchronization.

Figure 41 (a) is a signal waveform of the vertical synchronization signal of the video signal 71. Figure 41 (b) is a light emission waveform of the intermittent light 75 which is emitted intermittently in synchronism with the vertical synchronization signal. In Figure 41(b), the vertical axis indicates an instantaneous light emission intensity.

Figure 41(c) shows a light emission waveform for the continuous light 76 which is emitted in no association with the vertical synchronization signal. The vertical axis in Figure 41(c) indicates an instantaneous light emission intensity. Figure 41 (d) shows a waveform for mixed illumination light of the intermittent light 75 in Figure 41(c) and the continuous light 76 in Figure 41(d). The light 75 and the light 76 are mixed in a light guide space which leads to the display panel 61.

A feature of the video display device 60 of the present embodiment is to control the lamp drive circuits 67, 68 by using the scene change detect circuit 77. A scene change is a change of video display with time in each screen: for example, the amount of a motion in the entire screen. The scene change does not necessarily refer to a switching of scene in the strict sense of the term. The term refers, although not exclusively, to panning, motions of a large object in a fixed screen, and changes of video occurring across a large portion of the screen.

Figures 42(a) and 42(b) show examples of the scene change detect circuit 77. In Figures 42(a) and 42(b), the bit width of a digital signal is indicated by a slash with a numeric value on a signal line.

The scene change detect circuit 77 shown in Figure 42(a) determines interframe difference for each pixel for the video signal 71 using the F (frame) memory 80. In other words, the circuit 77 determines a scene change, or a change/motion from one screen to a next, by means of a subtracter 81 deriving a differential between a current signal for a pixel and a signal delayed by one frame.

After being passed through an ABS (absolute value) circuit 82, the signal from the subtracter 81 is compared with a threshold 84 in a comparator 83 to obtain, here, a 1-bit detection signal. The signals are added up for each pixel in a feedback-type addition structure made up of a latch circuit 85 and an adder 86 which operate based on a system clock.

The feedback-type addition signal generated in this manner is latched and ascertained by a latch circuit 87 which latches based on the lamp control signal 74. The circuit 87 latches for each vertical operation signal. That is, the circuit structure counts how many times the interframe differential for a pixel is more than or equal to a threshold in 1 screen unit.

An IIR (feedback-type) filter 88 operates with a sampling clock, or lamp control signal, 74 which is in synchronism with the vertical synchronization signal. The output from the latch circuit 87 is passed through the IIR (feedback-type) filter 88 for filtering in a time axis direction. The IIR filter 88 outputs the scene change signal 78 generated in this manner.

Suppose, for example, that the scene change signal 78 is 3 bit wide and that the signal 78 is level 7 when there is a video signal with consecutive large interframe differences and level 0 when there is a video signal with consecutive small interframe differences. The scene change signal takes large values when interframe differences occur frequently.

Here, it is assumed that the video signal 71 is 8 bits. However, since the comparator 83 renders the signal 71 into 1 bit, memory capacity can be reduced if the signal 71 is rendered into about 4 bits when fed to the F memory 80. For example, to convert an interlace signal to a progressive signal, interframe differences need to be detected with high accuracy for typical motion detection. With the video display device 60 of the present embodiment, however, interframe differences are detected to control the amount of light emission from a light source illuminating the entire screen or a part of the screen. Such high accuracy is rarely needed.

Interframe differentials do not need to be detected for all data represented by the video signal 71. For example, the differentials may be obtained for every two pixels. In these cases, the memory capacity of the F memory 80 may be reduced. The operation speed (system clock frequency) of the detect circuit. It is possible to realize light source control response which follows abrupt changes and also to realize slow response, with respect to a temporal response of a change in the degree of scene change, by adjusting the constant $\alpha$ for the IIR which is a feedback-type filter. It is sufficient if the constant $\alpha$ is adjusted according to screen luminance and other conditions and usage of the video display device.

For example, in the arrangement shown in Figure 42(a), if $\alpha = 0.5$, the transient response time by a filter ring (from the time when the input signal to the IIR filter changes to the time when 90% the value of the input signal after the change is output) equals the period for about 5 screens (that is, 1/60 * 5 = 1/12 seconds). If $\alpha = 0.95$, the transient response time is about 1 second.

Figure 42(b) is a block diagram illustrating the structure of a scene change detect circuit 77 in a case where the amount, degree, etc. of scene change is determined from interframe differences between APLs (average luminance levels) of screen units (vertical synchronization units). An APL detect circuit 89 sequentially adds up data represented by the video signal 71 and divide the sum (calculate an average). A D-FF (flip-flop) 90 latched by the lamp control signal 74 latches an APL calculated by the APL detect circuit 89 for each vertical cycle. Differentials are obtained by the subtracter 91.

After processing in the ABS ((absolute value)) circuit 92, a coring process as a anti-noise measure is done in a coring circuit 93 to output the scene change signal 78. Coring is filtering where if a 4-bit signal represents values 0 to 15, small values, for example, 0, 1, 2, are forcefully rendered 0s.

A scene change detection signal is thus output from the coring circuit 93. The scene change signal, when, for example, the APL has a large interframe difference, determines that the scene has greatly changed and outputs a signal with level 15. In contrast, when the APL has a small variation, the signal outputs level 0. The structure in Figure 42(b) allows the frame memory shown in Figure 42(a) to be omitted from the scene change detect circuit 77.

Figure 43 schematically illustrates one vertical cycle of the light emission waveform of the illumination light illuminating the display panel 61. The waveform is a result of the intermittent light 75 and the continuous light 76 being mixed in, for example, the light guide space leading to the display panel 61. The intermittent light 75 has an illumination duration of D%, a peak instantaneous light emission intensity of a (nits), and a light emission intensity ratio of S2%. In Figure 43, the light emission intensity corresponding to the intermittent light is shaded with vertical stripes. The continuous light 76 has an illumination duration of T seconds, a peak instantaneous light emission intensity of b (nits), and a light emission intensity ratio of (100-S2)%. In Figure 43, the light emission intensity corresponding to the continuous light shaded with oblique lines.

The "light emission intensity ratio" refers to the ratio of the light emission intensity of either continuous light or intermittent light to the average light emission luminance across a pixel in one vertical cycle. The light emission intensity of the intermittent light is the integration of the values of differentials, (a-b), between the peak level a of the instantaneous light emission intensity of the continuous light and the peak level b of the instantaneous light emission intensity of the continuous light over the time of duty ratio D%. The "light emission intensity" is the instantaneous light emission intensity integrated over time.

The video display device 60 of the present embodiment has an objective simultaneously reduce the amount of trailing and the amount of flickering similarly to embodiment 1 of the present invention above. To achieve the objective, the video display device 60 of the present embodiment illuminates the display panel 61 with the illumination light having a waveform shown in Figure 43. The light emission intensity ratio S described in embodiment 1 and the light emission intensity ratio S2 in Figure 43 are defined in different manners. Here, it is sufficient if the light emission intensity ratio S2 is converted to the light emission intensity S using the conversion, S2 = {S/D- (100-S)/(100-D)} * D, so as to be meet the set of conditions A and the set of conditions B shown in Figure 12 regarding the converted light emission intensity S.

Figures 44(a) to 44(c) illustrate example procedures to control the illumination light illuminating the display panel 61 using the scene change detection signal. To control the illumination light, the lamp drive circuits 67, 68 are controlled adaptively with the amount of scene change.

Assume here that the greater the amount of scene change, the greater the degree of scene change. A case is shown where the light emission intensity ratio S2 of the intermittent light 75 is fixed to 80% and the setting of the duty ratio D is adaptively controlled through the scene change detection signal. Specifically, as shown in Figure 44(a), the duty ratio D is controlled so as to decrease with increasing detected amount of scene change.

Figure 44(b) illustrates properties of the amount of trailing and the amount of flickering when the duty ratio is controlled as in Figure 44(a). Figure 44(c) is data to obtain the properties in Figure 44(b). The areas enclosed in circles and quadrilaterals in Figures 44(a) and 44(b) correspond to each other.

In the present embodiment, when the amount of scene change is large, it is determined that the screen shows many or large motions or frequent motions. Therefore, the duty ratios in the encircled area in Figure 44(a) are used. Using a duty ratio in the encircled area, the amount of trailing is lower, but the amount of flickering is higher, than those in the quadrilateral area as shown in Figure 44(b).

The amount of flickering visible to the viewer is dictated by the screen luminance, the screen size, the atmospheric brightness, and other environmental conditions. The amount of flickering tend to change depending on whether the displayed screen is a moving image or a still image. For example, video display devices for personal computers handle far more still images; the tolerable amount of flickering is small. In other words, even small flickers are visible. On the other hand, flickers on a moving image are not so recognizable/visible to the observer unless the amount of flickering reaches a certain value. These attributes are exploited to ideally reduce the amount of trailing by reducing the amount of trailing while increasing the amount of flickering.

As shown in Figure 44(b), the properties between the amount of trailing and the amount of flickering of the video display device 60 of the present embodiment are found to the lower left of the properties of conventional art. It can therefore be said that the amount of trailing and the amount of flickering are simultaneously reduced.

Here, since the light emission intensity ratio S2 is fixed when the Figure 44(b) properties are calculated, the screen luminance does not vary with the duty ratio D. However, for example, the duty ratio D may be controlled with the peak levels a, b of the instantaneous light emission intensity (see Figure 43) being specified to fixed values and without specifying S2 to a fixed value.

In such cases, the screen luminance varies through the control of the duty ratio D. However, switching the duty ratio D in accordance with scene changes makes luminance variations less visible even if luminance varies when switching between screens. Furthermore, if the duty ratio D is decreased when the screen moves or a scene change occurs, the screen luminance falls. Therefore, flickers are controlled in a less visible direction, which is an advantage in reducing disruptive flickering.

In addition, control may be such that the peak level a is altered in conjunction with the duty ratio D without, for example, specifying S2 to a fixed value. For example, the peak level a may be controlled with the peak level b being specified to a fixed value, so that the peak level a is 200 nits when the duty ratio D is 70% (which is equivalent to the intermittent light 75 having a light emission intensity of 140 nits), 400 nits when D = 50% (which is equivalent to the intermittent light 75 having a light emission intensity of 200 nits), and 900 nits when D = 30% (which is equivalent to the intermittent light 75 having a light emission intensity of 270 nits).

By controlling the peak level a in this manner, S2 increases when a motion occurs and the duty ratio D is reduced. Meanwhile, the eye becomes tired if still images or like images with few movements displayed on the screen with high luminance are viewed for an extended period of time. Therefore, clear moving images can be displayed by raising the luminance only when the screen moves or an image with many motions is displayed, so that still and moving images are displayed in different manners. In addition, the peak level b may be altered in conjunction with the duty ratio D. Furthermore, the peak level a and the peak level b may be simultaneously altered in conjunction with the duty ratio D.

Figures 45(a) to 45(d) show the light emission intensity ratio S2 being controlled using the scene change detection signal. Here, we assume that the duty ratio D is fixed at 20% or 40%. In addition, the light emission intensity ratio S2 is altered by altering the peak level a or the peak level b. Since the light emission intensity ratio of the continuous light 76 is 100-S2, the ratio changes as a result of the control of the light emission intensity ratio S2 of the intermittent light 75. This maintains the screen luminance at a constant value.

Figure 45(b) shows the relationship between the amount of trailing and the amount of flickering when the properties shown in Figure 45(a) are used. Figures 45(c) and 45(d) are data to obtain the properties in Figure 45(b). The areas enclosed in circles and quadrilaterals in Figures 45(a) and 45(b) correspond to each other.

When the screen shows only a few motions, the amount of trailing and the amount of flickering are controlled by reducing S2 in a direction where the amount of trailing is increased and the amount of flickering is decreased. For example, when the display video is mostly still images, like when reference materials are prepared on a personal computer, flickers are more visible. Therefore, the amount of flickering can be reduced by decreasing S2.

Even when there are few moving images being displayed, there occurs motions when scrolling a window. In such cases, the video display device of the present embodiment again displays video with properties where the amount of flickering and the amount of trailing are limited when compared to the properties of conventional art.

In addition, control may be such that the screen luminance is changed with the duty ratio D, the peak level a, and the peak level b being fixed. Control may be such that either or both of the peak level a and the peak level b is in conjunction with the light emission intensity ratio S2 while changing the screen luminance.

Furthermore, if the screen luminance is raised in a case where a moving image is displayed with respect to a case where a still image is displayed, the moving image is well contrasted with increased sharpness. The eye is protected from fatigue of viewing still images. Conversely, if the luminance of the moving image is reduced, flickers are less visible. further reducing the amount of trailing.

For these ways of control, an optimal case may be selected deepening on the usage of video display device (for example, for television or a personal computer). Alternatively, an optimal way of control may be selected in accordance with the properties of the lamps 69, 70 selected in assembly. For example, an LED light source allows easy peak level control of the instantaneous light emission intensity. A cold cathode fluorescent lamp could be difficult in controlling the peak level of the instantaneous light emission intensity, depending on ambient temperature. Therefore, it is preferable to use an LED light source as the lamp 69 and control either or both of the duty ratio D and the peak level a. In addition, it is preferable to use a cold cathode fluorescent lamp light source as the lamp 70 and control a parameter other than the peak level b with the level b being fixed.

In Figures 44(a) to 44(c) and 45(a) to 45(d), the duty ratio D and the light emission intensity ratio S are independently controlled. The amount of trailing and the amount of flickering may be simultaneously lowered by simultaneously altering the duty ratio D and the light emission intensity ratio S2.

Figures 46(a) and 46(b) show the duty ratio D or the light emission intensity ratio S2 being controlled by using the APL information and the amount of scene change obtained from the scene change detect circuit 77 arranged as in Figure 42(b) together.

For example, when the APL is low and the amount of motion is large, the duty ratio D may be decreased as shown in Figure 46(a). Alternatively, the light emission intensity ratio S2 may be increased as shown in Figure 46(b). The duty ratio D and the light emission intensity ratio S2 may be simultaneously altered. Accordingly, for example, a bright point of firework climbing in the dark night sky can be displayed with emphatically high luminance while reducing the amount of trailing.

When the APL is high, flickers are more visible than when the APL is low. Accordingly, as shown in Figure 46 (a), the duty ratio D may be reduced by a smaller amount than when the APL is low. Alternatively, as shown in Figure 46(b), the light emission intensity ratio S2 may be increased by a greater amount than when the APL is low.

Especially, when attention is paid to the light emission intensity ratio S2, and the amount of scene change is large, as shown in Figure 46(b), if the light emission intensity ratio S2 is increased more when the APL is low, the amount of trailing and the amount of flickering can be reduced while utilizing the properties of the observer's limits on the perception of disruptive flickering with respect to the APL. The light emission intensity ratio S2 and the duty ratio D may be independently controlled. The duty ratio D and the light emission intensity ratio S2 may be simultaneously controlled with two properties combined.

In the present embodiment, the relationship between the duty ratio D and the light emission intensity ratio S obtained through conversion from the light emission intensity ratio S2 is basically controlled under conditions described in embodiment 1 in reference to Figure 12. However, for example, when the display video involves few motions, in other words, when the scene change signal described in reference to Figures 42(a), 42(b) is small, values which do not meet the Figure 12 conditions, such as S = 40%, may be employed for the following reasons.

Thresholds for the luminance change of the amount of trailing are 15% and 85% in Figure 12 and 10% and 90% in Figure 21. However, there are no single absolute thresholds because the image quality of the video display is evaluated by the observer's subjectivity. The thresholds also depend on atmospheric brightness, viewing distance, and other viewing environments. Further, the thresholds can vary depending on the absolute value of the screen luminance. Furthermore, the thresholds can vary depending on whether the display image is a still image or a moving image. In the trailing model described in reference to Figure 4, the amount of motion of an object is assumed to be at a constant speed of 1 pixel to simplify the model. That is, the amount of trailing is normalized with moving speed.

However, actually, the absolute value of the amount of trailing also increases if the high moving speed of the object is high. If the display video involves few motion, there may not be any problems with display quality even if the threshold for the amount of trailing is raised. Therefore, when the threshold for the amount of trailing is regarded as a function of the amount of motion, the display quality may be in some cases optimal with the values of D and S outside the conditions in Figure 12 and Figure 21. In short, optimal values for D, S through the amount of motion may be derived by the simulation based on the trailing model described in reference to Figure 4 and the subjective evaluation of an actually displayed image.

In the video display device 60 of the present embodiment, the light source is by no means limited to LEDs or a CCFL. Any light source may be used which is suitable for intermittent light emission and continuous light emission. Furthermore, in the present embodiment, the display panel 61 in Figure 40 is assumed to be of a transmissive type. The panel 61 may however be a reflective type which modulates projection light from a light source through reflection.
As described above, in the video display device 60 of the present embodiment, the scene change detect circuit 77 detects changes of display video with time of screen unit, that is, the amount of motion, to improve precision in reducing the amount of trailing and the amount of flickering.

[Embodiment 7]

A video display device in accordance with another embodiment of the present invention will be described in reference to Figure 47. As shown in Figure 47, the video display 100 of the present embodiment contains a light source (light source body) 101, a light source (light source body) 102, a display panel (video display means) 103, a diffusion plate 104, and a chassis 105.
In the video display 100 arranged as above, there is provided a space between the diffusion plate 104 and the chassis 105. The light source 101 and the light source 102 are disposed below that space.
The light sources 101, 102, although made of, for example, LEDs, may be made of other light emitting elements. The light sources 101, 102 shine illumination light onto the bottom surface of the diffusion plate 104. The light source 101 is for intermittent light emission and emits intermittent light 106 indicated by broken lines.
Meanwhile, the light source 102 is for continuous light emission and emits continuous light 107 indicated by solid lines. The display panel 103, being a transmissive type, modulates the illumination light having passed through the diffusion plate 104 as the light passes through the panel 103. The display panel 103 produces on the top surface thereof a video display which is viewed by the observer.
As shown in Figure 47, two kinds of projection light of different properties emitted from the light source 101 and the light source 102 are mixed when traveling in the space between the diffusion plate 104 and the chassis 105 while diffusing at angles determined by the directional properties of the light sources.
Therefore, the display panel 103 is illuminated by composite light of the projection light from the intermittent light 106 and the projection light from the continuous light 107. By mixing the light, effects are achieved (see embodiment 5) which are similar to the light (see Figure 2) made up of the first light emission component and the second light emission component. Therefore, the display panel 103 of the present embodiment operates identically to the display panel 2 in the video display device 1 of embodiment 1. Therefore, when displaying a moving object, the display panel 103 of the present embodiment lowers the amount of trailing to display the object with clear outlines and restrains disruptive flickering.
As described in the foregoing, in the video display 100 of the present embodiment, two kinds of illumination light with different properties are mixed in the space which connects the light sources to the display panel. For example, an LCD (liquid crystal display device) which is a non-luminous video display device includes a backsurface illuminating device (backlight) of so-called direct backlighting type as the light source. The device has the same arrangement is identical to the one shown in Figure 47. Therefore, the video display 100 of the present embodiment is readily applicable to LCDs with a direct backlight.
Generally, when applied to an LCD, a direct backlight is used in a 20-in. or larger LCD. On large LCDs, as mentioned earlier, disruptive trailing becomes more visible to the observer. If conventional impulse light emission is used in a large LCD, disruptive flickering also becomes more visible to the observer. Therefore, if the video display 100 of the present embodiment is applied to a large LCD, an optimal display video can be provided which reproduces clear moving images and which is free from disruptive flickering.
In addition, in a liquid crystal projector of a projection type which projects a display video onto a screen and like video display devices, if a light source outputting the intermittent light 106 and a light source outputting the continuous light 107 are prepared to shine projection light from the light sources onto a liquid crystal panel, since the projection light from the light sources is mixed while traveling toward the liquid crystal panel, the effects of the present embodiment are achieved.
In addition, the present embodiment has assumed a transmissive display panel. The embodiment is applicable also to a reflective type. When the liquid crystal panel of the present embodiment is applied to a reflective type, the light sources are disposed on the same side of the display surface of the reflective type display panel. Then, if a light source outputting the intermittent light 106 and a light source outputting the continuous light 107 are prepared to shine projection light from the light sources onto the liquid crystal panel, since the projection light from the light sources is mixed while traveling toward the liquid crystal panel, the image quality improving effects by the video display device of the present embodiment are achieved.

[Embodiment 8]

A liquid crystal display (LCD) device in accordance with another embodiment of the present invention will be described in reference to Figure 48 and Figure 49. As shown in Figure 48, a LCD 110 of the present embodiment includes a liquid crystal panel (video display means) 111, a controller 112, a column driver (source driver) 113, a row driver (gate driver) 114, a power supply circuit (first light source body drive means, second light source body drive means) 115, a lamp (second light source body) 116, a lamp (first light source body) 117, a light guide plate (light mixing means) 118, a timing generating circuit (first light source body drive means) 119, and a switch (first light source body drive means) 120.

The lamp 116, the lamp 117, and the light guide plate 118 are collectively referred to as a backlight. An "edge-lit" type is a light source structure involving a line light source or point light sources arranged along a line disposed to face an end face of the light guide plate 118 as shown in Figure 48. The light guide plate 118 converts light emission from the light source to area light emission to illuminating the display panel. The lamp 116 and the lamp 117 may be made of, for example, LEDs or other light emitting elements.

The liquid crystal panel 111 contains thereon a matrix of non-luminous pixels (not shown) which change its optical transmittance in accordance with an input video signal. The controller 112 outputs a video signal to the column driver 113, a display timing signal to the row driver 114, and a vertical synchronization signal 121 to the timing generating circuit 119. The timing generating circuit 119 outputs a control signal 122 via the switch 120.

A feature of the LCD 110 of the present embodiment is to use the light guide plate 118 to mix illumination light of different light emission properties. In other words, a feature of the LCD 110 of the present embodiment is that the light source is made of two groups: the lamp 116 and the lamp 117.

The lamp 116 receives direct electric power from the power supply circuit 115 via the power line 123. The lamp 116 emits light independently of the state of the control signal 122. In contrast, the lamp 117 receives electric power from the power supply circuit 115 via the power line 124 and the switch 120. The switch 120 is controlled by the control signal 122.

The illumination light from the lamp 116 and the lamp 117 is incident to an end face of the light guide plate 118. The light guide plate 118 mixes and guides the illumination light. Specifically, the light guide plate 118 has a pattern (not shown) printed to diffuse illumination light. The plate 118 guides illumination light to the liquid crystal panel 111 while diffusing the illumination light.

Furthermore, the liquid crystal panel 111 changes the transmittance of the pixels to modulate the illumination light from the light guide plate 118 for output through a display surface. The observer views the light emission through the display surface as display video.

Figure 49 is a time chart depicting operations of the LCD 110 in Figure 48. Figure 49(a) shows a signal waveform for the vertical synchronization signal 121. Figure 49 (b) shows a signal waveform for the control signal 122.

Figure 49(c) shows a waveform for the electric power fed from the power line 123. The lamp 116 emits continuous light in accordance with the waveform. Figure 49(d) shows a waveform for the electric power fed from the power line 124. The lamp 117 emits intermittent light in accordance with the waveform. Figure 49(e) shows a waveform for light output from the light guide plate 118. The light is composite light of the light output from the lamp 116 and the light output from the lamp 117.

A feature of the LCD 110 of the present embodiment is that the LCD 110 contains a plurality of light sources (lamps 116 and 117) which are controlled according to different drive principles and that the projection light from the light sources is mixed in the light guide plate 118.

The different drive principles refer to pulse drive to produce flash components controlled by a vertical synchronization signal and linear drive to produce a continuous component which is not controlled by the vertical synchronization signal. The lamp 116, emitting continuous light, is controlled by linear drive. The lamp 117, emitting intermittent light, is controlled by pulse drive.

In the LCD 110 of the present embodiment, as shown in Figure 49(e), intermittent light and continuous light are mixed before illuminating the liquid crystal panel 111 together. Therefore, the image quality improving effects described in embodiment 1 of the present invention are achieved.

In addition, the present embodiment works well with any type of non-luminous pixel. In other words, effects are achieved which are similar to the LCD 110 of the present embodiment, even if the light guide plate 118 is disposed on the same side as the display surface of the liquid crystal panel, and the illumination light output from the light guide plate 118 is reflected by the liquid crystal panel.

The LCD 110 of the present embodiment is arranged so that the lamp 116 and the lamp 117 are disposed along a straight line in Figure 48. The lamps are not necessarily arranged along a straight line.

As described in the foregoing, the LCD 110 of the present embodiment mixes intermittent light and continuous light of different properties in the light guide plate 118 to produce illumination light for the liquid crystal panel 111. Therefore, the illumination light in the LCD 110 of the present embodiment has a continuous light emission component and an intermittent light emission component. The video display device illuminated with the mixed illumination light can reduce trailing of a moving object and display clear outlines, as well as lower disruptive flickering, thereby realizing a high quality display video.

In addition, in the LCD 110 of the present embodiment, the light sources are divided into two groups which are driven to emit light of different properties. Accordingly, drive circuits and drive power supplies can be provided which are dedicated to the continuous light emission or the intermittent light emission. This allows simple circuit structure and cost reduction. Furthermore, since the emission of the two kinds of light can be controlled by individual circuits, circuit reliability improves.

Some commercially available LEDs have a low absolute maximum current rating when emitting continuous light and a low instantaneous maximum current rating when emitting pulsed light. In the LCD 110 of the present embodiment, two classes of LEDs, i.e., those for continuous light emission and those for intermittent light emission, can be used for appropriate purposes in accordance with these electrical properties of the LEDs.

[Embodiment 9]

Another embodiment of the present invention will be described in reference to Figure 50. Those members which have the same functions as the members in the LCD shown in Figure 50 and Figure 48 are given identical reference numbers.

As shown in Figure 50, the video display device 200 of the present embodiment contains a power supply circuit (first light source body drive means) 201, a power supply circuit (second light source body drive means) 202, a lamp (first light source body) 205, and another lamp (second light source body) 206.

The video display device 200 of the present embodiment includes two systems of power supply circuits 201, 202. The two systems of lamps 205, 206 are separately mounted. In other words, the lamp 206 emits continuous light as it is fed with electric power from the power supply circuit 202 via the power line 204. Meanwhile, the output of the power supply circuit 201 is switched by the switch 120. The switched output is given to the lamp 205 via the power line 203. Accordingly, the lamp 205 emits intermittent light.

A feature of the video display device 200 of the present embodiment is to use the lamp 205 and the lamp 206 which emit light with different light emission principles. Specifically, the lamp 205 emits light of which the waveform is shown in Figure 38(d). In contrast, the lamp 206 emits light of which the waveform is shown in Figure 38(c).

Therefore, the power supply circuit 202, supplying power to the lamp 206, always supplies constant power to the lamp and therefore does not suffer from stress due to changes in load. In contrast, the power supply circuit 201, supplying power to the lamp 205, experiences changes in load because the switch 120 repeatedly turns on/off the power supply. Therefore, the power supply circuit 201 and the power supply circuit 202 can be individually optimized in accordance with the properties of the load on power supply. Specifically, power supply efficiency and circuit reliability are improved.

The lamp 206 may be made of, for example, a CCFL (Cold Cathode fluorescent Light: cold cathode fluorescent lamp). In the CCFL, excess current flows at the instant when the CCFL is turned on, which degrades discharge electrode and cuts down on the lifetime of the CCFL. The CCFL is therefore not suitable for intermittent light emission. However, the lamp 206 is always on. A light emitting element which is not suitable for frequent on/off operations, such as a CCFL, may be used.

If light sources of different light emission principles are used for the lamp 206 and the lamp 205, for example, a CCFL for the lamp 206, the lamps 205, 206 have totally different external shapes, mounting methods, and drive voltages. Therefore, if the light sources are mounted in a video display device as mechanically separate independent blocks as shown in Figure 50, mechanical design and insulation design are easier. That way of mounting the light sources are also advantageous in heat dissipation.

In the video display device 200 of the present embodiment, the illumination light is again mixed light of intermittent light and continuous light. Therefore, effects are achieved which are similar to the video display device described in embodiment 1 of the present invention. In other words, the video display device 200 of the present embodiment displays a moving object with reduced trailing and a clear outline while lowering disruptive flickering.

The video display device 200 of the present embodiment has been so far described as an edge-lit backlight type using the light guide plate 118. A similar illumination method to the video display device 200 of the present embodiment is applicable to a video display device with a direct backlight described in embodiment 2 of the present invention.

In the video display device 200 of the present embodiment, the lamp 205 and the lamp 206 are disposed on opposite sides of the light guide plate 118 in Figure 50. The lamps 205, 206 are not necessarily disposed in this manner.

As described in the foregoing, the video display device 200 of the present embodiment uses light sources of different light emission principles. Light from those light sources is mixed to illuminate the display panel. Thus, the device 200 displays a moving object with reduced trailing and a clear outline while lowering disruptive flickering.

Since the video display device 200 of the present embodiment uses light sources of different light emission principles, the power supply circuitry can be readily optimized. In addition, the CCFL is difficult to use with impulse light emission of conventional art due to reliability and lifetime. The video display device 200 of the present embodiment can use the CCFL as a light source which emits continuous light.

[Embodiment 10]

A liquid crystal display (LCD) device in accordance with another embodiment of the present invention will be described in reference to Figures 51 and 52. In Figure 51, those members which have the same functions as the members in Figure 48 are given identical reference numbers. As shown in Figure 51, an LCD 400 of the present embodiment contains a power supply circuit 401, lamps (light source bodies) 402, a timing generating circuit (intermittent light signal generating means) 403, a reference voltage generating circuit (continuous light signal generating means) 404, an addition circuit 405, and an power amplifier circuit 406. The reference voltage generating circuit 404 contains, for example, a voltage divider and a voltage buffer.

The LCD 400 of the present embodiment has features that: it includes no lamp control switch; the lamps 402 are built around only one type of light source; and signals corresponding to an intermittent light emission component and a continuous light emission component are electrically mixed to drive the lamps 402.

Figure 52 is a time chart depicting operations of the LCD 400 of the present embodiment. Figure 52(a) shows a waveform for a vertical synchronization signal 121. Figure 52(b) shows a waveform for a control signal (intermittent light signal) 407. Figure 52(c) shows a waveform for a control signal (continuous light signal) 408. Figure 52(d) shows a waveform for a control signal (illumination light signal) 409. Figure 52(e) shows a waveform for an electric power on which the lamps 402 emit light.

The control signal 407 output from the timing generating circuit 403 in Figure 51 is not a binary logic signal which simply controls ON/OFF of a switch. The control signal 407 is either a digital multivalue signal representing a plurality of intermediate states or an analog signal representing continuous intermediate states.

The reference voltage generating circuit 404 outputs the control signal 408, or a reference voltage, independently of the vertical synchronization signal 121. The signal 408 is also either a digital multivalue signal or an analog signal. The addition circuit 405 obtains the sum of the control signal 407 and the control signal 408. The sum is output as the control signal 409 representing the light emission luminance of the lamps 402 to the power amplifier circuit 406. The power amplifier circuit 406 outputs part of the power supply from the power supply circuit 401 as light emission electric power to the lamps 402 in accordance with the control signal 409.

The LCD 400 of the present embodiment has a feature that the electric signals corresponding to the continuous light emission component and the intermittent light emission component are electrically combined to drive the lamps 402. Therefore, the lamps 402 in Figure 51 are all turned on under the same conditions. Therefore, the LCD 400 of the present embodiment has an advantage over the video display device described in embodiments 8 and 9 that it is less likely to develop uneven luminance.

The light sources for the LCD 400 of the present embodiment have been described as edge-lit types. A similar illumination method to the LCD 400 of the present embodiment may be applied to the light source of a direct backlighting type described in embodiment 7. Furthermore, the present embodiment has so far described the lamps as being made of one type of light source. Different types of light sources may be driven with electrically mixed signals.

The electric signal corresponding to the continuous light emission component of the present embodiment has been described as having a smaller amplitude than the electric signal corresponding to the intermittent light emission component and being continuous. This is not necessarily so. In other words, the electric signal corresponding to the continuous light emission component may have the same amplitude as the electric signal corresponding to the intermittent light emission component and repeatedly go on/off similarly to the electric signal corresponding to the intermittent light emission component. The on/off operation of the signal corresponding to the continuous light emission component may be realized by a signal which is either synchronized or not synchronized with the video signal, of which the repetition frequency is about three times (for example, 150 Hz) that of the vertical synchronization signal or greater, and the continuous light of which has an ON period as extremely short as about 1/10 the illumination duration of the intermittent light emission component or even less.

That is, numerous short pulse signals may be rendered as signals to obtain the continuous light emission component. This is because numerous short pulses are averaged and the illumination light of a lamp controlled by such a signal looks like low-luminance continuous emission to the human eye. In such cases, since the amplitude of the electric signal corresponding to both the intermittent light emission and the continuous light emission is the same, part of the circuit for emitting intermittent light may also be used for emitting continuous light.

As described in the foregoing, in the present embodiment, the liquid crystal panel 111 is illuminated with the same illumination light as mixed light of illumination light with different properties by combining signals controlling illumination light of different properties by way of electricity circuitry. Therefore, image quality improving effects by the LCD 400 of the present embodiment are the same as the video display device of embodiment 1 of the present invention above. In other words, the LCD 400 of the present embodiment lowers disruptive flickering while reducing trailing of an object and displaying clear outlines.

In the LCD 400 of the present embodiment, the lamps are made of one type of light source. The optical system has a simple structure and is easy to design. Furthermore, the LCD 400 of the present embodiment illuminates the liquid crystal panel 111 with light sources of the same type; it is less likely to develop uneven luminance, uneven color, etc. on the display screen.

[Embodiment 11]

Simultaneous reducing effects for the amount of trailing and the amount of flickering by means of a light emission waveform containing pulses of two frequencies will be described in reference to Figures 53 to 55.

Figure 53(a) shows a light emission waveform applicable to the pixels of a video display device of the present invention. Pulse A shaded with oblique lines corresponds to the first light emission component (see Figure 2). The pulse has a duty ratio of D% and a light emission intensity ratio of S3%.

The present embodiment has a feature that the light emission waveform corresponding to the second light emission component is a set of dotted pulses B. The frequency of pulse B (reciprocal of t0 in the figure) is higher than the frequency of the video signal for display: for example, 150 Hz. Since pulses B do not follow the human eye, the light emission waveform in Figure 53(a) is equivalently identical to the light emission waveform in Figure 53(b).

In Figure 53(a), four pulses B occur in (100-D)% of the cycle. Each pulse B has a light emission intensity of (100-S3)/4%. Pulse A is in phase with the vertical synchronization signal of the video signal. Pulse B is not necessarily in phase with the vertical synchronization signal.

Figure 54 shows effects of lowering the amount of trailing when the light emission waveform in Figure 53(a) is used. Figure 54 assumes that trailing is reduced using a non-luminous transmissive display panel, for example, a liquid crystal panel and the light emission waveform for the light source as shown in Figure 53(a).

Similarly to the model described in Figure 4, Figure 54 shows a 3-pixel long object moving on screen in a single direction at a constant rate of 1 pixel per frame. The product of the light emission waveform of the light source in Figure 54(a) and the transmittance of the pixel in Figure 54(b) is the luminance of the move object in Figure 54(c). In such a state, assuming that the direction indicated by the black arrow in the figure corresponds to an integration direction for the human eye, an integration is done in the direction indicated by the black arrow. Results are shown in Figures 54(d) and 54(e).

As shown in Figure 54(e), the luminance waveform for a moving object includes steps 1, 3 and slope 2. Steps 1, 3 are difficult to recognize with human dynamic vision. The human eye recognizes primarily slope 2 as the trailing of the object. If the object is stationary, steps 1 and 3 disappear, so the steps are not perceived either with stationary vision. Therefore, after the object has stopped, the backlight may be continuously turned on with the same light emission waveform as before the stopping.

Figure 55(a) to Figure 55(c) show results of calculations of Fourier series of the light emission waveform in Figure 54(a) and a light emission waveform of conventional art. Settings are made in Figure 55(a) and Figure 55(b) so that the two waveforms have equal light emission luminances. If the luminances are equal, the waveforms, when Fourier transformed, have the same DC component, making it possible to compare harmonics.

As shown in Figure 55(c), the first harmonics of the light emission waveforms of the present embodiment and the conventional example are 0.82 and 1.28 respectively. This means that the present embodiment has reduced flickering over the conventional example.

When the present embodiment is realized through the control of light emission from a light source, a light source like LEDs may be used. An LED responds very quickly to electric current switched like pulses and emits light. The LED, if fed with the electric current waveform in Figure 53(a), emits light with a similar waveform to the electric current waveform. A current switch is readily realized with digital circuitry.

As describe above, the light emission waveform in Figure 53(a) lowers flickering, while restraining artifacts occurring along the outline of a moving images.

[Embodiment 12]

A video display device in accordance with another embodiment of the present invention will be described in reference to Figure 56 to Figure 59. In the video display device of the present embodiment, the display panel is an active matrix, self-luminous EL (electroluminescent) display. Brightness level of light emission is controlled by passing electric current through EL elements, each provided to a different pixel, in accordance with image information, so as to generate display images.

Figure 56 illustrates the structure of a pixel of an EL display of the present embodiment. An EL pixel 601 contains a scan electrode 602, a signal electrode 603, a TFT 604, a capacitor 605, a TFT 606, a TFT 607, a TFT 608, an EL element 609, a power supply 610, and a scan electrode 611. There are 525 scan electrode 602 on the display panel in the case of, for example, an NTSC video signal. An NTSC video signal has a vertical frequency of 60 Hz. Since there are 525 scan lines, a given scan electrode 602 is selected about every 32 microseconds (= 1/60/525). The scan electrode are shared with other pixels which are arranged in a horizontal direction on the display panel.

Image information for display is fed from the signal electrode 603. There are 640 signal electrodes 603 or 720 on the display panel in the case of, for example, an NTSC video signal. The signal electrodes 603 are shared with other pixels arranged in a vertical direction on the display panel. If the scan electrode 602 for the pixel in question is selected, and a pulse is supplied, the TFT 604 turns on. In accordance with this timing, image information is supplied to the signal electrode 603. Therefore, the information is held in the capacitor 605 in the form of voltage (or electric charge). As the pixel in question is deselected, the TFT 604 turns off, maintaining the voltage across the capacitor 605. The EL element 609 passes the electric current determined by the voltage maintained across the capacitor 605 from the power supply 610 to emit light at desired luminance. Here, the EL pixel 601 of the present embodiment has two systems which supply electric current to the EL element 609. One of them involves the TFT 606; the other the TFT 607. The TFT 607 is controlled between on/off by the TFT 608 which in turn is controlled through the scan electrode 611.

Figure 57 illustrates operations of the EL pixel 601. Figure 57(a) shows a waveform for a pulse signal fed to the scan electrodes 602. Repetition cycle T is 16.7 milliseconds (= 1/60) for an NTSC video signal. Figure 57(b) shows a waveform for a pulse signal for the scan electrodes 611. Figure 57(c) shows a waveform of an electric current flowing to the drain of the TFT 606. The electric current is fed from the power supply 610, passes the source-drain of the TFT 606, and flows into the EL element. The electric current changes by turning on the TFT 604 when the scan electrode 602 is HIGH and updating the voltage across the capacitor 605. It is assumed that the EL element responds more quickly than, for example, common liquid crystal, and that the electric current changes to a desired value while the scan electrode 602 is HIGH.

As shown in Figure 57(c), a relatively large current I1 is specified in a cycle, and the pixel emits bright light. In the next cycle, a small current I2 flows, and the EL element 609 emits dim light. The other system is the electric current fed from the power supply 610 via the TFT 607. Similarly to the system of the TFT 606, the amplitude of the current determined by the voltage across the capacitor 605. Therefore, in Figures 57(c) and 57(d), I1 = I3 and I2 = I4.

The TFT 607 is different in that it is controlled by the scan electrode 611. The TFT 608 is turned on while the pulse on the scan electrode 611 is HIGH. In such a case, since the gate-source voltage of the TFT 607 is 0, the TFT 607 is turned off. The TFT 608 is turned off while the scan electrode 611 is LOW. In these cases, the TFT 607 is controlled by the voltage across the capacitor 605 and passes current as shown in Figure 57(d).

The waveform of the current flowing through the EL element 609 is shown in Figure 57(e). This is the sum of the waveform in Figure 57(c) and the waveform shown in Figure 57(d). That is, 15 = I1, I6 = I1 + I3, I7 = I2, and I8 = I2 + I4.

The EL element 609 emits light in accordance with the current waveform in Figure 57(e). The light emission waveform, although depending on the current vs. light emission properties of the EL element, is equivalent to Figure 38 (f) if the properties here have a proportional relationship. The effects of simultaneously reducing the amount of trailing and the amount of flickering which were described as embodiment 1 of the present invention above in reference to Figure 7 are achieved by emitting light of this waveform.

As described so far, the video display device of the present embodiment is, for example, an active matrix, self-luminous EL display. The device includes two TFTs controlled by the capacitor 605 holding video information. Current is fed to the TFTs at different timings to generate a light emission waveform corresponding to the intermittent light emission and the continuous light emission. That is, the light emission of a pixel is arranged from the first light emission component and the second light emission component described in reference to Figure 2. Alternatively, the light emission of a pixel is arranged from an intermittent light emission component and a continuous light emission component.

An intermittent light emission phase P is controlled by the phase management of pulses on the scan electrode 611. The phase of the first light emission component may be controlled through the phase of the scan electrode 611. In addition, the duty ratio D is also controllable through a LOW period for the scan electrode 611. To increase the intermittent light emission component or the light emission energy (that is, light emission intensity) of the first light emission component, the duty ratio D may be increased.

The selection of the scan electrode 602 may be 1/60 seconds similarly to the EL device of conventional hold light emission type. None of the scan electrode driver (not shown), the signal electrode driver (not shown), etc. therefore needs be increased in speed. Clock rate conversion, etc. by using a frame memory which holds the video signal externally are not needed. One capacitor is needed similarly to the EL device of conventional hold light emission type.

Figure 58 illustrates another example structure for the EL pixel. Members in Figure 58 which are equal to Figure 56 are given identical markings. An EL pixel 701 in Figure 58 contains a capacitor 702, a capacitor 703, a TFT 704, a TFT 705, a TFT 706, a scan electrode 707, and a scan electrode 708. If the TFT 604 turns on when the pixel is selected, a voltage corresponding to video information is written the capacitor. The voltage is written to the series connection of the capacitor 702 and the capacitor 703.

The TFT 705 and the TFT 706 alternately repeats turning on/off, switching the source-gate voltage of the TFT 704. the voltage across the capacitor 703 is applied across the source/ gate of the TFT 704 while the TFT 705 is on.

While the TFT 706 is off, the sum of voltages across the capacitor 703 and the capacitor 702 is applied across the source/gate of the TFT 704. These two gate voltages switch the current to the EL element 609. The TFT 706 is controlled by the scan electrode 707. The TFT 705 is controlled by the scan electrode 708. The pixel may include an inverter so that the gate of the TFT 705 is fed with, for example, the inverse of the logic signal on the scan electrode 707.

Figure 59 illustrates operations of the EL pixels 701. Figure 59(a) shows the amplitude of a pulse signal fed to the scan electrode 602. Figure 59(b) shows the amplitude of a pulse signal on the scan electrode 705. Figure 59(c) shows the amplitude of a pulse signal on the scan electrode 706. Figure 59(d) shows the amplitude of electric current flowing to the EL element 609 controlled by the TFT 705. While the scan electrode 708 is HIGH, the TFT 705 turns on, and the gate-source voltage of the TFT 704 is specified by the voltage across the capacitor 703.

The voltage is a divisional voltage obtained from the voltage written when the pixel is selected by dividing that voltage between the capacitor 703 and the capacitor 702. The voltage V2 across the capacitor 703 is given by the equation:

$$V2 = V * (C1*C2/C1 + C2)$$

where V is the voltage written when selected, and C1 and C2 are the capacitance of the capacitor 702 and the capacitor 703 respectively.

Figure 59(e) shows the amplitude of electric current flowing to the EL element 609 controlled by the TFT 706. The TFT 706 turns on when the scan electrode 707 is HIGH. The gate-source voltage of the TFT 704 becomes equal to the voltage V which was written when the pixel was being selected. Assuming that V2 < V and also that the gate-source voltage of the TFT 704 is in proportion to the drain current of the TFT 704, the currents I11, I12 in Figure 59(d) and the currents I13, I14 in Figure 59(e) are given as follows:

$$I11 = I13 * (C1*C2/C1 + C2)$$

$$I12 = I14 * (C1*C2/C1 + C2)$$

Figure 59(f) shows a waveform for an actual current flow into the EL element 609, which is the sum of the waveform in Figure 59(d) and the waveform in Figure 59(e). If the current-light emission luminance properties of the EL element 609 shows linearity, the light emission luminance waveform of the EL element 609 is like the one shown in Figure 59(f). That is, the light emission of the pixel is arranged from the first light emission component and the second light emission component described in reference to Figure 2. Alternatively, the light emission of the pixel is arranged from an intermittent light emission component and a continuous light emission component. The waveform enables both the amount of trailing and the amount of flickering to be reduced as described in embodiment 1. The light emission phase and the duty ratio D of the first light emission component are controlled by the phase management of pulses on the scan electrodes 707, 708. To increase the light emission energy (that is, light emission intensity) of the first light emission component, control is possible through the capacitance ratio of the capacitors 702, 703. Alternatively, the LOW period for the scan electrode 707 may be increased, and the HIGH for the scan electrode 708 may be decreased.

As described in reference to Figures 58 and 59 in the foregoing, a video display device in accordance with another working example of the present embodiment uses the video information held in capacitors after voltage dividing. The selection of the scan electrode 602 may be 1/60 seconds similarly to the EL device of conventional hold light emission type. None of the scan electrode driver (not shown), the signal electrode driver (not shown), etc. therefore needs to be increased in speed. Clock rate conversion, etc. by using a frame memory which holds the video signal externally are not needed.

[Embodiment 13]

The following will describe a video display device of still another embodiment of the present invention, in reference to Figure 60. In the video display device of the present embodiment, a display panel is either an active matrix self-luminous EL (Electroluminescence) panel or an active matrix non-self-luminous liquid crystal panel. In the present embodiment, the brightness is controlled by supplying, to an EL element or a liquid crystal element in each pixel, a voltage corresponding to video information, so that a display image is generated.

Figure 60 illustrates timings regarding the operation of the video display device of the present embodiment. To simplify the description, the number of scanning lines of the display panel in the figure is 5 in the figure. Indicated by (a) in Figure 60 is the waveform of a vertical synchronization signal, which functions as the basis for the screen repetition. For the NTSC video system, the frequency of the vertical synchronization signal is 60Hz. Indicated by (b) in Figure 60 is the waveform of a horizontal synchronization signal. Assuming that there are five scanning lines, five pulses, H11 to H15, are generated in one vertical cycle. Indicated by (c) in Figure 60 is the waveform of a data signal. The data signal is supplied to one of data electrodes aligned along the horizontal direction of the display panel.

The video display device of the present embodiment is provided with a frame memory which stores a video signal in units of frames. Accessing to image data stored in the frame memory, sets of data are reordered in terms of time. The pixels on one data electrode are numbered from 1 to 5 vertically from the top to the bottom, e.g. the pixel at the top of the screen is pixel 1, and the pixel directly below the pixel 1 is pixel 2. Accordingly, a set of video data for the pixel 1 is D 1, and a set of video data for the pixel 2 is D2. Indicated by D11, D12, and D13 are sets of video data generated by dividing D1 into three sets of data and reordering these sets of data in terms of time.

As indicated by (c) in Figure 60, the data for the pixel 1 is reordered in such a manner that D11 is generated in the first part of the period H11, D12 is generated at the second part in the period H 13, and D 13 is generated in the third part in the period H14. Assume that data with a while color, i.e. 100% (level 255 in 8 bits) is supplied to the D1 in a frame, and data with a gray color, i.e. 60% (level 150 in 8 bits) is supplied in the next frame which is 1/60 seconds after the previous frame.

The division of image data is carried out based on the duty ratio D and the light emission intensity ratio S. For example, assume that the duty ratio is 50% and the light emission intensity ratio S is 80%. Assume also that an instantaneous light emission peak level with which pixels of the video display device can emit light is 1000 nits. If D1 is a 100% white signal, the instantaneous light emission luminance (i.e. the height of the first light emission along the vertical axis) of the first light emission shown in Figure 2 is 100% and 1000 nits. In the second light emission, the light emission intensity ratio S is 20%, and the instantaneous light emission luminance in Figure 2 (i.e. the height of the second light emission along the vertical axis) is 25%, i.e. 250 nits. The calculation is carried out as follows: 250 nits = 50%/80%*20%. These values (50%, 80%, and 20%) correspond to D, S, and (100-S) in Figure 2, respectively.

In this manner, D11, D12, and D13 are worked out from D1, by the calculation using the duty ratio D and the light emission intensity ratio S. The 100% white signal divides and sets video data so that the instantaneous light emission luminance with D11 = 25%, D12 = 100%, and D13 = 25% is obtained. Provided that the level of video data is in proportion to the light emission luminance, a level-255 white signal divides 8-bit video data into D11 = level 64, D12 = level 255, and D 13 = level 64. In a case where the instantaneous light emission luminance is determined as above and the duty ratio is 50%, the average screen luminance is 1000 * 0.5+250 * 0.5 = 625nit.

In a case of a gray tone with D 1 = 60%, the sets of data are 60% of those of the aforementioned white signal. In other words, if D1 = 60%, then D11 = 15%, D12 = 60%, and D13 = 15%. Provided that the sets of data D11, D12, and D13 correspond to luminance L11, L12, and L13, respectively, the following values are obtained: L11 = 150 nits, L12 = 600 nits, and L13 = 150 nits if the instantaneous light emission luminance of the 100% signal is 1000 nits.

Indicated by (d) in Figure 60 is the waveform of a pulse signal applied to a scan electrode that scans the pixel 1. In this example, assume that the pixel 1 locates on the upper side of the screen. Assume also that the number of scanning lines is 5 and 5 pixels are provided on one data electrode. Moreover, assume that the aforementioned video signal D1 is supplied to the pixel 1.

The scanning signal pulses three times in one vertical cycle. The duration of one pulse is about 1/3 of the horizontal cycle. Each of these three pulses is phase-shifted with respect to the horizontal synchronization signal. The phases of the respective sets of video data D11, D12, and D13 that are reordered in terms of time correspond to the HIGH periods of the scanning signal of the pixel 1. Therefore, the light emission of the pixel 1 is performed by fetching, in the pixel 1, the video data reordered in terms of time, using the scanning signal.

In the waveform indicated by (d) in Figure 60, the leftmost first pulse locates in the first half of the horizontal synchronization signal, the second pulse locates in the middle, and the third pulse locates in the second half. Indicated by (e) in Figure 60 is the light emission waveform of the pixel 1. The vertical axis indicates the luminance. Assume that D1 is a 100% (level-255) white signal. During the first HIGH period of the scanning signal, the pixel 1 is set at the light emission state (light emission luminance) defined by D11. The instantaneous light emission luminance at this moment is 250 nits according to the example above. After the fall of the scanning signal to LOW, D11 is retained and hence the pixel 1 keeps the light emission with 250 nits. During the second HIGH period, D12 is written into the pixel 1. In the example above, L12 = 1000 nits. As the scanning signal falls to LOW again, D12 is retained and hence the pixel 1 keeps the light emission with 1000 nits. In a similar manner, L13 (= 250 nits, which corresponds to D13) is written during the third scanning pulse, and then retained. In summary, in the present embodiment, the light emission luminance corresponding to the video data of the data signal indicated by (c) in Figure 60 is set at HIGH timings of the scanning signal indicated by (d) in Figure 60.

In the case of an EL element, video data is retained as a voltage of a capacitor, and a current corresponding to the voltage is supplied to the EL element so that the EL element performs light emission. In the case of a liquid crystal element, video data is retained as an electric charge, and liquid crystal is modulated so as to have transmittance corresponding to the electric charge.

L11, L12, and L13 in (c) of Figure 60 are, for example, L11 = L13 and L12 > L11. In the light emission with this waveform, the amount of trailing and the amount of flickering are both reduced as described in embodiment 1 in reference to Figure 7. The duty ratio D of the first light emission component shown in Figure 2 is determined by the division scheme (ratio) of the sets of video data D11, D12, and D13. Indicated by (f) and (g) in Figure 60 are a case where attention is paid to another pixel, i.e. a pixel 3. Sets of video data produced by dividing video data D3 written into the pixel 3 for image display are D31, D32, and D33. Also, sets of light emission luminance corresponding to the respective sets of data are L31, L32, and L33.

The pixel 3 is provided in the central part of the screen. The timing regarding the operation of this pixel are basically identical with those of the pixel 1, but the phases are shifted by two lines. The scanning signals of the respective pixels therefore are not simultaneously HIGH.

As described above, the video display device of the present embodiment is arranged so that sets of data applied to a data electrode are reordered in advance and hence three sets of data are provided in one horizontal cycle. The scanning signal for vertical selection goes HIGH three times, in one vertical synchronization signal. More than one scanning signal are not simultaneously HIGH.

Writing data at the timings above, the video display device of the present embodiment obtains the light emission waveform indicated by (e) in Figure 60. This waveform is made up of the first and second light emission components shown in Figure 2, or made up of an intermittent light emission component and a continuous light emission component. As the pixel emits light with the aforementioned waveform, the amount of trailing and the amount of flickering are optimally reduced.

In the present embodiment, the light emission waveform is controlled in such a manner that sets of data are reordered by an externally-provided memory. Therefore, it is possible to use a typical structure of pixels in the display panel, in which data update is carried out once in one vertical synchronization signal, and hence it is unnecessary to, for example, add a scan electrode. On this account the present invention can be adopted in conventional display panels.

The duty ratio D of the intermittent light emission component is controllable by reordering data signals. The light emission phase of the intermittent light emission component is also controllable by reordering data signals.

[Embodiment 14]

The following will describe a video display device of one embodiment of the present invention, in reference to Figures 61 to 74. Figure 61 illustrates light emission waveforms of a pixel of the video display device of the embodiment of the present invention. The figure illustrates a light emission waveform in one vertical cycle T of a video signal for display.

Indicated by (a) and (b) in Figure 61 are the same waveform, but the way of division of the light emission waveform is different between (a) and (b). That is, (a) in Figure 61 divides the waveform into (i) a part where the instantaneous light emission intensity is high and (ii) parts other than (i).

In (a) in Figure 61, a part with halftone dots indicates the first light emission component. The first light emission component is arranged such that the duty ratio is D% of the cycle T in terms of duration, the instantaneous light emission intensity is A [nit], the light emission intensity ratio is S% of the light emission intensity of the pixel, and the ratio of duration from the start of the vertical cycle to the midpoint of the light emission waveform is P% of the vertical cycle.

Here, the light emission of a pixel at a point in time is referred to as a peak light emission level, a light emission peak level, an instantaneous light emission luminance, an instantaneous light emission intensity, an instantaneous light emission peak, or simply a luminance. Strictly, "luminance" in general is used to indicate instantaneous light emission luminance expressed in units of nits or candelas per square meter ($cd/m^2$).

The human eye perceives the instantaneous light emission luminance which is integrated and smoothed. This is called the average luminance, emission intensity, average screen luminance, screen luminance, average intensity, or average luminance level. Although, strictly speaking, its unit is not nits, this unit is widely used as an equivalent. For example, for liquid crystal televisions, the average luminance of a white color display is used to show its specifications in product catalogs. The instantaneous light emission luminance times the duration ratio (or duration), for example, "S" and "S1" in Figure 61, is referred to as the light emission intensity ratio (or light emission intensity), light emission component, or amount of light emission. In Figure 61, the area enclosed by the vertical and horizontal axes and the light emission waveform represents the light emission intensity.

In (b) in Figure 61, a shaded part is the second light emission component. The second light emission component is arranged such that the duty ratio is DA+DB = (100-D)% in terms of duration, the instantaneous light emission intensity is B[nit], and the light emission intensity ratio is (100-S)% of the light emission intensity of the pixel.

The instantaneous light emission intensity of each of the first and second light emission components is arranged so that A > B. DA indicates the ratio between (i) the vertical cycle and (ii) a period from the start of the vertical cycle (i.e. from the selection pulse (gate pulse, scanning pulse) of the pixel based on the vertical synchronization signal) to the start of the light emission based on the first light emission component. DB indicates the ratio between (i) the vertical cycle and (ii) a period from the end of the light emission based on the first light emission component to the end of the vertical cycle.

In (b) in Figure 61, the waveform is divided into (i) an intermittent light emission component and (ii) a continuous light emission component which raises the overall luminance level. In (b) in Figure 61, a part with vertical lines indicates the intermittent light emission component. The intermittent light emission component is arranged such that the duty ratio is D% of the cycle T in terms of duration, the instantaneous light emission intensity is C [nit], the light emission intensity ratio is S1% of the light emission intensity of the pixel, and the ratio of duration from the start of the vertical cycle to the midpoint of the light emission waveform is P% of the vertical cycle. The instantaneous light emission intensity C has the relationship of C = A-B.

In (b) in Figure 61, a crosshatched part indicates the continuous light emission component. The continuous light emission component is arranged such that the duty ratio is 100% in terms of duration, the instantaneous light emission intensity is B[nit], and the light emission intensity ratio is (100-S1)% of the light emission intensity of the pixel in the vertical cycle.

Here, S1 = C * D = (A-B) * D, A = S/D, and B = (100-S)/(100-D). Therefore, S1 = S-(100-S)/(100-D) * D, and hence S can be converted to S1. The light emission waveform made up of the first and second light emission components are therefore virtually equivalent to the light emission waveform made up of the intermittent light emission component and the continuous light emission component. Taking account of this, the following will describe the effects of the present invention in reference to (b) in Figure 61.

Figure 62 is a block diagram of a video display device 1100 of embodiment 14 of the present invention. As shown in the figure, the video display device 1100 includes a display panel 1101, a video controller 1102, a data driver 1103, a scan driver 1104, column electrodes 1105, row electrodes 1106, a lamp drive circuit 1107, a lamp drive circuit 1108, a lamp 1109, and a lamp 1110.

On the display panel 1101, the column electrodes 1105 and the row electrodes 1106 are provided like columns and rows. The display panel 1101 is a transmissive type, which allows illumination light supplied from the light source to pass through, so as to modulate the light. At the intersections of the column electrodes 1105 and the row electrodes 1106, pixels (not illustrated) are provided in a matrix manner.

The display panel 1101 is, for example, made of quick-response liquid crystal. Here, the liquid crystal response is approximated with an exponential function:

$$y = A0 * (1 - \exp(-t/\tau))$$

where y is the transmittance, and A0 is any given constant.

The time constant $\tau$, indicating the time the response takes from the start of the response to reach about 63% the final value, is assumed to be about 1 millisecond, and 2 milliseconds at a maximum.

The data driver 1103 drives the pixels based on the data signal 1112, so as to determine the transmittance of each pixel in reference to the data signal 1112. The scanning signal 1113 indicates sets of information: the horizontal synchronization signal and the vertical synchronization signal of the video signal 1111. The horizontal synchronization signal is a unit of display in the column direction (horizontal direction) of the display screen. The vertical synchronization signal is a unit of display in the row direction (vertical direction) of the screen. The frequency of the vertical synchronization signal is, for example, 60Hz in the NTSC system.

The scan driver 1104 performs scanning so as to sequentially select the row electrodes 1106 from the top to the bottom of the screen, based on the timing indicated by the horizontal synchronization signal of the scanning signal 1113. At the timing indicated by the vertical synchronization signal of the scanning signal 1113, the scanning of the row electrodes 1106 starts again from the top.

Paying attention to one pixel on the display panel 1101, the pixel is selected in every 16.7 milliseconds. The video controller 1102 generates a lamp control signal 1114 based on the vertical synchronization signal of the video signal 1111, and supplies the lamp control signal 1114 to the lamp drive circuit 1107. The lamp drive circuit 1107 controls the lamp 1109. The lamp 1109 emits intermittent light (intermittent light emission component) 1115 controlled by the lamp control signal 1114. In other words, the lamp 1109 performs light emission corresponding to the intermittent light emission component illustrated in (b) in Figure 61. The lamp 1109 is, for example, one or more LEDs (Light Emitting Diode). The intermittent light 1115 illuminates the display panel 1101.

The lamp drive circuit 1108 controls the lamp 1110. The lamp 1110 emits continuous light (continuous light emission component) 1116, independently of the video signal 1111. That is, the lamp 1110 performs light emission corresponding to the continuous light emission component illustrated in (b) in Figure 61. The lamp 1110 is, for example, one or more fluorescent lamps such as CCFL (Cold Cathode Fluorescent Lamp). Being similar to the lamp 1109, the lamp 1110 may be an LED. The continuous light 1116 also illuminates the display panel 1101, as in the case of the intermittent light 1115.

Figure 63 is a cross section of the video display device 1100 shown in Figure 62. In Figure 63, members having the same functions as those described in Figure 62 are given the same numbers. As shown in Figure 63, a light guide space 1201 is, for example, a gap between the backside chassis and the display panel 1101 of the video display device 1100. Below the light guide space 1201, the lamps 1109 and 1110 are provided. Above the light guide space 1201, the display panel 1101 is provided.

The intermittent light 1115 emitted by the lamp 1109 and the continuous light 1116 emitted by the lamp 1110 propagate through the light guide space 1201, towards the display panel 1101. In the course of the propagation, these sets of illumination light are mixed with one another, so as to form mixed illumination light 1202. The mixed illumination light 1202 illuminates the display panel 1101. The illumination light is modulated by the pixels on the display panel 1101, and outputted from the display panel 1101, as display image light 1203. The viewer of the video display device 1101 recognizes the display image light 1203 as a displayed image.

Figure 64 is a timing chart for illustrating the operation of the video display device 1100 shown in Figures 62 and 63. This figure illustrates variations with time of signals passing through the respective paths and the light emission waveforms of sets of light. The horizontal axis indicates time, and the time axis is illustrated in units of frames of the video signal 1111. A frame is a unit of the video signal 1111 for one display screen, and is determined by vertical synchronization.

Indicated by (a) in Figure 64 is the signal waveform of the vertical synchronization signal of the video signal 1111. Indicated by (b) in Figure 64 is the signal waveform of the lamp control signal 1114. The figure shows that the lamp control signal 1114 is repeatedly switched on/ off in synchronism with the vertical synchronization signal. Indicated by (c) in Figure 64 is the light emission waveform of the intermittent light 1115 which is intermittently emitted in synchronism with the vertical synchronization signal. The vertical axis indicates the instantaneous light emission luminance.

Indicated by (d) in Figure 64 is the light emission waveform of the continuous light 1116 which is always constant independently of the vertical synchronization signal. The vertical axis indicates the instantaneous light emission luminance. Indicated by (e) in Figure 64 is the light emission waveform of the mixed illumination light 1202. The vertical axis indicates the instantaneous light emission luminance. The mixed illumination light 1202 is generated by mixing the intermittent light 1115 indicated by (c) in Figure 64 with the continuous light 1116 indicated by (d) in Figure 64, in the light guide space 1201.

Indicated by (f) in Figure 64 is the transmittance of a pixel on the display panel 1101. In (f) in Figure 64, a white image is supplied in the second and fourth frames, while a black image is supplied in the first and third frames. The product of the mixed illumination light 1202 indicated by (e) in Figure 64 and the transmittance of the pixel indicated by (f) in Figure 64 is the display video light 1203 indicated by (g) in Figure 64, i.e. the temporal response waveform of the instantaneous light emission luminance of a displayed image.

The video display device 1100 of the present embodiment is characterized in that, a plurality of light sources, lamps 1109 and 1110, are provided, these light sources emit intermittent light 1115 and continuous light 1116, respectively, and the display panel 1101 is illuminated with light generated by mixing the sets of light 1115 and 1116. The intermittent light 1115 is mixed with the continuous light 1116 in the light guide space 1201. The cycle and phase of the intermittent light 1115 are controlled in synchronism with the vertical synchronization signal of the video signal 1111.

The video display device 1100 of the present embodiment can realize the reduction of the motion trailing and the reduction in the disruptive flickering, by illuminating the display panel with the mixed illumination light 1202 indicated by (g) in Figure 64.

Figure 65 is used for qualitatively illustrating the reduction of the motion trailing and the reduction in the flickering, in the video display device 1100 of the present embodiment. In Figure 65, it is assumed that an object moves at a uniform velocity, i.e. one pixel per frame, and the moving direction is from the top to the bottom of the screen. The vertical length of the object is identical with three pixels, and the horizontal length of the object is arbitrarily determined.

Indicated by (a) in Figure 65 is the light emission waveform of the mixed illumination light 1202. The vertical axis indicates the instantaneous light emission luminance, while the horizontal axis indicates time in units of frames. In (a) in Figure 65, a vertical-striped part corresponds to the intermittent light 1115. In (a) in Figure 65, a crosshatched part indicates the continuous light 1116.

Indicated by (b) in Figure 65 is the outline of the object displayed on the display panel 1101, at a brief moment. The horizontal axis indicates space in units of pixels, while the vertical axis indicates the transmittance.

Illustrated in (c) in Figure 65 is how an object moves on the display screen of the display panel 1101 (in the figure, the horizontal axis indicates time and the vertical axis indicates space). Although the display screen of the display panel 1101 is a two-dimensional plane, the horizontal coordinate axis among two spatial coordinate axes is omitted in (c) in Figure 65.

The displayed object moves with time. On account of the movement and the illumination with the light emission waveform shown in (a) in Figure 65, the display video light 1203 has two levels of luminance. That is, while the intermittent light emission component exists, the luminance of the display video light 1203 is high. In (c) in Figure 65, the vertical-striped part corresponds to a period in which the luminance is high.

On the other hand, in a period in which only the continuous light emission component exists, the light emission intensity of the mixed illumination light 1202 is low but still high enough to sufficiently illuminate the pixels. In (c) in Figure 65, a crosshatched part corresponds to a period in which only the continuous light emission component exists.

In a case where the viewer follows the moving object along the arrow 2, the object appears on the retina of the observer as shown in (d) in Figure 65, because the aforementioned two types of light emission states are integrated with one another. Indicated by (e) in Figure 65 is the outline of the luminance in (d) in Figure 65. In (e) in Figure 65, the horizontal axis indicates pixels (space) while the vertical axis indicates the luminance.

As indicated in (e) in Figure 65, the luminance outline of the moving object viewed by the viewer has three types of slopes 1, 2, and 3. Importantly, slopes 1 and 3 indicated in (e) in Figure 65 are moderate, whereas slope 2 is steep.

Changes in luminance corresponding to moderate slopes 1 and 3 are difficult to recognize to the human eye, because the observer cannot generally identify contrast for a moving object so well as he/she can for an ordinary, stationary object. It is therefore only slope 2 that the observer can recognize in the luminance outline of the object. The disruptive motion trailing in Figure 114(a) which occurs when the light source which emits light at a constant light emission intensity illuminates the display panel 1101 can be sufficiently reduced, in the video display device 1100 of the present embodiment.

Figures 66(a) to 66(i) are used for qualitatively illustrating the effect of the present embodiment, and show the characteristics of three light emission patterns.

Figures 66(a) to 66(c) show the waveform, the amount of trailing, and the amount of flickering in the light emission luminance, in a case where a conventional impulse light emission pattern in which the duty ratio is 25% is adopted. Figure 66(d) to 66(f) shows the waveform, the amount of trailing, and the amount of flickering in the light emission luminance, in a case where an impulse light emission pattern in which the duty ratio is 40% is adopted. Figures 66(g) to 66(i) show the waveform, the amount of trailing, and the amount of flickering in the light emission luminance, in a case where the display panel 1101 of the video display device 1100 of the present embodiment is illuminated. In the light emission by the video display device 1100 of the present embodiment, the duty ratio D of the intermittent light emission component is set at 20%, and the light emission intensity ratio S1 of the intermittent light emission component is set at 80%.

The amount of the trailing is measured in spatial length, defined as a variation from 10% to 90% of the luminance along the vertical axis. This definition is based on the above-described fact that the observer cannot generally identify contrast for a moving object so well as he/she can for an ordinary, stationary object. In Figures 66(b), 66(e), and 66(h), the ranges indicated by the arrows correspond to the amounts of the trailing.

Figures 66(c), 66(f), and 66(i) indicate the amounts of the flickering. These amounts of the flickering are worked out in such a manner that the light emission waveforms shown in Figures 66(a), 66(d), and 66(g) are subjected to frequency conversion by Fourier transform so that the ratios of the first harmonic components to the O-order DC components (average levels) are calculated. For example, in an NTSC video signal whose vertical synchronization signal is 60Hz, the first harmonic component is 60Hz. The higher the ratio of the first harmonic component to the O-order DC component, the more conspicuous the disruptive flickering is.

In Figures 66(a) to 66(i), the light emission intensities of the respective light emission patterns are identical with each other. Therefore, in Figures 66(a), 66(d), and 66(g), values each worked out by integrating the luminance over time are identical to each other. Since the light emission intensities are identical as above, the amount of energy of each average level component (0-order DC component) shown n Figures 66(c), 66(f), and 66(i) is identical between the respective light emission patterns. On this account, the comparison between the first harmonic synchronization components of the respective light emission patterns is feasible.

Figure 67 shows the characteristics of the respective light emission patterns illustrated in Figures 66(a) to 66 (i). In Figure 67, the duty ratio D of the intermittent light emission component in the first column is the light emission time ratio between the intermittent light emission component and the update repeating time (vertical cycle) of the pixel. The continuous component in the second column is the light emission intensity ratio S1 between the intermittent light emission component and the light emission intensity of the entire screen. In the conventional art, the light emission intensity ratio S1 of the intermittent light emission component is 100%. The third column shows the amount of the trailing, which corresponds to the lengths of the arrows in Figures 66(b), 66(e), and 66(h). The mount of the flickering in the fourth column indicates the ratio between the 60Hz component (first harmonic synchronization component) and the average level (O-order DC component). The first to third rows in Figure 67 correspond to the respective light emission patterns 1-3 in Figure 66.

As indicated in (a) in Figure 114, in the light emission with the case where no measures are taken to address trailing, the amount of the trailing while the luminance is changed from 10% to 90% is 0.8. On the other hand, in the conventional example in the first row of Figure 67, the duty ratio is 25% so that the amount of the trailing is reduce to 0.2. Therefore, the reduction rate of the amount of the trailing is 75% in the conventional example in the first row. However, conspicuous flickering occurs because the 60Hz component which is the major cause of the flickering is generated at a rate of 90%.

As shown in the conventional example in the second row of Figure 67, the duty ratio is increased to 40% in order to reduce the flickering. In this case, while the amount of the flickering is reduced to 75% on account of the increase in the duty ratio, the amount of the trailing increases to 0.32, and hence the reduction rate of the amount of the trailing decreases to 60%.

In the present embodiment shown in the third row, the duty ratio of the intermittent light emission component, which is the characteristic of the present invention, is 20%, and the light emission intensity ratio is 80%. As Figure 67 clearly shows, the flickering is reduced from 90% to 75% when compared to the conventional example in the first row, but the amount of the trailing is 0.20, which is as good as the conventional example in the first row.

As described above, in the present embodiment, the disruptive flickering is greatly reduced whereas the reduction in the trailing is ensured. It is therefore possible to provide images with optimal quality to the viewer.

Figure 68 shows the characteristics of the respective light emission patterns illustrated in Figure 66. The horizontal axis in Figure 68 indicates the amount of the trailing. The lower the value is, the higher the image quality is. The vertical axis in Figure 68 indicates the amount of the flickering. The lower the value is, the higher the image quality is, because of a lower amount of flickering.

According to the conventional art, changes in the amount of the trailing and the amount of the flickering on account of the duty ratio D are indicated by the trajectory in Figure 68. In this manner, the trajectory does not move toward optimal reduction indicated by the outline arrow. Therefore, in this case, the amount of the flickering is not compatible with the amount of the trailing. It is therefore impossible to reduce both of them.

On the other hand, the black circle in the figure indicates the characteristic of the light emission in the present embodiment. The black circle indicates that the amount of the trailing and the amount of the flickering are both reduced.

Figures 69(a) to 69(f) are used for illustrating the relationship between the intermittent light emission component duty ratio D and the intermittent light emission phase P. The intermittent light emission phase indicates the ratio between (i) time from the start of the vertical cycle to the middle of the intermittent light emission component and (ii) the vertical cycle (see (b) in Figure 61).

In Figures 69(a) to 69(f), the conditions of the light emission are as follows: duty ratio D = 30%, the light emission intensity ratio S1 = 90%. Also, as described above, the display panel adopts quick-response liquid crystal whose time constant $\tau$ is about 1 millisecond. As in the case of Figure 65, the amount of the trailing is defined as a variation of the trailing while the luminance varies from 10% to 90%.

Figures 69(a), 69(c), and 69(e) show the light emission waveforms where P = 30%, 50%, and 70%, respectively. Also, Figures 69(b), 69(d), and 69(f) show the states of the trailing in case where P = 30%, 50%, and 70%, respectively. The state of the trailing is worked out using the trailing model shown in Figure 65.

As Figure 69 clearly shows, slopes 1 and 3 illustrated in (e) in Figure 65 are fairly balanced when P = 50%. When P = 30% and 70%, slopes 1 and 3 are unbalanced but the amount of the trailing is identical with that of the case where P = 50%, and hence the reduction of the trailing is equally achieved.

Figures 70(a) to 70(f) are used for illustrating the relationship between the intermittent light emission component duty ratio D and the intermittent light emission phase P. In these figures, the conditions of the light emission are identical with those in Figures 69(a) to 69(f). Figures 70(a) to 70(f), however, show the cases where the intermittent light emission phase P is 10%, 50%, and 90%.

As shown in 70(b) and 70(f), the reduction of the trailing is hardly achieved when P = 10% and 90%. This is because, as shown in Figures 70(a) and 70(e), the light emission waveform is divided in half.

Figs 71(a) to 71(f) are used for illustrating the relationship between the intermittent light emission component duty ratio D and the intermittent light emission phase P. In these figures, the conditions of the light emission are identical with those in Figures 69(a) to 69(f) and 70(a) to 70(f). Figures 71(a) to 71(f), however, show the cases where the intermittent light emission phase P is 15%, 50%, and 85%. As shown in 71(a) to 71(f), the reduction of the trailing is sufficiently achieved in this case.

From Figures 69(a) to 69(f), 70(a) to 70(f), and 71 (a) to 71 (f), the followings are clarified: the relationship between the duty ratio D and the light emission phase P must be arranged such that either P is not less than D/2% or P is not more than (100-D/2)%, in order to avoid the division of the light emission pulse in the frame. In cases other than the aforementioned two cases, the intermittent light emission component is divided in the frame as shown in Figures 70 (a) and 70(e). Such division of the intermittent light emission component in the frame prevents the effect of the present invention, i.e. the reduction of both the amount of the trailing and the amount of the flickering, from being achieved, because the slope is steep as shown in (c) in Figure 65, in the integration which is worked out with the assumption that the viewer follows the edge of the moving object.

Therefore, the duty ratio D and the intermittent light emission phase P are managed so as to meet the following equation.

$$D/2 \le P \le (100 - D/2)$$

where 0 < D < 100

In the equation, a case where D = 0% is excluded because the intermittent light emission component is 0. Also, a case where D = 100% is excluded because it indicates the intermittent light emission waveform of the conventional art.

Figure 72 shows the relationship between the duty ratio D and the intermittent light emission phase P. The horizontal axis indicates D, whereas the vertical axis indicates P. D and P satisfy the conditions above in the halftone area in the figure.

In Figure 72, on the lower border line of the aforementioned area, P = D/2 is satisfied. On the other hand, on the upper border line of the area, P = (100-D/2) is satisfied. D and P are determined so as to be in the halftone area in Figure 72, in consideration of the response speed of the display panel, the type of the light source, packaging scheme, and the like.

Figures 73(a) to 73(e) are used for illustrating the light emission phase of the light emission waveform of the present embodiment. Figure 73(a) shows the light emission waveform in one frame of the mixed illumination light 1202 of the present embodiment, and the horizontal axis indicates time in units of frames. That is, a pixel is selected at the moment 0 on the temporal axis, and the next selection is carried out in the following moment 1.

The conditions of the light emission waveform are identical with those in the third row in Figure 67. That is to say, the duty ratio D of the intermittent light emission component is 20% and the light emission intensity ratio S1 of the intermittent light emission component is 80%. The display panel 1101 adopts the aforementioned quick-response liquid crystal whose time constant is about 1 millisecond. The light emission phase of the intermittent light 1115 is at the middle of the frame period, i.e. the intermittent light emission phase P is 0.5.

Figure 73(b) shows the result of a calculation of the amount of the trailing generated in a case where the display panel 1101 is illuminated by the mixed illumination light 1202 shown in Figure 73(a). This calculation is performed based on a simulated trailing amount calculation method explained in Figure 65. The horizontal axis in Figure 73(b) is a space in units of pixels, and the space in the figure corresponds to one pixel. The definition of the amount of the trailing is identical with that described in Figure 66, i.e. the amount of the trailing is a spatial length while the luminance variation (slope) of the trailing is from 10% to 90%. The amount of the trailing in this case is 0.2.

Being similar to Figure 73(a), illustrated in Figure 73(c) is the light emission waveform of the present embodiment. In Figure 73(c), however, the light emission phase of the intermittent light 1115 is shifted to the second half of the frame. The intermittent light emission phase P of the light emission waveform shown in Figure 73(c) is 75%.

Figure 73(d) shows the waveform of the trailing, in a case where the display panel 1101 is illuminated by the mixed illumination light 1202 shown in Figure 73(c). In the waveform of the trailing in Figure 73(d), the amount of the trailing is 0.33. In this manner, the amount of the trailing increases as the intermittent light emission phase P changes. This is because, as shown in Figure 73(d), the balance between slope 1 and 3 is disrupted, so that the a moderately-inclined part of slope 1 exceeds 10% which is set as the threshold value.

Figure 73(e) indicates the relationship between the intermittent light emission phase P and the amount of the trailing, in a case where the light emission conditions are set as shown in Figures 73(a) and 73(c) (i.e. the duty ratio D is 20% and the light emission intensity ratio S1 is 20%).

As Figure 73(e) clearly shows, if the light emission conditions are arranged such that the duty ratio D is 20% and the light emission intensity ratio S1 is 80%, the trailing is restrained most in a case where the intermittent light emission phase is 50%, i.e. the waveform of the intermittent light 1115 is at the middle of each of the repeated frames.

For example, assume that the threshold value at which slopes 1 and 3 as shown in (e) in Figure 65 are not observed as trailing is defined as the luminance variation of the trailing from 15% to 85% from the screen luminance (absolute brightness) of the image display, visual conditions, etc. In this case, the amount of the trailing in Figure 73(d) is identical with the amount of the trailing in Figure 73(b).

In the present embodiment, the reductions of the amount of the trailing and the amount of the flickering are quantitatively described based on the trailing model shown in Figure 65 and the definition of the amount of the trailing (amount of flickering) described in reference to Figures 66(a) to 66(i). The image quality produced by the image device is quite subjective and depends on visual and other conditions.

Therefore, optimal values of the parameters such as the threshold of the trailing, the duty ratio D, the light emission intensity ratio S1 of the intermittent light emission component, and the intermittent light emission phase P are determined so as to satisfy the above-mentioned equation $D / 2 \le P \le (100 - D/2)$, in consideration of the conditions of the system of the video display device.

Figure 74 is used for illustrating how the effects of the present embodiment are evaluated by the observer's subjectivity. As to the screen luminance of the video display, its white color luminance (screen luminance when a white color is displayed on screen) was set to 450 nits, which is a sufficiently bright level for a television (TV). Nits (nt) are a unit of luminance. Three images A, B, C with different APLs (Average Picture Level; average luminance level) were used in the evaluation. These images were still images.

More specifically, image A was a dark image, for example, a night view. The APL was 20%, and its average screen luminance about 100 nits. Image B consisted primarily of mid-level tones with a 50% APL. Its average screen luminance was 250 nits. Image C was a bright image, for example, blue sky. The APL was 80%, and its average screen luminance 350 nits.

Images A, B, C were displayed on the video display device by switching between the light emission waveform of conventional art shown in Figure 66(a) and the light emission waveform of the present embodiment shown in Figure 66(c). It was checked whether the observer perceived image flickering, and if he did, whether the image flickers felt disruptive. The subjective evaluation was done on a scale of 1 to 5. The higher the score, the higher the image quality.

As can be seen in Figure 74, the flickering reduction of the present embodiment came up to the allowable level for the observer, when compared to the impulse light emission of the conventional art. Such reduction was similarly observed in three APLs, i.e. three images with different levels of luminance.

As stated earlier, the embodiment exploits the low sensitivity of the human eye to the contrast of a moving image to reduce the trailing of a moving image. Therefore, even if an instantaneous value (instantaneous peak luminance) of the screen luminance on account of the illumination by the continuous light 1116 is human- observable, it does not influence on the reduction of trailing.

On the contrary, the screen luminance at the instantaneous peak is preferably perceived easily. In Figure 66 (g), the continuous light emission component is 20%. Therefore, provided that the screen luminance of the display panel is 450 nits, 20% of this luminance, i.e. 90 nits, is produced by the illumination by the continuous light 1116. Light with the screen luminance of 90 nits is sufficiently perceivable by human eyes. Referring to the result of the subjective evaluation shown in Figure 74, the continuous light emission component with the 20% luminance is suitable for the reduction of the trailing and the reduction in the disruptive flickering.

In the present embodiment, the scanning of the display panel may be carried out in a progressive manner or in an interlace manner.

The video display device 1100 of the present embodiment does not necessarily use LEDs or CCFL as the light sources. Any types of light sources may be used on condition that they are suitable for intermittent light emission and continuous light emission.

Although the display panel 1101 shown in Figure 62 is a transmissive type, the panel may be a reflective type which modulates illumination light supplied from the light source, by reflecting the light.

In the present embodiment, the lamps 1109 and 1110 are provided directly below the display panel 1101 as shown in Figure 62, However, the arrangement of the lamps is not limited to the above. Also, although the sets of light are mixed in the light guide space 1201 as shown in Figure 63, the sets of illumination light may be mixed in the course of guiding the intermittent light 1115 and the continuous light 1116 to the display panel 1101 by using a light guide plate. Alternatively, the mixture of the sets of light can be omitted in such a manner that electric signals corresponding to the components of the intermittent light 1115 and continuous light 1116 are electrically added up and then the light source is controlled so as to emit light.

Although Figure 62 regarding the present embodiment shows an NTSC video signal whose vertical synchronization signal is 60Hz, the present embodiment can be adopted to a video signal whose frequency is 75Hz, such as an RGB video signal used for PCs. In such a case, for evaluation, the amount of the flickering is defined by higher harmonics with 75Hz of the DC component, through Fourier transformation of the light emission waveform

In the present embodiment, examples of the parameters D and S1 set in the video display device 1100 are shown in the third row in Figure 67. The present invention, however, is not limited to these values.

In the present embodiment, the continuous light 1116 is constant independently of the video signal 1111. Alternatively, the continuous light 1116 may vary with the frequency (e.g. 150Hz) not lower than three times as high as the frequency of the vertical synchronization signal of the video signal 1111. The observer's eye has poor sensitivity to flickers of about 150 Hz. The eye is hardly sensitive to flickers in excess of about 300 Hz. Therefore, the human eye recognizes the continuous light 1116 as light with a constant intensity even if, strictly speaking, the light 1116 actually varies or flickers at a certain cycle.

In the present embodiment, the light emission intensity ratio between the intermittent light 1115 and the continuous light 1116 is assumed to be a fixed value. Alternatively, the type of the image represented by the video signal 1111, an image with rapid motion, an image with slight motion, and a still image with no motion, is determined, and the light emission intensity ratio between the intermittent light 1115 and continuous light 1116 is varied in accordance with the determined type of the image.

In a case of the still image, the light emission intensity ratio of the continuous light 1116 is controlled so as to be substantially 100%. In a case of an image with a slight motion, the light emission intensity ratio of the continuous light 1116 is set at not lower than 50%, while the light emission intensity ratio of the intermittent light 1115 is set at not higher than 50%. In a case of an image with rapid motion, the light emission intensity ratio of the intermittent light 1115 is increased. By the way, it is necessary to carry out control so as to prevent the display luminance of the display panel from varying, by controlling the respective light emission intensity ratios of the continuous light 1116 and the intermittent light 1115. The light emission conditions optimal for a displayed image may be determined with the aforementioned control. The control of the light emission intensity ratio may be carried out in each frame.

As described above, in the present embodiment, continuous light and intermittent light, which have different characteristics, are mixed and the display panel is illuminated with the mixed light. With this, while a clear outline is achieved by restraining the trailing of a moving image, the restriction of the disruptive flickering is realized. For the reduction of the trailing of a moving image, the embodiment exploits the low sensitivity of the human eye to the contrast of a moving image. Therefore, in instantaneous light emission, the screen luminance with the light emission intensity of the continuous light 1116 is easily perceivable by the observer.

In the present embodiment, sets of light with different characteristics are obtained using the respective lamps 109 and 110. Alternatively, light control means may be provided in a light path between the display panel and the light source whose characteristics are identical with those of the lamp 110. The light control means is an optical shutter made of liquid crystal such as ferroelectric liquid crystal. The transmittance of the light control means is switched between total transparence and half transparence, by switching on/off the applied voltage. The optimal reduction of the amount of the trailing and the amount of the flickering is achieved in the following manner: in synchronism with the vertical synchronization signal of an image, the transmittance of the light control means is changed to 100% if the voltage is ON, so that the intermittent light is generated by allowing the illumination light from the light source to pass through, while he transmittance of the light control means is reduced to 50% if the voltage is OFF, so that the continuous light is generated.

Flickering becomes easier to perceive when the video display device has higher screen luminance (Ferry-Porter's law). Therefore, disruptive flickering will likely occur if an image is displayed at high luminance. Among the visual cells of the human eye, the rod cells are more sensitive to brightness/darkness than the pyramidal cells. That is, the human eye is more sensitive to brightness/ darkness along the periphery than at the center of the field of vision. Therefore, disruptive flickering is more likely to be perceived on a video display device with a larger display panel. Therefore, the video display device of the present embodiment is especially effective to improve display quality of video display devices of high luminance or with large screens.

In the present embodiment, the duty ratio D of the intermittent light emission component and the intermittent light emission phase D satisfies the equation $D/2 \le P \le (100 - D/2)$. The parameters of the video display, such as the threshold value of trailing, the duty ratio D, the light emission intensity ratio S1 of the intermittent light emission component, and the intermittent light emission phase P, are optimally determined in such a manner as to satisfy $D/2 \le P \le (100 - D/2)$, in consideration of the amount of the trailing and the amount of the flickering based on the subjective evaluation of the video display, and the conditions of the system.

[Embodiment 15]

A video display device of still another embodiment of the present invention will be described in reference to Figures 75 and 76. Figure 75 is used for illustrating the video display 1400 adopting the present embodiment. As shown in Figure 75, the video display 1400 includes: a liquid crystal panel (video display means) 1401; a liquid crystal controller 1402; a source driver 1403; a gate driver 1404; source electrodes 1405; gate electrodes 1406; an intermittent light emission drive circuit 1407; a continuous light emission drive circuit 1408; lamp units (light emission means) 1409; lamps 1410; lamps 1411; a light guide unit 1402; a light guide unit 1413; and a light guide unit 1414.

On the liquid crystal panel 1401, the source electrodes 1405 driven by the source driver 1403 and the gate electrodes 1406 driven by the gate driver 1404 are provided in a matrix manner. At the respective intersections of the source electrodes 1405 and the gate electrodes 1406, pixels (not illustrated) are provided. In Figure 75, reference numbers G1-G6 are assigned to the gate electrodes 1406.

Based on the video signal 1451, the liquid crystal controller 1402 carries out processes necessary for display on the liquid crystal panel 101, and controls the source driver 1403 and the gate driver 1404.

The gate driver 1404 sequentially selects the gate electrodes 1406, so as to apply gate signals thereto. The liquid crystal panel 1401 is a transmissive type. When a gate electrode is selected. the transmittance of pixels belonging to the selected gate electrode is updated.

The transmittance of each pixel is determined by video information from the source electrode. The frequency in the update of the transmittance is determined based on the frequency in the vertical synchronization of the video signal 1451. For example, the frequency of an NTSC video signal is 60Hz. Used in each pixel in the present embodiment is quick-response liquid crystal whose temporal characteristics (time constant) is about 1 millisecond, i.e. the transmittance of the liquid crystal changes to a desired state in about 1 millisecond.

The liquid crystal controller 1402 outputs the vertical synchronization signal 1452 to the intermittent light emission drive circuit 1407. The lamp unit 1409 includes a lamp 1410 outputting intermittent light and a lamp 1411 outputting continuous light. Each of the lamps 1410 and 1411 is one or more LEDs, for example. There are three lamp units 1409 in Figure 75, but the number of the lamp units in the video display 1400 is not limited to this.

The intermittent light and the continuous light are mixed with each other in the lamp units 1409, and the lamp units 1409 outputs mixed illumination light 1457, mixed illumination light 1458, and mixed illumination light 1459, respectively. These sets of mixed illumination light are supplied to the light guide unit 1412, the light guide unit 1413, and the light guide unit 1414, respectively.

On each of the light guide units 1412-1414, a pattern (not illustrated) for diffusing light is printed. The mixed illumination light supplied from the end face is guided and diffused, and outputted to the liquid crystal panel. The respective light guide units 1412-1414 one-to-one correspond to the lamp units 1409. The light guide units 1412-1414 are separated from each other by, for example, optical partitions, in order to prevent the sets of illumination light from being mixed.

Each of three sets of the light guide units 1412-1414 and the lamp units 1409 (i.e. each of the sections partitioned as blocks) is an area which partially illuminates the liquid crystal panel 1401. The light guide unit 1412 illuminates the area in the upper part of the screen. The light guide unit 1413 illuminates the area in the middle of the screen. The light guide unit 1414 illuminates the lower part of the screen.

The intermittent light emission drive circuit 1407 generates intermittent pulse signals 1453, 1454, and 1455 based on the vertical synchronization signal 1452, and supplies the generated signals to the lamps 1410 of the respective lamp units 1409. The continuous light emission drive circuit 1408 is shared among the lamps 1411 of the respective lamp units 1409, and supplies a continuous signal 1456 which is independent from the video signal 1111.

Figure 76 is a timing chart for illustrating the operation of the video display 1400 shown in Figure 75. Indicated in (a) in Figure 76 is the waveform of the vertical synchronization signal 1452. Indicated in (b) in Figure 76 is the waveform of a gate signal applied to the gate electrode (G1 or G2) which controls the pixel in the area illuminated by the light guide unit 1412. Indicated by (c) in Figure 76 is the light emission waveform of the mixed illumination light 1457. Indicated by (d) in Figure 76 is the signal waveform of a gate signal applied to the gate electrode (G3 or G4) that controls the pixel in the area illuminated by the light guide unit 1413. Indicated by (e) in Figure 76 is the light emission waveform of the mixed illumination light 1458. Indicated by (f) in Figure 76 is the waveform of a gate signal applied to the gate electrode (G5 or G6) which controls the pixel in the area illuminated by the light guide unit 1414. Indicated by (g) in Figure 76 is the light emission waveform of the mixed illumination light 1459. In (c), (e) and (g) in Figure 76, the vertical axes indicate the instantaneous light emission luminance.

One of the characteristics of the video display 1400 of the present embodiment is that, as shown in Figure 75, the liquid crystal panel is divided into a plurality of areas, and each area is independently illuminated. The illumination light used therein is mixed illumination light in which intermittent light is mixed with continuous light. The sets of mixed illumination light illuminating the respective areas are different from each other, in terms of the light emission phases of intermittent light emission components. In the liquid crystal panel 1401, different parts of the screen have different timings to update the transmittance, on account of the selection (addressing) of the gate electrodes. The influence of the phase difference of the update timings is compensated for by shifting the light emission phases of the intermittent light of a plurality of lamp units. As a result of this, optimal light emission phases are determined.

The vertical synchronization signal 1452 in (a) in Figure 76 indicates the referential timing for the operation to display an image on the liquid crystal panel 1401. Indicated by T0 is a repeating period (frame period). The gate electrode driven by the gate signal shown in (b) in Figure 76 locates in the upper part of the display panel 1101, and the phase of this gate signal is identical or substantially identical with that of the vertical synchronization signal 1452.

The light emission phase of the intermittent light of the mixed illumination light 1457 shown in (c) in Figure 76 locates at the middle of each of the periods of repeating Low pulses of the gate signal, and T1 is identical with T2. T1 is a period until the intermittent light emission component starts light emission, in reference to the rise of the gate signal shown in (b) in Figure 76. A case where the start of the intermittent light emission component is later than the rise of the gate signal is termed "plus time," while a case where the start of the intermittent light emission component is earlier is termed "minus time." T2 is a period until the cycle T0 finishes, in reference to the moment when the intermittent light emission component finishes light emission. The light emission phase of the intermittent light emission component is controlled by an intermitted pulse signal 1453 supplied from the intermittent light emission drive circuit 1407. By controlling the aforementioned gate signal and the light emission phase of the intermittent light of the mixed illumination light, it is possible to achieve the effects discussed in embodiment 14, which are the reduction of the trailing and the reduction of the flickering.

The gate signal shown in (d) in Figure 76 is used for operating the gate electrode (G3 or G4) in the middle of the screen. This gate signal is shifted for a period of T3. The relationship between T3 and the frame period T0 is such that the period T0 is about three times as long as T3 with respect to the vertical synchronization signal 1452. Indicated by (e) in Figure 76 is the light emission waveform of the mixed illumination light 1458 illuminating the pixel on the gate electrode G3 or G4, and T4 is identical with T5.

In comparison with the vertical synchronization signal, the phase of the gate electrode shown in (f) in Figure 76 is shifted for a period of T6. T0 is 3/2 times T6. The light emission phase of the intermittent light of the mixed illumination light 1459 in (g) in Figure 76 is arranged such that T7 is identical with T8. In this manner, the reduction of the trailing and flicker described in embodiment 14 is achieved across the entire display screen, by adjusting, to the middle of the update timing of the pixel, the timing to drive and update the pixel and the phase of the intermittent light of the mixed illumination light illuminating the pixel.

In the present embodiment, three light guide units are used. Alternatively, similar effects can be obtained when four or more units are used. Although the light source in the present embodiment is LEDs, the present invention is not limited to this. Although the liquid crystal panel in the present embodiment is a transmissive type, the liquid crystal panel may be a reflective type.

The present embodiment may be arranged such that light guide plates made of acrylic resin and the like are adopted in place of the light guide units, lamp units are provided on the side faces of the respective light guide plates, and the mixed illumination light is supplied through the end faces of the light guide plates. Also, the intermittent light and the continuous light may be mixed on the light guide plate rather than in the lamp unit. The present embodiment may also be arranged such that the lamp units are provided behind the liquid crystal panel in such a manner that a space is left between the lamp units and the liquid crystal panel, and the intermittent light and the continuous light are mixed in this space.

In the present embodiment, partitions are provided in order to prevent sets of illumination light of the respective lamp units from being mixed with each other. Alternatively, without the partitions, the sets of illumination light are controlled so as not to be mixed with each other by utilizing the directivity of the light source.

As described above, the video display device of the present embodiment is characterized in that the area for illuminating the liquid crystal panel is divided by the combinations of lamp units and light guide units. The illumination light in the present embodiment is mixed illumination light in which intermittent light is mixed with continuous light. The light emission phases of the intermittent light emission components of sets of mixed illumination light illuminating the respective areas are different between the areas. On account of the selection (addressing) of the gate electrodes, the update timings of the transmittance of the pixels are different between parts of the display screen. The influence of the difference between the update timing phases is compensated by shifting the light emission phases of the intermittent light emitted from a plurality of lamp units.

The effects brought by illuminating the liquid crystal panel by the mixed illumination light are identical with those of embodiment 14. That is, it is possible to generate optimal display images in which moving images are clear and no disruptive flickering is observed.

It has been described in reference to Figure 76 that $T1 = T2$, $T4 = T5$, and $T7 = T8$. Not limited to this, the phases of the intermittent light in response to gate electrode pulses are determined so as to satisfy the condition $D/2 \leq P \leq (100 - D/2)$ described in embodiment 14. If the intermittent light emission phase P described in reference to Figure 61 is adopted to the case of Figure 76, $P = (T0+T1-T2)/2$ is obtained. Also, the intermittent light emission time ratio D is $D = (T0-T1-T2)$.

Therefore, according to Figure 76, the condition with which the effects of the present invention are achieved is $0 \leq T1$. That is, if T1 is not less than 0, The intermittent light emission component is not divided in two during one repeating cycle T0, and hence the effect of the trailing reduction is good. When T1 is not less than 0, it is indicated that the light emission of the intermittent light emission component is later than the rise of the gate signal. In a similar manner as above, a preferable condition is $0 \leq T2$. When T2 is not less than 0, the end of the light emission of the intermittent light emission component is earlier than the moment when the cycle T0 ends, i.e. earlier than the rise of the next gate signal.

The light emission waveform is a repeating signal with the cycle T0, and T2 is negative if T1 is negative. For example, provided that T0 is 17 milliseconds and the light emission time of the intermittent light emission component is 7 milliseconds, light emission is carried out on the condition that T1 is 1 millisecond and T2 is 9 milliseconds. Alternatively, light emission is carried out on the condition that T1 is 5 milliseconds and T2 is 5 milliseconds. Also, light emission may be carried out on the condition that T1 is 10 milliseconds and T2 is 0 millisecond. T2 is negative when T1 is 13 milliseconds, therefore such a light emission phase is not preferable. T1 is also negative when T2 is 12 milliseconds. Since the effects of the present embodiment are not obtained in this case, such a light emission phase is not preferable. The image quality of the video display is usually adjusted in a subjective manner. In this connection, the parameters such as light emission intensity and a light emission time of the intermittent light emission component are determined on the condition that $0 \leq T1$ or $0 \leq T2$.

[Embodiment 16]

A video display device of still another embodiment of the present invention in reference to Figures 77 to 79. The video display device of the present embodiment is identical with the video display device shown in Figure 75. The illumination light from the light source is modulated by transmissive liquid crystal.

Being different from embodiments 14 and 15, the present embodiment adopts liquid crystal with typical response characteristics. Typical characteristics indicate that a time constant falls within a range of about 2 milliseconds to 5 milliseconds. The time constant is defined as a time until the transmittance reaches 63% of a desired target. A time until the transmittance reaches 90% of the desired target is 2.3 times as long as the time constant. Some types of liquid crystal are excluded from the present embodiment because their time constants are 10 milliseconds or longer.

The objective of the present invention is to reduce trailing. It has been publicly known that the reduction in the trailing presupposes both the improvement in the characteristics of holding-type light emission and the improvement in a liquid crystal response time. When the improvement in holding-type light emission is carried out for slow-response liquid crystal, disruption such as unsharp edges occurs. On this account, the upper limit of the time constant of the liquid crystal is provisionally set at 5 milliseconds.

Figure 77 shows a timing chart for illustrating the operation of the video display device of the present embodiment. Indicated by (a) in Figure 77 is a gate signal supplied to a gate electrode of a pixel. T0 in (a) in Figure 77 is a cycle of the vertical synchronization signal of the video signal 1111. The cycle T0 is 16.7 milliseconds in the case of the NTSC video signal. Indicated by (b) in Figure 77 is a variation of the transmittance of the pixel in a case where the time constant of the liquid crystal is 3.5 milliseconds. By the way, the transmittance of this liquid crystal reaches 90% of the target transmittance in about 8 milliseconds. The transmittance of the pixel changes so as to correspond to white in one frame, and the transmittance changes so as to correspond to black, i.e. 0%, in the next frame. The vertical axes in (c) and (e) in Figure 77 indicate the instantaneous light emission luminance.

Indicated by (c) in Figure 77 is the light emission waveform of the mixed illumination light illuminating the pixel. The conditions of the light emission waveform are identical with those in the third row in Figure 67. That is, the duty ratio D of the intermittent light emission component is 20%, while the ratio S1 of the intermittent light emission component to the entire light emission intensity is 20%. T11 in (c) in Figure 77 indicates a time from LOW of the gate signal to the rise of the intermittent light. T1 indicates the optimum timing to illuminate the liquid crystal in (b) in Figure 77, and T11 is 75% of T0.

Indicated by (d) in Figure 77 is a variation of the transmittance of liquid crystal which is different from the liquid crystal in (b) in Figure 77, i.e. the transmittance of liquid crystal whose time constant is 2.2 milliseconds. By the way, the transmittance of this liquid crystal reaches 90% of the target transmittance in about 5 milliseconds. Indicated by (e) in Figure 77 is the best state of the mixed illumination light for illuminating the liquid crystal in (d) in Figure 77. T12, which is a phase of the intermittent light emission component of the mixed illumination light, is 65% of T0.

Figures 78(a) to 78(d) are used for illustrating the best light emission phase of the intermittent light emission component, in a case where the response time constant of the liquid crystal is 3.5 milliseconds. The light emission conditions of the light source are identical with those in (c) in Figure 77, i.e. the duty ratio D of the intermittent light emission component is 20% and the light emission intensity ratio S1 of the intermittent light emission component is 20%.

Figure 78(a) shows the response waveform of the liquid crystal. That is, the transmittance responds in this manner when white color is written for three frames. The transient response of the liquid crystal is approximated with an exponential function, and the time constant thereof is above-mentioned 3.5 milliseconds. Figure 78(b) shows the light emission waveform of the light source. The intermittent light emission phase P is at the optimum value, i.e. 75%. Figure 78(c) shows the amount of the trailing in a case where the characteristics of the response of the liquid crystal in Figure 78(a) and the characteristics of the light emission waveform of the light source in Figure 78(b) are set in the trailing model in Figure 65. In this case, the threshold of the amount of the trailing is assumed to be 10% to 90%. The amount of the trailing more or less corresponds to 0.2 pixels.

While the response of the trailing in Figure 73 is linear, the trailing model including the transient response of the liquid crystal is curved as shown in Figure 78(c). However, slopes 1 and 3 shown in (e) in Figure 65 are gentler than slope 2, and human eyes do not respond. Therefore, the effects described in embodiment 14 are obtained.

Figure 78(d) shows the characteristics after changing the intermittent light emission phase P, in the calculation of the amount of the trailing shown in Figure 78(c). As Figure 78(d) clearly shows, the amount of the trailing is minimized when P is 75%-80%, so that a high image quality is obtained. When P does not fall within the aforementioned range, the amount of the trailing is higher. This is because, slopes 1 and 3 shown in (e) in Figure 65 exceed the setup threshold of the amount of the trailing.

Figures 79(a) to 79(d) are used for illustrating the optimum light emission phase of the intermittent light emission component, in a case where the liquid crystal time constant is 2.2 milliseconds. The light emission conditions of the light source are identical with those in (c) and (e) in Figure 77.

Figure 79(a) shows the response waveform of the liquid crystal. The transient response of the liquid crystal is approximated with an exponential function. Figure 79 (b) shows the light emission waveform of the light source. The intermittent light emission phase P is optimum, i.e. 65%. Figure 79(c) shows the amount of the trailing in a case where the characteristics of the response of the liquid crystal shown in Figure 79(a) and the characteristics of the light emission waveform of the light source shown in Figure 79 (b) are set in the trailing model shown in Figure 65. The amount of the trailing corresponds to about 0.19 pixel. Figure 79(d) shows the characteristics after changing the intermittent light emission phase P, in the calculation of the amount of the trailing in Figure 79(c). As Figure 79(d) clearly illustrates, the amount of the trailing is minimized when P falls within the range between 60% and 70%, and a high-quality image is obtained. When P does not fall within the aforementioned range, the amount of the trailing is higher. This is because, slopes 1 and 3 shown in (e) in Figure 65 exceed the setup threshold of the amount of the trailing.

As described above, in the video display device of the aforementioned embodiments, the liquid crystal is illuminated by the illumination light made up of either the first and second light emission components or the intermittent light emission component and the continuous light emission component. This makes it possible to reduce both the amount of the trailing and the amount of the flickering, which cannot be achieved by conventional impulse light emission. In the present case, the response of the liquid crystal is relatively slow.

In the present case, the optimum value of the amount of the trailing is determined by the intermittent light emission phase P, and the phase thereof changes with the time constant $\tau$ of the liquid crystal. Therefore, provided that the optimum intermittent light emission phase P is PA, PA = F[$\tau$]. F[ ] indicates a function.

Although this function is not a simple linear function, P increases as $\tau$ increases. Also, PA is a constant value when the time constant $\tau$ is fixed to a predetermined value. It has already been described in reference to Figure 73 that PA = 50% if $\tau$ = 0 in the fast response. Therefore, if a time constant is $\tau$ and a constant determined by a function f[ ] is K, the following relationship is established.

$$PA = 50 + K \text{ where } 0 \leq K \leq (50 - D/2)$$

The constant K may be determined by measuring the response of the liquid crystal of the video display, or determined at an optimum value calculated by, for example, subjective evaluation. According to conventional art regarding impulse light emission, the pulse emission phase is optimally at the second half of the vertical synchronization of the image to which the liquid crystal can sufficiently respond or in the second half of the gate signal to which the pixel belongs. However, in the present embodiment, among slopes 1, 2, and 3 in Figure 65(e), slopes 1 and 3 are made invisible by using the fact that the observer's eye has a poor dynamic contrast response. The balance between slopes 1 and 3 is determined by the time constant of the liquid crystal. Therefore, to make slopes 1 and 3 in Figure 65(e) invisible to the observer by generating them in a balanced manner, the phase of the intermittent light emission component, which relates to the repetition of rewriting of the video signal, is controlled.

[Embodiment 17]

The video display device of still another embodiment of the present invention will be described in reference to Figures 80 to 83. In the video display device of the present embodiment, the display panel is an active matrix self-luminous EL (electroluminescence) panel. Being different from the transmissive display panel illuminated by the illumination light of the light source as described in embodiment 14, the control of the brightness and image generation on the EL panel are carried out by supplying a current corresponding to video information to an EL element provided in each pixel.

Figure 80 shows a pixel of the EL panel of the present embodiment. The EL pixel 1601 includes a scan electrode 1602, a signal electrode 1603, a TFT 1604, a capacitor 1605, a TFT 1606, a TFT 1607, a TFT 1608, an EL element 1609, a power source 1610, and a scan electrode 1611.

The number of the scan electrodes 1602 is 525 on the display panel, in a case of, for example, the NTSC video signal. Since the vertical frequency of the NTSC video signal is 60Hz, one scan electrode 1602 is selected at intervals of about 31.75 microseconds (= 1/60/525). The scan electrode is shared between the pixels aligned in the horizontal direction of the display panel.

The signal electrode 1603 supplies video information for display. In the case of the NTSC video signal, the number of the signal electrodes 1603 is 640 or 720 on the display panel. One signal electrode 1603 is shared between the pixels aligned in the vertical direction of the display panel. As the scan electrode 1602 of a pixel is selected and a pulse is supplied thereto, the TFT 1604 turns on. At this timing, the video information is supplied to the signal electrode 1603, so that the information is retained in the capacitor 1605, in the form of voltage (or electric charge).

When the pixel is in a non-selection period, the TFT 1604 is OFF and the voltage of the capacitor 1605 is retained. The EL element 1609 emits light with desired luminance, by supplying, from the power source 1610, a current determined by the voltage retained in the capacitor 1605. In the EL pixel 1601 of the present embodiment, there are two systems for supplying currents to the EL element 1609. One system includes the TFT 1606, whereas the other system includes the TFT 1607. The TFT 1607 is switched on/off by the TFT 1608 which is controlled by the scan electrode 1611.

Figure 81 is used for illustrating the operation of the EL pixel 1601. Indicated by (a) in Figure 81 is the waveform of a pulse signal supplied to the scan electrode 1602. The repeating cycle T is 16.7 milliseconds (= 1/60) in the case of the NTSC video signal. Indicated by (b) in Figure 81 is the waveform of a pulse signal on the scan electrode 1611. Indicated by (c) in Figure 81 is the waveform of a current flowing into the drain of the TFT 1606. This current is supplied from the power source 1610, passes through the source and drain of the TFT 1606, and reaches the EL element. The current is changed in such a manner that the TFT 1604 is turned on while the scan electrode 1602 is HIGH so that the terminal voltage of the capacitor 1605 is updated.

It is assumed that, in comparison with typical liquid crystal, the response of the EL element is quick, and the current is changed to a desired value while the scan electrode 1602 is HIGH. As indicated by (c) in Figure 81, the pixel emits bright light in a cycle where a relatively large current I1 is set. In the next cycle, the EL element 1609 emits dark light because a small current I2 is supplied.

Indicated by (d) in Figure 81 is the waveform of the current supplied from the power source 1610 via the TFT 1607. The amplitude of this current is determined by the voltage of the capacitor 1605, as in the case of the system to which the TFT 1606 belongs. Therefore, in (c) and (d) in Figure 81, I1 = I3 and I2 = I4.

However, the TFT 1607 is different from the TFT 1606 to the extent that the TFT 1607 is controlled by the scan electrode 1611. That is, the TFT 1608 is turned on while the pulse of the scan electrode 1611 is HIGH. In this case, since the voltage between the gate and source of the TFT 1607 is 0, the TFT 1607 is turned off. The TFT 1608 is turned off while the scan electrode 1611 is LOW. In this case, the TFT 1607 is controlled by the terminal voltage of the capacitor 1605, and the current flows as shown in (d) in Figure 81.

The waveform of the current flowing into the EL element 1609 becomes as shown in (e) in Figure 81, which is the sum of the waveform in (c) in Figure 81 and the waveform in (d) in Figure 81. That is to say, I5 = I1, I6 = I1+I3, I7 = I2, and I8 = I2 + I4.

The EL element 1609 emits light in accordance with the current waveform in (e) in Figure 81. The light emission waveform is determined by the current-light emission characteristics of the EL element. Provided that the characteristics have a proportional relation, the waveform is identical with the waveform in (e) in Figure 64. By the light emission with this waveform, it is possible to obtain the effects of reduction in both the amount of the trailing and the amount of the flickering described in embodiment 14 in reference to Figure 8.

As described above, the video display device of the present embodiment adopts, for example, an active matrix self-luminous EL panel. Also, two TFTs controlled by the capacitor 1605 storing video information are provided, and the light emission waveform supporting both the intermittent light emission and continuous light emission is generated by supplying current to the respective TFTs at different timings. That is, the light emitted from the pixel is made up of the first and second light emission components described in Figure 61. Alternatively, the light emitted from the pixel is made up of the intermittent light emission component and the continuous light emission component.

The intermittent light emission phase P performs the control by the phase management of pulses on the scan electrode 1611. The response of the EL element is typically quicker than liquid crystal. Therefore, as shown in Figure 73, the optimum phase PA is 50%. Even if the optimum phase is changed because of some reasons, the control is carried out by the phase management of pulses on the scan electrode 1611.

The duty ratio D is controllable by a LOW period of the scan electrode 1611. To increase the light emission energy (i.e. light emission intensity) of the intermittent light emission component or the first light emission component, the duty ratio D is increased.

The selection of the scan electrode 1602 may be 1/60 seconds similarly to the EL device of conventional hold light emission type. None of the scan electrode driver (not shown), the signal electrode driver (not shown), etc. therefore needs be increased in speed. Clock rate conversion, etc. by using a frame memory which holds the video signal externally are not needed. One capacitor is needed similarly to the EL device of conventional hold light emission type.

Figure 82 illustrates another embodiment of the EL pixel. In the figure, those members which have the same functions as the members in Figure 80 are given identical reference numbers. The EL pixel 1701 shown in Figure 82 includes a capacitor 1702, a capacitor 1703, a TFT 1704, a TFT 1704, a TFT 1705, a TFT 1706, a scan electrode 1707, and a scan electrode 1708.

The TFT 1604 is turned on as the pixel is selected, so that a voltage corresponding to video information is written into capacitors. The voltage is written into the capacitors 1702 and 1703 which are connected in series. The TFTs 1705 and 1706 are turned on/off alternately, so that the source-gate voltage of the TFT 1704 is switched.

That is to say, the source-gate voltage of the TFT 1704 is the voltage of the capacitor 1703 while the TFT 1705 is turned on. On the other hand, the source-gate voltage of the TFT 1704 is the sum of the terminal voltages of the capacitors 1703 and 1702 while the TFT 1706 is turned on.

The current supplied to the EL element 1609 is switched by the aforementioned two gate voltages. The TFT 1706 is controlled by the scan electrode 1707. The TFT 1705 is controlled by the scan electrode 1708. The pixel may include an inverter so that, for example, the inverse of the logic signal of the scan electrode 1707 is supplied to the gate of the TFT 1705.

Figure 83 is used for illustrating the operation of the EL pixel 1701. Indicated by (a) in Figure 83 is the waveform of a pulse signal supplied to the scan electrode 1602. Indicated by (b) in Figure 83 is the waveform of a pulse signal supplied to the scan electrode 1708. Indicated by (c) in Figure 83 is the waveform of a pulse signal supplied to the scan electrode 1707. Indicated by (d) in Figure 83 is the current waveform of the EL element 1609 controlled by the TFT 1705.

The TFT 1705 is turned on while the scan electrode 1708 is HIGH, and the gate-source voltage of the TFT 1704 is determined by the terminal voltage of the capacitor 1703. This voltage is produced by dividing, by the capacitors 1703 and 1702, the voltage written at the time of the selection of the pixel. Provided that the writing voltage at the time of the selection is V and the electrostatic capacities of the capacitors 1702 and 1703 are C1 and C2, the terminal voltage V2 of the capacitor 1703 is represented as follows:

$$V2 = V * (C1*C2/C1 + C2)$$

Indicated by (e) in Figure 83 is the waveform of the current on the EL element 1609 controlled by the TFT 1706. The TFT 1706 is turned on while the scan electrode 1707 is HIGH, and the gate-source voltage of the TFT 1704 equals to the voltage V written at the time of the selection of the pixel.

The relationship between V and V2 is V2 < V. Provided that the gate-source voltage of the TFT 1704 is in proportion to the drain current of the TFT 1704, the currents I11 and I12 supplied to (d) in Figure 83 and the currents I13 and I14 supplied to (e) in Figure 83 are represented as follows:

$$I11 = I13 * (C1*C2/C1 + C2)$$

$$I12 = I14 * (C1*C2/C1 + C2)$$

Indicated by (f) in Figure 83 is the waveform of the current actually flowing into the EL element 1609, and is the sum of the waveform in (d) in Figure 83 and the waveform in (e) in Figure 83. If the current-light emission luminance characteristics of the EL element 1609 is linear, the light emission luminance waveform of the EL element 1609 is as shown in (f) in Figure 83.

That is, the light emitted from the pixel is made up of the first and second light emission components shown in Figure 61. Alternatively, the light emitted from the pixel is made up of the intermittent light emission component and the continuous light emission component. The aforementioned waveform makes it possible to reduce both the amount of the trailing and the amount of the flickering as described in embodiment 14. The intermittent light emission phase P and the duty ratio D of the intermittent light emission component are controlled by the phase management of pulses of the scan electrodes 1707 and 1708. To increase the light emission energy (i.e. the light emission intensity) of the intermittent light emission component or the first light emission component, the control is feasible by the capacity ratio between the capacitors 1702 and 1703. Alternatively, the HIGH period of the scan electrode 1708 is shortened by increasing the LOW period of the scan electrode 1707.

As described above in reference to Figures 82 and 83, the video display device of the present embodiment uses video information stored in the capacitor, after subjecting the video information to voltage division. The selection of the scan electrode 1602 may be 1/60 seconds similarly to the EL device of conventional hold light emission type. None of the scan electrode driver (not shown), the signal electrode driver (not shown), etc. therefore needs be increased in speed. Clock rate conversion, etc. by using a frame memory which holds the video signal externally are not needed.

It has been assumed in the above description that the display panel is an organic EL panel. However, for example, a non-luminous transmissive liquid crystal panel may be used with a separate light source. Illumination light from the light source is modulated by pixels, in the panel, to which data is written in a controlled manner so as to create the pixel light emission waveform described in embodiment 1 of the present invention. In liquid crystal panels, each pixel is made of a pixel selector TFT and a capacitor. However, a luminance switching TFT may be added to control the charge held in the capacitor similarly to Figure 32. Thus, the transmittance of the liquid crystal may be altered to specify the luminance of the pixel. Alternatively, without the additional luminance switching TFT, data corresponding to different luminance levels may be written by accessing the pixel selector TFT twice per frame or more often (frames are units which make up a screen).

[Embodiment 18]

The following will describe still another embodiment of the present invention in reference to Figure 84. In the video display device of the present embodiment, the display panel is either an active matrix self-luminous EL (electroluminescence) panel or an active matrix non-self-luminous liquid crystal panel. In the present embodiment, the brightness of light emission is controlled so that images are generated, by supplying a voltage corresponding to video information to the EL element or liquid crystal element provided in each pixel.

Figure 84 illustrates the timing of the operation of the video display device of the present embodiment. To simplify the description, the number of scanning lines on the display panel is 5 in the figure. Indicated by (a) in Figure 84 is the waveform of the vertical synchronization signal, which functions as the basis for the screen repetition. In the NTSC video signal, the frequency of the vertical synchronization signal is 60Hz. Indicated by (b) in Figure 84 is the waveform of the horizontal synchronization signal. Since the number of the scanning lines is assumed as 5, 5 pulses from H11 to H 15 are generated in one vertical cycle. Indicated by (c) in Figure 84 is the waveform of a data signal. The data signal is supplied to one of data electrodes aligned on the display panel in the horizontal direction.

The video display device of the present embodiment is provided with a frame memory which stores a video signal in units of frames. Accessing to image data stored in the frame memory, sets of data are reordered in terms of time. The pixels on one data electrode are numbered from 1 to 5 vertically from the top to the bottom, e.g. the pixel at the top of the screen is pixel 1, and the pixel directly below the pixel 1 is pixel 2. Accordingly, a set of video data for the pixel 1 is D1, and a set of video data for the pixel 2 is D2. Indicated by D11, D12, and D13 are sets of video data generated by dividing D1 into three sets of data and reordering these sets of data in terms of time.

As indicated by (c) in Figure 84, the data for the pixel 1 is reordered in such a manner that D11 is generated in the first part of the period H11, D12 is generated at the second part in the period H 13, and D 13 is generated in the third part in the period H14. Assume that data with a while color, i.e. 100% (level 255 in 8 bits) is supplied to the D 1 in a frame, and data with a gray color, i.e. 60% (level 150 in 8 bits) is supplied in the next frame which is 1/60 seconds after the previous frame. The division of image data is carried out based on the duty ratio D and the light emission intensity ratio S. For example, assume that the duty ratio (D) is 50% and the light emission intensity ratio S is 80%.

Assume also that an instantaneous light emission peak level with which pixels of the video display device can emit light is 1000 nits. If D1 is a 100% white signal, the instantaneous light emission luminance (i.e. the height of the first light emission along the vertical axis) of the first light emission is 100% and 1000 nits. In the second light emission, the light emission intensity ratio S is 20%, and the instantaneous light emission luminance (i.e. the height of the second light emission along the vertical axis) is 25%, i.e. 250 nits. The calculation is carried out as follows: 250 nits = 50%/80%*20%. These values (50%, 80%, and 20%) correspond to D, S, and (100-S) in Figure 1, respectively. In this manner, D11, D12, and D13 are worked out from D1, by the calculation using the duty ratio D and the light emission intensity ratio S. The 100% white signal divides and sets video data so that the instantaneous light emission luminance with D11 = 25%, D12 = 100%, and D13 = 25% is obtained. Provided that the level of video data is in proportion to the light emission luminance, a level-255 white signal divides 8-bit video data into D11 = level 64, D12 = level 255, and D13 = level 64. In a case where the instantaneous light emission luminance is determined as above and the duty ratio is 50%, the average screen luminance is 1000 * 0.5+250 * 0.5 = 625nit.

In a case of a gray tone with D 1 = 60%, the sets of data are 60% of those of the aforementioned white signal. In other words, if D1 = 60%, then D11 = 15%, D12 = 60%, and D13 = 15%. Provided that the sets of data D11, D12, and D13 correspond to luminance L11, L12, and L13, respectively, the following values are obtained: L11 = 150 nits, L12 = 600 nits, and L13 = 150 nits if the instantaneous light emission luminance of the 100% signal is 1000 nits.

Indicated by (d) in Figure 84 is the waveform of a pulse signal applied to a scan electrode that scans the pixel 1. In this example, assume that the pixel 1 locates on the upper side of the screen. Assume also that the number of scanning lines is 5 and 5 pixels are provided on one data electrode. Moreover, assume that the aforementioned video signal D1 is supplied to the pixel 1.

The scanning signal pulses three times in one vertical cycle. The duration of one pulse is about 1/3 of the horizontal cycle. Each of these three pulses is phase-shifted with respect to the horizontal synchronization signal. The phases of the respective sets of video data D11, D12, and D13 that are reordered in terms of time correspond to the HIGH periods of the scanning signal of the pixel 1. Therefore, the light emission of the pixel 1 is performed by fetching, in the pixel 1, the video data reordered in terms of time, using the scanning signal.

In the waveform indicated by (d) in Figure 84, the leftmost first pulse locates in the first half of the horizontal synchronization signal, the second pulse locates in the middle, and the third pulse locates in the second half. Indicated by (e) in Figure 84 is the light emission waveform of the pixel 1. The vertical axis indicates the luminance. Assume that D1 is a 100% (level-255) white signal. During the first HIGH period of the scanning signal, the pixel 1 is set at the light emission state (light emission luminance) L11 defined by D11. The instantaneous light emission luminance at this moment is 250 nits according to the example above. After the fall of the scanning signal to LOW, D11 is retained and hence the pixel 1 keeps the light emission with 250 nits. During the second HIGH period, D12 is written into the pixel 1. In the example above, L12 = 1000 nits. As the scanning signal falls to LOW again, D12 is retained and hence the pixel 1 keeps the light emission with 1000 nits. In a similar manner, L13 (= 250 nits, which corresponds to D13) is written during the third scanning pulse, and then retained. In summary, in the present embodiment, the light emission luminance corresponding to the video data of the data signal indicated by (c) in Figure 84 is set at HIGH timings of the scanning signal indicated by (d) in Figure 84.

In a case of an EL element, for example, video data is retained as a voltage of a capacitor, and a current corresponding to the voltage is supplied to the EL element so that the EL element emits light. In a case of a liquid crystal element, video data is retained as an electric charge, and the liquid crystal is modulated so that the transmittance corresponding to the electric charge is obtained.

L11, L12, and L13 in (c) of Figure 84 are, for example, L11 = L13 and L12 > L11. In the light emission with this waveform, the amount of trailing and the amount of flickering are both reduced as described in embodiment 1 in reference to Figure 7. The duty ratio D of the first light emission component shown in Figure 1 is determined by the division scheme (ratio) of the sets of video data D11, D12, and D13. Indicated by (f) and (g) in Figure 84 are a case where attention is paid to another pixel, i.e. a pixel 3. Sets of video data produced by dividing video data D3 written into the pixel 3 for image display are D31, D32, and D33. Also, sets of light emission luminance corresponding to the respective sets of data are L31, L32, and L33.

The pixel 3 is provided in the central part of the screen. The timing regarding the operation of this pixel is basically identical with those of the pixel 1, but the phases are shifted by two lines. The scanning signals of the respective pixels therefore are not simultaneously HIGH.

As described above, the video display device of the present embodiment is arranged so that sets of data applied to a data electrode are reordered in advance and hence three sets of data are provided in one horizontal cycle. The scanning signal for vertical selection goes HIGH three times, in one vertical synchronization signal. More than one scanning signal are not simultaneously HIGH.

Writing data at the timings above, the video display device of the present embodiment obtains the light emission waveform indicated by (e) in Figure 84. This waveform is made up of the first and second light emission components shown in Figure 1, or made up of an intermittent light emission component and a continuous light emission component. As the pixel emits light with the aforementioned waveform, the amount of trailing and the amount of flickering are optimally reduced.

In the present embodiment, the light emission waveform is controlled in such a manner that sets of data are reordered by an externally-provided memory. Therefore, it is possible to use a typical structure of pixels in the display panel, in which data update is carried out once in one vertical synchronization signal, and hence it is unnecessary to, for example, add a scan electrode. On this account the present invention can be adopted in conventional display panels.

The duty ratio D of the intermittent light emission component is controllable by reordering data signals. The light emission phase of the intermittent light emission component is also controllable by reordering data signals.

[Embodiment 19]

The following will describe still another embodiment of the present invention in reference to Figures 85 to 100. The present embodiment deals with the optimal conditions of the duty ratio D between the first and second light emission components and the light emission intensity ratio S of the first light emission component, which have been described in reference to (a) in Figure 61 of embodiment 14. That is, the arrangement in the present embodiment makes it possible to obtain the effects of the arrangements disclosed in embodiments 14 to 18 in a more preferable manner. It is noted that the amount of the trailing below is worked out based on the model in Figure 65.

The thresholds of the luminance variation for working out the amount of the trailing are 15% and 85% of the luminance variation due to the trailing. The threshold values are relatively determined in reference to the screen luminance and screen size of the video display device. The present embodiment assumes that the luminance variation determined by slopes 1 and 3 described in reference to Figure 65(e) is not visually distinctive to human eyes, even if the luminance variation is about 15% of the entire luminance variation at the maximum. As illustrated in Figure 66, the amount of the flickering is worked out by Fourier transformation of the light emission waveform.

Figures 85(a) to 85(c) illustrate the relationship among the duty ration D, the amount of the trailing, and the amount of the flickering, in a case where the light emission intensity ratio S is fixed at 70% or 90%. If the duty ratio D are equal to the light emission intensity ratio S, the light emission waveform is a DC; these cases are excluded from Figure 85. If the duty ratio D is greater than the light emission intensity ratio S, the instantaneous light emission intensity of the first light emission component is lower than that of the second light emission component; these cases are also excluded because effects of the present embodiment do not need to be described.

Figure 85(a) show the amounts of trailing shown in the model of Figure 65 and the amounts of flickering shown in Figure 66 which are calculated for possible duty ratios D under conditions that the duty ratio D is less than the light emission intensity ratio S, and the light emission intensity ratio is fixed at 70% or 90%. The properties shift to the lower left from those for the conventional art for all the duty ratios D. The shifts indicate that the video display device of the present embodiment simultaneously lowers the amount of trailing and the amount of flickering.

Figures 86(a) to 86(c) show the relationship among the light emission intensity ratio S of the first light emission component, the amount of trailing, and the amount of flickering when the duty ratio D is fixed at 10% or 70% in the video display device of the present embodiment. Figure 86(a) shows that the amount of trailing and the amount of flickering are simultaneously lowered, for light emission intensity ratios S from a light emission intensity ratio (here, 70%) to less than 100% under conditions that the duty ratio D is less than the light emission intensity ratio S, and the duty ratio D is fixed at 10% or 70%.

Figures 87(a) and 87(b) shows the relationship among the duty ratio D, the amount of the trailing, and the amount of the flickering, in a case where the light emission intensity ratio S is fixed at 40%. On this condition, it is not possible to obtain the effects of the video display device of the present embodiment. Figure 86(a) considers no light emission intensity ratios S less than 70%, because the amount of trailing and the amount of flickering are not simultaneously lowered for particular combinations of light emission intensity ratios S and duty ratios D.

This is because, with some combinations of S and D, the amount of the trailing increases as the luminance variation defined by the tilt of slopes 1 and 3 exceeds the thresholds of 15% and 85%, among slopes 1, 2, and 3 described in Figure 65(e). Therefore, the present embodiment excludes a case where the light emission intensity ratio S is 40%.

Figures 88(a) and 88(b) show the relationship among the duty ratio D, the amount of trailing, and the amount of flickering when the light emission intensity ratio S is fixed at 60%. Under these conditions, there may or may not be effects depending on the duty ratio D.

Summarizing the properties shown in Figures 85 to Figure 88, Figure 89 shows conditions on the duty ratio D and the light emission intensity ratio S under which the video display device of the present embodiment achieves the effects. In the Figure 89 graph, the horizontal axis indicates the duty ratio D, the vertical axis indicates the light emission intensity ratio S.

For the video display device of the present embodiment to achieve the effects, the duty ratio D and the light emission intensity ratio S meet either the set of conditions A, $62\% \leq S\% < 100\%$, $0\% < D\% < 100\%$, and $D\% < S\%$, or the set of conditions B, $48\% < S\% < 62\%$ and $D \leq (S-48)/0.23$. In Figure 89, the region where the set of conditions A is met is dotted, and the region where the set of conditions B is met is shaded with oblique lines.

Setting S to 100% means the use of intermittent light emission (impulse-type display) of conventional art. This setting is therefore excluded from the sets of conditions A and B. Setting S to equal D means that the instantaneous light emission intensity of the first light emission component equals that of the second light emission component. This setting is excluded from the sets of conditions A and B.

Setting S to 0% or D to 0% means that no first light emission component is generated. This setting is excluded from the sets of conditions A and B. Furthermore, setting D to 100% means that no second light emission component is generated. The setting is excluded from the sets of conditions A and B.

As shown in Figure 85, the condition A achieves the simultaneous reduction of the amount of the trailing and the amount of the flickering, as to all possible duty ratios D for a particular light emission intensity ratio S. On the other hand, if values of D and S are not included in the conditions A nor B, as shown in Figure 87, it is not possible to simultaneously reduce the amount of the trailing and the amount of the flickering: Also, As shown in Figure 88(a), in the range of the light emission intensity ratio S meeting the condition B, the simultaneous reduction of the amount of the trailing and the amount of the flickering is achieved only at a certain duty ratio D.

Figures 90(a) and 90(b) show the relationship between the amount of trailing and the amount of flickering, in a case where the light emission intensity ratio S is 62%. In this case, the amounts of trailing and flickering are simultaneously lowered for possible duty ratios D. Figures 91(a) and 91(b) show the relationship between the amount of trailing and the amount of flickering when the light emission intensity ratio S = 48%. In these cases, there is no duty ratio D for which the amounts of trailing and flickering are simultaneously lowered. In this manner, it is understood from Figures 88, 90, and 91 that 48 < light emission intensity ratio S% < 62 meets the set of conditions B.

Figures 92(a) and 92(b) show upper limits of the duty ratio D at which the amounts of trailing and flickering are simultaneously lowered being calculated from a trailing model and flicker analysis for $48 < S\% < 62$. The properties of the light emission intensity ratio S with respect to the duty ratio D can be approximated using a straight line: $S = 0.23D + 48$. If the duty ratio (D) is less than the values indicated by the approximation straight line, the amounts of trailing and flickering are simultaneously lowered. Therefore, $D \leq (S-48)/0.23$ is a part of the set of conditions B.

Figures 93(a) to 93(c) show how much trailing and flickering are reduced, as represented by 6 points selected from the regions meeting the set of conditions A or B. Points P1 to P6 are selected from Figure 93(a). The values of D and S at those points are shown in Figure 93(b).

The amounts of trailing and flickering are calculated from the model shown in Figure 65 and plotted to draw a trailing vs. flickering graph which is shown in Figure 93(c). As shown in Figure 93(c), the amounts of trailing and flickering at P1 to P6 are located to the lower left of the line obtained with conventional intermittent switch-on/off (impulse-type display). Therefore, both artifacts (trailing and flickering) are simultaneously reduced.

Figures 94(a) and Figure 94(b) show such examples of the light emission waveform for the pixel. In Figures 94(a) and 94(b), the horizontal axis indicates time, and the vertical axis indicates instantaneous light emission intensity. Each figure shows one vertical cycle of a light emission waveform. Figure 94(a) shows an about 2.4-KHz sawtooth wave (40 oscillations in 16.7 milliseconds) being added to provide a brightness control function for the video display device (which allows the user to adjust brightness of the entire screen) or due to the control scheme of the video display device.

Since the human eye cannot discern the frequency of 2.4 KHz, this light emission waveform is equivalent to the light emission waveform shown in Figure 94(b), and achieves the effects of the present embodiment by simultaneously reducing trailing and flickering.

For simple description of the temporal response waveform of the light emission from the pixel of the present embodiment, in Figure 61 among others, the waveforms of the first light emission component and the second light emission component are shown as rectangular. However, the present invention is by no means limited to such rectangular waves. As described in reference to Figure 65, the problem with a hold-type display device is that the human eye integrates light emission from pixels in a different direction from a correct integration direction. The integration direction and deviated integration path occur because the eye follows the moving object. Conventional impulse-type display devices reduce disruptive trailing by partly restricting light emission. In contrast, the present embodiment reduces the amount of flickering while simultaneously reducing the amount of trailing. The light emission waveform of the present embodiment is attained by concentrating light emission intensity, or "light emission energy," at the light emission intensity ratio S over the period specified by the duty ratio D. Therefore, needless to say, the effects are not reduced even if the wave is not purely rectangular.

Figure 95(a) shows the light emission waveform in a case where the second light emission component is made up of narrow pulses. The horizontal axis indicates time while the vertical axis indicates instant light emission intensity. The figure shows the light emission waveform for one cycle. Also in this case, human eyes do not follow narrow pulses as in the case of Figure 94. Therefore, the luminance intensity of the second light emission component is equivalent to that of the light emission waveform indicated by the broken line. Trailing and flickering are both reduced.

If the light emission intensity ratio (100-S)% of the second light emission component is to be adjusted, the ON period T0 of the pulse may be adjusted as in Figure 95(a). Alternatively, the intensity L0 of the pulse may be changed as in Figure 95(b).

The repetition frequency of the second light emission component may be set to any value so long as the human eye cannot discern that frequency. For example, the frequency may be a few kHz like the sawtooth wave in Figure 94 or a few times the video vertical frequency, or about 150 Hz. Depending on the properties, viewing environment, and other conditions for the video viewed on the video display device, the frequency of 80 Hz may work well. In some cases, 100 Hz may work well too. For example, the human eye may recognize pulses of about 120 Hz, which is twice the frequency of an NTSC video signal, as continuous light on a video display device with a screen luminance of about 250 nits. For example, on a video display device with a screen luminance of 500 nits, the eye may perceive flickers when the pulse frequency is 120 Hz and may not recognize pulses as continuous light if the frequency is less than 300 Hz. Minute screen luminance variations may be disruptive if the video viewed on the video display device contains many still images. Screen variations to some degree may not be disruptive if the video contains many moving images. In short, the frequency may be set to any value so long as the value is suitably chosen for the system configuration of the video display device.

Figure 96 shows a case where the response waveform of the pixel is triangular. The horizontal axis indicates time, and the vertical axis indicates instantaneous light emission intensity. The figure shows one vertical cycle of the light emission waveform. The triangular waveform can be regarded as equivalent to the light emission response indicated by the broken line. Applying the triangular light emission waveform in Figure 96 to the Figure 65 model, slopes 1, 3 in Figure 65(e) are not straight, but curved. Slope 2, as opposed to slopes 1 and 3, is determined by the duty ratio D and light emission intensity ratio S of the first light emission component and the second light emission component. Therefore, the two artifacts, trailing and flickering, are simultaneously reduced if the values of D and S satisfy the set of conditions A or B.

In Figure 97, the response of the light emission changes exponentially. This light emission waveform is equivalent to the light emission properties indicated by the broken line similarly to Figure 96. The effects of the present embodiment are achieved.

In this manner, any types of light emission waveforms are allowable, on condition that the relationship between the duty ratios D and the light emission intensity ratios S of the first and second light emission components meet either the aforementioned conditions A or B.

Even if the instantaneous light emission intensity of the first light emission component is higher than the instantaneous light emission intensity of the second light emission component, the instantaneous light emission intensity of the first light emission component may be lower than the instantaneous light emission intensity of the second light emission component, to the extent that it is negligible in comparison with the overall luminance of the pixels. That is, in a case where the light emission waveform fluctuates (e.g. the triangular wave shown in Figure 94(a)), the instantaneous light emission intensity of the first light emission component may be lower than the instantaneous light emission intensity of the second light emission component, at a part of the peak of the fluctuation. Although Figure 94(a) is equivalent to Figure 94(b) as above, the instantaneous light emission intensity of the first light emission component is required to be higher than the instantaneous light emission intensity of the second light emission component, when the light emission waveform of Figure 94(a) is replaced by the light emission waveform of Figure 94(b).

The description so far defined the amount of trailing as a 15%-85% luminance change. When, for example, the screen luminance of the video display device is set to a value as high as 600 nits or the viewing environment is dark, the observer may recognize slopes 1, 3 shown in Figure 65(e), rendering trailing reduction less effective, if the duty ratio D and the light emission intensity ratio S assume such values that the tilts of slopes 1, 3 are relatively large. When this is the case, the light emission response waveform may be determined in such a range that conditions for the duty ratio D and the light emission intensity ratio S shown in Figure 98 are satisfied.

Figure 98 shows the duty ratio D and light emission intensity ratio S with which the simultaneous reduction of amounts of trailing and flickering is achieved, on an assumption that the human eye responds to the luminance level range of trailing of 10% to 90%.

In this case, D and S satisfy the set of conditions A1 (79% ≤ S% < 100%, 0% < D% < 100%, and D% < S%) or the set of conditions B1 (69% < S% < 79% and D ≤ (S-69)/0.127). In Figure 98, the dotted region represents the set of conditions A1, and in Figure 98 the shaded region with oblique lines represents the set of conditions B1.

Figures 99(a) to 99(c) show the amount of trailing and the amount of the flickering when S is fixed to 70 or 80 in the condition A1 or B1 shown in Figure 98. As shown in Figure 99(a), when S = 80, the simultaneous reduction of the amount of trailing and the amount of flickering is achieved irrespective of the duty ratio D. If S = 70, the effect is achieved only when D = 10.

Figures 100(a) and 100(b) shows the upper limit of the duty ratio D with which the simultaneous reduction of the amount of trailing and the amount of flickering is achieved in the range of 69 < S < 79 in the condition B1 in Figure 98, which limit is determined by the trailing model and flicker analysis.

The properties of the light emission intensity ratio S with respect to the duty ratio D can be approximated using a straight line: S = 0.127D + 69. If the duty ratio D is less than the values indicated by the approximation straight line, the amounts of trailing and flickering are simultaneously lowered. Therefore the condition B1 is set as D ≤ (S-69)/0.127.

As described above, the amount of trailing and the amount of flickering are both reduced when compared to the conventional impulse light emission, by setting the duty ratio D and light emission intensity ratio S of the first light emission component at certain conditions. Flickers become easier to perceive when the image display device has high luminance (Ferry-Porter's law). Therefore, disruptive flickering will likely occur if an image is displayed at high luminance by a conventional intermittent switch-on/off scheme. In addition, among the visual cells of the human eye, the rod cells are more sensitive flickers than the pyramidal cells. That is, the human eye is more sensitive to flickers along the periphery than at the center of the field of vision. Therefore, disruptive flickering is more likely to be perceived on a video display device with a larger display panel. Therefore, the video display device of the present embodiment is especially effective to improve display quality on a video display device of high luminance or with a large screen.

The conditions for the duty ratio D and the light emission intensity ratio S described in reference to Figure 89 were calculated based on simple modeling of the amounts of trailing and flickering. The evaluation of image quality of a video display device varies largely with the subjectivity of the observer and depends also on viewing environment. Strict quantification is difficult. The inventors however have confirmed, in subjective evaluation experiment based on obtained conditions, that evaluation results do not differ significantly from those conditions obtained by modeling.

The conditions for the duty ratio D and the light emission intensity ratio S described in reference to Figure 89 were calculated based on simple modeling of the amounts of trailing and flickering. As conditions for the simple modeling are assumed the amount of trailing which occurs when a white object has moved and the amount of flickering which occurs when white is displayed. Meanwhile, a 100% white signal is rarely found in typical video. Therefore, when the video display device has a screen luminance of 500 nits, and the average luminance level of the video actually displayed is about 50%, for example, an effective method is to equivalently setting the screen luminance of the video display device to 250 nits (= 500/2) to obtain the optimal values for the duty ratio D and the light emission intensity ratio S. When this is the case, the values of D and S may be determined from a histogram for display video (distribution of video data) or like information. Alternatively, a video feature value, such as a luminance histogram and an average luminance level, may be automatically detected from an input video signal to enable automatic changes to be made to light emission properties of pixels.

The amount of flickering is determined from the 60-Hz component, or the first harmonic. In practice, harmonics with multiple frequencies of 60 Hz are produced. The inventors, however, have confirmed through experiment that attention should be paid only to the 60-Hz component and that it would suffice if that component is restrained. For example, the 120-Hz harmonic may also be perceived as causing an artifact on a larger screen or at high luminance; it is sufficient in these cases too if the light emission waveform is Fourier transformed to obtain conditions for the duty ratio D and the light emission intensity ratio S while paying attention to both the amounts of the 60-Hz and 120-Hz components as described in the present embodiment.

The present embodiment has so far assumed that the video signal is an NTSC signal. However, the video display device of the present embodiment is suitable for display of a video signal for a personal computer, for example. When the video display device has a vertical frequency of 75 Hz, for example, the observer perceives a smaller amount of flickering because the human eye is less sensitive to that frequency than 60 Hz. Flickers however could be observed as causing an artifact depending on screen luminance or another condition. In these cases, again, attention should be paid to the 75-Hz component and it would suffice if conditions for the duty ratio D and the light emission intensity ratio S are obtained as in the present embodiment.

The relationship between the duty ratio D and the light emission intensity ratio S of the present embodiment was described in reference to Figure 89 for cases where trailing was defined by means of thresholds which are 15% and 85% of a change in luminance. The relationship was also described in reference to Figure 98 for cases where trailing was defined by means of thresholds which are 10% and 90% of the change. However, there are no single absolute thresholds. The thresholds are variable because the image quality of the video display device is evaluated by the observer's subjectivity. The thresholds also depend on atmospheric brightness, viewing distance, and other viewing environments. Furthermore, the thresholds can vary depending on whether the display image is a still image or a moving image. In short, although the video display device have many applications, an optimal value should be determined for individual applications of the video display device. The optimal value is then qualitatively and quantitatively evaluated by the methodology of the present embodiment. The value is subjected to a subjectivity test as a final stage of evaluation.

The average luminance level of the display image may be by detected to dynamically or adaptively control the duty ratio D, the light emission intensity ratio S, the light emission phase of the first light emission, and other parameters. The parameters may be controlled based on an image histogram. Interframe differential or like motion information may be used. The parameters may be controlled by obtaining brightness information from, for example, a brightness sensor which measures atmospheric brightness around the video display device. Furthermore, their temporal variation information may be used. Maximum and minimum luminance values contained in the displayed video may be used.

Motions in the image may be detected as vectors so that the parameters can be controlled based on that information. A different parameter may be used for the control every time the screen luminance is changed, in conjunction with a function allowing the viewer to change the screen luminance. The parameters may be controlled by detecting the overall power consumption by the video display device for reductions in the power consumption. The parameters may be controlled by detecting successive operating time from the turn-on of power supply so that the screen luminance is lowered after the display device has been in operation for an extended period of time.

The present embodiment has so far assumed that the light emission waveform of a pixel contains two light emission components: i.e., the first light emission component and the second light emission component. Light emission components are by no means limited to two. Optimal properties may be achieved, depending on pixel modulation means, by defining another, third light emission component and individually controlling the components. A fourth light emission component and a fifth light emission component may also be defined. When this is the case, in the model described in reference to Figure 4, a waveform by means of divided light emission is specified in the part of Figure 65(a), and information on displayed video is specified in the part of Figure 65(b). Information is calculated on changes in luminance in association with the vertical direction of Figure 65(c). Then, integration is performed in the direction indicated by arrow 2 to obtain luminance change waveform for corresponding trailing. Cases involving three or more types of light emission can be analyzed based on the model of the present embodiment. Optimal operating conditions can be obtained from results of the analysis.

If the light emitting element of a pixel has a finite response time, that temporal response information may be incorporated into the Figures 65(a) or 65(b) part. They can be analyzed from the items described in the present embodiment above. Optimal operating conditions can be derived.

The present embodiment defines the amount of flickering by means of the ratio of DC and the first harmonic in the results of Fourier transform. Absolute values may be introduced here to give weight to the harmonic ratio for each absolute value. The absolute value corresponds, for example, to the average screen luminance of the video display device. Tolerable amounts of flickering vary with average screen luminance: for example, the amounts decrease (conditions becomes more stringent) with brighter screen luminance. Therefore, the accuracy of the amount of flickering reduces by regarding the ratio of the DC and the first harmonic as a function of the screen luminance. Furthermore, the amount of flickering may be defined considering up to the second harmonic.

[Embodiment 20]

The present embodiment illustrates circuit configuration for realizing the video display device of each embodiment above. Adopting the circuit configuration of the video display device of the present embodiment, it is possible to obtain the waveform of the instantaneous light emission luminance shown in Figure 54(a) (details will be given later). This luminance waveform is equivalent to the luminance waveform made up of the first and second light emission components, as described in embodiment 11 in reference to Figure 53. Therefore, the video display device which emits the first and second light emission components as described in the embodiments above, by adopting the circuit configuration of the video display device of the present embodiment.

As shown in Figures 39 and 61, the luminance waveform made up of the first and second light emission components is practically equivalent to the luminance waveform made up of the intermittent light emission component and the continuous light emission component. Therefore, the video display device which emits the intermittent light emission component and the continuous light emission component as described in the embodiments above, by adopting the circuit configuration of the video display device of the present embodiment.

First, in reference to Figures 101 to 198, the following will describe the principle of an LCD (video display device) of the present embodiment. Then a variant example of the LCD of the present embodiment will be discussed in reference to Figures 109 to 113.

(Principle of LCD of Present Embodiment)

Figure 101 is a block diagram of an example of the LCD of the present embodiment. The LCD of the present embodiment includes a video signal input terminal 2001, control circuit 2002, a source driver 2003, a gate driver 2004, and a liquid crystal panel 2005. The source driver 2003 is connected with source lines s0, s1, s2, ..., s10, while the gate driver 2004 is connected with gate lines g0, g1, g2, ..., g7. The respective intersections of the source lines and the gate lines are provided with liquid crystal cells (not illustrated). The liquid crystal cell changes its light transmittance, each time the cell is scanned. The LCD of the present embodiment further includes a light emission power supply terminal 2006, a power source circuit 2007, lamps 2008i, a light guide plate 2009a, a on-signal generation circuit 2010a, and switches 2011.

The control circuit 2002 supplies a vertical synchronization signal vs to the on-signal generation circuit 2010a, and also supplies on signals p0-p3 to the switches 2011. In accordance with the signal levels of the on signals p0-p3, the switches 2011 allow electric power to flow from the power source circuit 2007 to the lamps 2008i or cut off the electric power to the lamps 2008i.

The light guide plate 2009a is divided into rectangular areas in parallel to the gate lines g0-g7. In Figure 101, the light guide plate 2009a is divided into four areas L0-L3. The area L0 illuminates the pixels scanned by the gate lines g0 and g1. In a similar manner, the area L1 illuminates the pixels on the gate lines g2 and g3, the area L2 illuminates the pixels on the gate lines g4 and g5, and the area L2 illuminates the pixels on the gate lines g6 and g7. The areas L0-L3 are independently turned on/off by the corresponding on signals p0-p3.

The number of the areas in the light guide plate is not always identical with the number of the gate lines. In Figure 101, the light guide plate is divided into four areas while the number of the gate lines is 8. Also, the number of lamps illuminating one area is not necessarily one. In Figure 101, one area is illuminated by two lamps.

Figure 102 shows an example (embodiment 20-1) of the on-signal generation circuit 2010a of the LCD of Figure 101. As shown in Figure 102, the on-signal generation circuit 2010a includes: an input terminal 2101 for the vertical synchronization signal vs; a counter 2102; turn-on time setting means 2103r; turn-off time setting means 2103f; equality comparators 2104r and 2104f; an SR flip flop 2105; output terminals 2106 for the on signals p0-p3; setting means 2107 that stores a time for 1/4 frame; and a delay circuit 2108. In Figure 102, dotted lines with the reference number 109 indicate that the area circumscribed by the dotted line is one circuit block.

In Figure 102, the setting means 2103r, 2103f, and 2107 are indicated by hatching. Also in the figure, a narrow line indicates one signal line, and a thick like indicates a bus line which is 1 bit wide or more. The vertical synchronization signal vs is negative logic (a HIGH period is longer than a LOW period). The on signals p0-p3 are positive logic (HIGH indicates ON and LOW indicate OFF). In Figure 102, a power source, a GND terminal, and a clock line are not illustrated.

The counter 2102 is reset by a pulse of the vertical synchronization signal vs. That is, the counter 2102 operates in synchronism with the vertical synchronization signal vs. the sign "O" attached to the counter 2102 indicates the operation with negative logic.

The setting means 2103r and 2103f can retain the turn-on timings and turn-off timings of the lamps 2008i. Each of two equality comparators 2104r and 2104f outputs a pulse to the SR flip flop 2105, when the output of the counter 2102 equals to a predetermined value. The light emission luminance of each lamp is determined by the duty of the output signal of the SR flip flop 2105.

There are four systems of circuit blocks 2109. The setting means 2107 and the delay circuit 2108 determine the operation timings of the respective systems. Those four circuit blocks 2109 operate in parallel to each other, having phase differences of 1/4 frame.

The setting means 2103r, 2103f, and 2107 in Figure 102 can be constructed using a jumper resistor, DIP switch, ROM, resistor, and the like. The aforementioned setting means are not illustrated in Figure 102. The designers, manufacturers, fitters, and observers can optimally adjust the image quality by changing the parameters of the setting means, in accordance with the use of the video display device, the source of the video signal, the taste of a viewer, or the like.

The on-signal generation circuit 2010a in Figure 102 generates impulse signals i0-i3 which are in synchronism with the vertical synchronization signal vs. As shown in Figure 102, the on-signal generation circuit 2010a includes: a counter 2202p; setting means 2203a of the count cycle of the counter 2202p; a turn-on time setting means2203r; a turn-off time setting means 2203f; equality comparators 2204a, 2204r, and 2204f; an SR flip flop 2205; and OR gates 2110.

The counter 2202p is not reset by the vertical synchronization signal vs but reset by the output signal of the equality comparator 2204a. The counter 2102 operates with negative logic, while the counter 2202p operates with positive logic. The present invention is not limited to such polarity of logics.

The frequency of the reset of the counter 2202p, i.e. the count frequency, must be higher than the critical fusion frequency CFF with which flickering is unseen. The count frequency may be an integral multiple of the vertical frequency or a non-integral multiple of the vertical frequency, on condition that no beat is generated on account of interference with the horizontal scanning frequency or the like. The setting means 2203 retains the parameters for setting the count frequency.

The CFF is higher than the vertical frequency at this stage. Therefore, the count cycle of the counter 2202p in Figure 102 is shorter than the cycle of the counter 2102. On this account, the bit length of the counter 2202p may be shorter than the bit length of the counter 2102. This makes it possible to restrain the increase in the size of the circuit of the LCD of the present embodiment.

While the turn-on timings of the lamps are determined by the setting means 2203r and the equality comparator 2204r shown in Figure 102, the turn-off timings of the lamps are determined by the setting means 2203f and the equality comparator 2204f. The turn-on/turn-off timings determined in this manner are supplied to the SR flip flop 2205. The output signal h of the SR flip flop 2205 is supplied to the OR gates 2110.

Since the counter 2202p is not reset by the vertical synchronization signal vs, the output signal h is not outputted with a fixed phase difference (time difference) with the impulse signals i0-i3. In other words, the output signal h is not in synchronism with the impulse signals i0-i3.

The OR gates 2110 work out the logical OR of the impulse signals i0-i3 in synchronism with the vertical synchronization signal vs and the high-frequency signal h which is higher than the CFF, and outputs the logical OR to the output terminals 2106 for the on signals p0-p3.

Figure 103 shows the operation waveforms of the vertical synchronization signal vs, impulse signals i0-i3, high-frequency signal h, and on-signals p0-p3 for the lamps. As shown in Figure 104, on the lines for the on-signals p0-p3, pulse signals in synchronism with the vertical synchronization signal vs are supplied. For the sake of simplicity, Figure 104 illustrates only four gate lines g0, g2, g4, and g6, among 8 gate lines g0-g7. The timings to turn on/off the on signals p0-p3 are determined in consideration of the response time of liquid crystal molecules and the scanning time of the gates.

As shown in Figure 103, the impulse signals i0-i3 are supplied once in one vertical cycle. The high-frequency signal h is supplied more than one time in one vertical cycle. The on-signal p0 for the lamp is generated by combining the impulse signal i0 with the high-frequency signal h. In a similar manner, the on signal p1 is generated by combining the impulse signal i1 with the high-frequency signal h. In a similar manner, the on signal p1 is generated by combining the impulse signal i1 and the high-frequency signal h. The on signal p2 is generated by combining the impulse signal i2 and the high-frequency signal h. The on signal p3 is generated by combining the impulse signal i3 with the high-frequency signal h.

Figure 105 shows the light emission waveforms in the areas L0-L3 of the light guide plate 2009a shown in Figure 101, and the waveform of the electric power P supplied from the light emission power supply terminal 2006 to the power source circuit 2007. In Figure 105, a part crosshatched by bold lines indicates light emission corresponding to the impulse signals i0-o3 in Figure 103, while a part crosshatched by narrow lines indicates light emission corresponding to the high-frequency signal h shown in Figure 103. As shown in Figure 105, the light emission times (pulse widths) of the impulse signals i0-i3 are typically longer than the light emission time (pulse width) of the high-frequency signal h.

The light emission luminance of the backlight without the liquid crystal panel, i.e. the luminance of light emitted from the light guide plate (areas L0-L3 in Figure 101) is in proportion to the average value of the light emission waveform of the light. In the present embodiment, the average value of the light emission waveform is in proportion to its duty (turn-on time). On this account, if the specified values of the luminance of display devices are the same, the duties of the impulse signals i0-i3 (see Figure 103) are reduced as much as the added high-frequency signal h (see Figure 103).

Figure 106 is used for illustrating the shade of the outline of a moving image displayed on the LCD of the present embodiment. In Figure 106(a), long pulses indicate parts where the light emission is carried out based on the impulse signals i0-i3 shown in Figure 103. Short pulses in Figure 106(a) indicate the light emission based on the high-frequency signal h shown in Figure 103.

As shown in Figure 106(e), the luminance waveform for a moving object includes steps 1, 3. Steps 1, 3 are difficult to recognize with human dynamic vision. The human eye recognizes primarily slope 2 as the trailing of the object. If the object is stationary, steps 1 and 3 disappear, so the steps are not perceived either with stationary vision. Therefore, after the object has stopped, the backlight may be continuously turned on with the same light emission waveform as before the stopping.

The influence of the high-frequency signal h appears at the both ends of the outline (i.e. steps 1 and 3 in Figure 106(e)). This proves that the display quality of the outline of the moving image is improved.

Figure 107 shows results of calculations of Fourier series of the light emission waveform of the area L0 (see Figure 105) of the LCD of the present embodiment and the light emission waveform of the area L0 (see Figure 108) of the conventional art. The part I in Figure 107 is identical with the light emission waveform of the area L0 shown in Figure 105, while the part II in Figure 107 is identical with the light emission waveform of the area L0 shown in Figure 108. The part III in Figure 107 is the harmonic components of the light emission waveforms in the areas L0 in the present embodiment and the conventional art.

The most significant reason of flickering is the first harmonic, i.e. the frequency component identical with the vertical frequency. A DC component does not cause flickering. A harmonic component with second order or higher is negligible as the cause of flickering.

The degree of disruptive flickering depends on the display luminance. Therefore, in the part III in Figure 107, average values of the waveforms are identical between the present embodiment and the conventional art. Under this condition, the amplitudes of the first harmonics of the present embodiment and the conventional art are compared with each other.

As shown in the part III in Figure 107, the first harmonics of the light emission waveforms of the present embodiment and the conventional art are 0.820 and 1.277, respectively. This indicates that flickering is reduced in the present embodiment when compared to the conventional art.

Since the influence of harmonic components with second order or higher on flickering is negligible, the frequency of the high-frequency signal h is preferably not less than twice as much as the vertical frequency.

In the present embodiment, the light emission component corresponding to the high-frequency signal h turns on/off at a frequency higher than the critical fusion frequency CFF. This light emission component does not therefore cause flickering. The high-frequency signal h contributes to the light emission luminance of the backlight.

That is to say, the light emission by the high-frequency signal h is easily perceivable, and this decreases the light emission luminance corresponding to the impulse signals i0-i3. On this account, disruptive flickering is restrained.

The light emission by the high-frequency h can be seen as pseudo-hold-type light emission. In this regard, a control signal such as the high-frequency signal h, or the light emission waveform of this signal, is termed pseudo-hold pulse.

In the present embodiment, it is unnecessary to mix, in the light guide plate 2009a (see Figure 101), sets of output light from different types of lamps, i.e. an impulse-type lamp and a hold-type lamp. Therefore, according to the present embodiment, it is less likely to develop uneven luminance, uneven color, etc.

Furthermore, the switches are easily controllable digital circuits, and the switches themselves do not consume power irrespective of ON or OFF. For example, in a case where switching is carried out by a bipolar transistor, large collector loss does not occur in the saturation region and the interrupting region. Therefore, according to the present embodiment, a heat radiation mechanism such as a heat sink is unnecessary, and power consumption is lowered.

The aforementioned advantage is attributed to the same reason as high efficiency of the class D amplifier. However, the present invention relates to a method of controlling a light source by taking advantage of class D amplification, rather than light modulation of the light source of the display device by class D amplification.

The present embodiment uses a modification of a conventional on-signal generation circuit. On this account, the cost increase is very little when compared to the conventional art. Moreover, costly components, e.g. large components such as the light guide plate 2009a divided along gate lines and peripheral components of the power source circuit, such as the switch 2011, are identical with those used in a convention LCD.

The present embodiment does not obstruct the division of the light guide plate. That is, in the present embodiment, the light guide plate may be divided into a plurality of areas illuminated by respective lamps of different systems.

That is to say, the following arrangement may be adopted: the lamps 2008i belong to 4 systems in order to illuminate the areas L0-L3 of the light guide plate 2009a, and the areas L0-L3 are independently turned on/off in accordance with the timing to scan an image on the liquid crystal panel 2005.

The number systems by which the light guide plate 2009a is divided is not limited to 4. Also, the number of the lamps illuminating one area is not limited to 2.

(Other Embodiment of On-Signal Generation Circuit)

Figure 109 show another example (embodiment 20-2) of the on-signal generation circuit 2010a shown in Figure 101. This circuit 2010a in Figure 109 is different from the circuit in Figure 102, in the following points: two setting means 2203a and 2203r are integrated into one setting means 203, and two equality comparators 2204a and 2204r are integrated into one equality comparator 2204. The counter 2202p in Figure 109 is reset by a positive-logic output signal of the equality comparator 2204. The functions thereof are, however, identical with those described in Figure 102. In Figure 109, members having the same functions as those described in Figure 102 are given the same numbers.

In embodiment 20-2, the cycle and duty of the pseudo-hold pulse signal h can be adjusted by the setting means 203 and 2203f, respectively. By the way, it is not possible to adjust the phase of the pseudo-hold pulse signal h. However, no problem occurs because the pseudo-hold pulse signal h is a high-frequency signal not in synchronism with the vertical synchronization signal vs and hence image quality does not change on account of the phase of the pseudo-hold pulse signal h.

According to embodiment 20-2 shown in Figure 109, the size of the on-signal generation circuit 2010a is restrained when compared to embodiment 20-1 (Figure 102). That is, according to embodiment 20-2, the setting means 2203a and the equality comparators 2204a and 2204r in embodiment 20-1 are omitted.

Figure 110 shows a further embodiment (embodiment 20-3) of the on-signal generation circuit 2010a in Figure 101. This circuit 2010a is different from the on-signal generation circuit 2010a shown in Figure 109, to the extent that a PWM (pulse-width modulation) light modulation capability is added.

In a case where a displayed image is too bright, darkening occurs and quantization noise is generated as a result of the decrease in the amplitude of the video signal. To prevent this, a typical countermeasure is to decrease the output of the lamps of the display device. The commercial value of the display device is damaged unless the improvement in image quality and light modulation capability are both achieved. The image quality and light modulation capability are both achieved in embodiment 20-3.

As shown in Figure 110, the on-signal generation circuit 2010a of embodiment 20-3 includes: a counter 2302 which is reset by a positive-logic signal; setting means 2303 of a count cycle and a turn-on time; turn-off time setting means 2303f; equality comparators 2304 and 2304f; and an SR flip flop 2305. The on-signal generation circuit 2010a includes AND gates 2111. In Figure 110, members having the same functions as those described in Figure 109 are given the same numbers.

The SR flip flop 2305 outputs a PWM light modulation signal d to the AND gates 2111. The AND gates 2111 works out logical AND of the PWM light modulation signal d and output signals of the OR gates 2110, and outputs the result of the logical AND to output terminals 2106 for the on signals p0-p3.

A circuit that generates the PWM light modulation signal d is similar to the circuits that generate the impulse signals i0-i3 and the pseudo-hold pulse signal h. The frequencies and functions of these signals are totally different from one another.

That is, the impulse signals i0-i3 have frequencies identical with that of the vertical synchronization signal vs, e.g. 60Hz. On the other hand, the frequency of the pseudo-hold pulse signal h is higher than the frequency of the critical fusion frequency CFF, e.g. 600Hz. The frequency of the PWM light modulation signal d is sufficiently higher than the frequency of the pseudo-hold pulse signal h, e.g. 600kHz. On this account, the bit length of the counter 2302p may be shorter than the bit lengths of the counter 2102 and the counter 2202p.

Figure 111 shows the operation waveforms of the respective parts of the circuit in Figure 110, i.e. the vertical synchronization signal vs, the impulse signal 10, the pseudo-hold pulse signal h, the PWM light modulation signal d, and the on signal p0 for the lamp. As to the PWM light modulation signal d and the on signal p0, parts thereof are extracted and the temporal axes are magnified.

The duty of the PWM light modulation signal d is reduced by the setting means 2303 and 2303f. By doing son, it is possible to restrain the light modulation of the lamps whereas the relationship between the impulse signals i0-i3 and the pseudo-hold pulse signal is maintained, i.e. the display quality is maintained.

In a case where the frequency of the PWM light modulation signal is 1000 times higher than the frequency of the pseudo-hold pulse signal h, the light modulation error is not more than 0.1% (1/1000) even without the management of the phase of the PWM light modulation signal. That is, the influence of the phase of the PWM light modulation signal is inconceivable for human eyes. As a matter of course, light emission by the PWM light modulation signal d does not cause flickering.

When, for example, a frequency 1000 times higher than the frequency of the PWM light modulation signal d, i.e. a clock of 60MHz, is supplied to the circuit that generates the PWM light modulation signal d, the light modulation is carried out with 100 levels, and hence the light modulation is carried out in a detailed manner.

The frequencies of the signals above are mere examples, but are achievable with conventional technologies and reasonable costs.

As described above, according to embodiment 20-3, it is possible to improve both the image quality and the light modulation capability. Moreover, these improvements are achieved easily when compared to a case where the duties of the impulse signals i0-i3 and the pseudo-hold pulse signal h are individually adjusted.

Figure 112 shows still another example (embodiment 20-4) of the on-signal generation circuit 2010a shown in Figure 101. Comparing Figure 112 with Figure 109, a logic gate 2212 is inserted between (i) the input terminal 2101 of the vertical synchronization signal vs and (ii) the equality comparator 2204 and the counter 2202p, in Figure 112. With this modification, the counter 2202p can be reset either by the pulse of the vertical synchronization signal vs or the output of the equality comparator 2204. In Figure 112, members having the same functions as those described in Figure 109 are given the same numbers.

The polarities of the signals do not limit the present invention. A suitable logic gate 2212 is selected in accordance with the polarities of the signals.

In embodiment 20-4, the counter 2202p is reset in synchronism with the pulse of the vertical synchronization signal vs. This makes it easy to carry out debugging of the circuit. Moreover, it is possible to save labor for generating the pattern (test bench) used in shipping inspection of ICs. Furthermore, even if the on-signal generation circuit 2010a malfunctions on account of instantaneous electricity failure, it is possible to surely return to the normal operation within one frame. As a result, it is possible to reduce a waiting time for the observer from the malfunction to the return to the normal operation.

In embodiment 20-4, the influence of the insertion of the logic gate 2212 on the image quality is practically negligible if the cycle of the pseudo-hold pulse signal h is sufficiently shorter than the vertical cycle. The image quality in embodiment 20-2 (Figure 109) and the image quality in embodiment 20-4 (Figure 112) are almost the same, if the frequency of the pulses supplied from the equality comparator 2204 is sufficiently higher than the frequency (vertical frequency) of the pulses of the vertical synchronization signal vs.

Figure 113 shows still another example (embodiment 20-5) of the on-signal generation circuit 2010a in Figure 101. In this embodiment, the delay circuit 2108 (see Figure 109) of embodiment 20-2 is replaced by an adder 2113. In the on-signal generation circuit 2010a of embodiment 20-5, only one counter 2102 is provided irrespective of the number of systems (i.e. the number of circuit blocks 2109). The functions and output waveforms of the on-signal generation circuit 2010a of embodiment 20-5 are identical with those of the on-signal generation circuit 2010a of embodiment 20-2.

When embodiment 20-5 is adopted, the number of counters 2102 is only one if the delay time is a constant. It is therefore possible to reduce the size of the circuit, when compared to Figure 109.

As described above, artifacts occurring along the outline of a moving image are restrained, while flickering is restrained. Since flickering is restrained, one of the barriers that thwart the increase in size and luminance of the display device is eliminated. Moreover, according to the present embodiment, cost increase associated with the reduction of flickering is small. Even if the size of the signal circuit becomes slightly larger, large components and electric circuits identical with those in conventional art can be used. Furthermore, the characteristics of class D amplification are suitably exploited and hence efficiency is good. The present embodiment does not obstruct the present embodiment to adopt the light modulation capability.

A video display device of the present invention, to solve the problems, is characterized in that it modulates luminances of pixels in accordance with a video signal to display video, the device emitting a first light emission component and a second light emission component, the first light emission component accounting for D% of a vertical cycle of the video signal in terms of duration and S% of a light emission intensity of a pixel over the vertical cycle, the second light emission component accounting for (100-D)% of the vertical cycle in terms of duration and (100-S)% of the light emission intensity, wherein D and S meet either a set of conditions A:

$$62 \le S < 100,\ 0 < D < 100,\ \text{and}\ D < S,$$

or a set of conditions B:

$$48 < S < 62,\ \text{and}\ D \le (S-48)/0.23.$$

According to the arrangement, D indicates the duty ratio of the first light emission component and that of the second light emission component, while S indicates the light emission intensity ratio. The inventors of the present invention examined the amounts of trailing and the amounts of flickering obtained for various duty ratios D and light emission intensity ratios S, which led the inventors to conclude that the amount of trailing and the amount of flickering are simultaneously reduced by setting the duty ratio D and the light emission intensity ratio S so that D and S meet the set of conditions A or the set of conditions B. Therefore, with a video display device arranged as above, the amount of trailing and the amount of flickering are reduced at the same time.

The video display device arranged as above preferably includes: video display means setting transmittances of pixels in accordance with the video signal; and a light source body illuminating the video display means, wherein the light source body controls light emission intensities of the first light emission component and the second light emission component.

Furthermore, it is preferable if the light source body is a semiconductor light emitting element, for example, a light emitting diode. The light source body may be a cold cathode fluorescent lamp.

Alternatively, the video display device arranged as above preferably includes video display means setting light emission luminances of pixels in accordance with the video signal,
wherein the video display means controls light emission intensities of the first light emission component and the second light emission component.

The video display means may be an organic EL panel or a liquid crystal panel.

The display panel is an active matrix self-luminous element, for example, an organic EL. Each pixel has a light emitting element. Each light emitting element has a capacitor to store image information. The capacitor is accessed more than once in each vertical cycle to enable the pixel to emit the first light emission component and the second light emission component. Alternatively, the capacitor may be divided to enable the pixel to emit the first light emission component and the second light emission component.

The display panel may be fed with video data reordered in advance in terms of time, and each pixel may be selected three times in each vertical cycle of the video to enable the pixel to emit light constituted by the first light emission component and the second light emission component.

The video display device arranged as above may include: video display means setting transmittances of pixels in accordance with the video signal; and a light source body illuminating the video display means, the device further including light control means, disposed in an optical path provided between the video display means and the light source body, controlling an illumination light intensity of the light source body to control light emission intensities of the first light emission component and the second light emission component.

According to the arrangement, the luminance of the first light emission component and the second light emission component can be readily controlled by controlling the illumination light intensity of the light source body using the light control means. Besides, since the light source body only needs to emit light at a constant intensity, the wear on the light source body can be lowered.

The light control means may entirely or partially transmit the illumination light of the light source body or entirely transmit or block the illumination light of the light source body. "Light being partially transmitted" means that the light emitted from the light source body is transmitted at a rate not 0%. "Light being blocked" means that the transmittance is 0%.

The light source body may be a semiconductor light emitting element, for example, a light emitting diode. The light source body may be a cold cathode fluorescent lamp.

Preferably, the video display device of the present invention is arranged as above and includes: video display means setting transmittance in accordance with the video signal; and a light source body illuminating the video display means, wherein: the light source body illuminates the video display means with illumination light obtained by mixing intermittent light represented by a pulsed light emission intensity waveform which is in synchronism with the video signal and continuous light having a constant light emission intensity; and light emission intensities of the pixels for the first light emission component and the second light emission component are caused by the intermittent light and the continuous light.

According to the arrangement, the intermittent light and the continuous light illuminate the video display means. By mixing the intermittent light and the continuous light, one can obtain substantially the same light as the mixed light of the first light emission component and the second light emission component. Therefore, the video display device arranged as above also simultaneous reduces the amount of trailing and the amount of flickering.

It is preferable if the intermittent light and the continuous light have a light emission intensity set to a level perceivable by the human eye.

According to the arrangement, the luminances of the pixels displayed in the vertical cycle are set to a level perceivable to the human eye (for example, 90 nits). The object displayed on the video display device of the present invention is also readily visible to the observer's eye. The video display device of the present invention thereby offers improved visibility for the object displayed.

The video display device of the present invention preferably includes scene change detect means detecting an amount of scene change in the video from the video signal, wherein a value of S or D is changed in accordance with the amount of scene change.

According to the arrangement, the duty ratio S or the light emission intensity ratio D is changed in accordance with the motion in video indicated by the amount of scene change. The amount of trailing and the amount of flickering can be adjusted in accordance with the motion in the video. Therefore, the amount of flickering and the amount of trailing can be reduced in accordance with whether the video displayed by the video display device is a still image or a moving image.

The values of S or D may be changed in accordance with an average luminance level in the video. Because the amount of flickering in video changes with the average luminance level of the video. In other words, the amount of flickering tends to increase at higher average luminance levels. According to the arrangement, the duty ratio S or the light emission intensity ratio D is changed in accordance with the average luminance level. Therefore, optimal S and D values can be selected in accordance with the average luminance level to simultaneously reduce the amount of flickering and the amount of trailing.

Preferably, the video display device of the present invention is arranged as above and includes: video display means setting transmittances of pixels in accordance with the video signal; and a light source body illuminating the video display means, wherein: the light source body is disposed separated from the video display means; and the first light emission component and the second light emission component are mixed in a space formed between the light source body and the video display means.

In other words, the non-luminous LCD, an example of the video display device, includes a "direct backlight" as a light source on the backsurface of the liquid crystal panel as the video display means. Therefore, in the non-luminous LCD, there is formed a space between the video display means and the light source body.

According to the arrangement, the first light emission component and the second light emission component are mixed together using the space thus formed. Therefore, the motion trailing and the disruptive flickering can be lowered in video display devices which use a direct backlight as a light source.

Preferably, the video display device of the present invention is arranged as above and includes: video display means setting transmittances of pixels in accordance with the video signal; a light source body outputting the first light emission component and the second light emission component to illuminate the video display means; and light mixing means mixing the first light emission component and the second light emission component.

According to the arrangement, the video display device of the present invention includes light mixing means the first light emission component and the second light emission component can be surely mixed together. Therefore, the present invention can more surely reduce the motion trailing and the disruptive flickering through the use of the first light emission component and the second light emission component.

It is preferable if in the video display device arranged as above, the light mixing means is a light guide plate; the light source body is disposed along a single end face of the light guide plate; and the light guide plate guides the light obtained by mixing the first light emission component and the second light emission component from the end face along which the light source body is disposed to another end face facing the video display means for output to the video display means.

Some LCDs, an example of the video display device, use an "edge-lit light source." In this type of light source, there is provided a light guide plate on the backsurface of the liquid crystal panel as the video display means. Illumination light from the light source is guided by the light guide plate to illuminate the liquid crystal panel.

In the present invention, this light guide plate is used mix the first light emission component and the second light emission component emitted from the light source body for the illumination of the video display means. Therefore, in the video display device using an edge-lit light source, the motion trailing and the disruptive flickering can be lowered.

Preferably, the video display device of the present invention is arranged as above and further includes: video display means setting transmittances of pixels in accordance with the video signal; and a light source body illuminating the video display means, wherein: the light source body includes a first light source body emitting the first light emission component and a second light source body emitting the second light emission component; and there are provided first light source body drive means controlling ON/OFF of the first light source body and second light source body drive means controlling ON/OFF of the second light source body.

According to the arrangement; the first light emission component and the second light emission component are emitted from the respective light sources corresponding to the first light source body and the second light source body. Furthermore, the first light source body and the second light source body are individually controlled by the first light source body drive means and the second light source body drive means respectively.

Therefore, it is sufficient to optimize the circuit arrangement of the first light source body and the first light source body drive means in order to optimize the light emission state of the first light emission component, and to optimize the circuit arrangement of the second light source body and the second light source body drive means in order to optimize the light emission state of the second light emission component. In this manner, the light emission states of the first light emission component and the second light emission component can be individually optimized, which facilitates cost cuts and circuit reliability improvement by simplifying circuit arrangement.

It is preferable if the first light source body drive means switches on/off at least one of electric power, current, and voltage supplied to the first light source body in synchronism with the video signal.

In other words, the first light emission component can be realized by intermittent light represented by a rectangular pulsed light emission intensity waveform in synchronism the video signal. Therefore, the intermittent light can be readily produced by switching on/off, for example, electric power supplied to the light source body in synchronism with the video signal.

Since in the present invention, the first light source body drive means is arranged to switch on/off, for example, electric power supplied to the first light source body in synchronism with the video signal, the intermittent light can be readily generated. Therefore, the present invention can reduce the motion trailing and the disruptive flickering with a simpler circuit arrangement.

It is preferable if the second light source body drive means supplies at least one of electric power, current, and voltage to the second light source body at a constant level.

In other words, the second light emission component can be realized by continuous light which always has constant light emission intensity. Therefore, the continuous light can be readily produced by supplying, for example, constant electric power to the light source body.

Since in the present invention, the second light source body drive means is arranged to supply, for example, constant electric power to the second light source body, the continuous light can be readily generated. Therefore, the present invention can reduce the motion trailing and the disruptive flickering with a simpler circuit arrangement.

It is preferable if the second light source body drive means controls at least one of electric power, current, and voltage supplied to the second light source body at a frequency three times a vertical frequency of the video signal or at a higher frequency (for example, 150 Hz).

The human eye has very poor sensitivity to flickers of about 150 Hz. The eye is hardly responsive to flickers in excess of about 300 Hz. Therefore, the human eye may observe the second light emission component even if the light is, strictly speaking, flickering.

Therefore, when the video signal frequency is set to, for example, 60 Hz, if the electric power supply to the second light source body is controlled at 60 Hz x 3 or at a higher frequency, the second light source body can readily emit, in effect, the second light emission component. Accordingly, the present invention can reduce the motion trailing and the disruptive flickering with a simpler circuit arrangement.

The first light source body and the second light source body may be semiconductor light emitting elements, for example, light emitting diodes.

It is preferable if the second light source body emits the second light emission component by different light emission principles from the first light source body.

According to the arrangement, the second light source body emits the continuous light by different light emission principles from the first light source body. The second light source body can be a suitable light emitting element for the emission of the second light emission component, for example, a cold cathode fluorescent lamp. Therefore, the second light source body has an extended lifetime and improved durability.

Preferably, the video display device of the present invention is arranged as above and includes intermittent light signal generating means generating an intermittent light signal alternating between ON and OFF in synchronism with the video signal; and continuous light signal generating means generating a continuous light signal which is always ON, wherein the first light emission component and the second light emission component are emitted in accordance with an illumination light signal obtained by combining the intermittent light signal and the continuous light signal.

According to the arrangement, the light source body generates the first light emission component in accordance with the intermittent light signal and the second light emission component in accordance with the continuous light signal. Therefore, the mixed illumination light of the first light emission component and the second light emission component can be obtained from a single light source body if in accordance with an illumination light signal derived by combining the intermittent light signal and the continuous light signal. Therefore, the optical system has a simple setup. The video display means is less likely to develop uneven luminance, uneven color, etc.

It is preferable if the continuous optical signal has a frequency three times a vertical frequency of the video signal or at a higher frequency (for example, 150 Hz).

According to the arrangement, when the video signal frequency is set to, for example, 60 Hz, the light source body can readily emit light that the human eye perceives as, in effect, the second light emission component. Accordingly, the present invention can reduce the motion trailing and the disruptive flickering with a simpler circuit arrangement.

The first light emission component and the second light emission component may be emitted from semiconductor light emitting elements, for example, light emitting diodes.

The second light emission component may be formed by a collection of pulse components having a higher frequency than a vertical frequency of the video signal. It is preferable if the pulse components have a frequency three times a vertical frequency of the video signal or a higher frequency, for example, 150 Hz.

Another video display device of the present invention, to solve the problems, is characterized in that it modulates luminances of pixels in accordance with a video signal to display video, the device including: video display means setting transmittances of pixels in accordance with the video signal; and a first light source body emitting intermittent light represented by a pulsed light emission intensity waveform which is in synchronism with the video signal and a second light source body emitting continuous light represented by constant light emission intensity, wherein the video display means is illuminated by illumination light obtained by mixing the intermittent light and the continuous light.

According to the arrangement, the illumination light is obtained by mixing the intermittent light and the continuous light. Therefore, the illumination light obtained from the light source body of the present invention has a light emission intensity maintained at a constant level by the continuous light and also has the light emission intensity intermittently shoot up when the intermittent light is emitted.

Therefore, when a moving object is displayed with the video display means of the present invention, the outline of the object is illuminated with light emission intensities corresponding to two types of light emission intensities: the continuous light and the intermittent light. Accordingly, the outline of the moving object is displayed with two types of luminance changes: those corresponding only to the continuous light and those corresponding to both the intermittent light and the continuous light.

As a result, in a video displaying the outline of a moving object, the observer cannot identify contrast for luminance changes corresponding only to the continuous light and can identify only contrast for luminance changes corresponding to the intermittent light and the continuous light. Thus, the motion trailing which occurs when displaying a moving object can be reduced.

In addition, the inventors of the present invention have verified that, as to the illumination light emitted from the light source body of the present invention, the amount of flickering can be lowered by adjusting the duty ratio of the intermittent light. For example, it has been verified that the amount of flickering, which was conventionally 90%, can be lowered to 75% if the duty ratio of the intermittent light is set to 20%, and the luminance of the continuous light with respect to the luminance of the illumination light is set to 20%.

As described in the foregoing, the video display device of the present invention uses a mixture of the intermittent light and the continuous light as the illumination light and is therefore capable of simultaneously reducing the motion trailing and the disruptive flickering.

Especially, the intermittent light and the continuous light are emitted from the respective light sources corresponding to the first light source body and the second light source body.

Therefore, it is sufficient to optimize the first light source body in order to optimize the light emission state of the intermittent light and optimize the second light source body in order to optimize the light emission state of the continuous light. In this manner, the light emission states of the intermittent light and the continuous light can be individually optimized, which facilitates cost cuts and circuit reliability improvement by simplifying circuit arrangement.

The video display device arranged as above preferably further includes: first light source body drive means controlling ON/OFF of the first light source body; and second light source body drive means controlling ON/OFF of the second light source body.

According to the arrangement, it is sufficient to optimize the circuit arrangement of the first light source body drive means in order to optimize the light emission state of the intermittent light and optimize the circuit arrangement of the second light source body drive means in order to optimize the light emission state of the continuous light. In this manner, the light emission states of the intermittent light and the continuous light can be individually optimized, which facilitates cost cuts and circuit reliability improvements by simplifying circuit arrangement.

It is preferable if the first light source body drive means switches on/off at least one of electric power, current, and voltage supplied to the first light source body in synchronism with the video signal.

The intermittent light is represented by a pulsed light emission intensity waveform in synchronism with the video signal.

Therefore, the intermittent light can be readily produced by switching on/off, for example, electric power supplied to the light source body in synchronism with the video signal.

Since in the present invention, the first light source body drive means is arranged to switch on/off, for example, electric power supplied to the first light source body in synchronism with the video signal, the intermittent light can be readily generated. Therefore, the present invention can reduce the motion trailing and the disruptive flickering with a simpler circuit arrangement.

It is preferable if the second light source body drive means supplies at least one of electric power, current, and voltage to the second light source body at a constant level.

The continuous light has a constant light emission intensity. Therefore, the continuous light can be readily produced by supplying, for example, constant electric power to the light source body.

According to the arrangement, the second light source body drive means is arranged to supply, for example, constant electric power to the second light source body, the continuous light can be readily generated. Therefore, the present invention can reduce the motion trailing and the disruptive flickering with a simpler circuit arrangement.

The second light source body drive means may control at least one of electric power, current, and voltage supplied to the second light source body at a frequency three times a vertical frequency of the video signal or at a higher frequency (for example, 150 Hz).

The human eye has very poor sensitivity to flickers of about 150 Hz. The eye is hardly responsive to flickers in excess of about 300 Hz. Therefore, the human eye may observe continuous light even if the light is, strictly speaking, flickering.

Therefore, when the video signal frequency is set to, for example, 60 Hz, if the electric power supply to the second light source body is controlled at 60 Hz x 3 or at a higher frequency, the second light source body can readily emit, in effect, the continuous light. Accordingly, the present invention can reduce the motion trailing and the disruptive flickering with a simpler circuit arrangement.

The first light source body and the second light source body may be semiconductor light emitting elements, for example, light emitting diodes.

The second light source body may emit the continuous light by different light emission principles from the first light source body.

According to the arrangement, the second light source body emits the continuous light by different light emission principles from the first light source body. The second light source body can be a suitable light emitting element for the emission of the continuous light, for example, a cold cathode fluorescent lamp. Therefore, the second light source body has an extended lifetime and improved durability.

Another video display device of the present invention, to solve the conventional problems, is characterized in that it includes video display means, with pixels, which sets transmittances of the pixels in accordance with a video signal to display video, wherein: the pixels emit light constituted by a first light emission component and a second light emission component; the light emitted from the pixels is updated at timings given by a vertical synchronization signal of the video signal; and $D/2 \leq P \leq (100-D/2)$ and $0 < D < 100$ where P is a ratio in percentage of a duration to a vertical cycle of the video signal, the duration beginning at a start of the vertical cycle and ending at a midpoint of a light emission period associated with the first light emission component, and D is a ratio in percentage of an illumination duration associated with the first light emission component to the vertical cycle.

According to the arrangement, the light emission constituted by the first light emission component and the second light emission component restricts disruptive flickering while reducing trailing of an moving object and displaying clear outlines.

The video display devices of the present invention are applicable to liquid crystal display devices, whether transmissive or reflective, in which a liquid crystal element as a non-luminous element is used as a display element. The devices are also applicable to display devices in which a self-luminous display panel (e.g., organic EL panel) is used.

It is preferable if the video display device arranged as above is such that $PA = 50 + K$ for $0 \leq K \leq (50\text{-}D / 2)$ where PA is an optimal value of the duration ratio P, and K is a constant dictated by a response time constant of the video display means.

When the response time constant of the video display means (for example, a liquid crystal panel) is as high as 2 milliseconds to 5 milliseconds, the optimal value PA of P is given by $PA = 50 + K$ for $0 \leq K \leq (50\text{-}D/2)$. K is a constant if the response time constant is determined. The function which is used to obtain the constant K from the response time constant is not a simple linear function. However, K tends to increase with increasing response time constant. Therefore, the amount of trailing can be optimized by increasing PA, that is, delaying the light emission phase of the first light emission component, when the response time constant is large in accordance with the relational expression between PA and K.

When the response time constant is as fast as about 1 millisecond, P is optimal at about 50, because when the amount of trailing is given using a trailing model, moderate tilts out of luminance changes which occur primarily due to the second light emission component are well balanced before and after the first light emission component.

It is preferable if the first light emission component accounts for S% of a light emission intensity of a pixel over the vertical cycle, the second light emission component accounts for (100-D)% of the vertical cycle in terms of duration and (100-S)% of the light emission intensity, and D and S meet either a set of conditions A: $62 \leq S < 100$, $0 < D < 100$, and $D < S$; or a set of conditions B: $48 < S < 62$ and $D \leq (S-48)/0.23$.

The inventors of the present invention examined the amount of trailing and the amount of flickering obtained for various duty ratios D and light emission intensity ratios S, which led the inventors to conclude that the amount of trailing and the amount of flickering are simultaneously reduced by setting the duty ratio D and the light emission intensity ratio S so that D and S meet the set of conditions A or the set of conditions B. Therefore, with the video display device arranged as above, the amount of trailing and the amount of flickering are reduced in an ideal manner.

The video display means preferably include: light emitting means emitting illumination light constituted by the first light emission component and the second light emission component; and modulate means modulating the illumination light in accordance with the video signal.

It is preferable if the light emitting means changes P in value from one area to another, the video display means being divided into the areas.

In the video display means, the update timing of the transmittance of a pixel may differ from one place to another on the screen. The effects of the phase differences in update timing are cancelled by differentiating the value of P from one area to another as above, that is, shifting the light emission phase of the first light emission component, to obtain the best light emission phase.

It is preferable if the video display means includes a memory for each pixel to record information on the video signal, and the memory is accessed more than once in each vertical cycle of the video signal to enable the pixel to achieve a light emission waveform representing light emission constituted by the first light emission component and the second light emission component.

According to the arrangement, information on the video signal is reordered and recorded in the memory. The memory is accessed more than once to produce the first light emission component and the second light emission component. Therefore, the amount of trailing and the amount of flickering can be lowered without making any changes to the common pixel structure in the video display means where data is updated once per every vertical synchronization signal.

It is preferable if the arrangement is applied to video display means which includes a light emitting element for each pixel, for example, an organic EL panel. In a video display device using an organic EL panel, the first light emission component and the second light emission component are generated by controlling the amount of light emission of the light emitting element in accordance with the information recorded in the memory to lower the amount of trailing and the amount of flickering.

The video display means may be fed with video data reordered in advance in terms of time, and each pixel may be selected three times in each vertical cycle of the video signal to enable the pixel to achieve a light emission waveform representing light emission constituted by the first light emission component and the second light emission component.

With this arrangement, the amount of trailing and the amount of flickering can be again lowered without making any changes to the common pixel structure in the video display means where data is updated once per every vertical synchronization signal.

Supplement

The present invention is not limited to the description of the embodiments above, but may be altered by a skilled person within the scope of the claims. An embodiment based on a proper combination of technical means disclosed in different embodiments is encompassed in the technical scope of the present invention.

The video display device of the present invention may include: video display means modulating light in accordance with a video signal; and a light source body illuminating the video display means, wherein the light source body illuminates the video display means with illumination light obtained by mixing intermittent light represented by a rectangular pulsed light emission intensity waveform in synchronism with the video signal and continuous light which always has constant light emission intensity.

According to the arrangement, the light source body of the present invention produces illumination light which is a mixture of intermittent light and continuous light. Therefore, the illumination light obtained from the light source body of the present invention has a light emission intensity maintained at a constant level by the continuous light also has the light emission intensity intermittently shoot up when the intermittent light is emitted.

Therefore, when a moving object is displayed with the video display means of the present invention, the outline of the object is illuminated with light emission intensities corresponding to two types of light emission intensities: the continuous light and the intermittent light. Accordingly, the outline of the moving object is displayed with two types of luminance changes: those corresponding only to the continuous light and those corresponding to both the intermittent light and the continuous light.

As a result, in a video displaying the outline of a moving object, the observer cannot identify contrast for luminance changes corresponding only to the continuous light and can identify only contrast for luminance changes corresponding to the intermittent light and the continuous light. Thus, the motion trailing which occurs when displaying a moving object can be reduced.

In addition, the inventors of the present invention have verified that, as to the illumination light emitted from the light source body of the present invention, the amount of flickering can be lowered by adjusting the duty ratio of the intermittent light. For example, it has been verified that the amount of flickering, which was conventionally 90%, can be lowered to 75% if the duty ratio of the intermittent light is set to 20%, and the luminance of the continuous light with respect to the luminance of the illumination light is set to 20%.

As described in the foregoing, the video display device of the present invention uses a mixture of the intermittent light and the continuous light as the illumination light and is therefore capable of simultaneously reducing the motion trailing and the disruptive flickering.

It is preferable if the intermittent light and the continuous light have a light emission intensity set to a level perceivable to the human eye.

According to the arrangement, both the intermittent light and the continuous light are set to a level perceivable to the human eye (for example, 90 nits). The object displayed on the video display means by the light is also readily visible to the observer's eye. Therefore, The visibility of the object displayed by the video display means can be improved.

In the video display device of the present invention, the light source body may be disposed separately from the video display means, and the intermittent light and the continuous light may be mixed in a space between the light source body and the video display means.

In other words, the non-luminous LCD, an example of the video display device, includes a "direct backlight" as a light source on the backsurface of the liquid crystal panel as the video display means. Therefore, in the non-luminous LCD, there is formed a space between the video display means and the light source body.

According to the arrangement, the intermittent light and the continuous light are mixed using the space thus formed. Therefore, the motion trailing and the disruptive flickering can be lowered in video display devices which use a direct backlight as a light source.

The video display device of the present invention may be arranged to include light mixing means mixing the intermittent light and the continuous light.

According to the arrangement, the video display device of the present invention includes light mixing means. The intermittent light and the continuous light can be surely mixed together. Therefore, the present invention can more surely reduce the motion trailing and the disruptive flickering through the mixing of intermittent light and continuous light.

The video display device arranged as above may be arranged so that: the light mixing means is a light guide plate; the light source body is disposed along a single end face of the light guide plate; and the light guide plate guides the light obtained by mixing the intermittent light and the continuous light from the end face along which the light source body is disposed to another end face facing the video display means for output to the video display means.

Some LCDs, an example of the video display device, use an "edge-lit light source." In this type of light source, there is provided a light guide plate on the backsurface of the liquid crystal panel as the video display means. Illumination light from the light source is guided by the light guide plate to illuminating the liquid crystal panel.

In the present invention, the continuous light and the intermittent light from the light source body are mixed together using such a light guide plate to illuminate the video display, means. The motion trailing and the disruptive flickering can be lowered in a video display device using an edge-lit light source.

The video display device arranged as above may be arranged so that: the light source body includes: a first light source body emitting the intermittent light and a second light source body emitting the continuous light; and there are provided first light source body drive means controlling ON/OFF of the first light source body and second light source body drive means controlling ON/OFF of the second light source body.

According to the arrangement, the intermittent light and the continuous light are emitted from the respective light sources corresponding to the first light source body and the second light source body. Furthermore, the first light source body and the second light source body are individually controlled by the first light source body drive means and the second light source body drive means respectively.

Therefore, it is sufficient to optimize the circuit arrangement of the first light source body and the first light source body drive means in order to optimize the light emission state of the intermittent light and optimize the circuit arrangement of the second light source body and the second light source body drive means in order to optimize the light emission state of the continuous light. In this manner, the light emission states of the intermittent light and the continuous light can be individually optimized, which facilitates cost cuts and circuit reliability improvements by simplifying circuit arrangement.

It is preferable if the first light source body drive means switches on/off at least one of electric power, current, and voltage supplied to the first light source body in synchronism with the video signal.

The intermittent light is represented by a rectangular pulsed light emission intensity waveform in synchronism with the video signal. Therefore, the intermittent light can be readily produced by switching on/off, for example, electric power supplied to the light source body in synchronism with the video signal.

Since in the present invention, the first light source body drive means is arranged to switch on/off, for example, electric power supplied to the first light source body in synchronism with the video signal, the intermittent light can be readily generated. Therefore, the present invention can reduce the motion trailing and the disruptive flickering with a simpler circuit arrangement.

It is preferable if the second light source body drive means supplies at least one of electric power, current, and voltage to the second light source body at a constant level.

The continuous light always has a constant light emission intensity. Therefore, the continuous light can be readily produced by supplying, for example, constant electric power to the light source body.

Since in the present invention, the second light source body drive means is arranged to supply, for example, constant electric power to the second light source body, the continuous light can be readily generated. Therefore, the present invention can reduce the motion trailing and the disruptive flickering with a simpler circuit arrangement.

The second light source body drive means may control at least one of electric power, current, and voltage supplied to the second light source body at a frequency three times a frequency of the video signal or at a higher frequency.

The human eye has very poor sensitivity to flickers of about 150 Hz. The eye is hardly responsive to flickers in excess of about 300 Hz. Therefore, the human eye may observe continuous light even if the light is, strictly speaking, flickering.

Therefore, when the video signal frequency is set to, for example, 60 Hz, if the electric power supply to the second light source body is controlled at 60 Hz x 3 or at a higher frequency, the second light source body can readily emit, in effect, the continuous light. Accordingly, the present invention can reduce the motion trailing and the disruptive flickering with a simpler circuit arrangement.

The first light source body and the second light source body may be semiconductor light emitting elements, for example, light emitting diodes.

The second light source body may emit the continuous light by different light emission principles from the first light source body.

According to the arrangement, the second light source body emits the continuous light by different light emission principles from the first light source body. The second light source body can be a suitable light emitting element for the emission of the continuous light, for example, a cold cathode fluorescent lamp. Therefore, the second light source body has an extended lifetime and improved durability.

The video display device of the present invention includes: intermittent light signal generating means generating a intermittent light signal which repeatedly alternates between ON/OFF in synchronism with a video signal; and continuous light signal generating means generating a continuous light signal which is always ON, wherein the light source body emits the illumination light in accordance with an illumination light signal obtained by combining the intermittent light signal and the continuous light signal.

According to the arrangement, the light source body can generate the intermittent light in accordance with the intermittent light signal, and the light source body can generate the continuous light in accordance with the continuous light signal. Therefore, the mixed illumination light of the intermittent light and the continuous light can be obtained from a single light source body if in accordance with an illumination light signal derived by combining the intermittent light signal and the continuous light signal. Therefore, the optical system has a simple setup. The video display means is less likely to develop uneven luminance, uneven color, etc.

The continuous light signal may have a frequency three times a frequency of the video signal or at a higher frequency.

According to the arrangement, when the video signal frequency is set to, for example, 60 Hz, the light source body can readily emit light that the human eye perceives as, in effect, the continuous light. Accordingly, the present invention can reduce the motion trailing and the disruptive flickering with a simpler circuit arrangement.

The light source body may be a semiconductor light emitting element, for example, a light emitting diode.

The video display device of the present invention may be arranged so that the light source body includes: a third light source body which always emits light at constant intensity; and shutter means controlling intensity of light emitted from the third light source body in synchronism with a video signal.

As mentioned earlier, the illumination light obtained by mixing the intermittent light and the continuous light has a light emission intensity maintained at a constant light emission intensity by the continuous light and also has the light emission intensity intermittently shoot up. Therefore, if the intensity of light emitted from the third light source body is controlled with the shutter means so that the constant light emission intensity is maintained and the light emission intensity shoots up intermittently, the illuminating intensity similarly to the mixed illumination light of the intermittent light and the continuous light is obtainable from the light produced by the third light source body.

In this manner, the mixed illumination light of the intermittent light and the continuous light is obtained from the third light source body alone. Therefore, the motion trailing and the disruptive flickering can be simultaneously reduced as mentioned earlier. Besides, since the third light source body only needs to emit light at a constant intensity, the wear on the third light source body can be lowered.

The shutter means may entirely or partially transmit, or entirely transmit or block, the light emitted from the third light source body in synchronism with the video signal. "Light partial transmitted" means that the light emitted from the third light source body is transmitted at a rate not 0%. "Light being blocked" means that the transmittance is 0%.

The third light source body may be a semiconductor light emitting element, for example, a light emitting diode. The third light source body may be a cold cathode fluorescent lamp.

Furthermore, the motion trailing and disruptive flickering reducing effects of the video display device of the present invention are suitably achieved when the video display means is a liquid crystal panel, that is when the video display device of the present invention is applied to the LCD. Therefore, the motion trailing and the disruptive flickering can be effectively lowered in LCDs with growing device size.

The video display device of the present invention is applicable when the display panel is an active matrix self-luminous element, for example, an organic EL. In an organic EL, each pixel has a light emitting element. Each light emitting element has a capacitor to store image information. The capacitor is accessed more than once in each vertical cycle to enable the pixel to emit light constituted by the first light emission component and the second light emission component. Alternatively, the capacitor may be divided to enable the pixel to emit light constituted by the first light emission component and the second light emission component.

The display panel may be fed with video data reordered in advance in terms of time, and each pixel may be selected three times in each vertical cycle of the video to enable the pixel to emit light constituted by the first light emission component and the second light emission component.

Since the video display device of the present invention illuminates the video display means with the mixed illumination light of the continuous light and the intermittent light, the motion trailing and the disruptive flickering can be lowered together. Flickering is not only unpleasant to the user, but causes insufficient attention, low performance, and eye strain or otherwise negatively affects the user. The present invention prevents these negative effects. Furthermore, lowering flickering is essential in improving display quality of a high luminance/large screen video display device. In this manner, according to the present invention, the observer is given optimal display quality.

The video display device of the present invention may be arranged to include: video display means modulating light in accordance with a video signal; and a light source body illuminating the video display means, wherein the light source body illuminates the video display means with illumination light constituted by flicker-free continuous light and intermittent light in synchronism with the video signal.

Furthermore, in the above arrangement, there may be further provided first light source body drive means and second light source body drive means. The light source body may contain a first light source group and a second light source group. The first light source group is controlled by the first light source body drive means to output intermittent light. The second light source group is controlled by the second light source body drive means to output continuous light.

The first light source body drive means may be arranged to switch on/off, for example, voltage or current in synchronism with the video signal to control the first light source group. The second light source body drive means may supply stable voltage or current or vary voltage or current out of synchronism with the video signal to control the second light source group. Furthermore, the light source body may be arranged from a first light source body and a second light source body which emit light by different principles from each other.

The video display device of the present invention may be arranged to include a plurality of control signal generating means generating electric signals causing a light source to emit light; and light source control means combining the electric signals, which are outputs from the plurality of control signal generating means, to supply to the light source.

According to the arrangement, to obtain an intermittent light emission component, it is sufficient if one of the plurality of control signal generating means generates a signal which repeatedly alternates between ON and OFF in synchronism with a video signal. To obtain a continuous light emission component, it is sufficient if one of the plurality of control signal generating means generates a signal which is always ON with a constant amplitude or a signal which varies out of synchronism with the video signal.

The video display device of the present invention may be arranged to further include shutter means controlling illumination light from a light source body. The shutter means controls the light intensity of the illumination light from the light source in synchronism with the video signal.

The shutter means should be arranged to operate on all or almost all illumination light. In such a case, it is sufficient if the shutter means controls light intensity by repeatedly switching between 100% transmission of light and partial transmission where light is transmitted at a rate not 0%.

The shutter means may be arranged to operate on part of illumination light. In such a case, the shutter means controls light intensity by repeatedly switching between 100% transmission of light and 100% block of light.

The video display device in accordance with the present invention may be arranged to include: video display means with a plurality of pixels; and light emitting means illuminating the video display means, wherein: the light emitting means illuminates the video display means, and the pixels modulate the illumination light in accordance with a video signal to display an image in accordance with the video signal; the light emitting means illuminates the video display means with light including an intermittent light emission component and a continuous light emission component.

According to the arrangement, the display panel is illuminated by mixing light emission of different properties, i.e., a continuous light emission component and a intermittent light emission component. Therefore, disruptive flickering is reduced while displaying clear outlines by restricting trailing of a moving object.

The video display device in accordance with the present invention, in the video display device, may be such that the light emission phase of the intermittent light emission component is determined by update time to update the modulation rates by the pixels to different values and temporal response properties of changes of the modulation rates of the pixels.

According to the arrangement, the phase of the intermittent light emission component is controlled in accordance with the properties of the pixels. Accordingly, the trailing and disruptive flickering of a moving object can be more effectively restricted in accordance with the properties of the pixels.

The video display device in accordance with the present invention, in the video display device, may be such that: the plurality of pixels are arranged in a matrix; the video display means has a plurality of row electrodes arranged in rows; a scanning signal which scans the video display means in a vertical direction is applied to the row electrodes; the pixels have their modulation rates updated to different values at timings given by the scanning signal; and

$$Ta = (1/2 + K) \times T0 \text{ for } 0 \leq K \leq 0.5$$

where Ta is the period from a timing of the scanning signal to the midpoint of a light emission period of the intermittent light emission component, T0 is a cycle duration from a timing of the scanning signal to a timing of a next scanning signal, and K is a constant determined by temporal response properties of changes of the modulation rates of the pixels.

According to the arrangement, the light emission phase of the intermittent light emission component can be determined by the update time and the temporal response properties.

The video display device in accordance with the present invention, in the video display device, may be such that the light emitting means is divided into blocks; each part of the light emitting means divided into the blocks illuminates pixels in a partial area of the video display means. In addition, the light emission phase of the intermittent light emission component may differ from one part of the light emitting means divided into blocks to the other.

When pixel transmittances are updated at different timings from one place on the video display means to the other, according to the arrangement, the effects of different phases of the update timings are eliminated by shifting the light emission phase of the intermittent light emission component, so as to adjust the light emission phase to a more suitable value.

The video display device in accordance with the present invention, in the video display device in which the light emitting means is divided into blocks, may be such that: the plurality of pixels are arranged in a matrix; the video display means has a plurality of row electrodes arranged in rows; a scanning signal which scans the video display means in a vertical direction is applied to the row electrodes; the pixels have their modulation rates updated to different values at timings given by the scanning signal; and in each part of the light emitting means divided into blocks,

$$Ta = (1/2 + K) \times T0 \text{ for } \leq K \leq 0.5$$

where Ta is the period from a timing of the scanning signal to the midpoint of a light emission period of the intermittent light emission component, T0 is a cycle duration from a timing of the scanning signal to a timing of a next scanning signal, and K is a constant determined by temporal response properties of changes of the modulation rates of the pixels.

According to the arrangement, the light emission phase of the intermittent light emission component can be determined by the update time and the temporal response properties. The light emission phase can be adjusted to a more suitable value.

In the video display device in accordance with the present invention, the light emitting means may include a first light source emitting light providing the intermittent light emission component and a second light source emitting light providing the continuous light emission component. At least either one of the first light source and the second light source may be a semiconductor light emitting element. The semiconductor light emitting element may be a light emitting diode. The second light source may be a fluorescent lamp using discharge. The video display means may be a liquid crystal panel using liquid crystal material.

Alternatively, in accordance with the present invention, the video display device may be arranged to include a plurality of pixels and emit light in accordance with a video signal in each pixel to display an image, wherein to address the problems, the pixels display an image with light containing the intermittent light emission component and the continuous light emission component.

According to the arrangement, the display panel is illuminated by mixing light emission of different properties, i.e., a continuous light emission component and an intermittent light emission component. Therefore, disruptive flickering is reduced while displaying clear outlines by restricting trailing of a moving object.

The video display device in accordance with the present invention, in the video display device, may be such that the light emission phase of the intermittent light emission component is determined by update time to update the light emission luminances of the pixels to different values and temporal response properties of changes of the light emission luminances of the pixels.

According to the arrangement, the phase of the intermittent light emission component is controlled in accordance with the properties of the pixels. Accordingly, the trailing and disruptive flickering of a moving object can be more effectively restricted in accordance with the properties of the pixels.

The video display device in accordance with the present invention, in the video display device, may be such that: the plurality of pixels are arranged in a matrix; a scanning signal which scans the plurality of pixels in a vertical direction is applied to pixels in each row; the pixels have their light emission luminances updated to different values at timings given by the scanning signal; and

$$Ta = (1/2 + K) \times T0 \text{ for } 0 \leq K \leq 0.5$$

where Ta is the period from a timing of the scanning signal to the midpoint of a light emission period of the intermittent light emission component, T0 is a cycle duration from a timing of the scanning signal to a timing of a next scanning signal, and K is a constant determined by temporal response properties of changes of the light emission luminances of the pixels.

According to the arrangement, the light emission phase of the intermittent light emission component can be determined by the update time and the temporal response properties.

The video display device in accordance with the present invention, in the video display device, may be such that the plurality of pixels are divided into blocks each containing one or more rows; and the light emission phase of the intermittent light emission component may differ from one block to the other.

When pixel transmittances are updated at different timings from one place to on the screen of the video display means to the other, according to the arrangement, the effects of different phases of the update timings are eliminated by shifting the light emission phase of the intermittent light emission component, so as to adjust the light emission phase to a more suitable value.

The video display device in accordance with the present invention, in the video display device in which the light emitting means is divided into blocks, may be such that: the plurality of pixels are arranged in a matrix; a scanning signal which scans the plurality of pixels in a vertical direction is applied to pixels in each row; the pixels have their light emission luminances updated at timings given by the scanning signal to different values; in each block,

$$Ta = (1/2 + K) \times T0 \text{ for } 0 \leq K \leq 0.5$$

where Ta is the period from a timing of the scanning signal to the midpoint of a light emission period of the intermittent light emission component, T0 is a cycle duration from a timing of the scanning signal to a timing of a next scanning signal, and K is a constant determined by temporal response properties of changes of the light emission luminances of the pixels.

According to the arrangement, the light emission phase of the intermittent light emission component can be determined by the update time and the temporal response properties. The light emission phase can be adjusted to a more suitable value.

The embodiments and examples described in *Best Mode for Carrying Out the Invention* are for illustrative purposes only and by no means limit the scope of the present invention. Variations are not to be regarded as a departure from the spirit and scope of the invention, and all such modifications as would be obvious to one skilled in the art are intended to be included within the scope of the claims below.

INDUSTRIAL APPLICABILITY

According to the present invention, motion trailing and flickering can be simultaneously reduced. These effects are distinct especially with high luminance/large screen video display devices. Therefore, the present invention is suited, especially, to make large screen, high luminance LCDs.

**Claims**

1. A video display device modulating luminances of pixels in accordance with a video signal to display video, said device emitting a first light emission component and a second light emission component, the first light emission component accounting for D% of a vertical cycle of the video signal in terms of duration and S% of a light emission intensity of a pixel over the vertical cycle, the second light emission component accounting for (100-D)% of the vertical cycle in terms of duration and (100-S)% of the light emission intensity,
   wherein D and S meet either a set of conditions A:

$$62 \leq S < 100,\ 0 < D < 100, \text{ and } D < S,$$

   or
   a set of conditions B:

$$48 < S < 62, \text{ and } D \leq (S-48)/0.23.$$

2. The video display device of claim 1, comprising:

   video display means setting transmittances of pixels in accordance with the video signal; and
   a light source body illuminating the video display means,
   wherein the light source body controls light emission intensities of the first light emission component and the second light emission component.

3. The video display device of claim 2, wherein the light source body is a semiconductor light emitting element.

4. The video display device of claim 3, wherein the semiconductor light emitting element is a light emitting diode.

5. The video display device of claim 2, wherein the light source body is a cold cathode fluorescent lamp.

6. The video display device of claim 1, comprising video display means setting luminances of pixels in accordance with the video signal,
wherein the video display means controls light emission intensities of the first light emission component and the second light emission component.

7. The video display device of claim 6, wherein the video display means is an organic EL panel.

8. The video display device of claim 6, wherein the video display means is a liquid crystal panel.

9. The video display device of any one of claims 6 through 8, wherein:

   the video display means includes a memory for each pixel to hold information of the video signal; and
   the memory is accessed more than once in each vertical cycle of the video signal to enable the pixel to achieve a light emission waveform representing light emission constituted by the first light emission component and the second light emission component.

10. The video display device of claim 9, wherein:

   the video display means includes a light emitting element for each pixel;
   the light emitting element emits light in an amount controlled in accordance with the information held in the memory.

11. The video display device of any one of claims 6 through 8, wherein:

   the video display means is fed with video data reordered in advance in terms of time; and
   each pixel is selected three times in each vertical cycle of the video signal to enable the pixel to achieve a light emission waveform representing light emission constituted by the first light emission component and the second light emission component.

12. The video display device of claim 1, comprising:

   video display means setting transmittances of pixels in accordance with the video signal; and
   a light source body illuminating the video display means,
   said device further comprising light control means, disposed in an optical path provided between the video display means and the light source body, controlling an illumination light intensity of the light source body to control light emission intensities of the first light emission component and the second light emission component.

13. The video display device of claim 12, wherein the light control means entirely or partially transmits the illumination light of the light source body.

14. The video display device of claim 12, wherein the light control means entirely transmits or blocks the illumination light of the light source body.

15. The video display device of any one of claims 12 through 14, wherein the light source body is a semiconductor light emitting element.

16. The video display device of claim 15, wherein the semiconductor light emitting element is a light emitting diode.

17. The video display device of any one of claims 12 through 14, wherein the light source body is a cold cathode fluorescent lamp.

18. The video display device of claim 1, comprising:

   video display means setting transmittance in accordance with the video signal; and

a light source body illuminating the video display means,
wherein:
the light source body illuminates the video display means with illumination light obtained by mixing intermittent light represented by a pulsed light emission intensity waveform which is in synchronism with the video signal and continuous light having a constant light emission intensity; and
light emission intensities of the pixels for the first light emission component and the second light emission component are caused by the intermittent light and the continuous light.

**19.** The video display device of claim 18, wherein the intermittent light and the continuous light have a light emission intensity set to a level perceivable by the human eye.

**20.** The video display device of any one of claims 1 through 19, comprising scene change detect means detecting an amount of scene change in the video from the video signal,
wherein a value of S or D is changed in accordance with the amount of scene change.

**21.** The video display device of any one of claims 1 through 19, comprising scene change detect means detecting an average luminance level in the video from the video signal,
wherein a value of S or D is changed in accordance with the average luminance level.

**22.** The video display device of claim 1, comprising:

video display means setting transmittances of pixels in accordance with the video signal; and
a light source body illuminating the video display means,
wherein:

the light source body is disposed separated from the video display means; and
the first light emission component and the second light emission component are mixed in a space formed between the light source body and the video display means.

**23.** The video display device of claim 1, comprising:

video display means setting transmittances of pixels in accordance with the video signal;
a light source body outputting the first light emission component and the second light emission component to illuminate the video display means; and
light mixing means mixing the first light emission component and the second light emission component.

**24.** The video display device of claim 23, wherein
the light mixing means is a light guide plate;
the light source body is disposed along a single end face of the light guide plate; and
the light guide plate guides the light obtained by mixing the first light emission component and the second light emission component from the end face along which the light source body is disposed to another end face facing the video display means for output to the video display means.

**25.** The video display device of claim 18, further comprising:

video display means setting transmittances of pixels in accordance with the video signal; and
a light source body illuminating the video display means,
wherein:

the light source body includes a first light source body emitting the intermittent light and a second light source body emitting the continuous light; and
there are provided first light source body drive means controlling ON/OFF of the first light source body and second light source body drive means controlling ON/OFF of the second light source body.

**26.** The video display device of claim 25, wherein the first light source body drive means switches on/off at least one of electric power, current, and voltage supplied to the first light source body in synchronism with the video signal.

**27.** The video display device of either one of claims 25 and 26, wherein the second light source body drive means supplies at least one of electric power, current, and voltage to the second light source body at a constant level.

**28.** The video display device of any one of claims 25 through 27, wherein the second light source body drive means controls at least one of electric power, current, and voltage supplied to the second light source body at a frequency three times a vertical frequency of the video signal or at a higher frequency.

**29.** The video display device of any one of claims 25 through 27, wherein the second light source body drive means controls at least one of electric power, current, and voltage supplied to the second light source body at the frequency of 150 Hz or higher.

**30.** The video display device of any one of claims 25 through 29, wherein the first light source body and the second light source body are semiconductor light emitting elements.

**31.** The video display device of claim 30, wherein the semiconductor light emitting element is a light emitting diode.

**32.** The video display device of any one of claims 25 through 29, wherein the second light source body emits the second light emission component by different light emission principles from the first light source body.

**33.** The video display device of claim 32, wherein at least either one of the first light source body and the second light source body is a semiconductor light emitting element.

**34.** The video display device of claim 33, wherein the semiconductor light emitting element is a light emitting diode.

**35.** The video display device of claim 32, wherein the second light source body is a cold cathode fluorescent lamp.

**36.** The video display device of claim 1, comprising:

intermittent light signal generating means generating an intermittent light signal alternating between ON and OFF in synchronism with the video signal; and
continuous light signal generating means generating a continuous light signal which is always ON,
wherein the first light emission component and the second light emission component are emitted in accordance with an illumination light signal obtained by combining the intermittent light signal and the continuous light signal.

**37.** The video display device of claim 36, wherein the continuous light signal has a frequency three times a vertical frequency of the video signal or at a higher frequency.

**38.** The video display device of claim 36, wherein the continuous light signal has a frequency of 150 Hz or higher.

**39.** The video display device of any one of claims 36 through 38, wherein the first light emission component and the second light emission component are emitted by a semiconductor light emitting element.

**40.** The video display device of claim 39, wherein the semiconductor light emitting element is a light emitting diode.

**41.** The video display device of claim 1, wherein the second light emission component is formed by a collection of pulse components having a higher frequency than a vertical frequency of the video signal.

**42.** The video display device of claim 41, wherein the pulse components have a frequency three times a vertical frequency of the video signal or a higher frequency.

**43.** The video display device of claim 41, wherein the pulse components have a frequency of 150 Hz or higher.

**44.** A video display device modulating luminances of pixels in accordance with a video signal to display video, said device comprising:

video display means setting transmittances of pixels in accordance with the video signal; and
a first light source body emitting intermittent light represented by a pulsed light emission intensity waveform which is in synchronism with the video signal and a second light source body emitting continuous light represented by constant light emission intensity,

wherein the video display means is illuminated by illumination light obtained by mixing the intermittent light and the continuous light.

**45.** The video display device of claim 44, further comprising:

first light source body drive means controlling ON/OFF of the first light source body; and
second light source body drive means controlling ON/OFF of the second light source body.

**46.** The video display device of claim 45, wherein the first light source body drive means switches on/off at least one of electric power, current, and voltage supplied to the first light source body in synchronism with the video signal.

**47.** The video display device of either one of claims 45 and 46,
wherein the second light source body drive means supplies at least one of electric power, current, and voltage to the second light source body at a constant level.

**48.** The video display device of any one of claims 45 through 47, wherein the second light source body drive means controls at least one of electric power, current, and voltage supplied to the second light source body at a frequency three times a vertical frequency of the video signal or at a higher frequency.

**49.** The video display device of any one of claims 45 through 47, wherein the second light source body drive means controls at least one of electric power, current, and voltage supplied to the second light source body at a frequency or 150 Hz or higher.

**50.** The video display device of any one of claims 44 through 49, wherein the first light source body and the second light source body are semiconductor light emitting elements.

**51.** The video display device of claim 50, wherein the semiconductor light emitting element is a light emitting diode.

**52.** The video display device of any one of claims 44 through 49, wherein the second light source body emits the continuous light by different light emission principles from the first light source body.

**53.** The video display device of claim 52, wherein at least either one of the first light source body and the second light source body is a semiconductor light emitting element.

**54.** The video display device of claim 53, wherein the semiconductor light emitting element is a light emitting diode.

**55.** The video display device of claim 52, wherein the second light source body is a cold cathode fluorescent lamp.

**56.** A video display device modulating luminances of pixels in accordance with a video signal to display video,
said device emitting a first light emission component and a second light emission component, the first light emission component accounting for D% of a vertical cycle of the video signal in terms of duration and S% of a light emission intensity of a pixel over the vertical cycle, the second light emission component accounting for (100-D)% of the vertical cycle in terms of duration and (100-S)% of the light emission intensity,
said device comprising scene change detect means detecting an amount of scene change in the video from the video signal,
wherein a value of S or D is changed in accordance with the amount of scene change.

**57.** The video display device of claim 56, wherein the scene change detect means performs frame period delay on the video signal using memory, to calculate the amount of scene change from a differential from the delayed signal.

**58.** The video display device of claim 56, wherein the scene change detect means calculates an average luminance level of the video and calculates the amount of scene change from an interframe differential of the average luminance level.

**59.** A video display device modulating luminances of pixels in accordance with a video signal to display video,
said device emitting a first light emission component and a second light emission component, the first light emission component accounting for D% of a vertical cycle of the video signal in terms of duration and S% of a light emission intensity of a pixel over the vertical cycle, the second light emission component accounting for (100-D)% of the vertical cycle in terms of duration and (100-S)% of the light emission intensity,
said device comprising average luminance detect means detecting an average luminance level of the video from the video signal,
wherein a value of S or D is changed in accordance with the average luminance level.

**60.** A video display device modulating luminances of pixels in accordance with a video signal to display video,
said device emitting a first light emission component and a second light emission component, the first light emission component accounting for D% of a vertical cycle of the video signal in terms of duration and S% of a light emission intensity of a pixel over the vertical cycle, the second light emission component accounting for (100-D)% of the vertical cycle in terms of duration and (100-S)% of the light emission intensity,
said device comprising histogram detect means detecting a histogram of the video from the video signal,
wherein a value of S or D is changed in accordance with the histogram.

**61.** A video display device modulating luminances of pixels in accordance with a video signal to display video,
said device emitting a first light emission component and a second light emission component, the first light emission component accounting for D% of a vertical cycle of the video signal in terms of duration and S% of a light emission intensity of a pixel over the vertical cycle, the second light emission component accounting for (100-D)% of the vertical cycle in terms of duration and (100-S)% of the light emission intensity,
wherein

$$D/2 \leq P \leq (100-D/2), \text{ and } 0 < D < 100,$$

where P is a ratio in percentages of a duration to the vertical cycle, the duration beginning at a start of the vertical cycle and ending at a midpoint of a light emission period associated with the first light emission component.

**62.** The video display device of claim 61, wherein

$$P = 50 + K \text{ for } \leq K \leq (50-D/2),$$

where K is a constant dictated by a response time constant of the video display means.

**63.** The video display device of either one of claims 61 and 62,
wherein D and S meet either a set of conditions A:

$$62 \leq S < 100, 0 < D < 100,$$

and D < S, or
a set of conditions B:

$$48 < S < 62 \text{ and } D \leq (S-48)/0.23.$$

**64.** The video display device of any one of claims 61 through 63, comprising:

video display means setting transmittances of pixels in accordance with the video signal; and
a light source body illuminating the video display means,
wherein the light source body controls P.

**65.** The video display device of claim 64, wherein the light source body is a semiconductor light emitting element.

**66.** The video display device of claim 65, wherein the semiconductor light emitting element is a light emitting diode.

**67.** The video display device of claim 64, wherein the light source body is a cold cathode fluorescent lamp.

**68.** The video display device of any one of claims 64 through 67, wherein the light source body changes P in value from one area to another, the video display screen being divided into the areas.

**69.** The video display device of any one of claims 61 through 63, comprising video display means setting luminances of pixels in accordance with the video signal,
wherein the video display means controls P.

**70.** The video display device of claim 69, wherein the video display means is an organic EL panel.

**71.** The video display device of claim 69, wherein the video display means is a liquid crystal panel.

**72.** The video display device of any one of claims 69 through 71, wherein:

the video display means includes a memory for each pixel to hold the video signal; and
the memory is accessed more than once in each vertical cycle of the video signal to enable the pixel to achieve a light emission waveform representing light emission constituted by the first light emission component and the second light emission component.

**73.** The video display device of claim 72, wherein:

the video display means includes a light emitting element for each pixel;
the light emitting element emits light in an amount controlled in accordance with the information held in the memory.

**74.** The video display device of any one of claims 69 through 71, wherein:

the video display means is fed with video data reordered in advance in terms of time; and
each pixel is selected three times in each vertical cycle of the video signal to enable the pixel to achieve a light emission waveform representing light emission constituted by the first light emission component and the second light emission component.

**75.** The video display device of any one of claims 61 through 63, comprising:

video display means setting transmittances of pixels in accordance with the video signal; and
a light source body illuminating the video display means,
said device further comprising light control means, disposed in an optical path provided between the video display means and the light source body, controlling an illumination light intensity of the light source body to control P.

FIG. 1

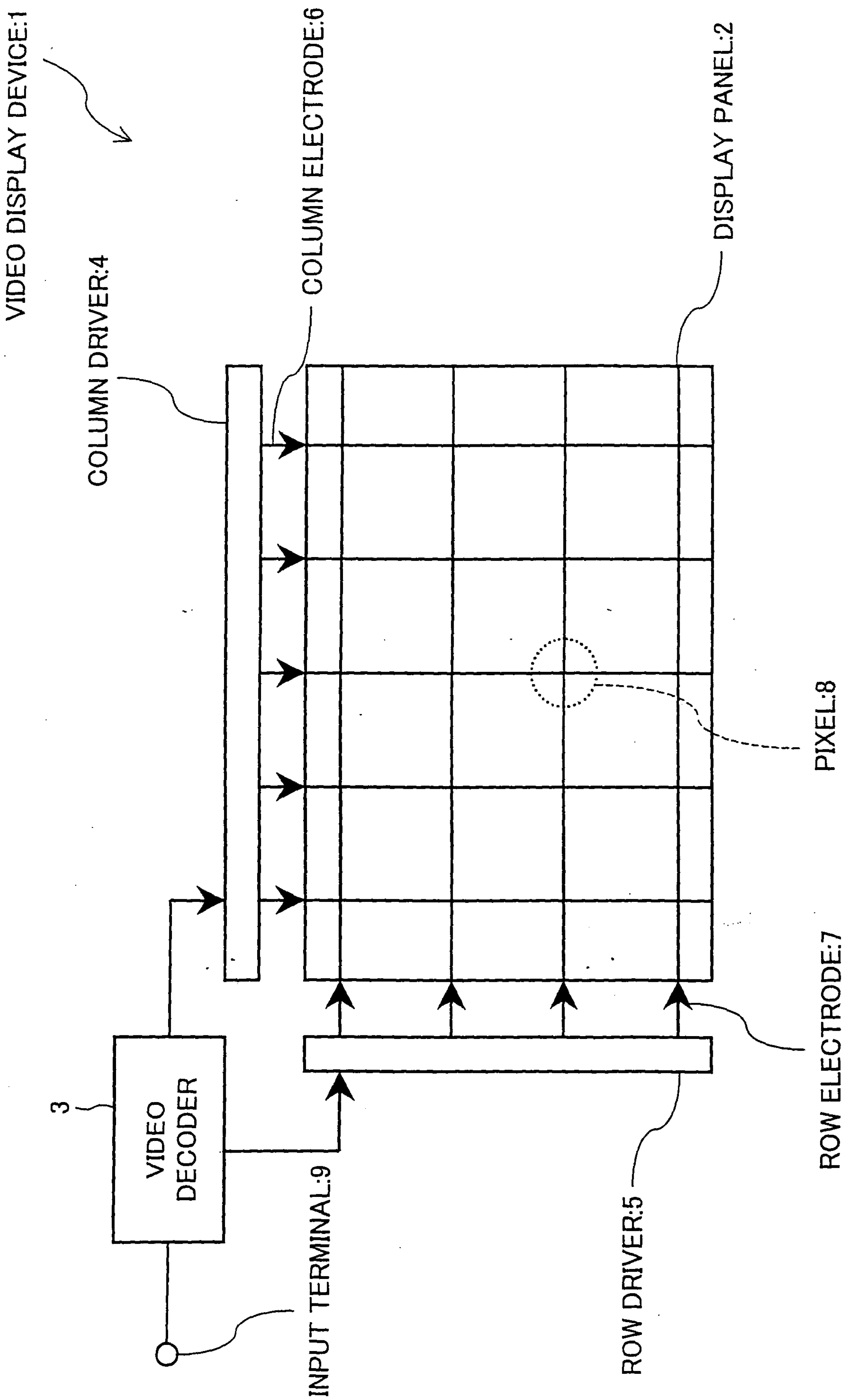
VIDEO DISPLAY DEVICE:1
COLUMN DRIVER:4
COLUMN ELECTRODE:6
DISPLAY PANEL:2
PIXEL:8
3
VIDEO DECODER
INPUT TERMINAL:9
ROW DRIVER:5
ROW ELECTRODE:7

FIG. 2

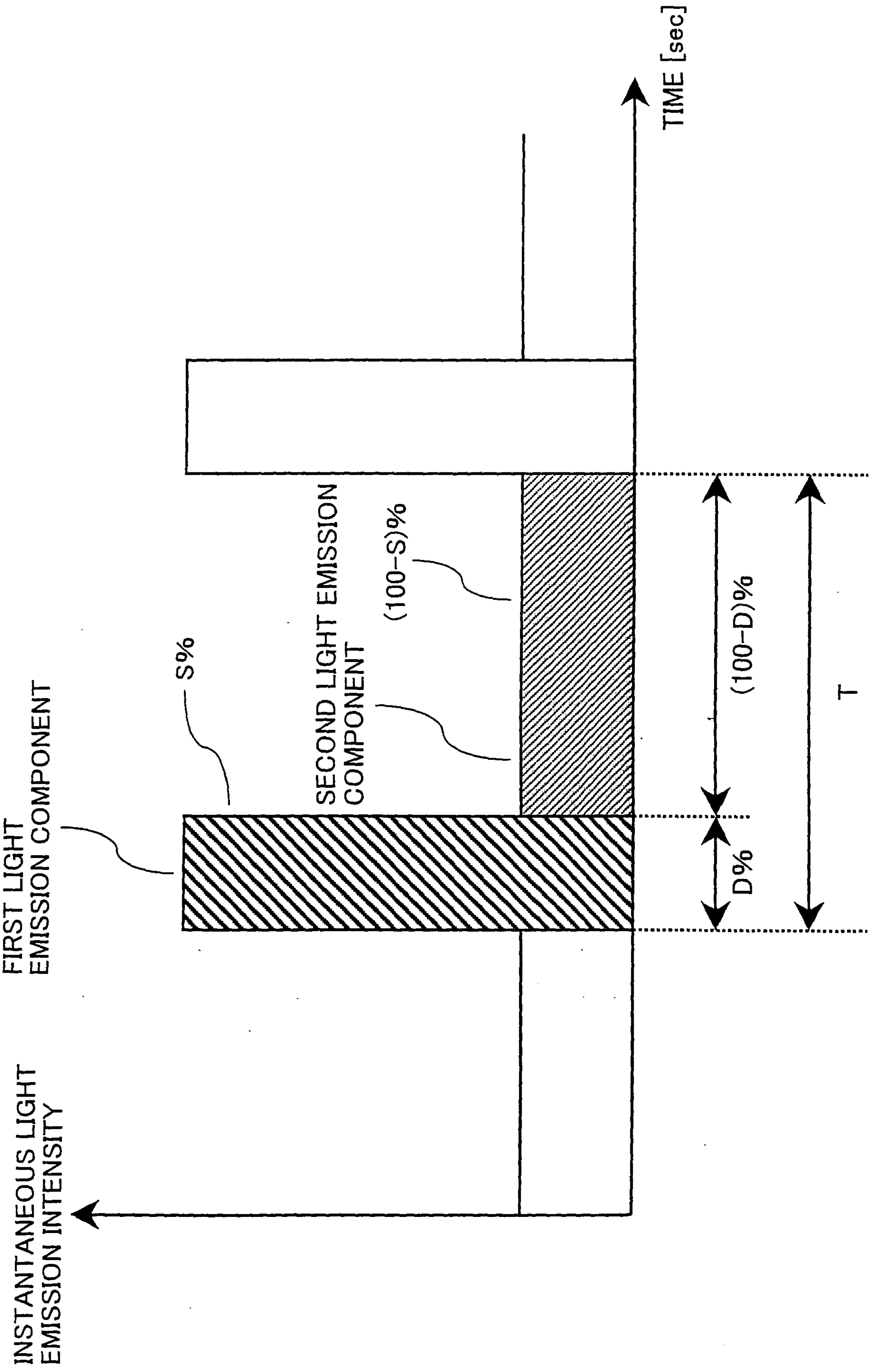
INSTANTANEOUS LIGHT EMISSION INTENSITY
FIRST LIGHT EMISSION COMPONENT
S%
SECOND LIGHT EMISSION COMPONENT
(100-S)%
D%
(100-D)%
T
TIME [sec]

FIG. 3 (a)

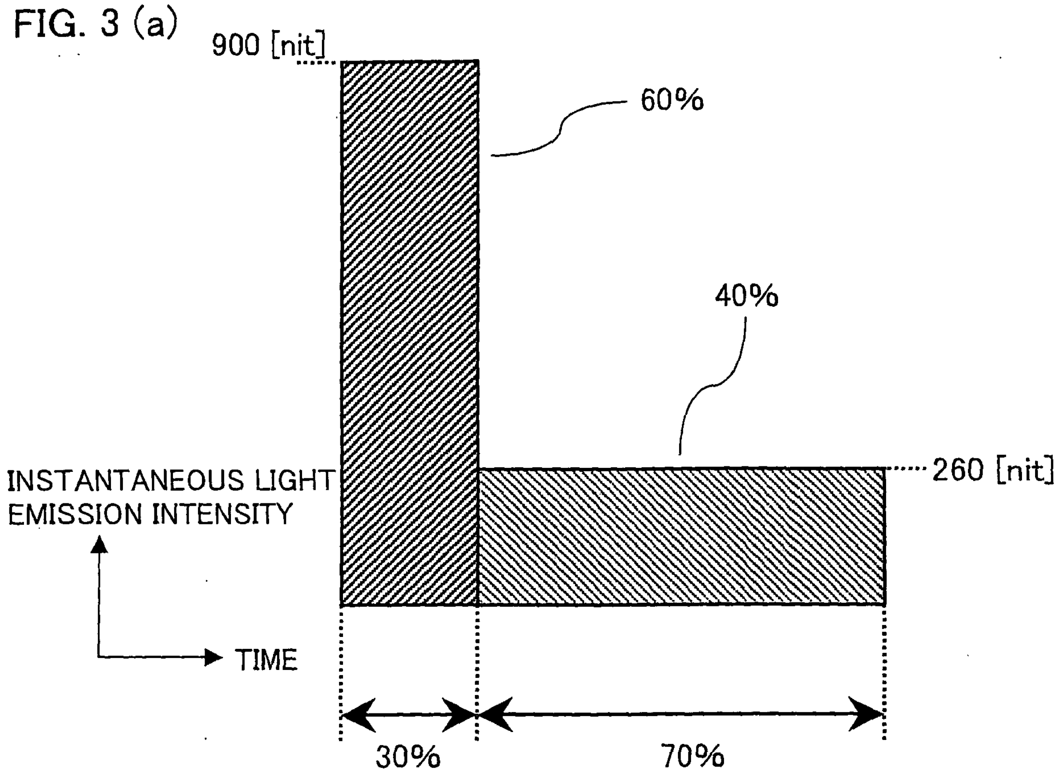
900 [nit]
60%
40%
260 [nit]
INSTANTANEOUS LIGHT
EMISSION INTENSITY
TIME
30%
70%

FIG. 3 (b)

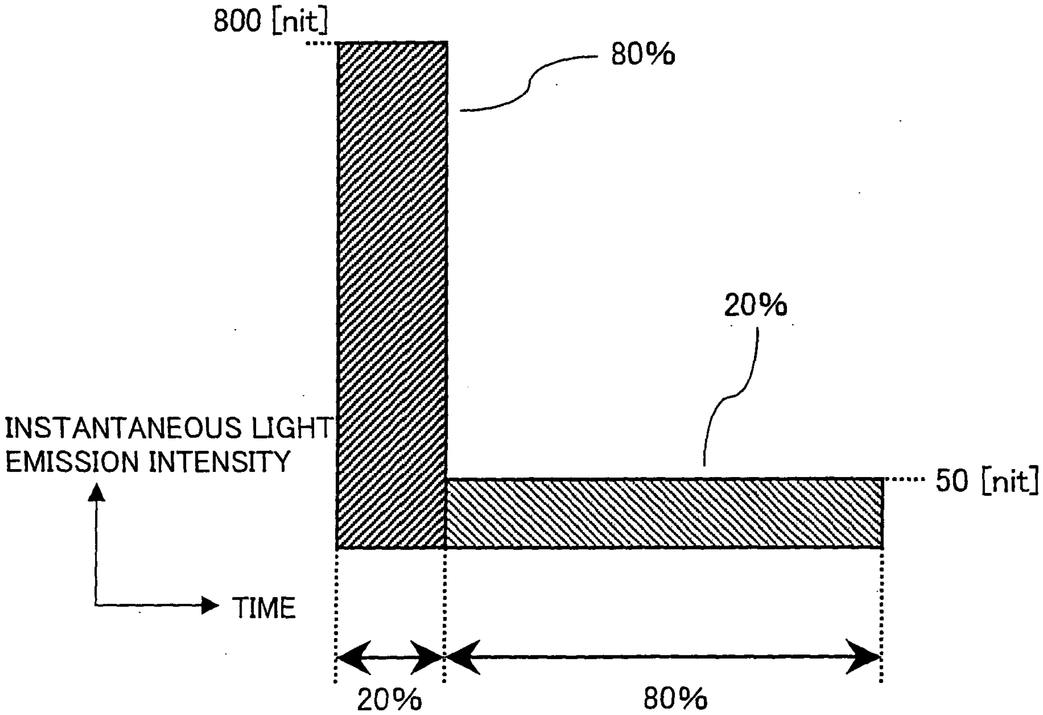
800 [nit]
80%
20%
50 [nit]
INSTANTANEOUS LIGHT
EMISSION INTENSITY
TIME
20%
80%

FIG. 4

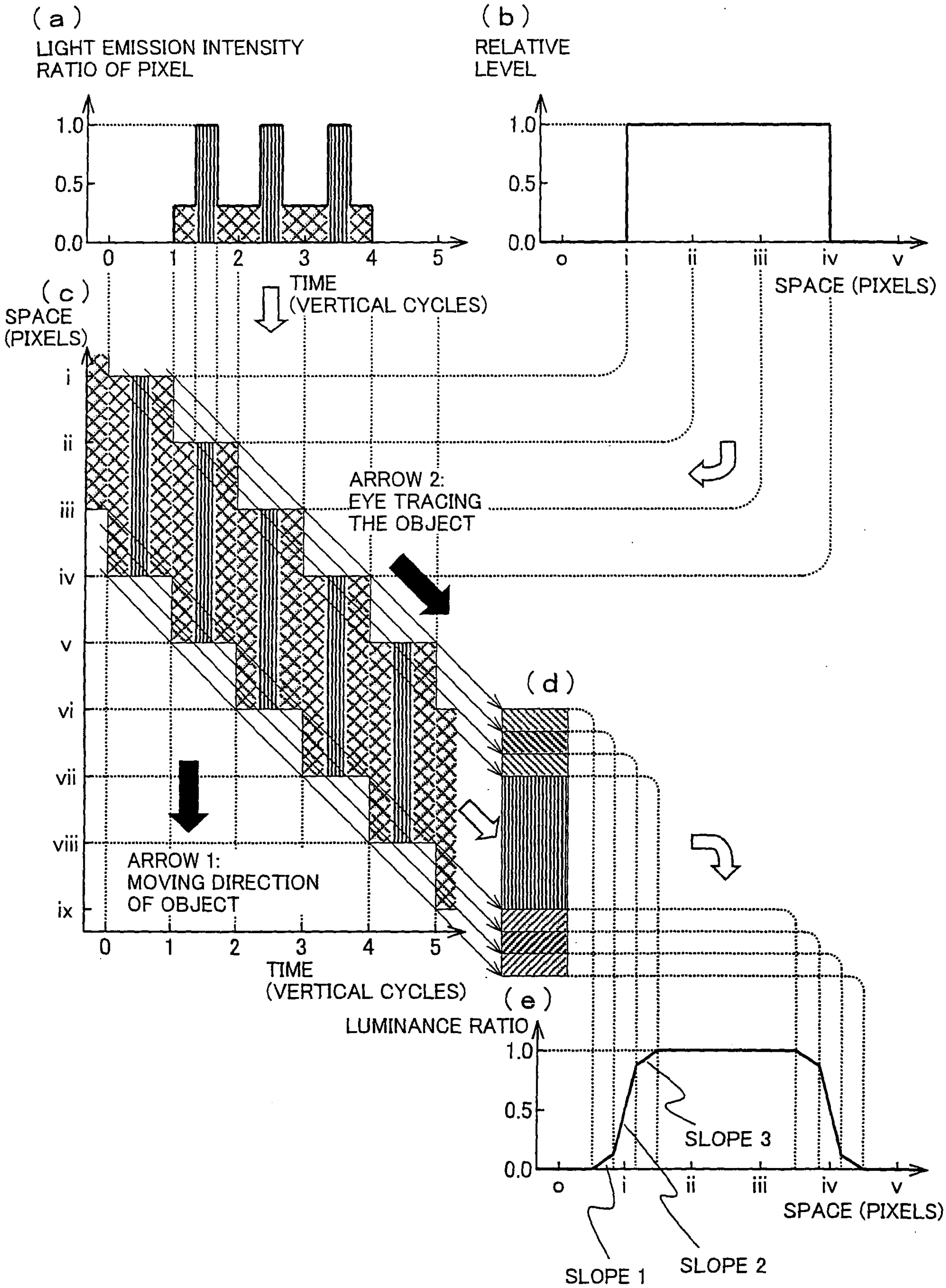
(a)
LIGHT EMISSION INTENSITY RATIO OF PIXEL
1.0
0.5
0.0
0 1 2 3 4 5
TIME (VERTICAL CYCLES)
(b)
RELATIVE LEVEL
1.0
0.5
0.0
o i ii iii iv v
SPACE (PIXELS)
(c)
SPACE (PIXELS)
i ii iii iv v vi vii viii ix
ARROW 2: EYE TRACING THE OBJECT
ARROW 1: MOVING DIRECTION OF OBJECT
0 1 2 3 4 5
TIME (VERTICAL CYCLES)
(d)
(e)
LUMINANCE RATIO
1.0
0.5
0.0
o i ii iii iv v
SPACE (PIXELS)
SLOPE 3
SLOPE 1
SLOPE 2

FIG. 5 (a)

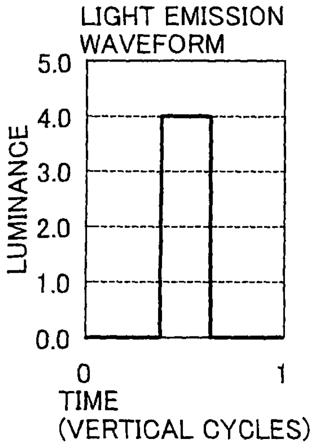


FIG. 5 (b)

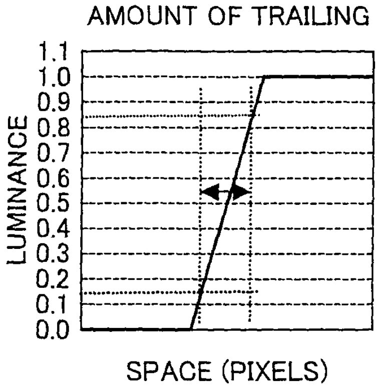


FIG. 5 (c)

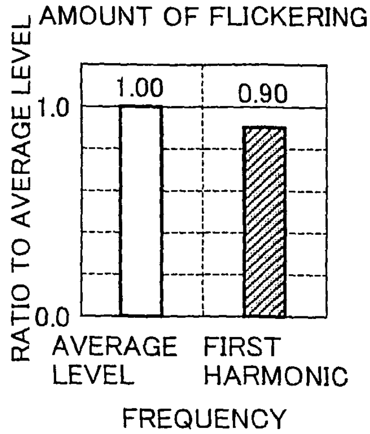


FIG. 5 (d)

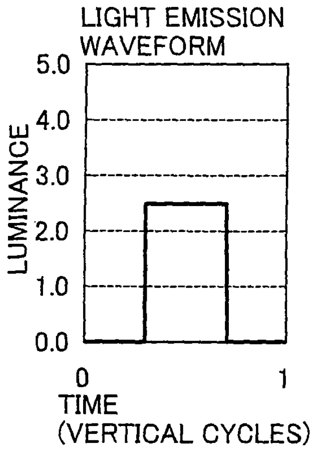


FIG. 5 (e)

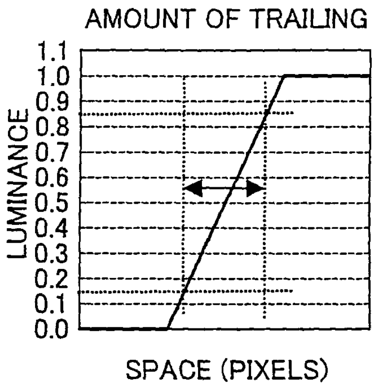


FIG. 5 (f)

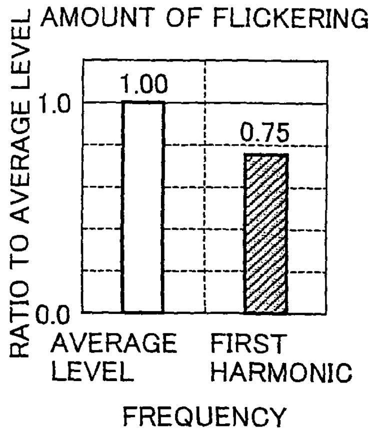


FIG. 5 (g)

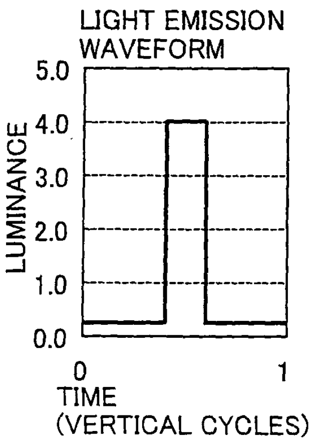


FIG. 5 (h)

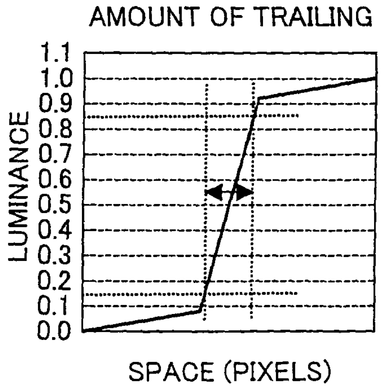


FIG. 5 (i)

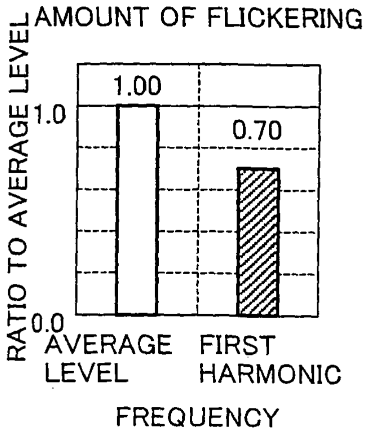

FIG. 6

| | | COL. 1 | COL. 2 | COL. 3 | COL. 4 |
|---|---|---|---|---|---|
| | | DUTY RATIO D (%) OF FIRST LIGHT EMISSION COMPONENT | LIGHT EMISSION INTENSITY RATIO S (%) OF FIRST LIGHT EMISSION | AMOUNT OF TRAILING (PIXELS) | AMOUNT OF FLICKERING (%) |
| ROW 1 | CONVENTIONAL EX. | 25 | 100 | 0. 18 | 90 |
| ROW 2 | CONVENTIONAL EX. | 40 | 100 | 0. 28 | 75 |
| ROW 3 | PRESENT EMBODIMENT. | 20 | 80 | 0. 18 | 70 |

FIG. 7

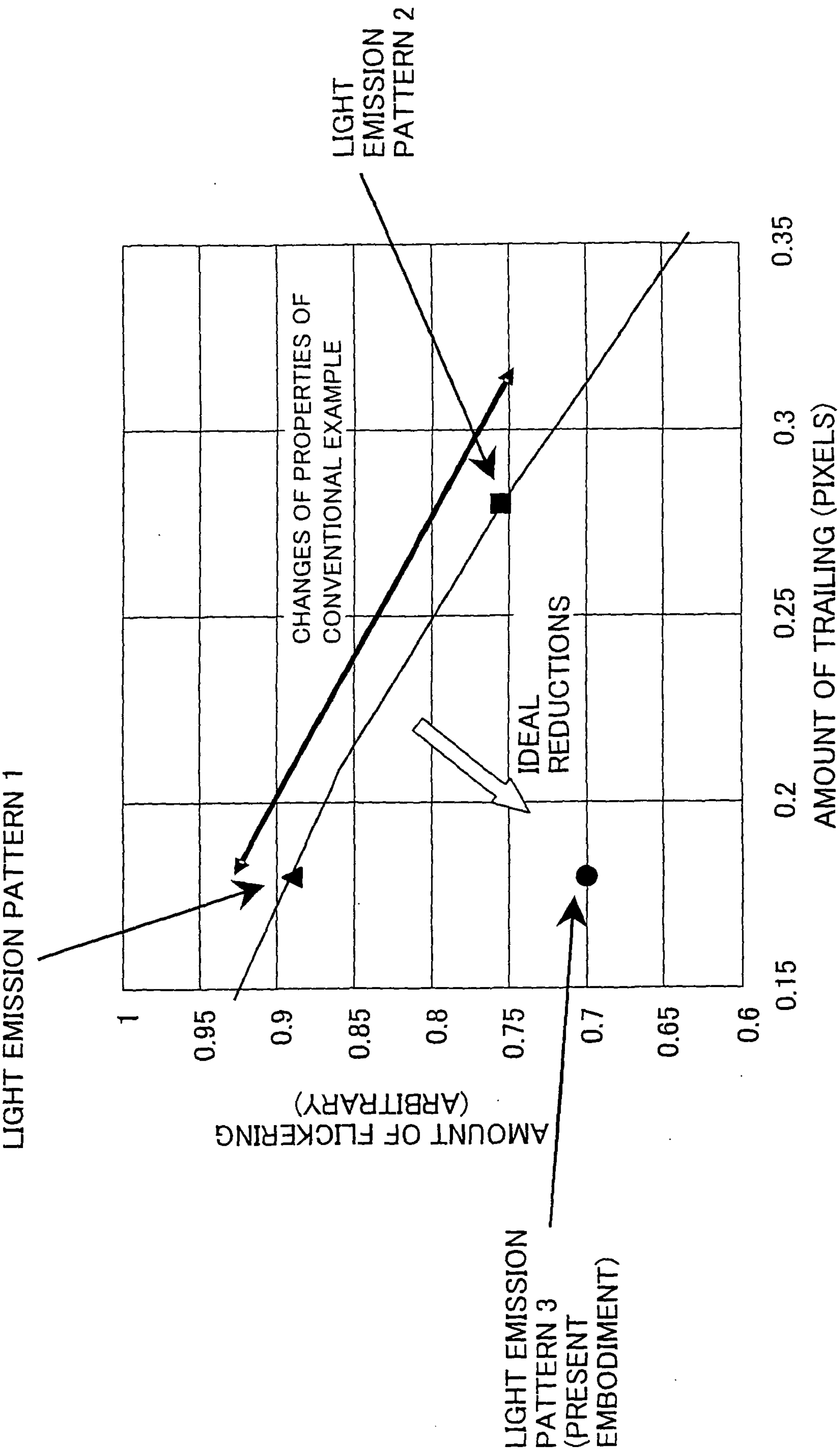
LIGHT EMISSION PATTERN 1
LIGHT EMISSION PATTERN 2
LIGHT EMISSION PATTERN 3 (PRESENT EMBODIMENT)
CHANGES OF PROPERTIES OF CONVENTIONAL EXAMPLE
IDEAL REDUCTIONS
AMOUNT OF FLICKERING (ARBITRARY)
1
0.95
0.9
0.85
0.8
0.75
0.7
0.65
0.6
0.15
0.2
0.25
0.3
0.35
AMOUNT OF TRAILING (PIXELS)

FIG. 8 (a)

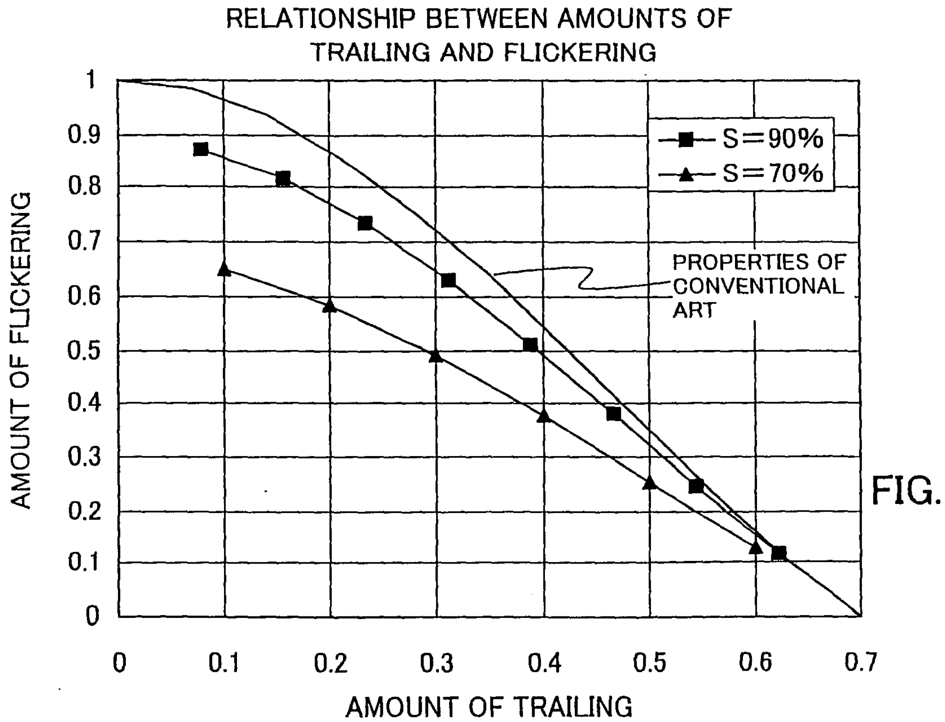


FIG. 8 (b)

| DUTY RATIO D | AMOUNT OF TRAILING | AMOUNT OF FLICKERING |
|---|---|---|
| 10 | 0.08 | 0.87 |
| 20 | 0.16 | 0.82 |
| 30 | 0.23 | 0.74 |
| 40 | 0.31 | 0.63 |
| 50 | 0.39 | 0.51 |
| 60 | 0.47 | 0.38 |
| 70 | 0.54 | 0.25 |
| 80 | 0.62 | 0.12 |

DATA WHEN S IS FIXED AT 90%

FIG. 8 (c)

| DUTY RATIO D | AMOUNT OF TRAILING | AMOUNT OF FLICKERING |
|---|---|---|
| 10 | 0.10 | 0.65 |
| 20 | 0.20 | 0.58 |
| 30 | 0.30 | 0.49 |
| 40 | 0.40 | 0.38 |
| 50 | 0.50 | 0.25 |
| 60 | 0.60 | 0.13 |

DATA WHEN S IS FIXED AT 70%

FIG. 9 (a)

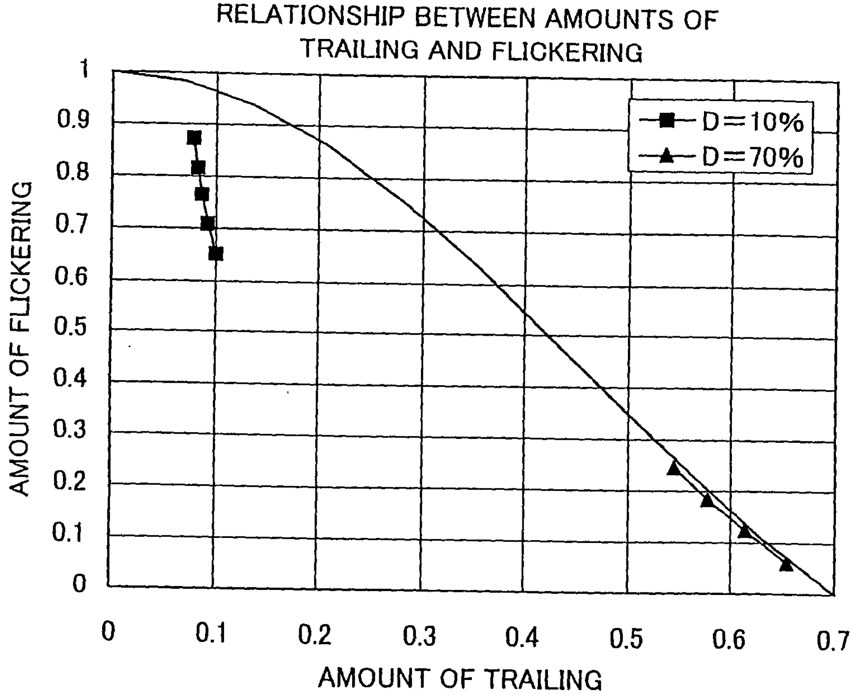


FIG. 9 (b)

| INTENSITY RATIO S OF FIRST LIGHT EMISSION COMPONENT | AMOUNT OF TRAILING | AMOUNT OF FLICKERING |
|---|---|---|
| 90 | 0.08 | 0.87 |
| 85 | 0.08 | 0.82 |
| 80 | 0.09 | 0.76 |
| 75 | 0.09 | 0.71 |
| 70 | 0.10 | 0.65 |

D IS FIXED AT 10%

FIG. 9 (c)

| INTENSITY RATIO S OF FIRST LIGHT EMISSION COMPONENT | AMOUNT OF TRAILING | AMOUNT OF FLICKERING |
|---|---|---|
| 90 | 0.54 | 0.25 |
| 85 | 0.58 | 0.18 |
| 80 | 0.61 | 0.12 |
| 75 | 0.65 | 0.06 |

D IS FIXED AT 70%

FIG. 10 (a)

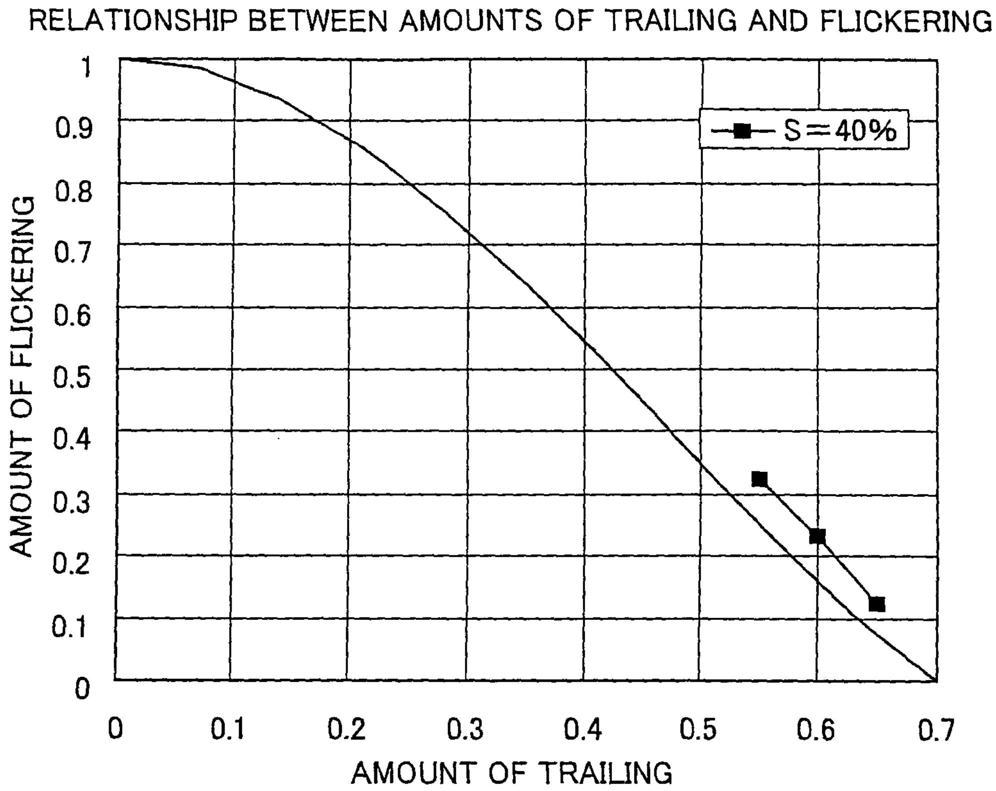


FIG. 10 (b)

| DUTY RATIO D | AMOUNT OF TRAILING | AMOUNT OF FLICKERING |
|---|---|---|
| 10 | 0.55 | 0.323 |
| 20 | 0.6 | 0.2333 |
| 30 | 0.65 | 0.1228 |

S FIXED AT 40%

FIG. 11 (a)

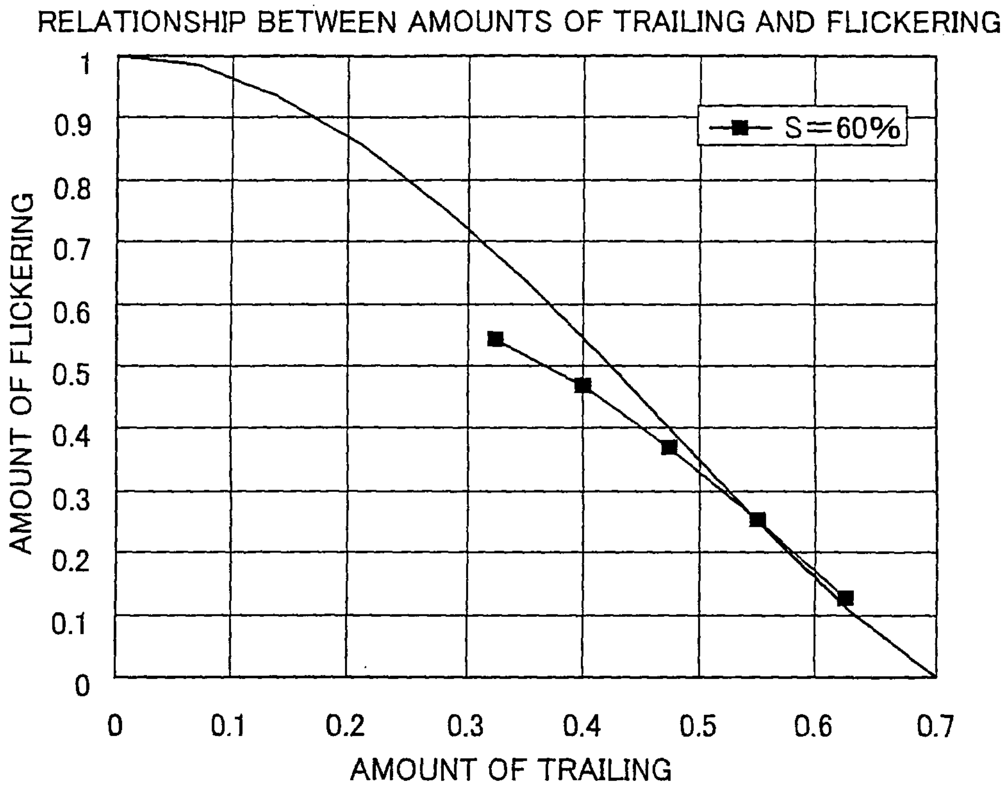


FIG. 11 (b)

| DUTY RATIO D | AMOUNT OF TRAILING | AMOUNT OF FLICKERING |
|---|---|---|
| 10 | 0.325 | 0.5411 |
| 20 | 0.4 | 0.4671 |
| 30 | 0.475 | 0.3681 |
| 40 | 0.55 | 0.2524 |
| 50 | 0.625 | 0.1273 |

S FIXED AT 60%

FIG. 12

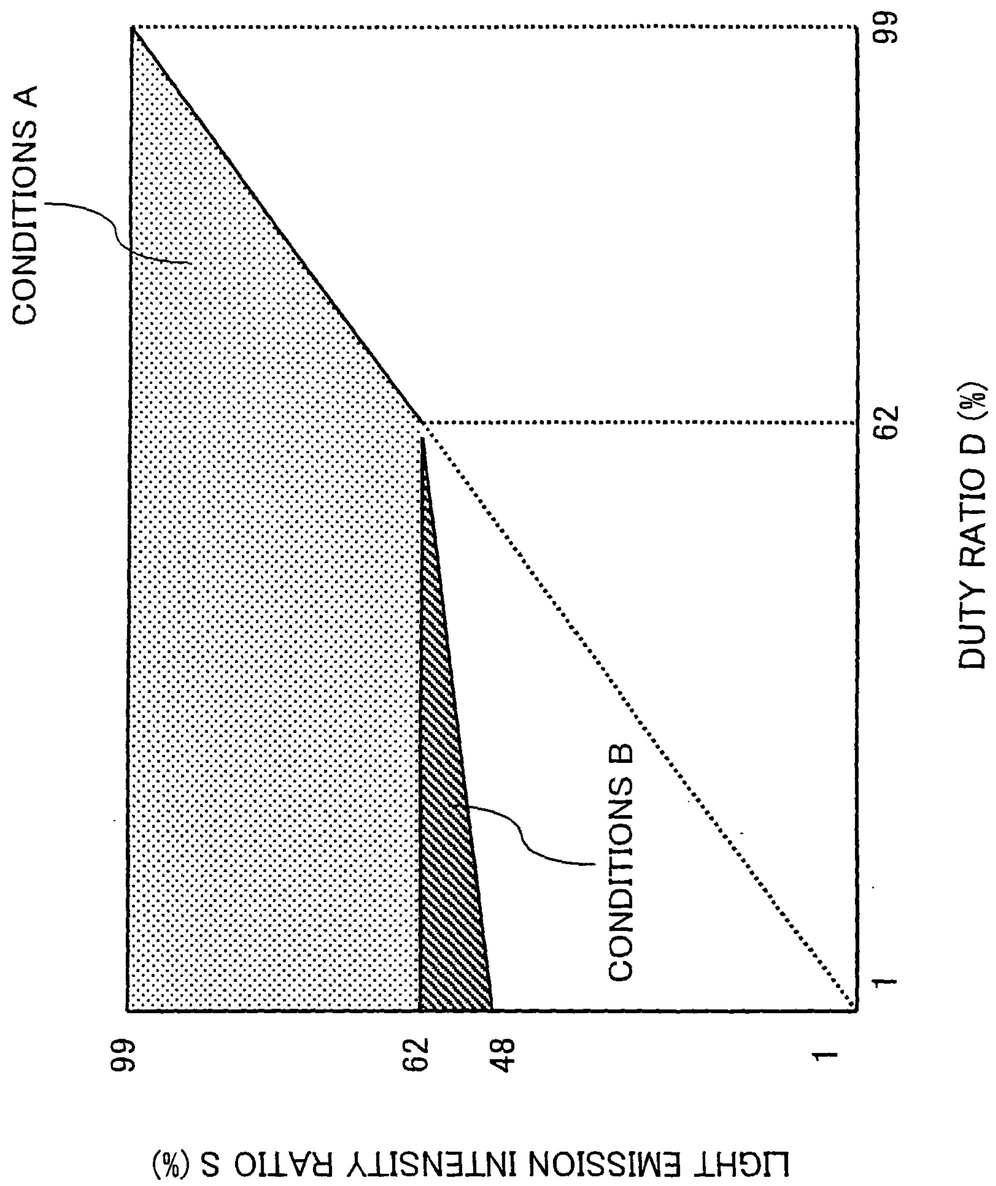
CONDITIONS A
CONDITIONS B
99
62
48
1
1
62
99
DUTY RATIO D (%)
LIGHT EMISSION INTENSITY RATIO S (%)

FIG. 13 (a)

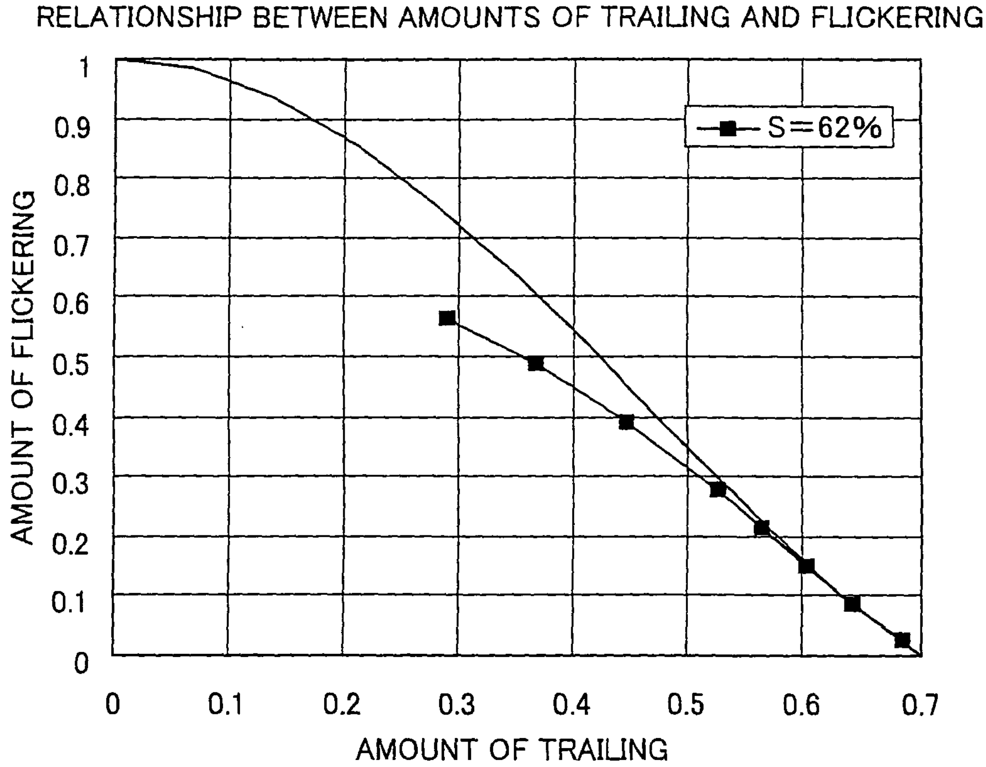


FIG. 13 (b)

| DUTY RATIO D | AMOUNT OF TRAILING | AMOUNT OF FLICKERING |
|---|---|---|
| 10 | 0.29 | 0.56 |
| 20 | 0.37 | 0.49 |
| 30 | 0.45 | 0.39 |
| 40 | 0.53 | 0.28 |
| 45 | 0.57 | 0.22 |
| 50 | 0.60 | 0.15 |
| 55 | 0.64 | 0.09 |
| 60 | 0.68 | 0.03 |

S FIXED AT 62%

FIG. 14 (a)

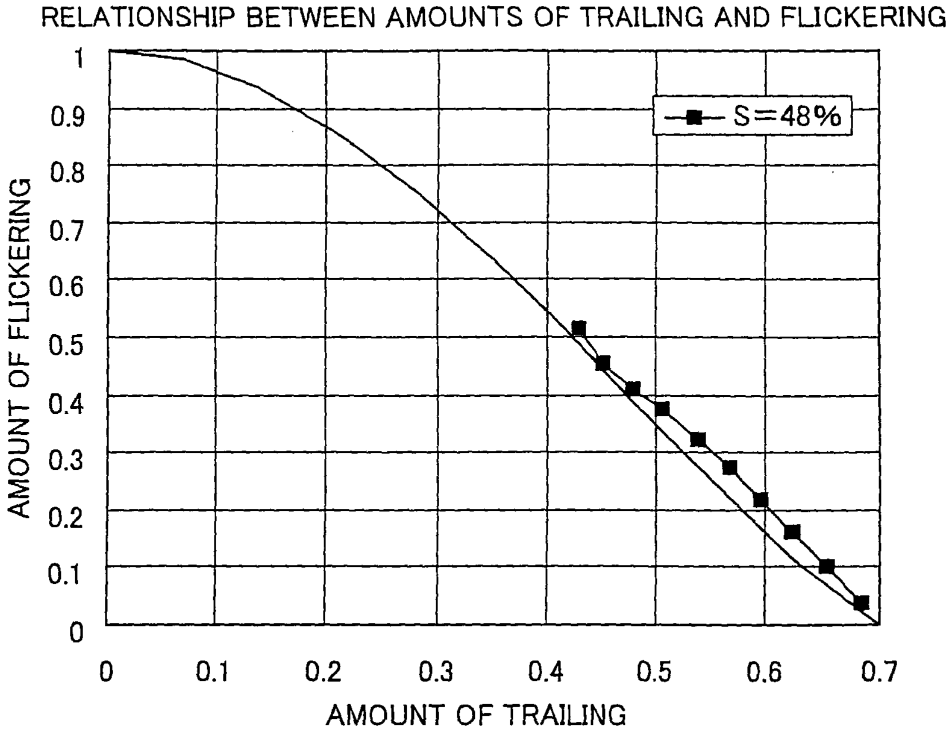


FIG. 14 (b)

| DUTY RATIO D | AMOUNT OF TRAILING | AMOUNT OF FLICKERING |
|---|---|---|
| 1 | 0.43 | 0.51 |
| 5 | 0.45 | 0.45 |
| 10 | 0.48 | 0.41 |
| 15 | 0.51 | 0.38 |
| 20 | 0.54 | 0.33 |
| 25 | 0.57 | 0.28 |
| 30 | 0.60 | 0.22 |
| 35 | 0.62 | 0.16 |
| 40 | 0.65 | 0.10 |
| 45 | 0.68 | 0.04 |

S FIXED AT 48%

FIG. 15 (a)

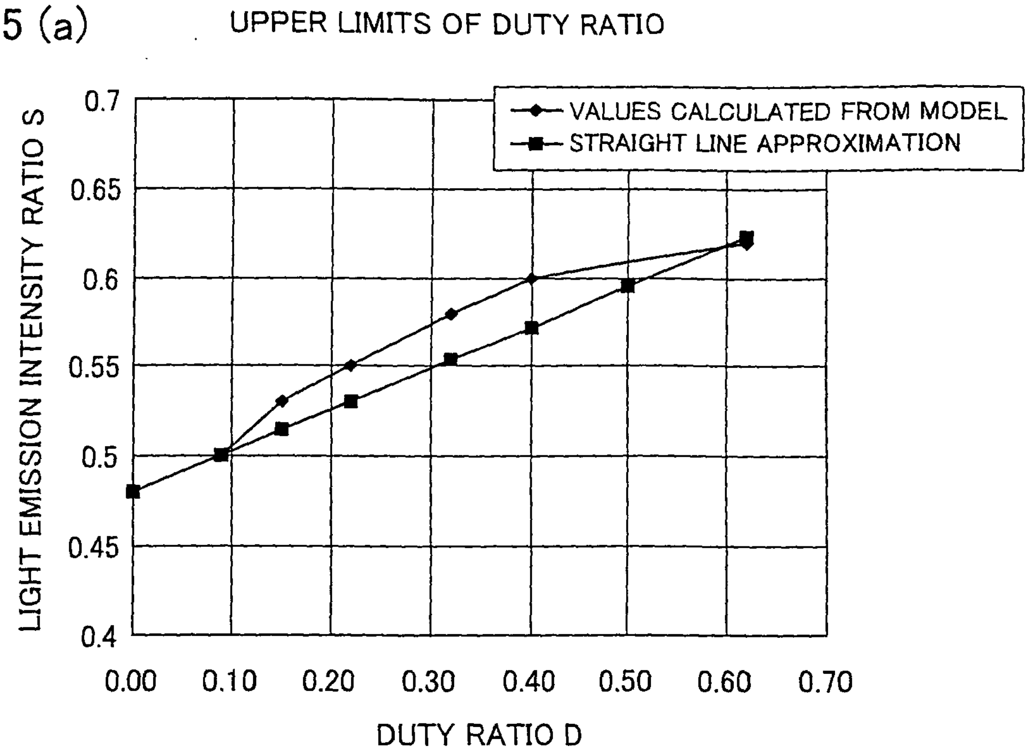


FIG. 15 (b)

| DUTY RATIO D | LIGHT EMISSION INTENSITY RATIO S |
|---|---|
| 0.09 | 0.5 |
| 0.15 | 0.53 |
| 0.22 | 0.55 |
| 0.32 | 0.58 |
| 0.4 | 0.6 |
| 0.619 | 0.62 |

VALUES CALCULATED FROM MODEL

FIG. 16 (a)

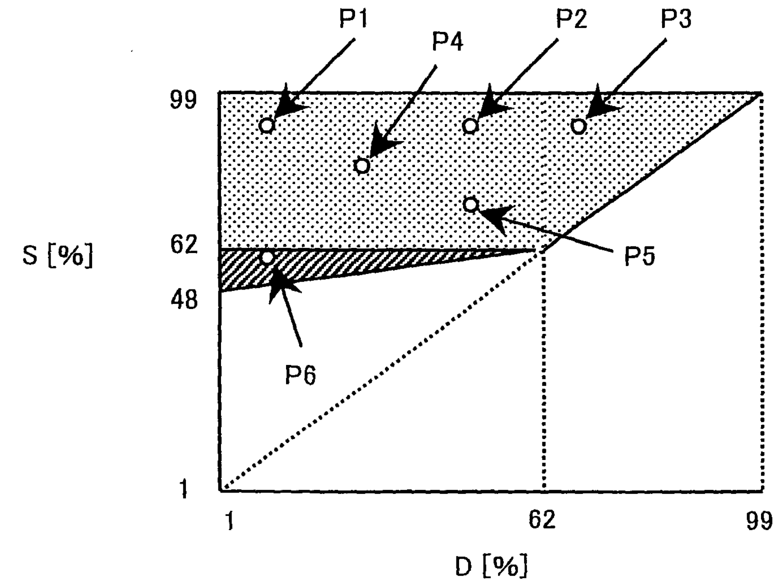


FIG. 16 (b)

| POINT | D (%) | S (%) | AMOUNT OF TRAILING | AMOUNT OF FLICKERING |
|---|---|---|---|---|
| P1 | 0.1 | 0.9 | 0.08 | 0.87 |
| P2 | 0.5 | 0.9 | 0.39 | 0.51 |
| P3 | 0.7 | 0.9 | 0.54 | 0.25 |
| P4 | 0.3 | 0.8 | 0.26 | 0.61 |
| P5 | 0.5 | 0.7 | 0.5 | 0.25 |
| P6 | 0.1 | 0.6 | 0.33 | 0.54 |

FIG. 16 (c)

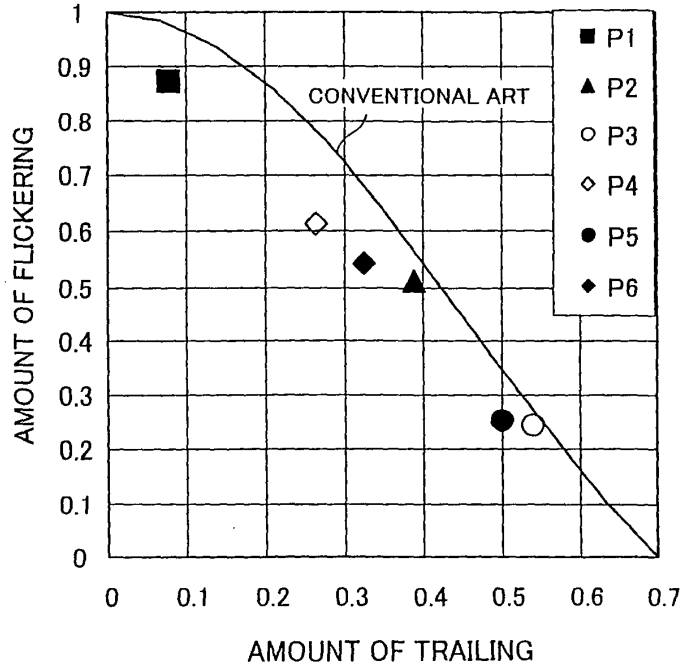

FIG. 17 (a)

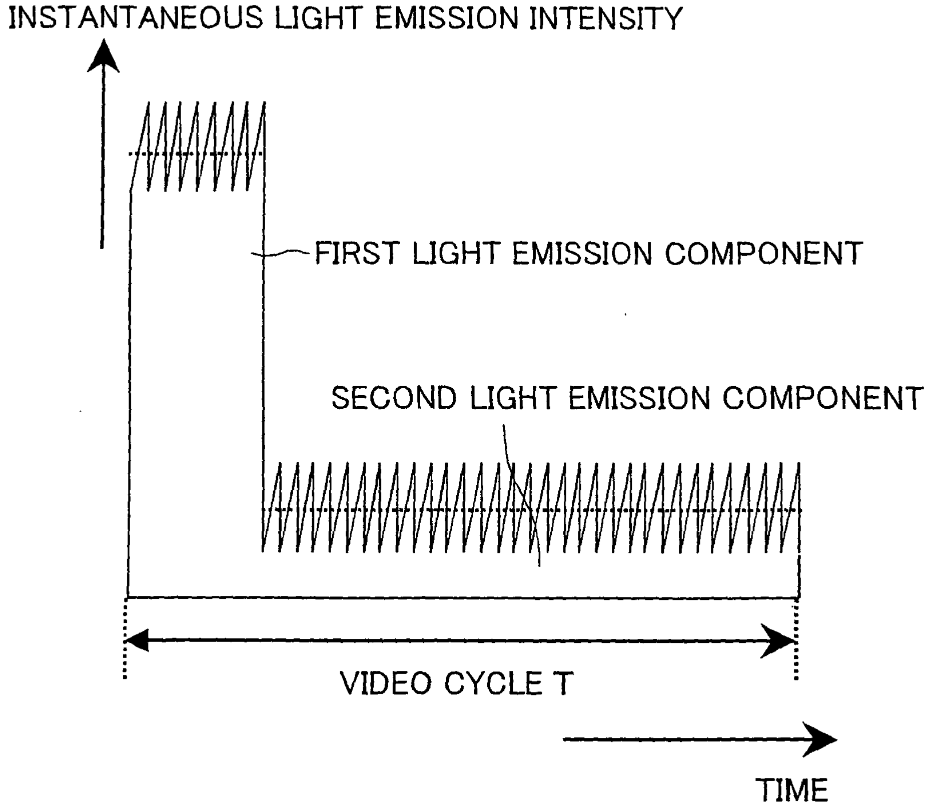


FIG. 17 (b)

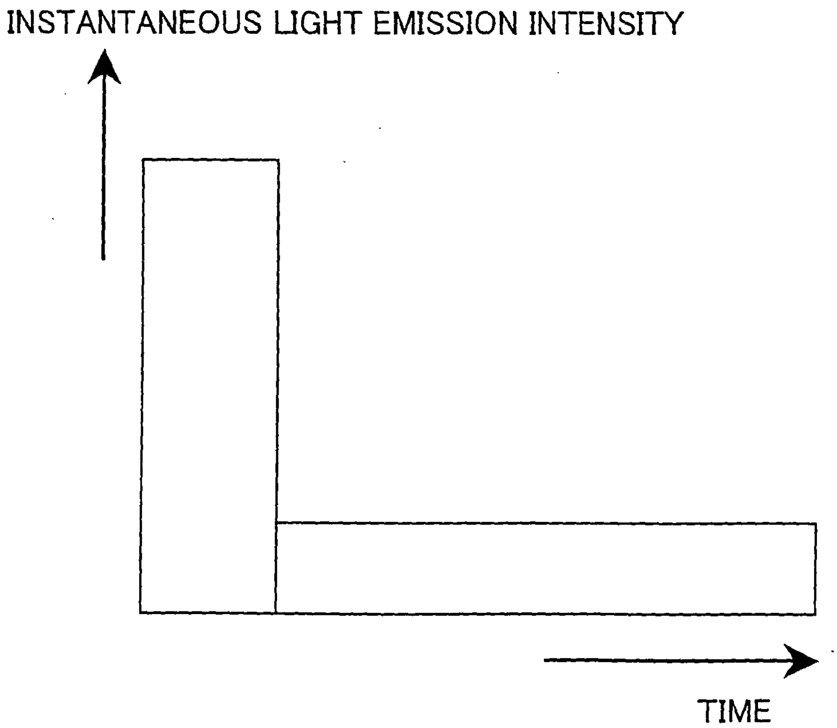

FIG. 18 (a)

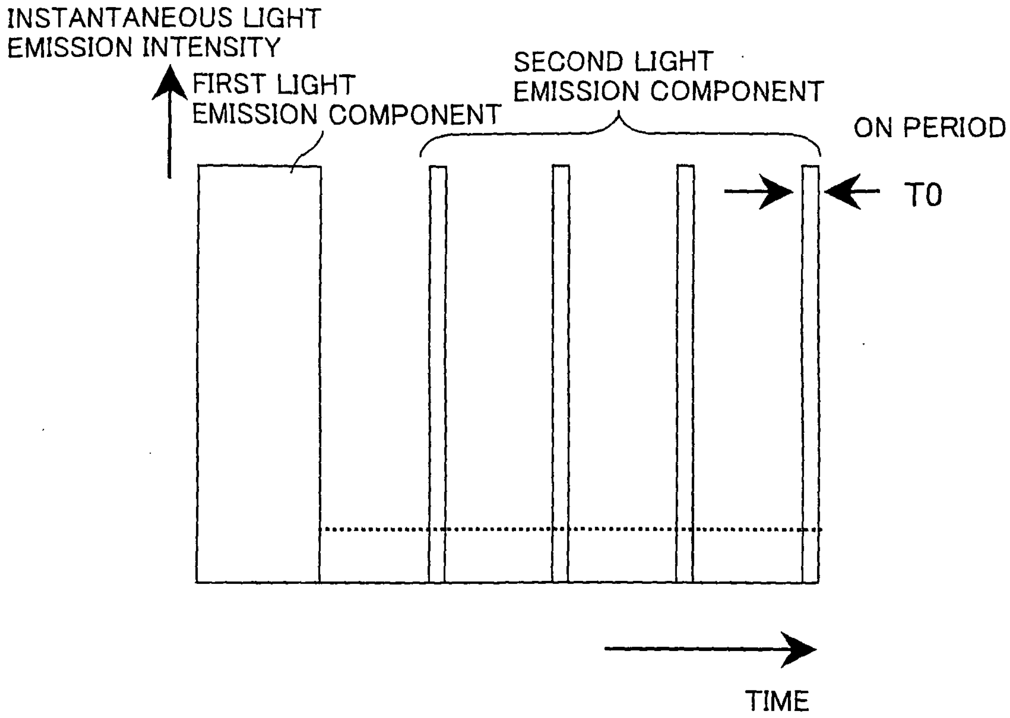


FIG. 18 (b)

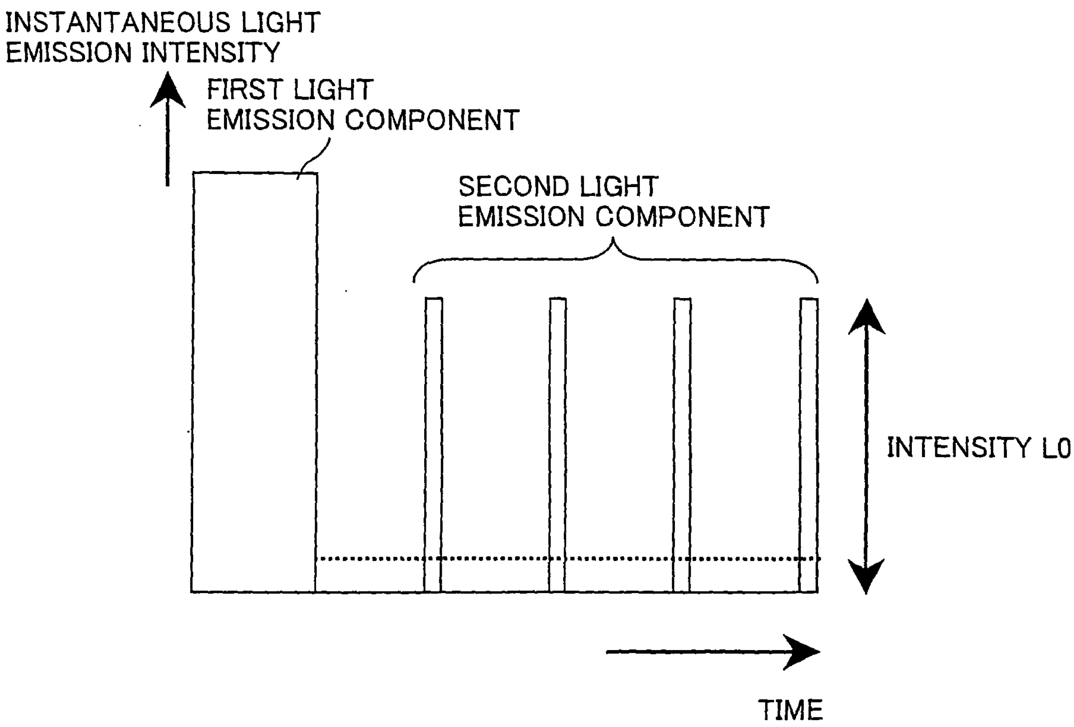

FIG. 19

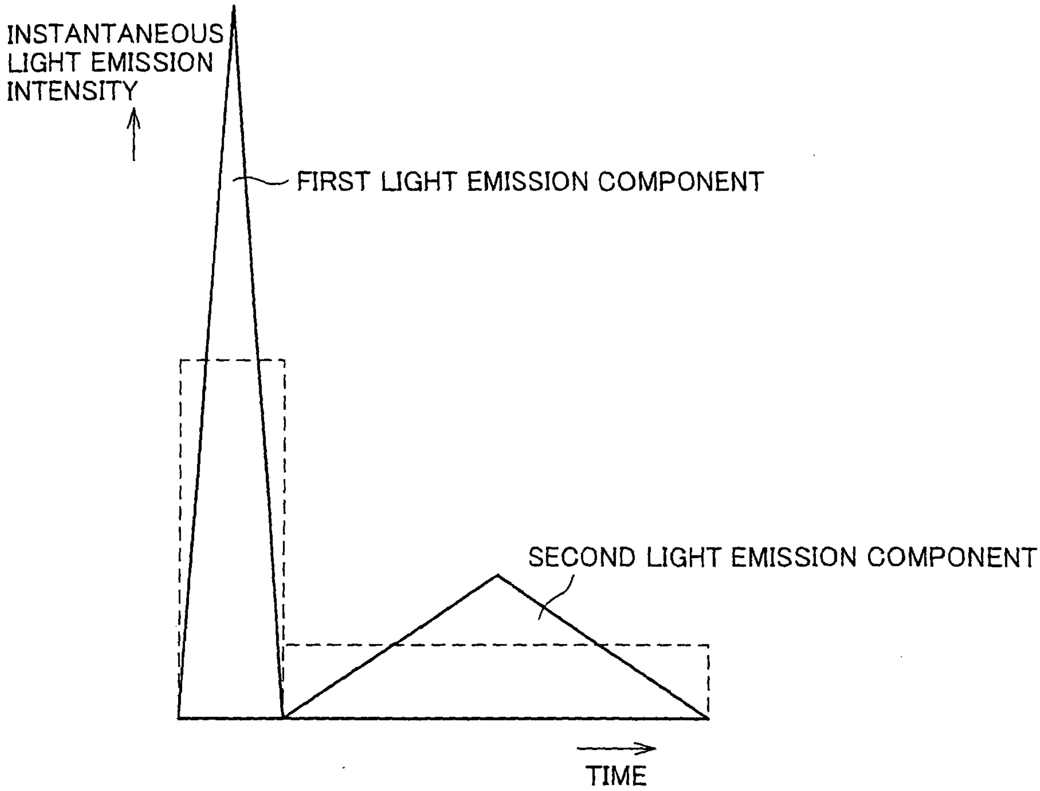
INSTANTANEOUS
LIGHT EMISSION
INTENSITY
FIRST LIGHT EMISSION COMPONENT
SECOND LIGHT EMISSION COMPONENT
TIME

FIG. 20

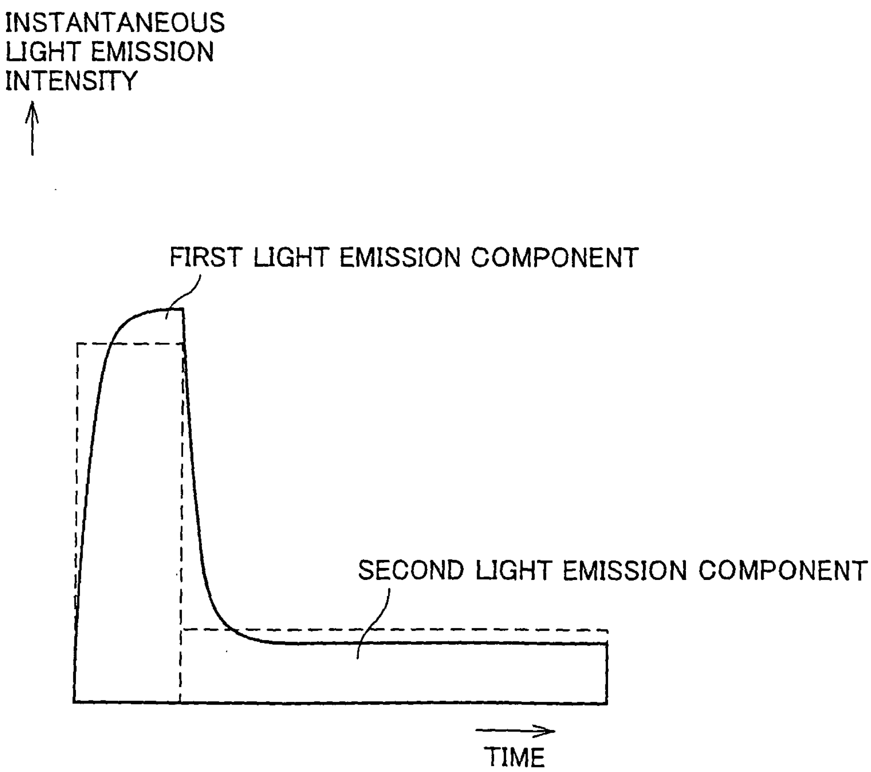
INSTANTANEOUS
LIGHT EMISSION
INTENSITY
FIRST LIGHT EMISSION COMPONENT
SECOND LIGHT EMISSION COMPONENT
TIME

FIG. 21

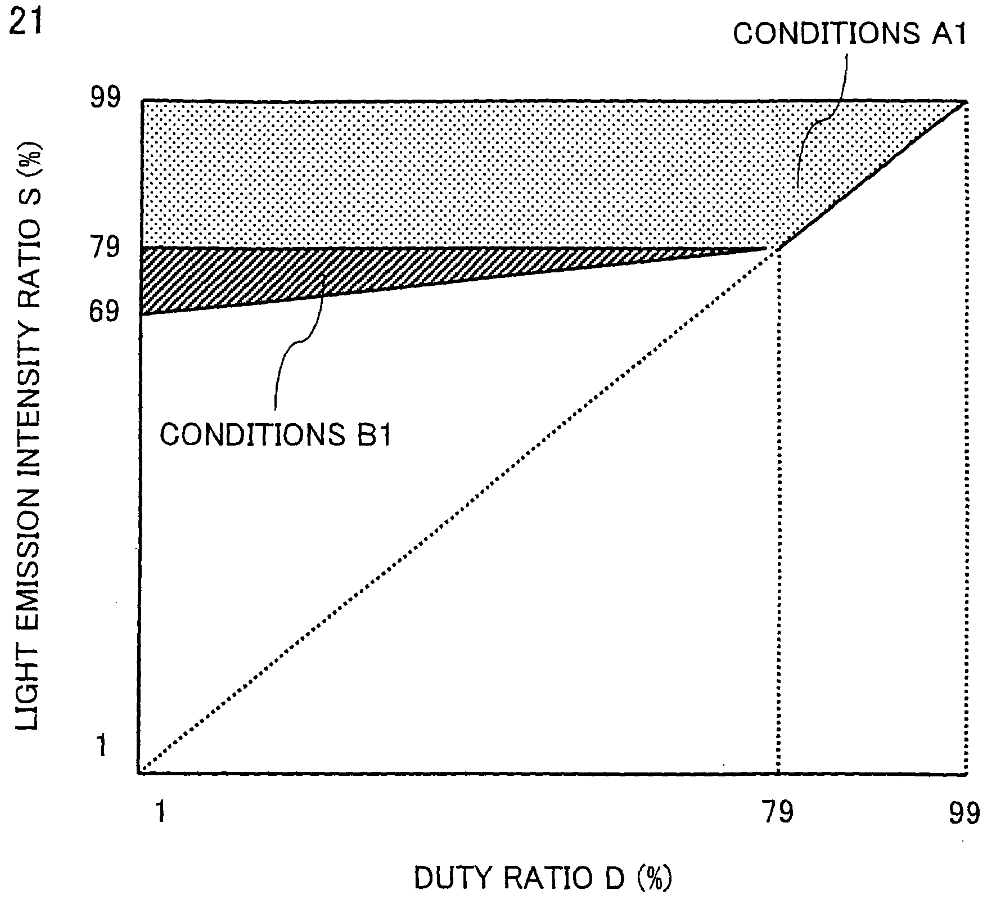
CONDITIONS A1
99
79
69
1
LIGHT EMISSION INTENSITY RATIO S (%)
CONDITIONS B1
1
79
99
DUTY RATIO D (%)

FIG. 22 (a)

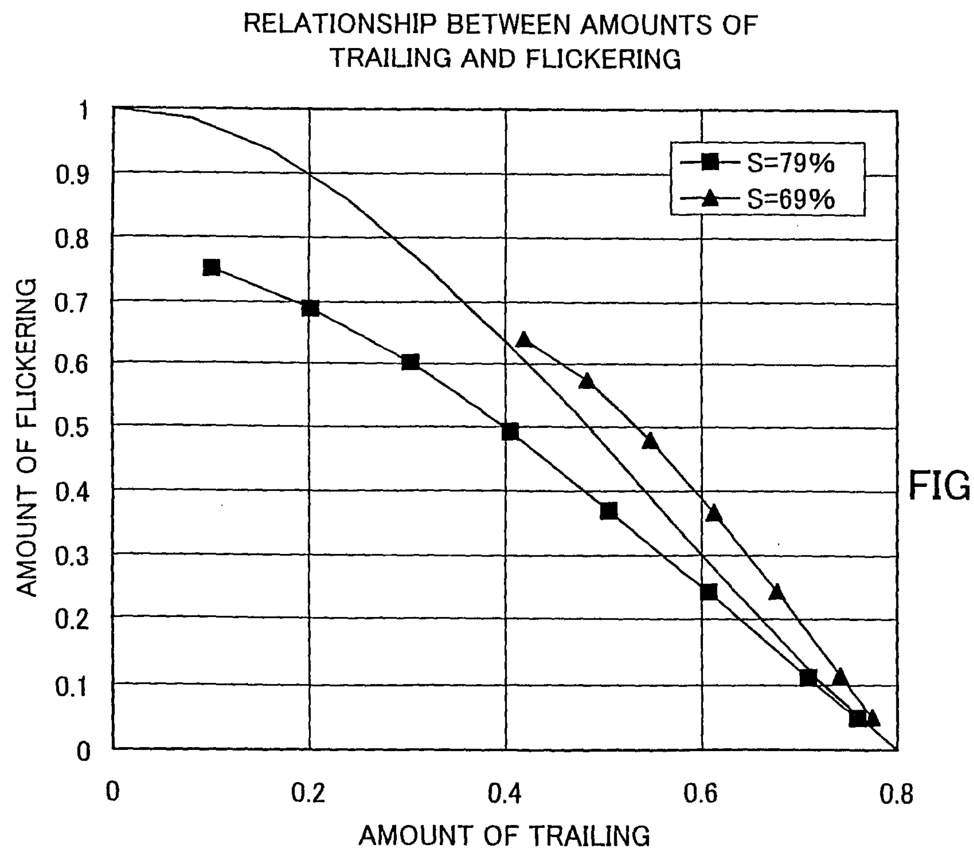


FIG. 22 (b)

| DUTY RATIO D | AMOUNT OF TRAILING | AMOUNT OF FLICKERING |
|---|---|---|
| 10 | 0.42 | 0.64 |
| 20 | 0.48 | 0.57 |
| 30 | 0.55 | 0.48 |
| 40 | 0.61 | 0.37 |
| 50 | 0.68 | 0.24 |
| 60 | 0.74 | 0.11 |
| 65 | 0.77 | 0.05 |

S FIXED AT 69%

FIG. 22 (c)

| DUTY RATIO D | AMOUNT OF TRAILING | AMOUNT OF FLICKERING |
|---|---|---|
| 10 | 0.10 | 0.75 |
| 20 | 0.20 | 0.69 |
| 30 | 0.30 | 0.60 |
| 40 | 0.41 | 0.49 |
| 50 | 0.51 | 0.37 |
| 60 | 0.61 | 0.24 |
| 70 | 0.71 | 0.11 |
| 75 | 0.76 | 0.05 |

S FIXED AT 79%

FIG. 23 (a)

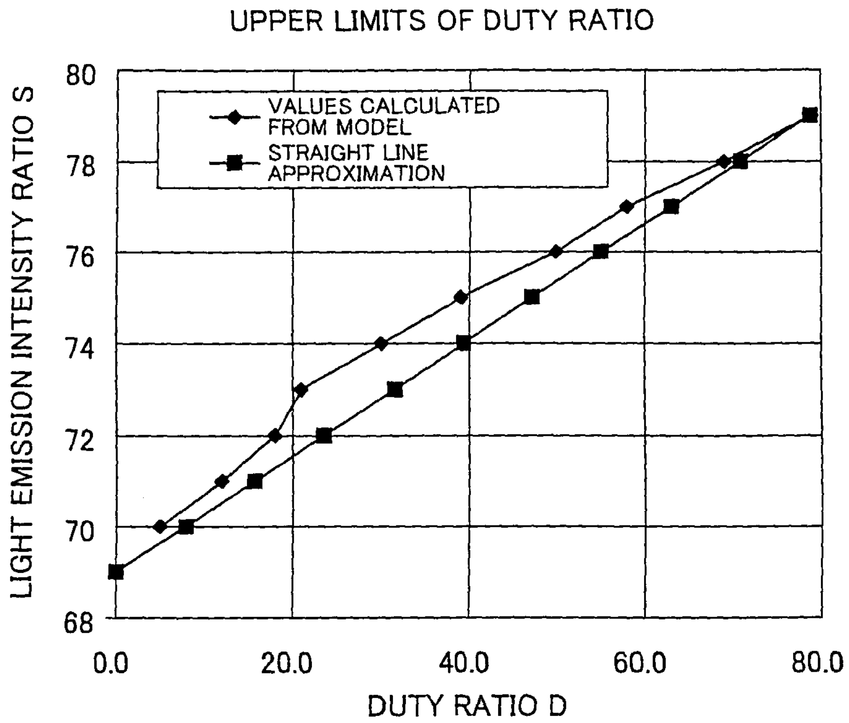


FIG. 23 (b)

| LIGHT EMISSION INTENSITY RATIO S | DUTY RATIO D |
|---|---|
| 70 | 5.0 |
| 71 | 12.0 |
| 72 | 18.0 |
| 73 | 21.0 |
| 74 | 30.0 |
| 75 | 39.0 |
| 76 | 50.0 |
| 77 | 58.0 |
| 78 | 69.0 |
| 79 | 78.9 |

VALUES CALCULATED FROM MODEL

FIG. 24

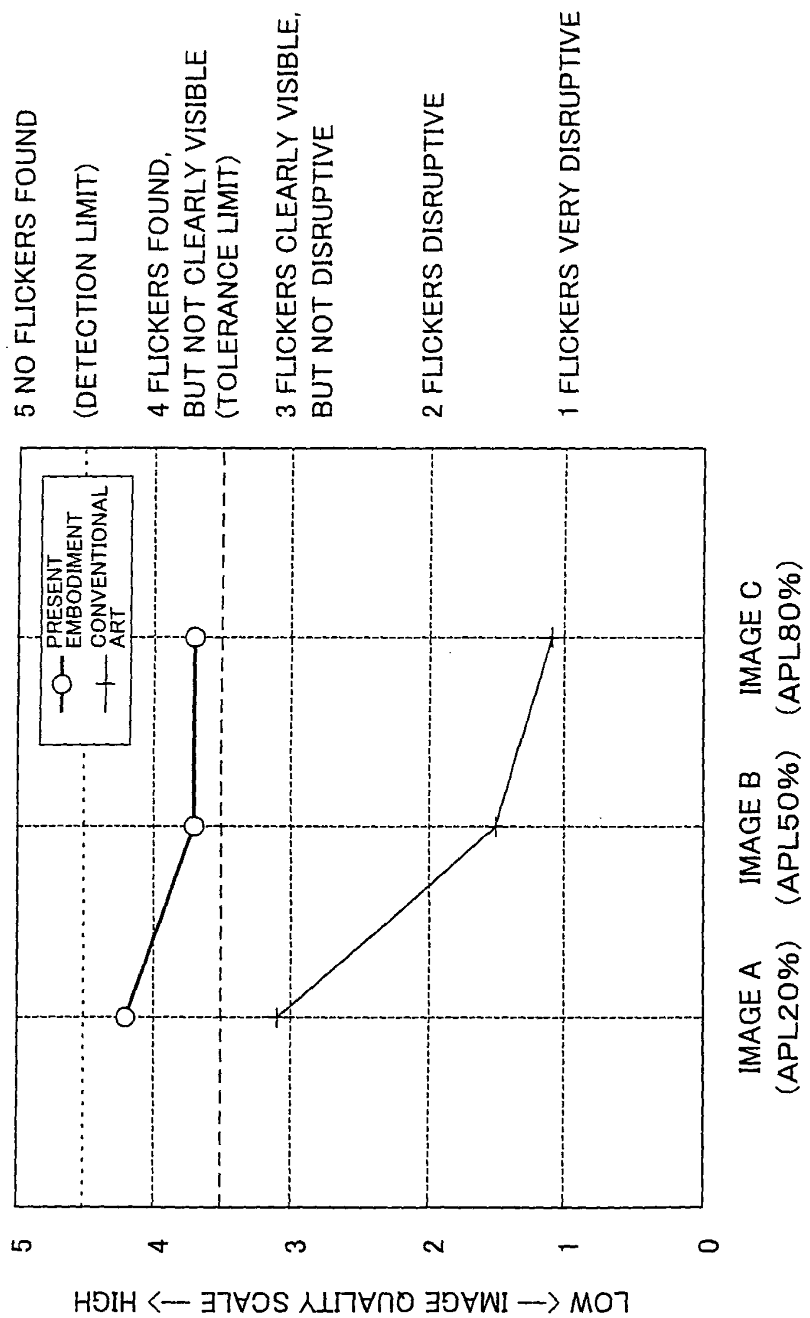
5 NO FLICKERS FOUND
(DETECTION LIMIT)
4 FLICKERS FOUND, BUT NOT CLEARLY VISIBLE (TOLERANCE LIMIT)
3 FLICKERS CLEARLY VISIBLE, BUT NOT DISRUPTIVE
2 FLICKERS DISRUPTIVE
1 FLICKERS VERY DISRUPTIVE
PRESENT EMBODIMENT
CONVENTIONAL ART
LOW <— IMAGE QUALITY SCALE —> HIGH
5
4
3
2
1
0
IMAGE A (APL20%)
IMAGE B (APL50%)
IMAGE C (APL80%)

FIG. 25

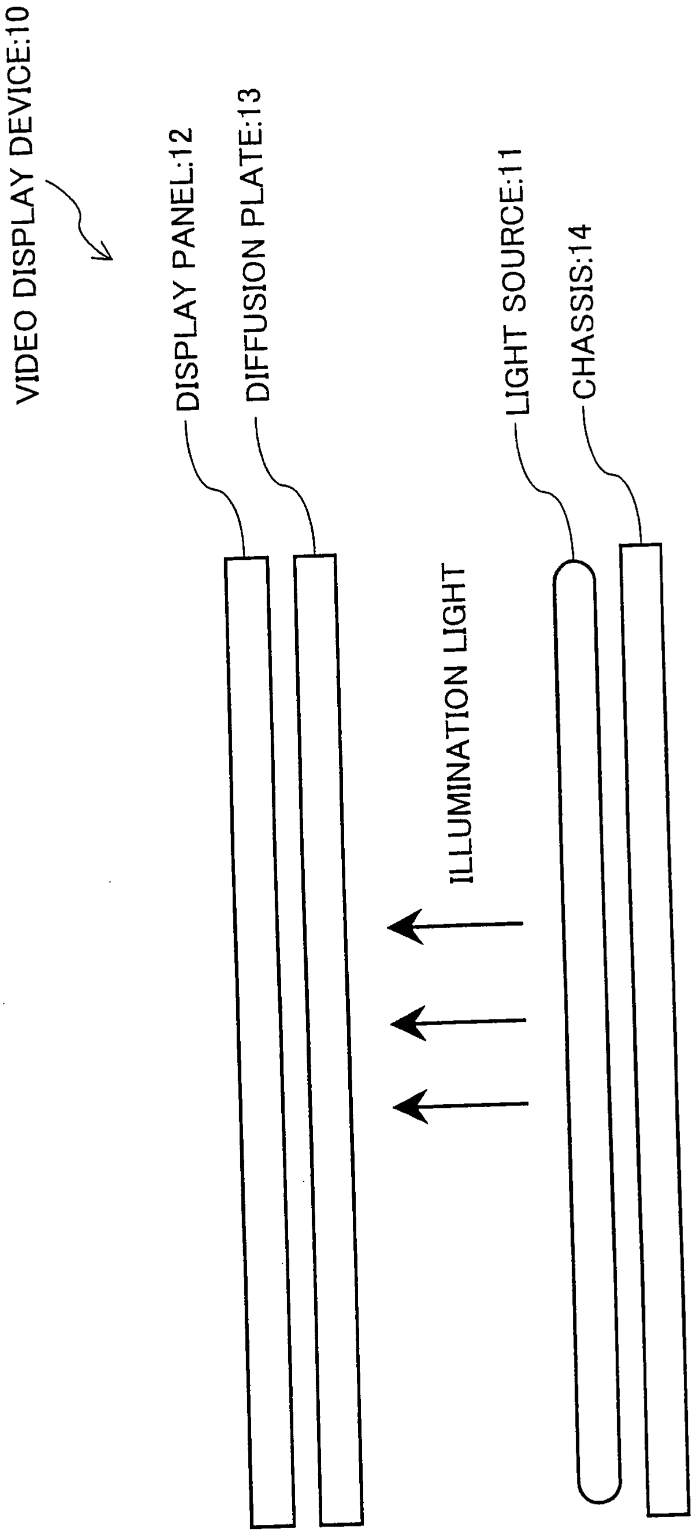
VIDEO DISPLAY DEVICE:10
DISPLAY PANEL:12
DIFFUSION PLATE:13
LIGHT SOURCE:11
CHASSIS:14
ILLUMINATION LIGHT

FIG. 26

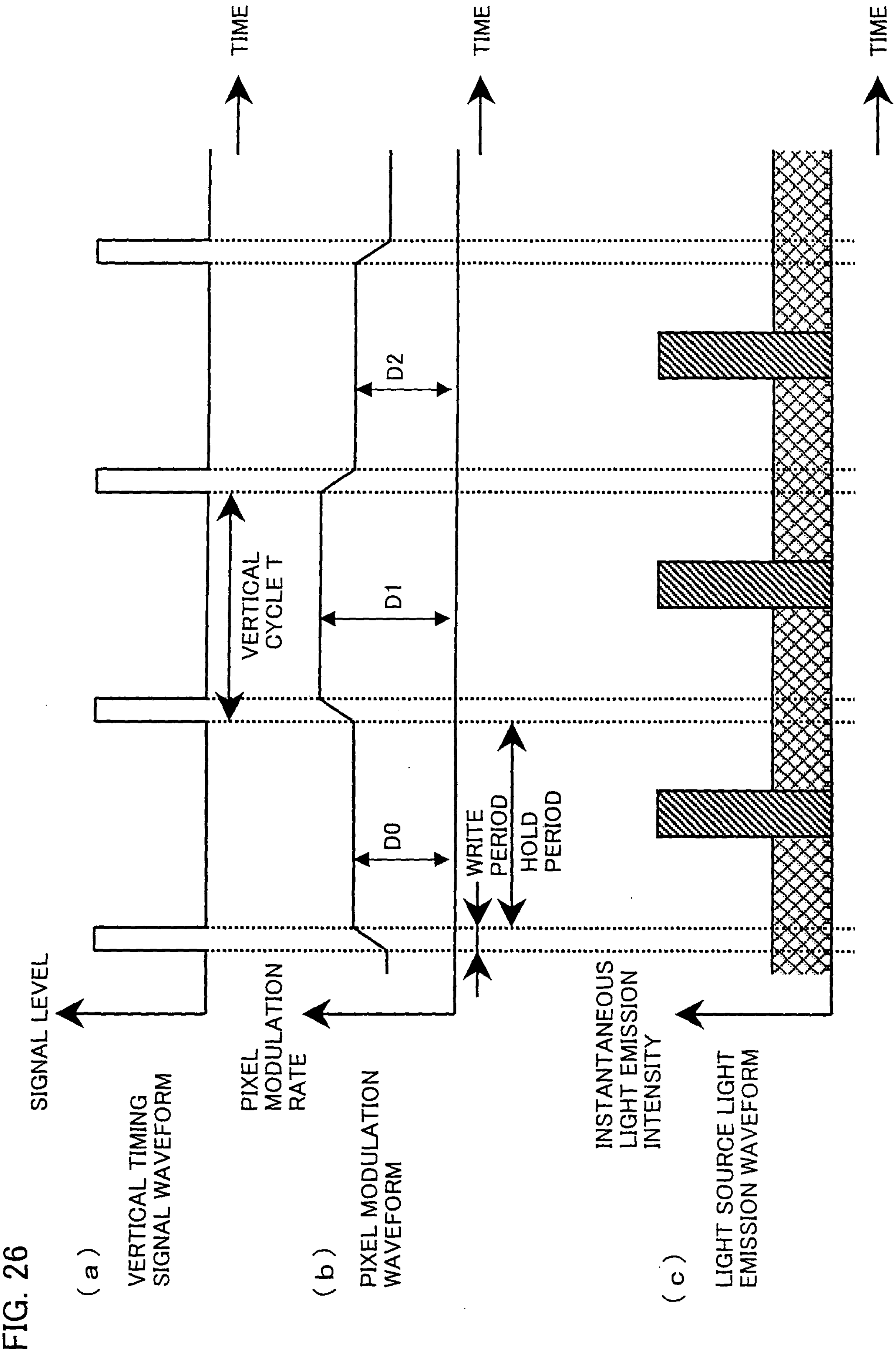
(a)
VERTICAL TIMING SIGNAL WAVEFORM
SIGNAL LEVEL
TIME
VERTICAL CYCLE T
(b)
PIXEL MODULATION WAVEFORM
PIXEL MODULATION RATE
D0
D1
D2
TIME
WRITE PERIOD
HOLD PERIOD
(c)
LIGHT SOURCE LIGHT EMISSION WAVEFORM
INSTANTANEOUS LIGHT EMISSION INTENSITY
TIME

FIG. 27

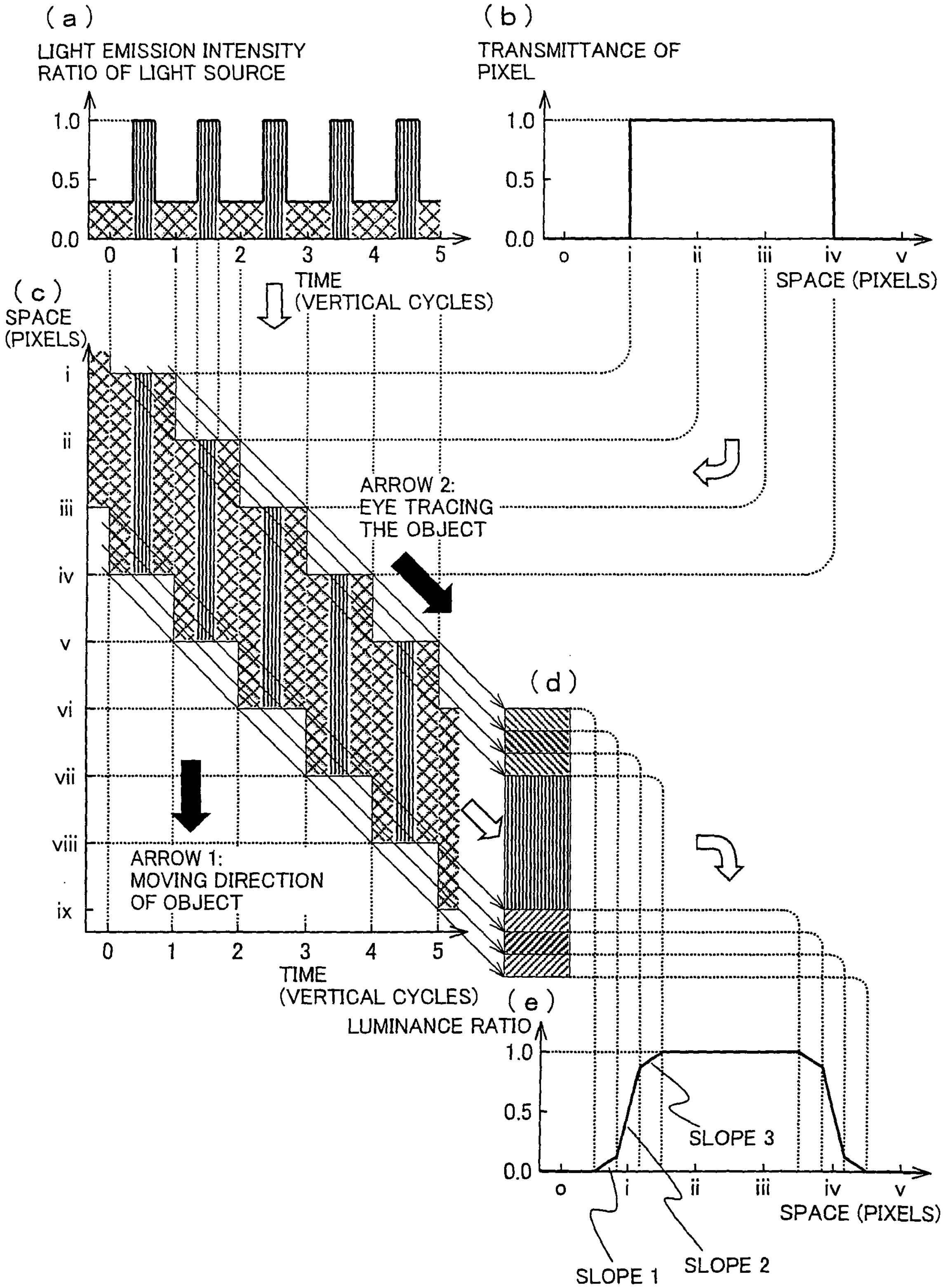
(a)
LIGHT EMISSION INTENSITY RATIO OF LIGHT SOURCE
1.0
0.5
0.0
0
1
2
3
4
5
TIME (VERTICAL CYCLES)
(b)
TRANSMITTANCE OF PIXEL
1.0
0.5
0.0
o
i
ii
iii
iv
v
SPACE (PIXELS)
(c)
SPACE (PIXELS)
i
ii
iii
iv
v
vi
vii
viii
ix
ARROW 2: EYE TRACING THE OBJECT
ARROW 1: MOVING DIRECTION OF OBJECT
0
1
2
3
4
5
TIME (VERTICAL CYCLES)
(d)
(e)
LUMINANCE RATIO
1.0
0.5
0.0
o
i
ii
iii
iv
v
SPACE (PIXELS)
SLOPE 3
SLOPE 1
SLOPE 2

FIG. 28 (a)

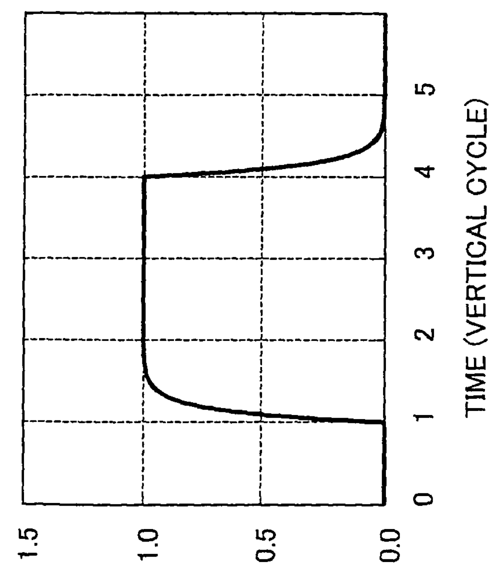


FIG. 28 (b)

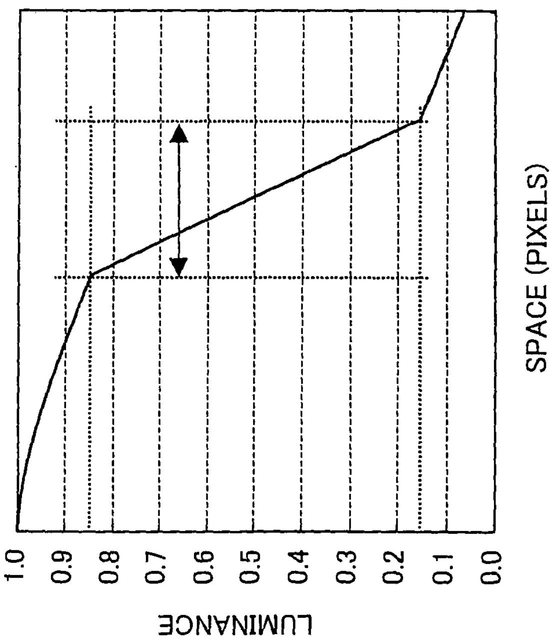


FIG. 28 (c)

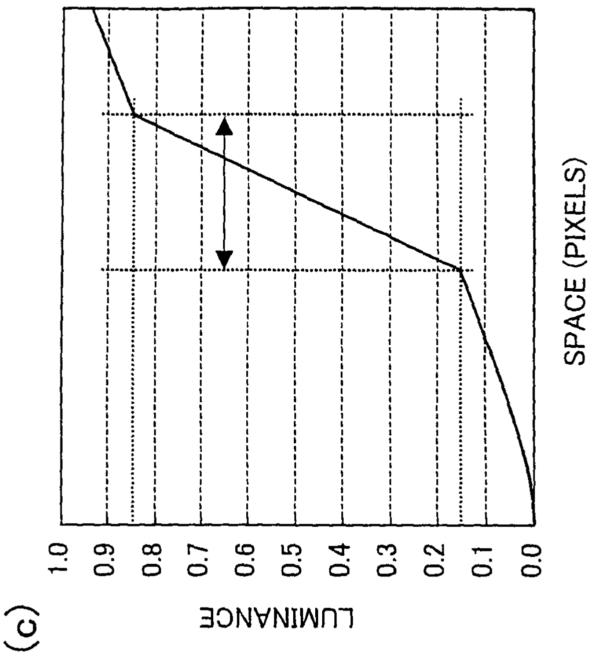

FIG. 29

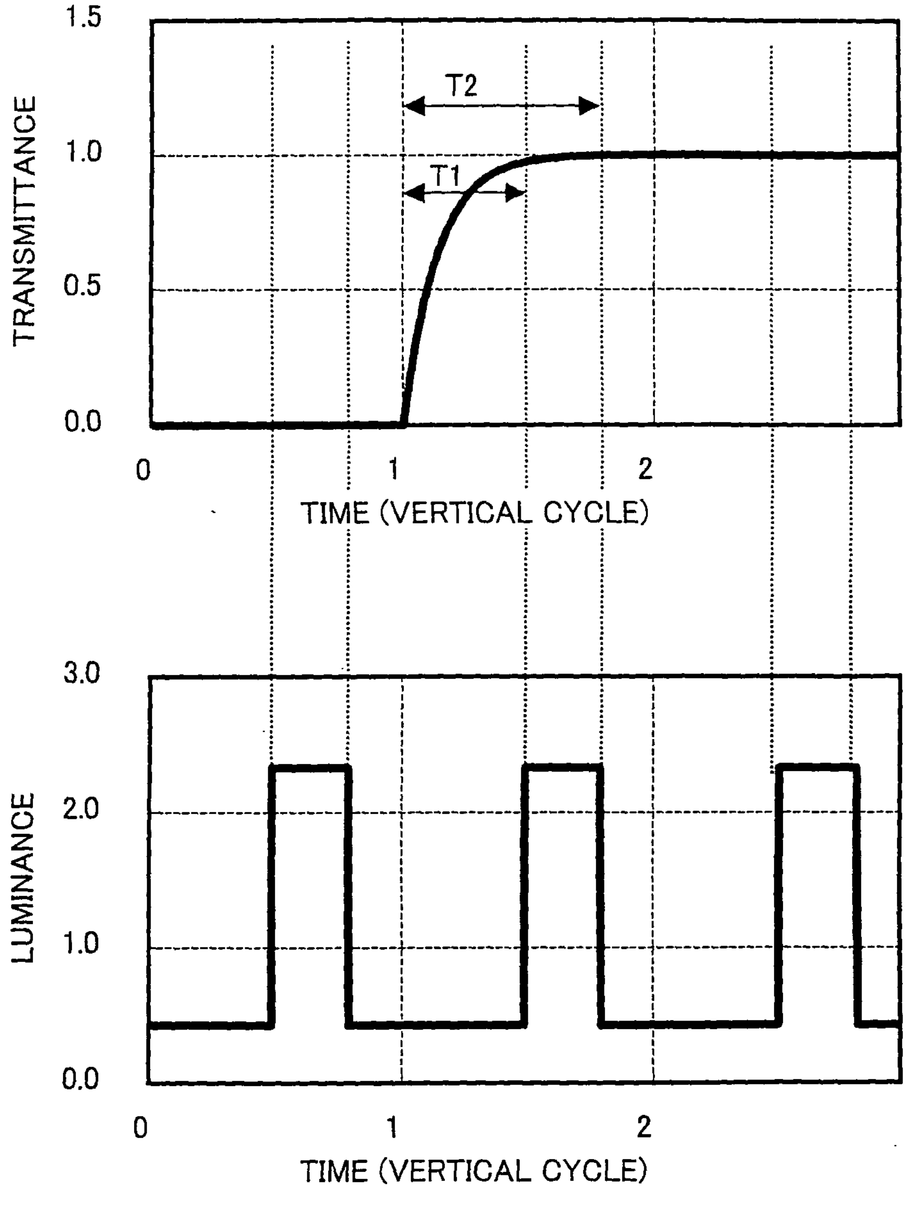
1.5
1.0
0.5
0.0
TRANSMITTANCE
T2
T1
0
1
2
TIME (VERTICAL CYCLE)
3.0
2.0
1.0
0.0
LUMINANCE
0
1
2
TIME (VERTICAL CYCLE)

FIG. 30 (a)

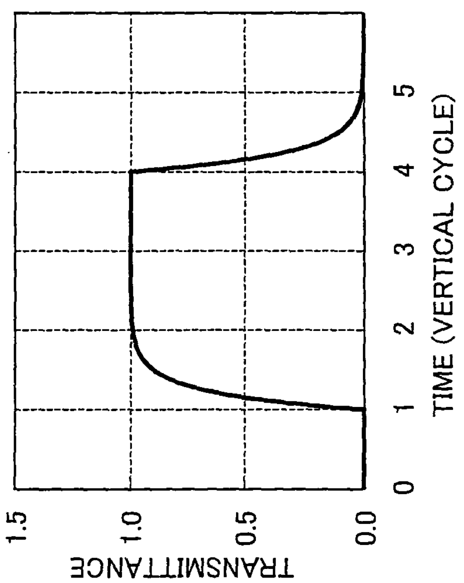


FIG. 30 (b)

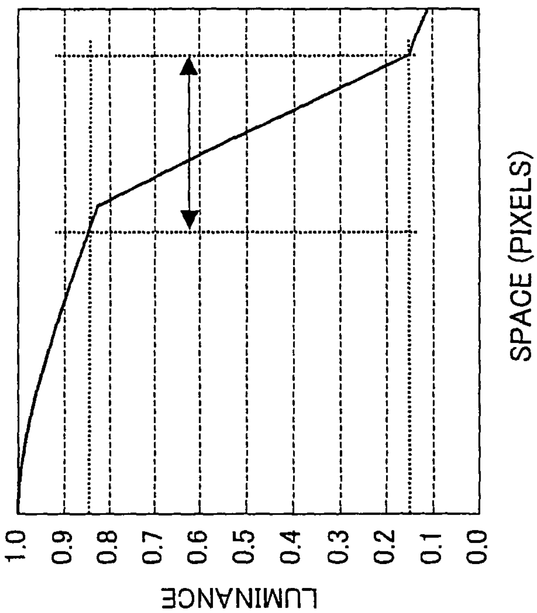


FIG. 30 (c)

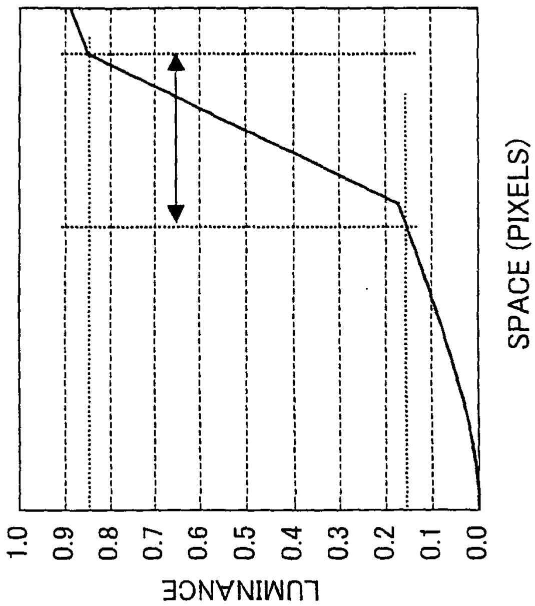

FIG. 31

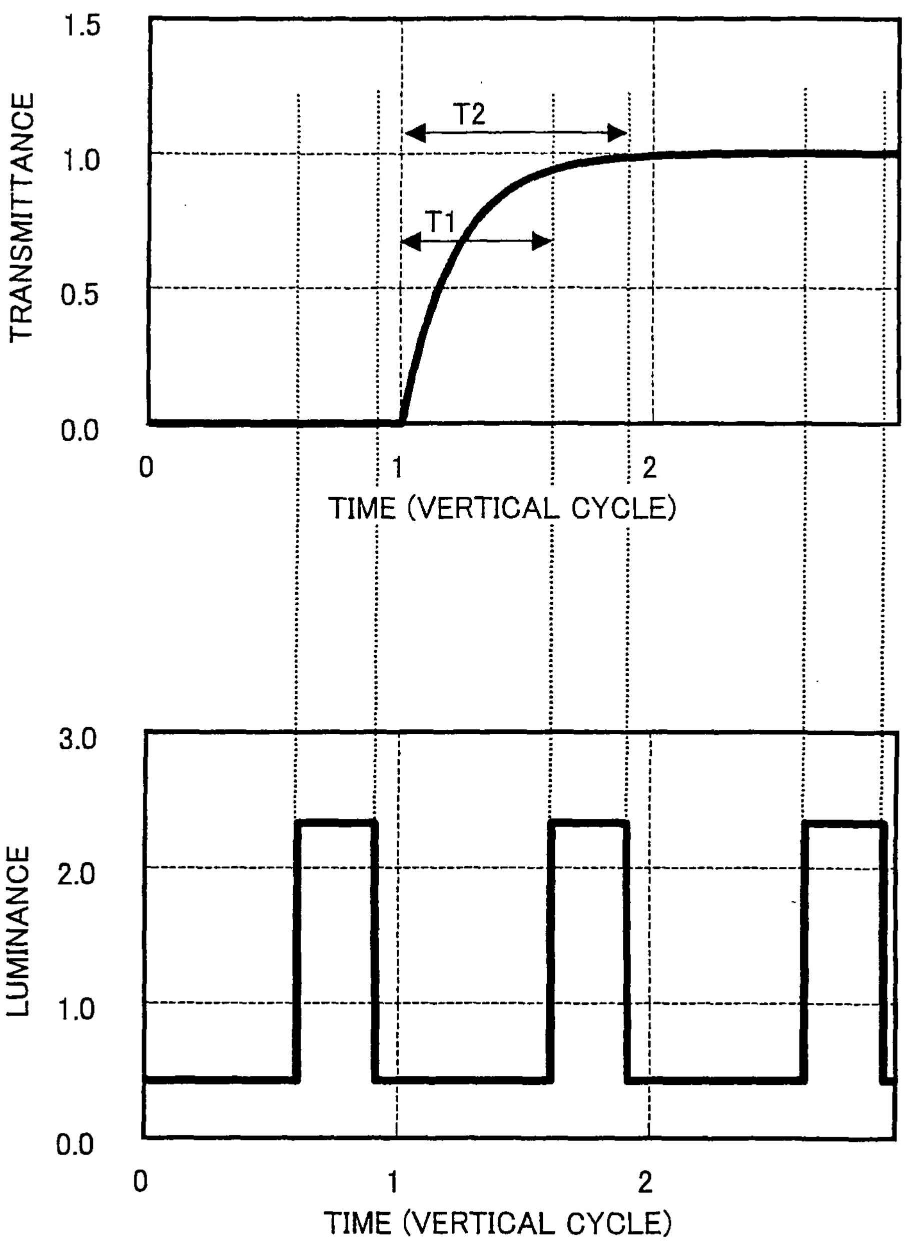
1.5
1.0
0.5
0.0
TRANSMITTANCE
T2
T1
0
1
2
TIME (VERTICAL CYCLE)
3.0
2.0
1.0
0.0
LUMINANCE
0
1
2
TIME (VERTICAL CYCLE)

FIG. 32

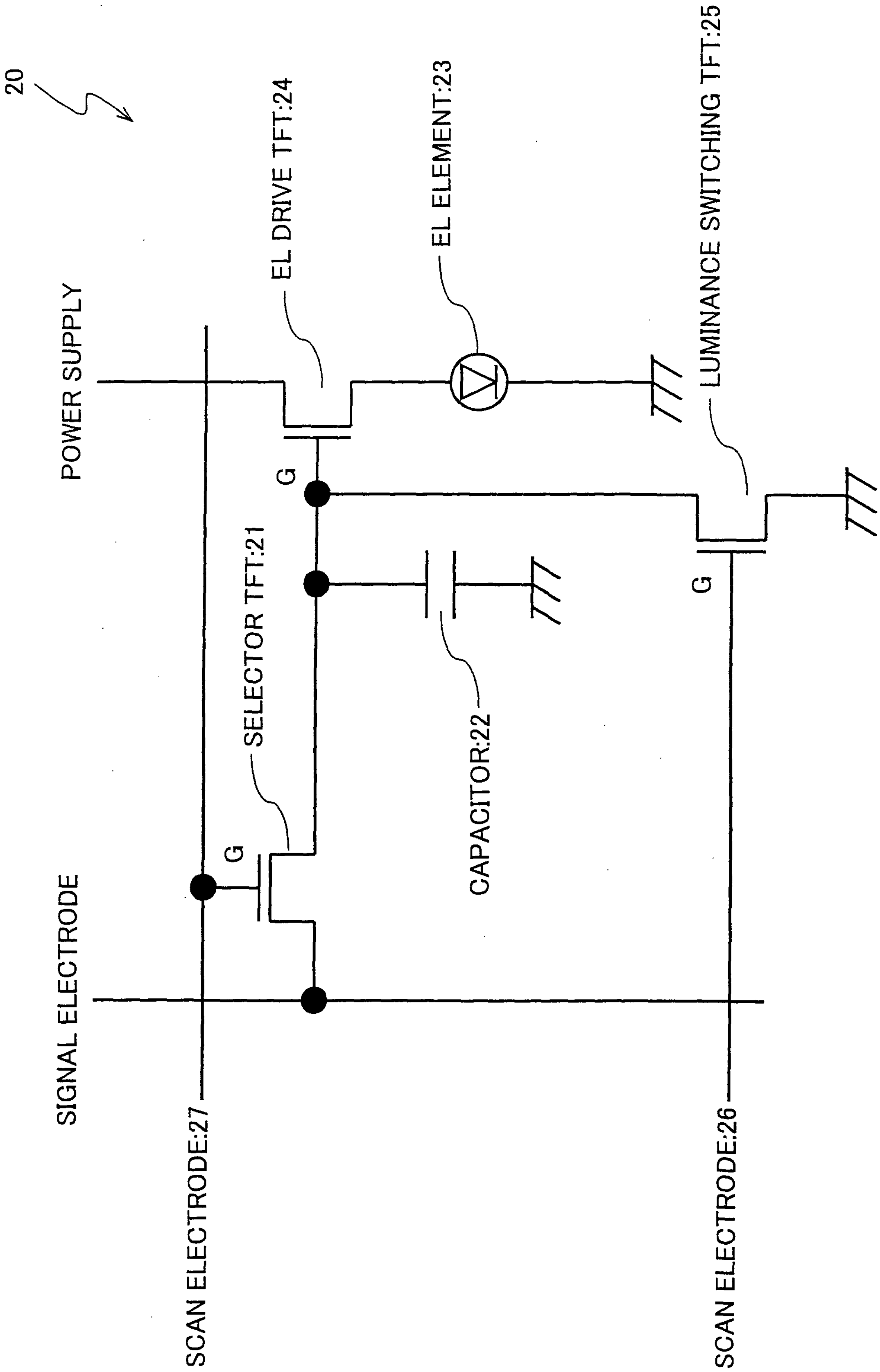
20
POWER SUPPLY
EL DRIVE TFT:24
EL ELEMENT:23
LUMINANCE SWITCHING TFT:25
G
G
SELECTOR TFT:21
CAPACITOR:22
G
SIGNAL ELECTRODE
SCAN ELECTRODE:27
SCAN ELECTRODE:26

FIG. 33

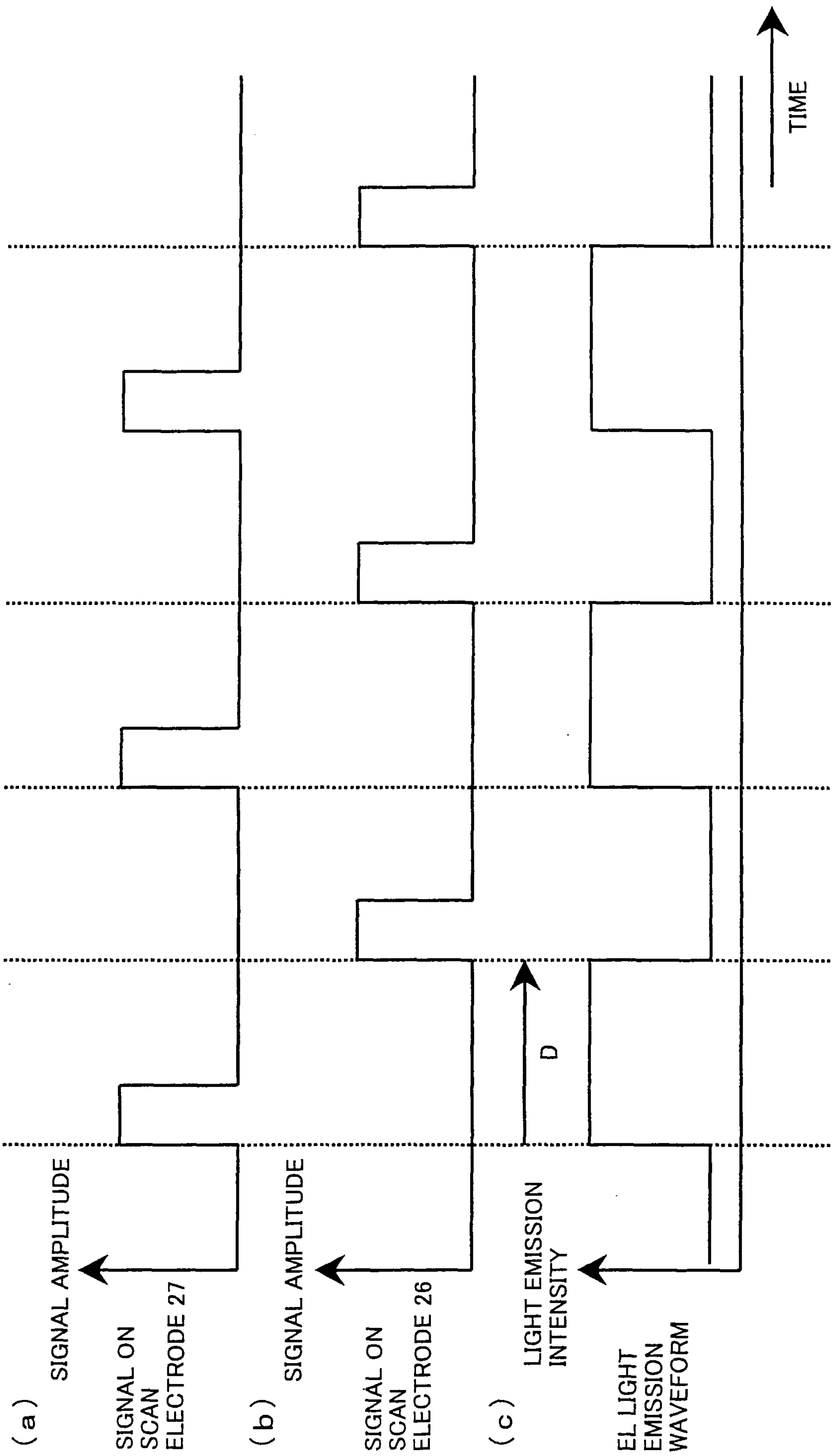
(a)
SIGNAL AMPLITUDE
SIGNAL ON SCAN ELECTRODE 27
(b)
SIGNAL AMPLITUDE
SIGNAL ON SCAN ELECTRODE 26
(c)
LIGHT EMISSION INTENSITY
EL LIGHT EMISSION WAVEFORM
D
TIME

FIG. 34

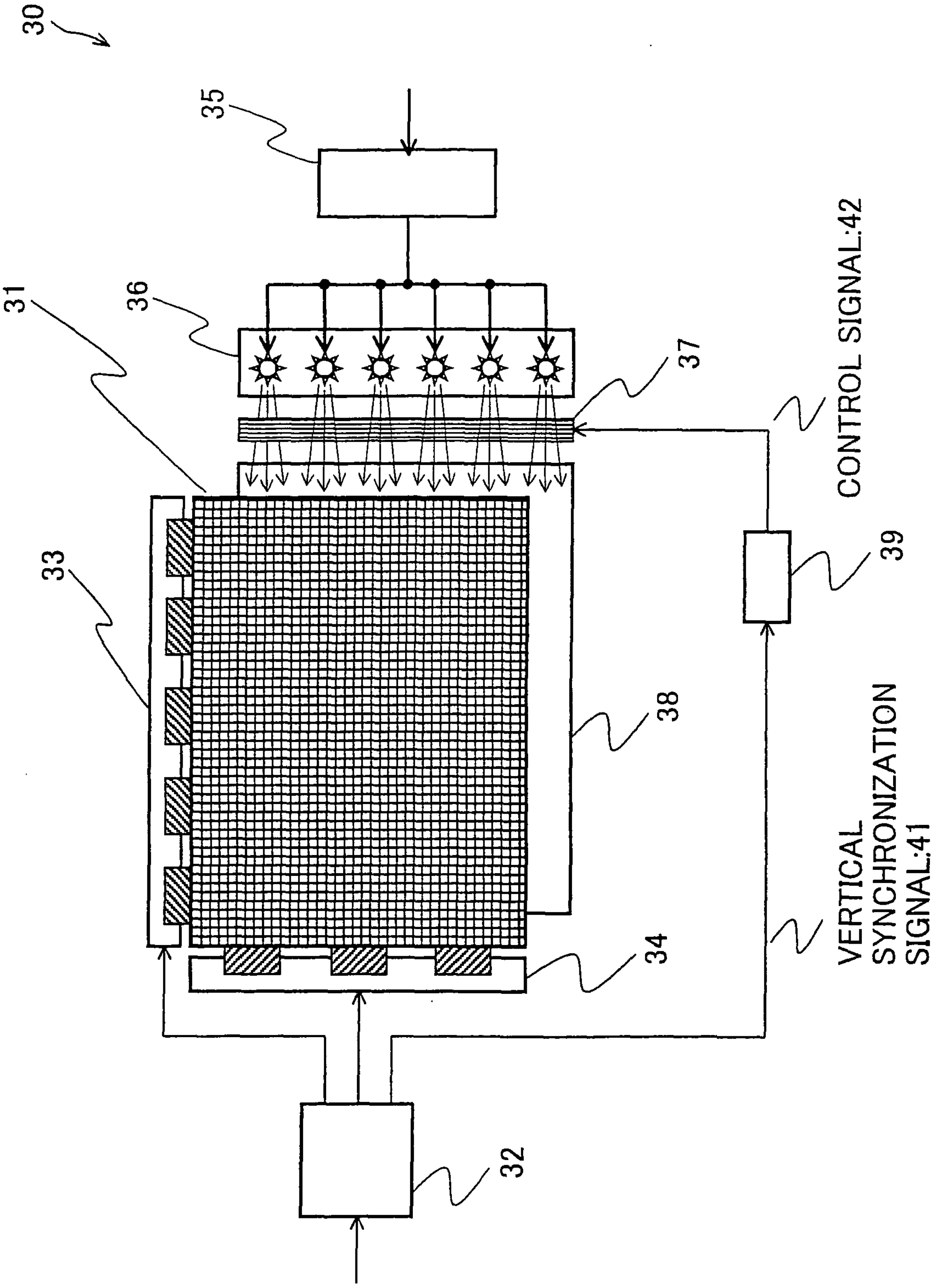
30
31
32
33
34
35
36
37
38
39
CONTROL SIGNAL:42
VERTICAL SYNCHRONIZATION SIGNAL:41

FIG. 35

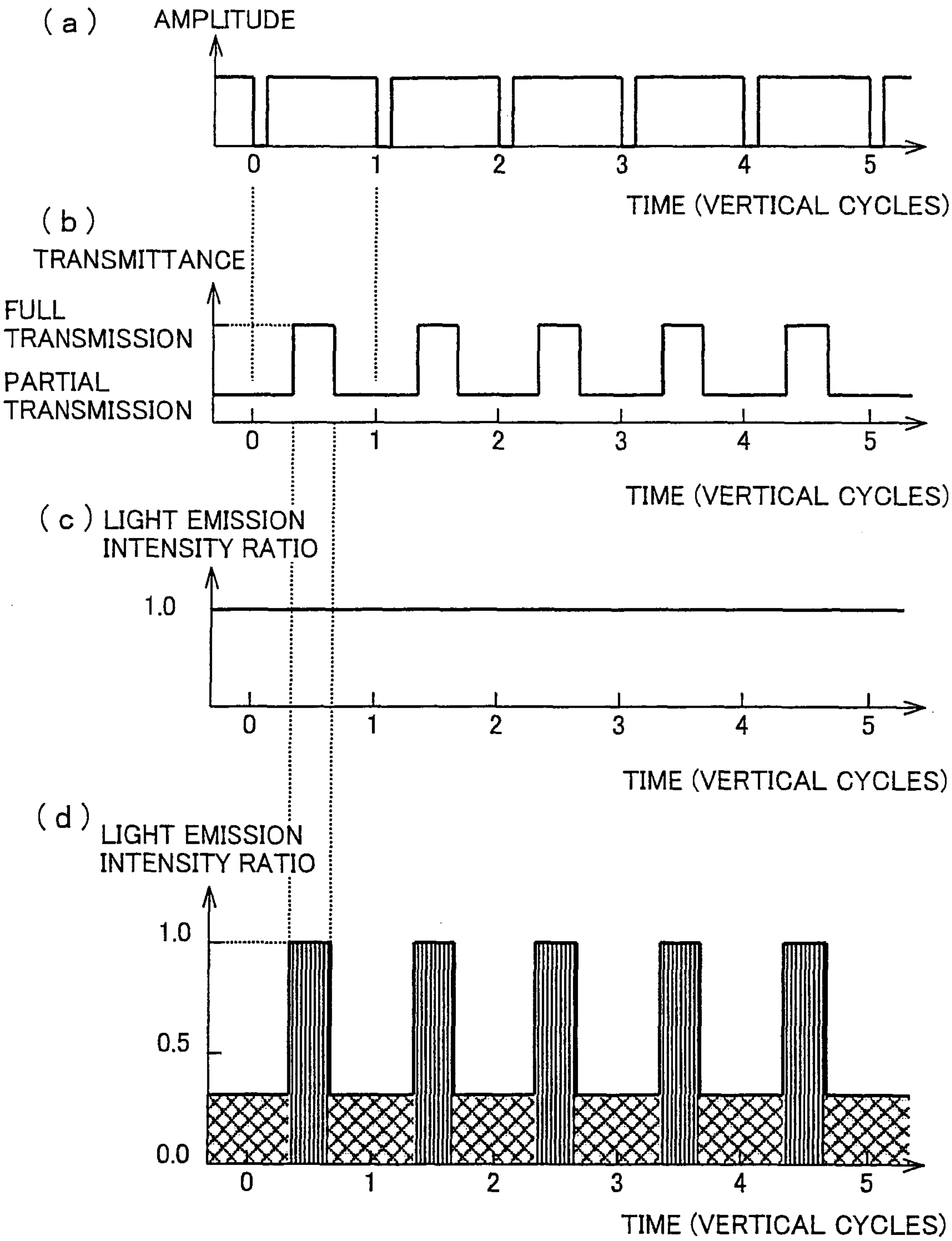
(a)
AMPLITUDE
0
1
2
3
4
5
TIME (VERTICAL CYCLES)
(b)
TRANSMITTANCE
FULL TRANSMISSION
PARTIAL TRANSMISSION
0
1
2
3
4
5
TIME (VERTICAL CYCLES)
(c) LIGHT EMISSION INTENSITY RATIO
1.0
0
1
2
3
4
5
TIME (VERTICAL CYCLES)
(d) LIGHT EMISSION INTENSITY RATIO
1.0
0.5
0.0
0
1
2
3
4
5
TIME (VERTICAL CYCLES)

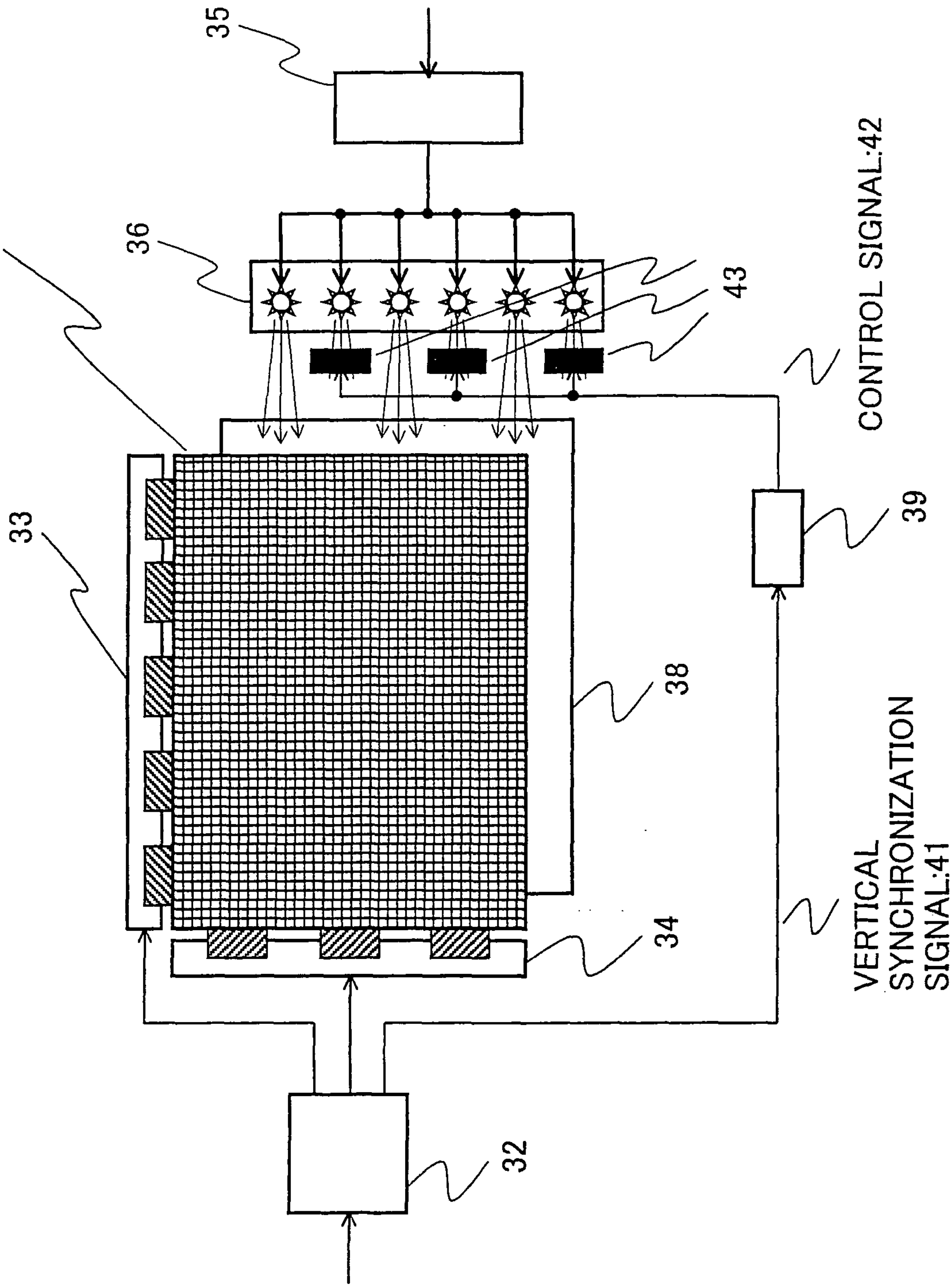
35
31
36
43
CONTROL SIGNAL:42
33
38
39
34
VERTICAL SYNCHRONIZATION SIGNAL:41
32

FIG. 36

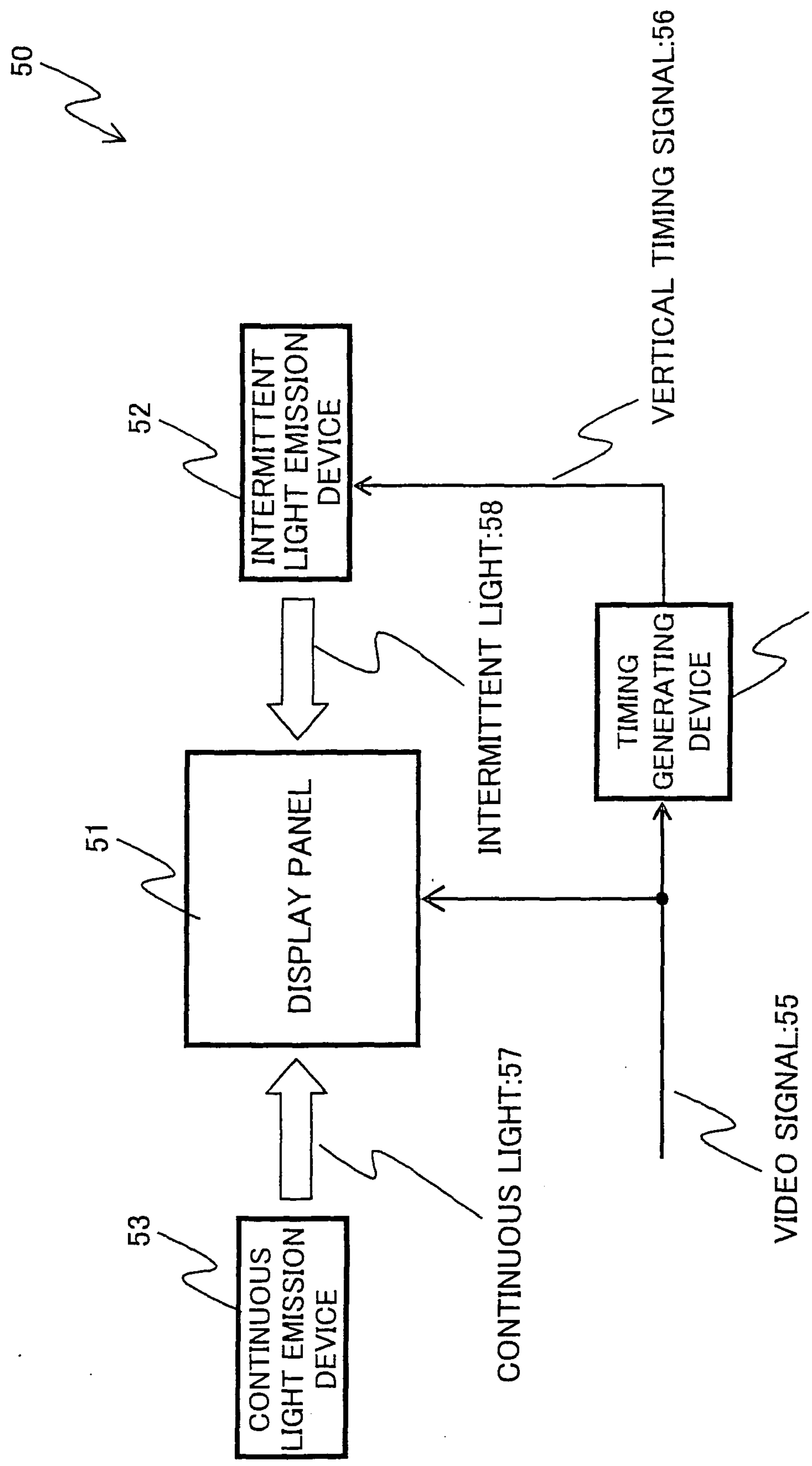
50
52
INTERMITTENT LIGHT EMISSION DEVICE
VERTICAL TIMING SIGNAL:56
INTERMITTENT LIGHT:58
54
TIMING GENERATING DEVICE
51
DISPLAY PANEL
CONTINUOUS LIGHT:57
VIDEO SIGNAL:55
53
CONTINUOUS LIGHT EMISSION DEVICE

FIG. 37

FIG. 38

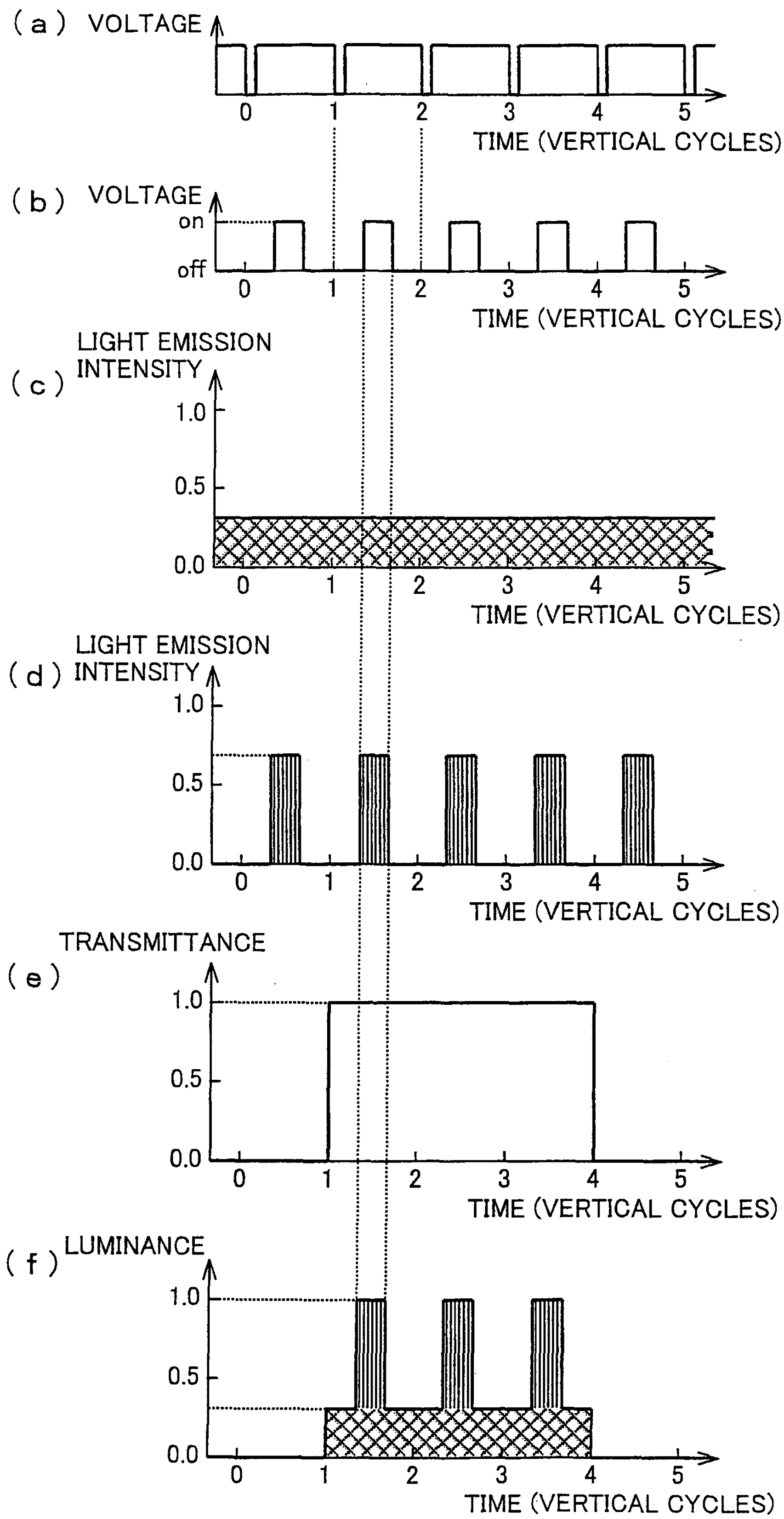
(a) VOLTAGE
0 1 2 3 4 5
TIME (VERTICAL CYCLES)
(b) VOLTAGE
on
off
0 1 2 3 4 5
TIME (VERTICAL CYCLES)
(c) LIGHT EMISSION INTENSITY
1.0
0.5
0.0
0 1 2 3 4 5
TIME (VERTICAL CYCLES)
(d) LIGHT EMISSION INTENSITY
1.0
0.5
0.0
0 1 2 3 4 5
TIME (VERTICAL CYCLES)
(e) TRANSMITTANCE
1.0
0.5
0.0
0 1 2 3 4 5
TIME (VERTICAL CYCLES)
(f) LUMINANCE
1.0
0.5
0.0
0 1 2 3 4 5
TIME (VERTICAL CYCLES)

FIG. 39 (a)

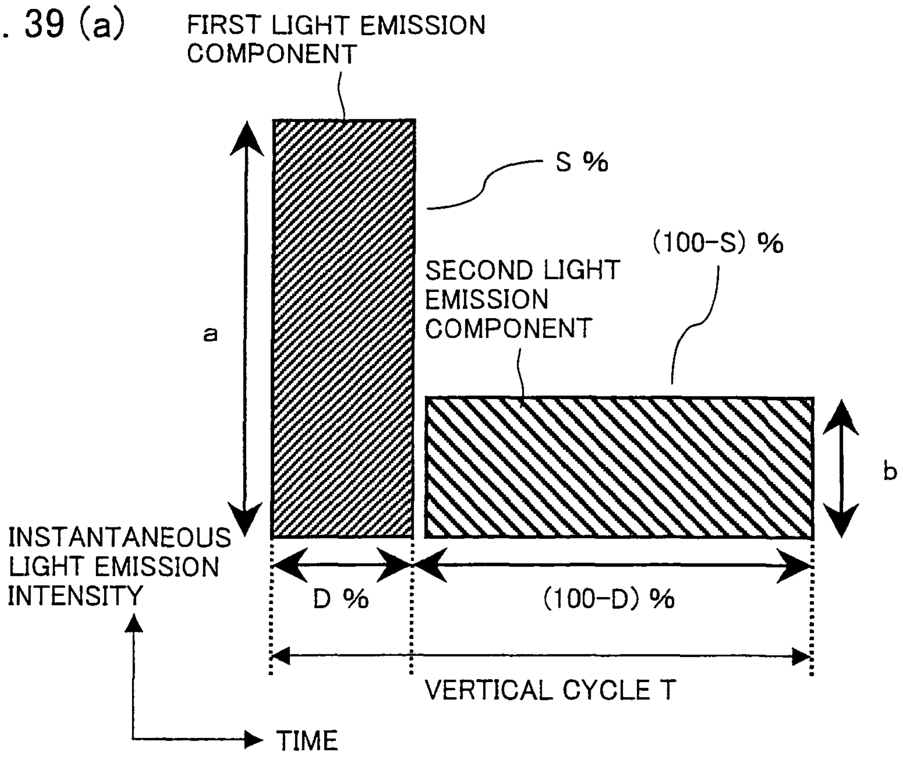


FIG. 39 (b)

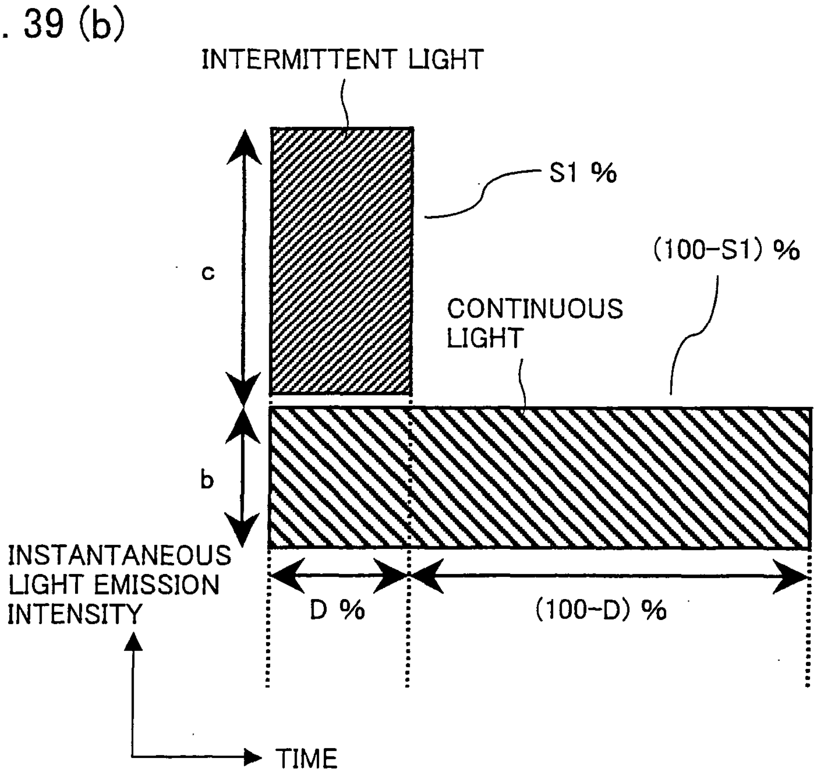

FIG. 40

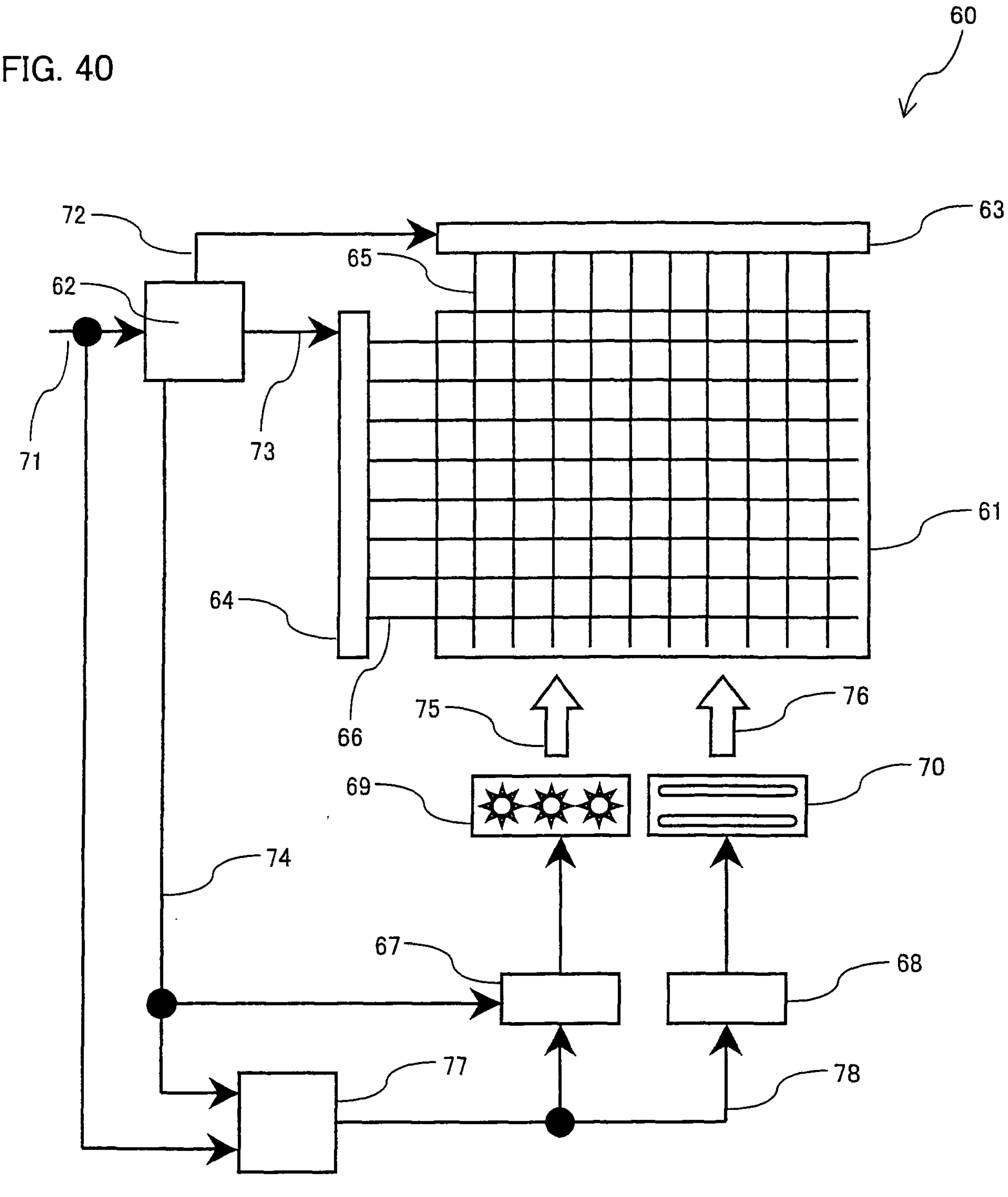

FIG. 41

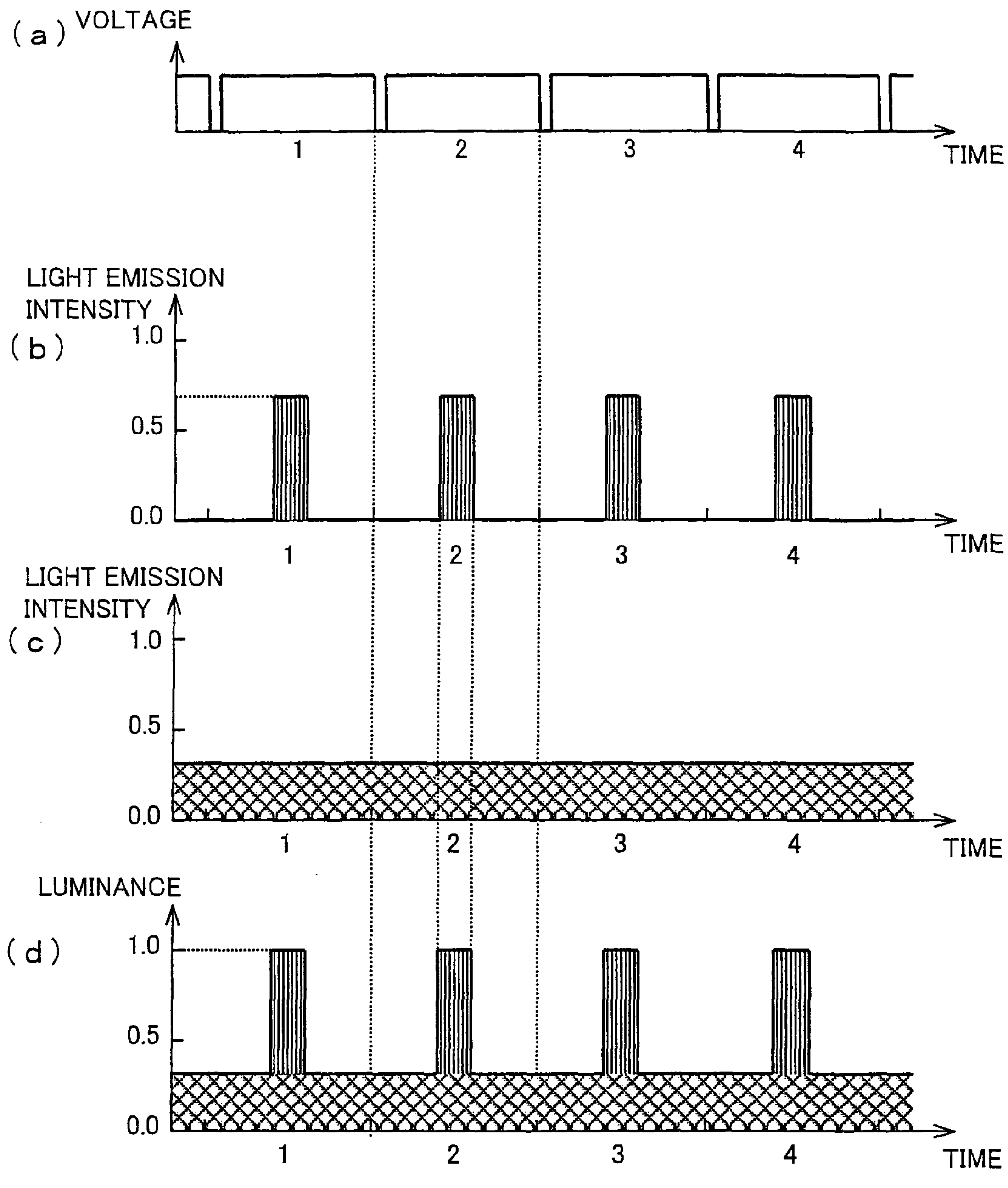

(a) VOLTAGE
1
2
3
4
TIME
LIGHT EMISSION INTENSITY
(b)
1.0
0.5
0.0
1
2
3
4
TIME
LIGHT EMISSION INTENSITY
(c)
1.0
0.5
0.0
1
2
3
4
TIME
LUMINANCE
(d)
1.0
0.5
0.0
1
2
3
4
TIME

FIG. 42 (a)

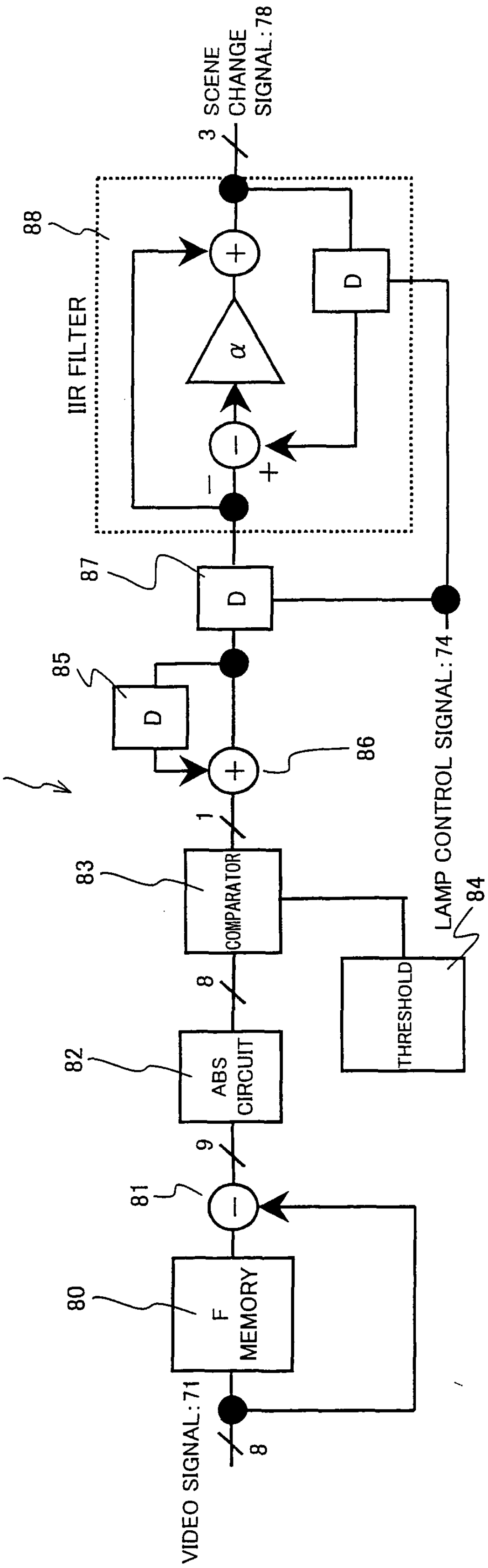


FIG. 42 (b)

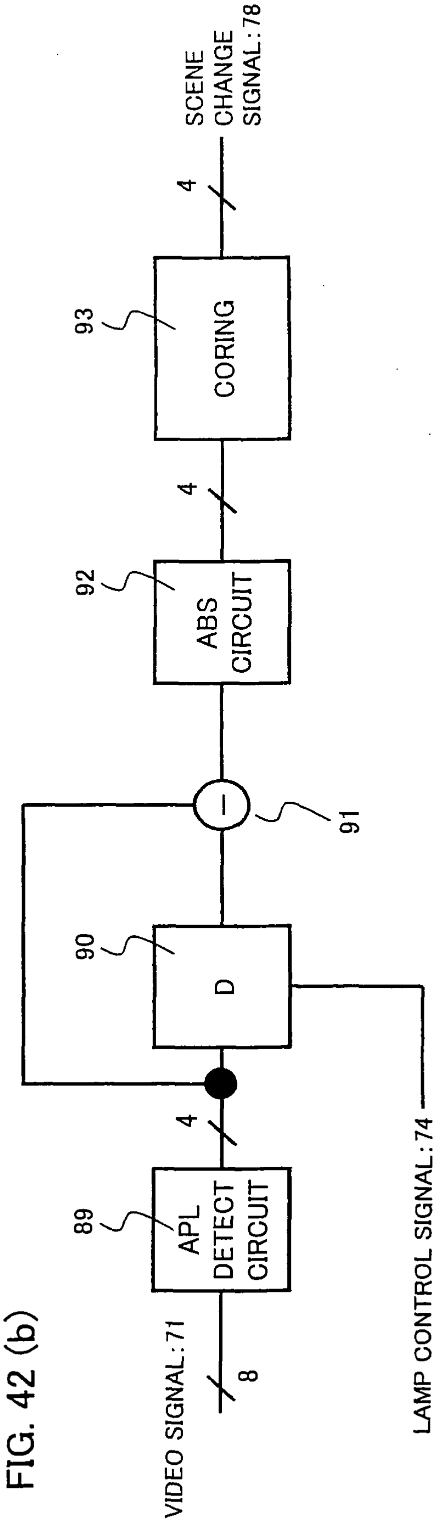

FIG. 43

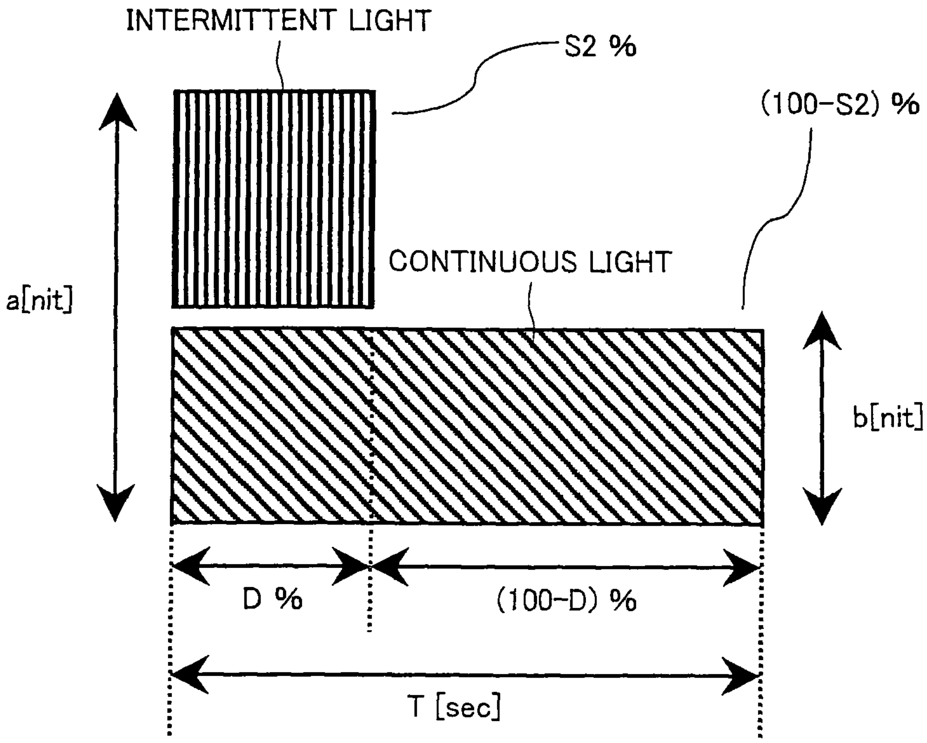
INTERMITTENT LIGHT
S2 %
(100-S2) %
CONTINUOUS LIGHT
a[nit]
b[nit]
D %
(100-D) %
T [sec]

FIG. 44 (a)

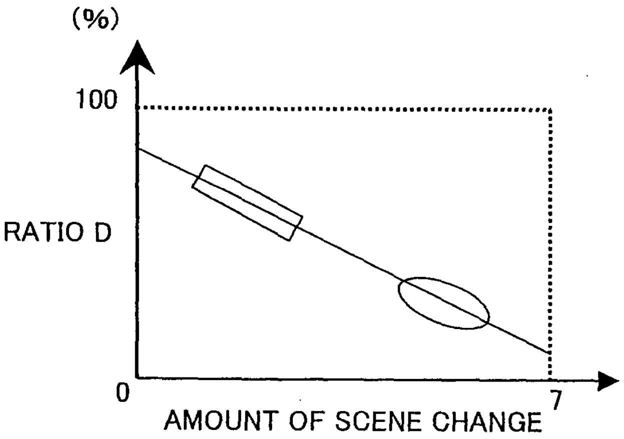


FIG. 44 (b)

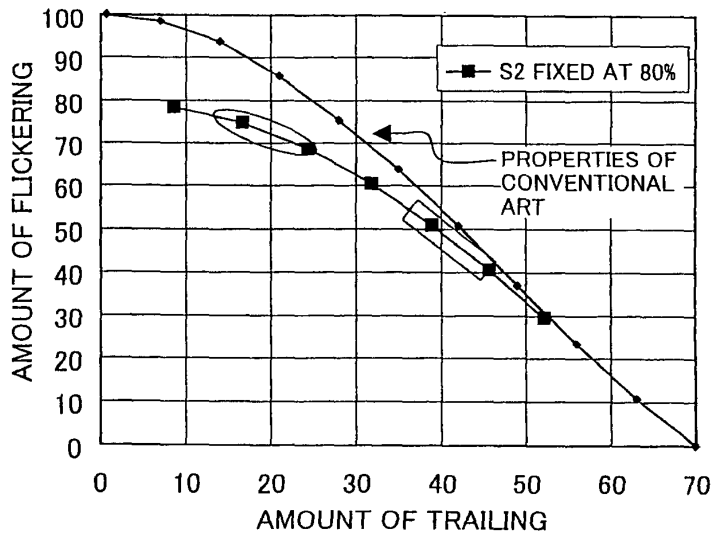


FIG. 44 (c)

| DUTY RATIO D | AMOUNT OF FLICKERING | AMOUNT OF TRAILING |
|---|---|---|
| 10 | 78.38 | 8.5 |
| 20 | 74.82 | 16.7 |
| 30 | 68.65 | 24.4 |
| 40 | 60.41 | 31.8 |
| 50 | 50.93 | 38.9 |
| 60 | 40.59 | 45.7 |
| 70 | 29.51 | 52.1 |

S2 FIXED AT 80%

FIG. 45 (a)

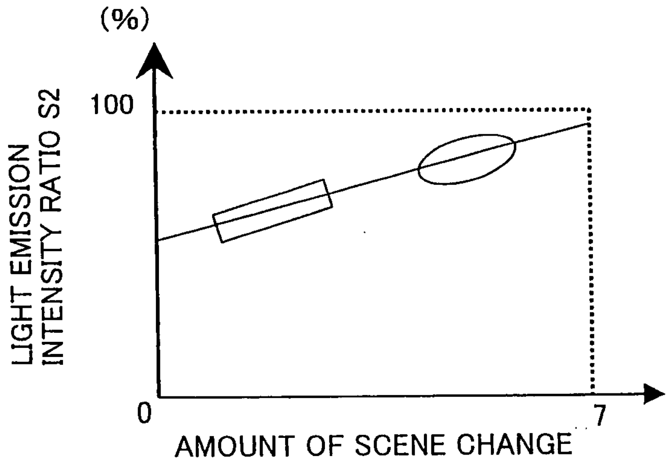


FIG. 45 (b)

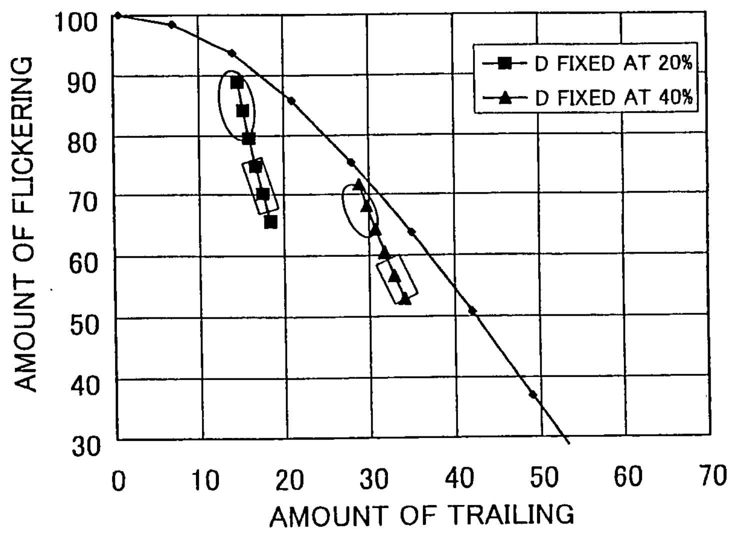


FIG. 45 (c)

| LIGHT EMISSION INTENSITY RATIO S2 | AMOUNT OF FLICKERING | AMOUNT OF TRAILING |
|---|---|---|
| 95 | 88.9 | 14.6 |
| 90 | 84.2 | 15.2 |
| 85 | 79.5 | 15.9 |
| 80 | 74.8 | 16.7 |
| 75 | 70.1 | 17.5 |
| 70 | 65.4 | 18.4 |

D FIXED AT 20%

FIG. 45 (d)

| LIGHT EMISSION INTENSITY RATIO S2 | AMOUNT OF FLICKERING | AMOUNT OF TRAILING |
|---|---|---|
| 95 | 71.7 | 28.9 |
| 90 | 67.9 | 29.8 |
| 85 | 64.2 | 30.8 |
| 80 | 60.4 | 31.8 |
| 75 | 56.7 | 32.9 |
| 70 | 52.9 | 34.1 |

D FIXED AT 40%

FIG. 46 (a)

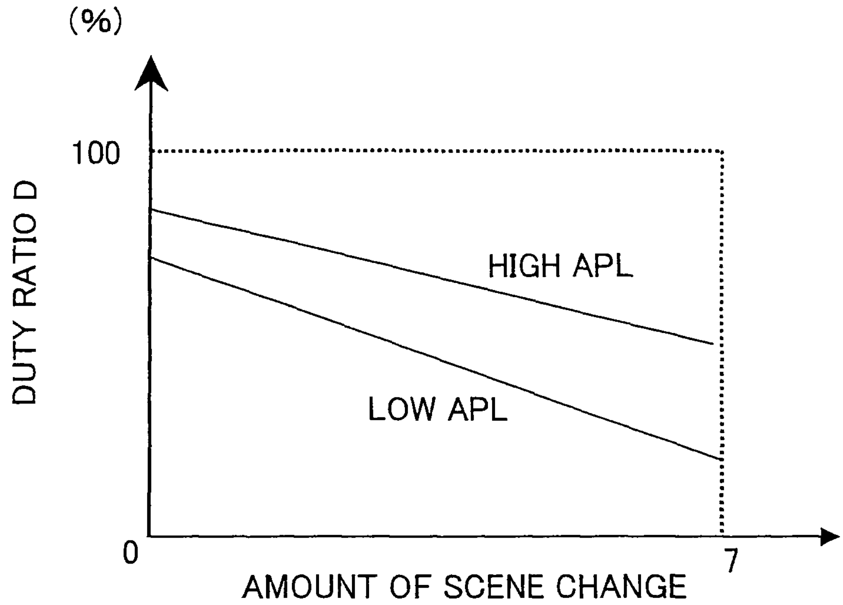


FIG. 46 (b)

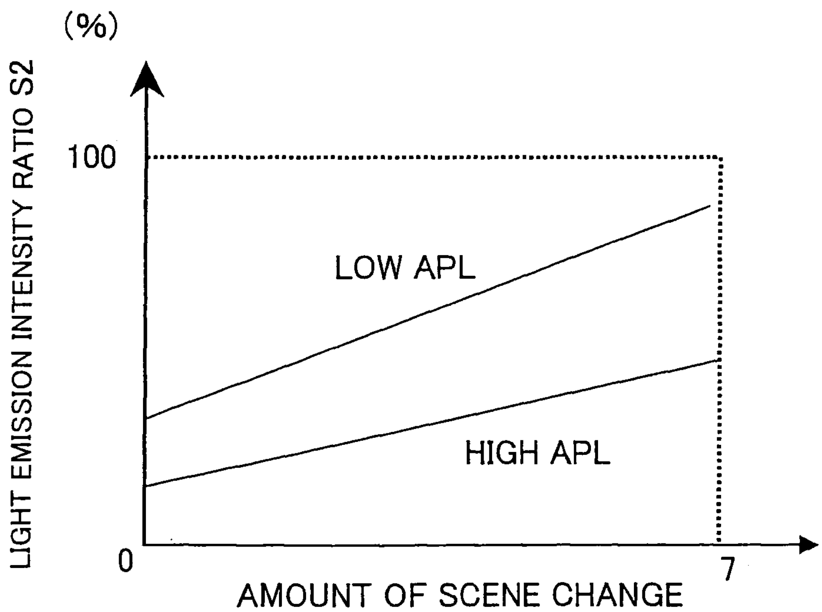

FIG. 47

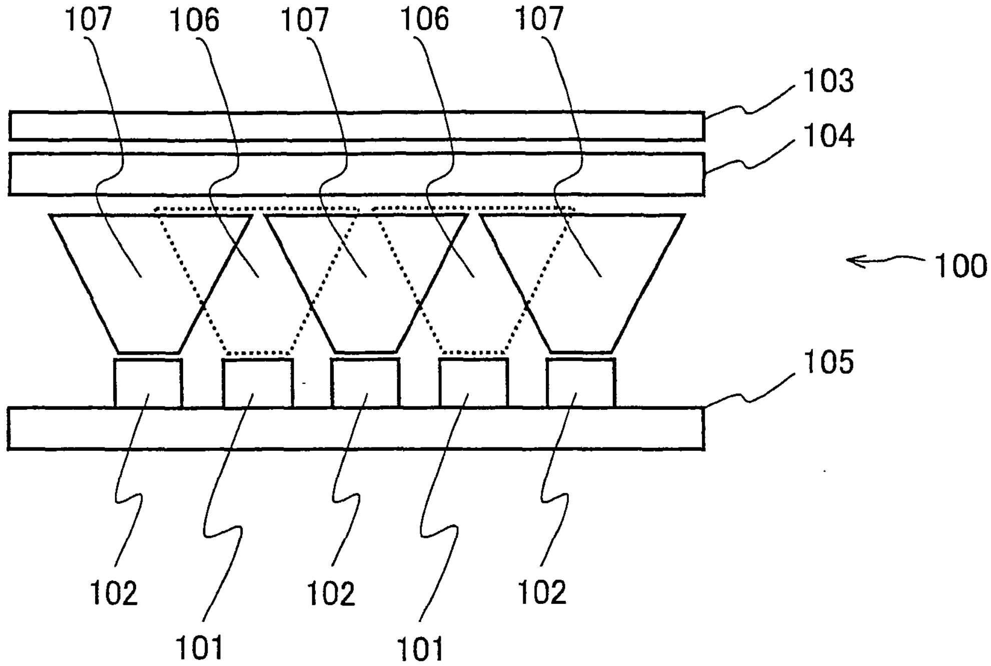

FIG. 48

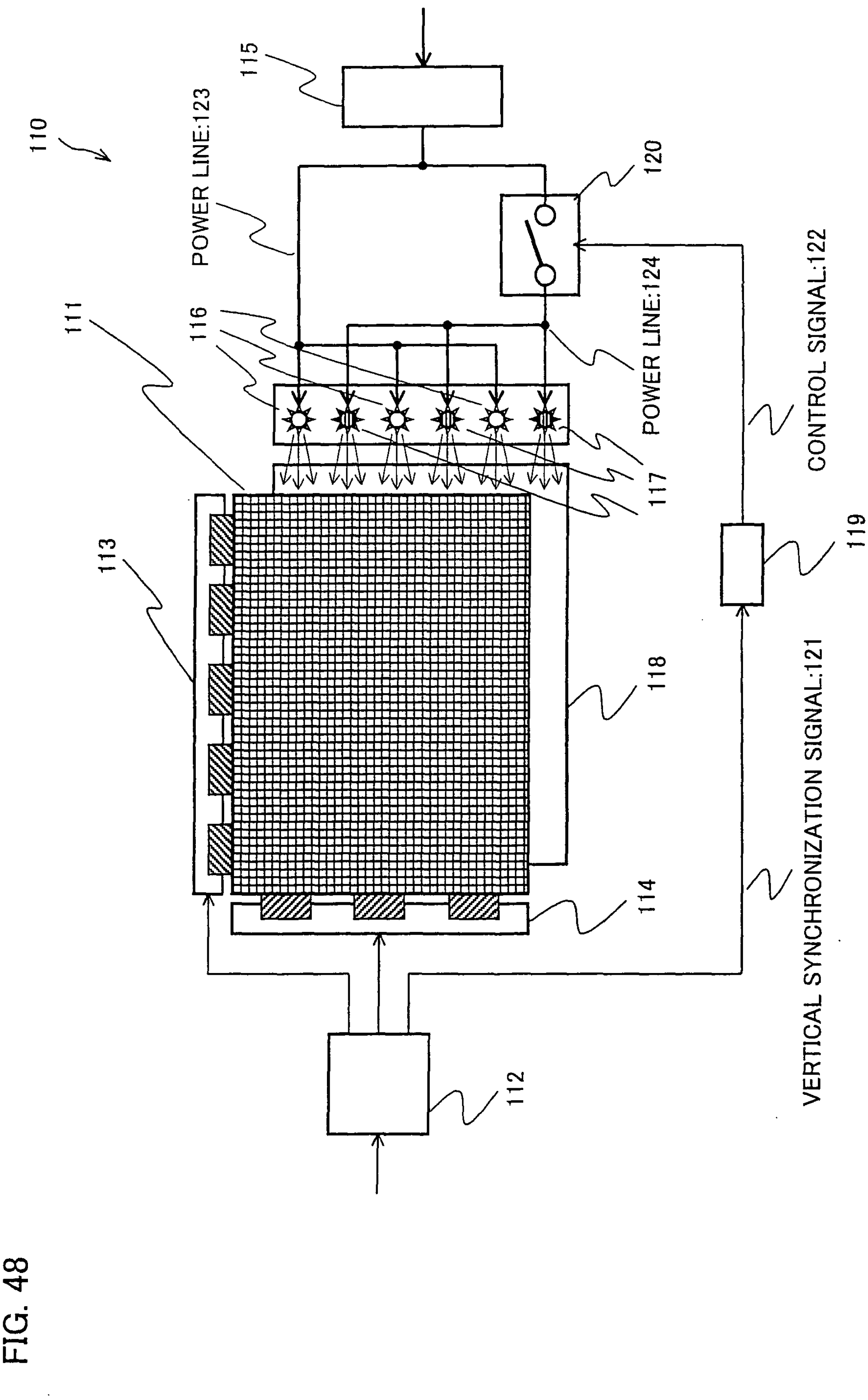
110
111
112
113
114
115
116
117
118
119
120
POWER LINE:123
POWER LINE:124
CONTROL SIGNAL:122
VERTICAL SYNCHRONIZATION SIGNAL:121

FIG. 49

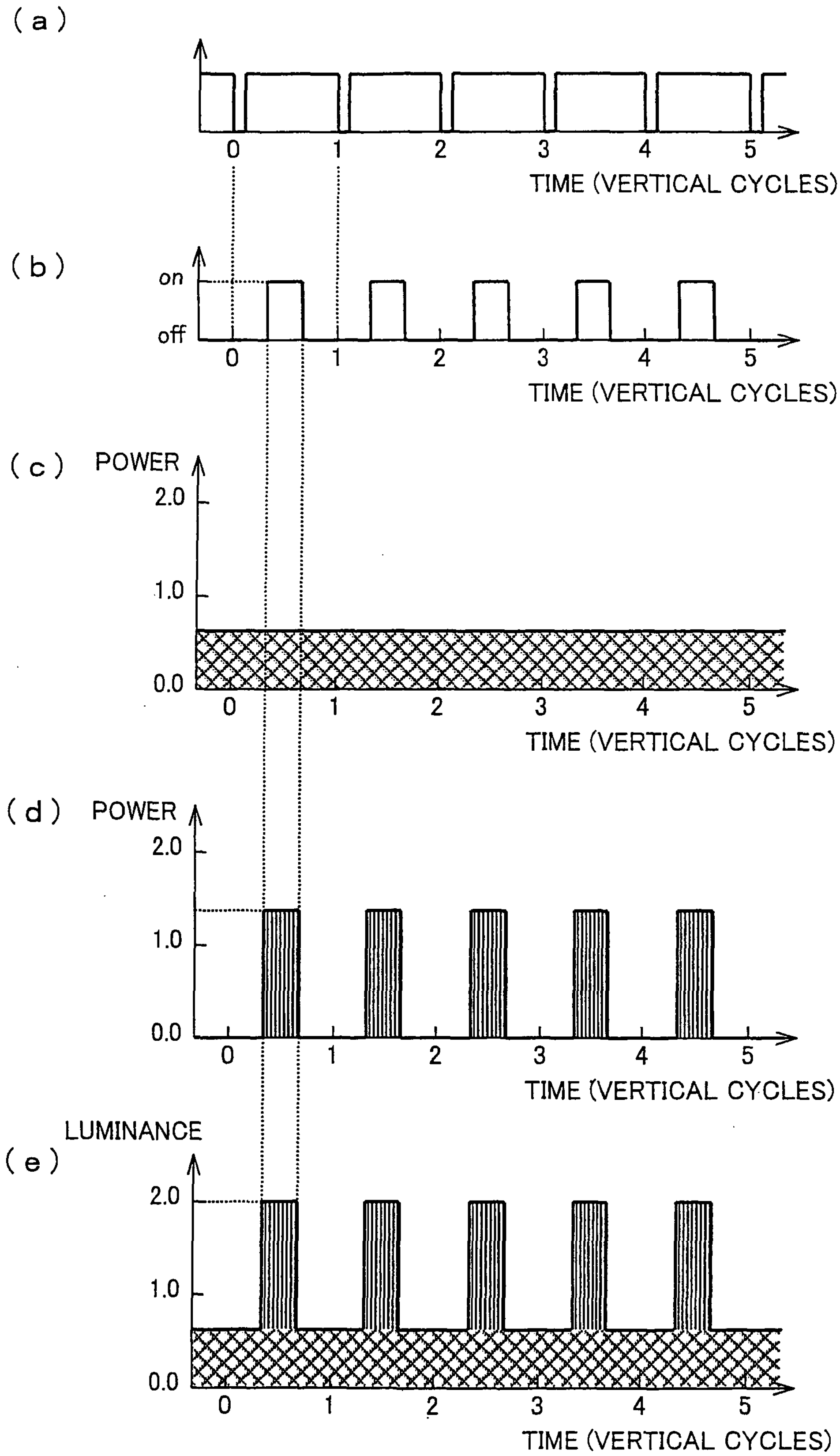
(a)
0
1
2
3
4
5
TIME (VERTICAL CYCLES)
(b)
on
off
0
1
2
3
4
5
TIME (VERTICAL CYCLES)
(c)
POWER
2.0
1.0
0.0
0
1
2
3
4
5
TIME (VERTICAL CYCLES)
(d)
POWER
2.0
1.0
0.0
0
1
2
3
4
5
TIME (VERTICAL CYCLES)
LUMINANCE
(e)
2.0
1.0
0.0
0
1
2
3
4
5
TIME (VERTICAL CYCLES)

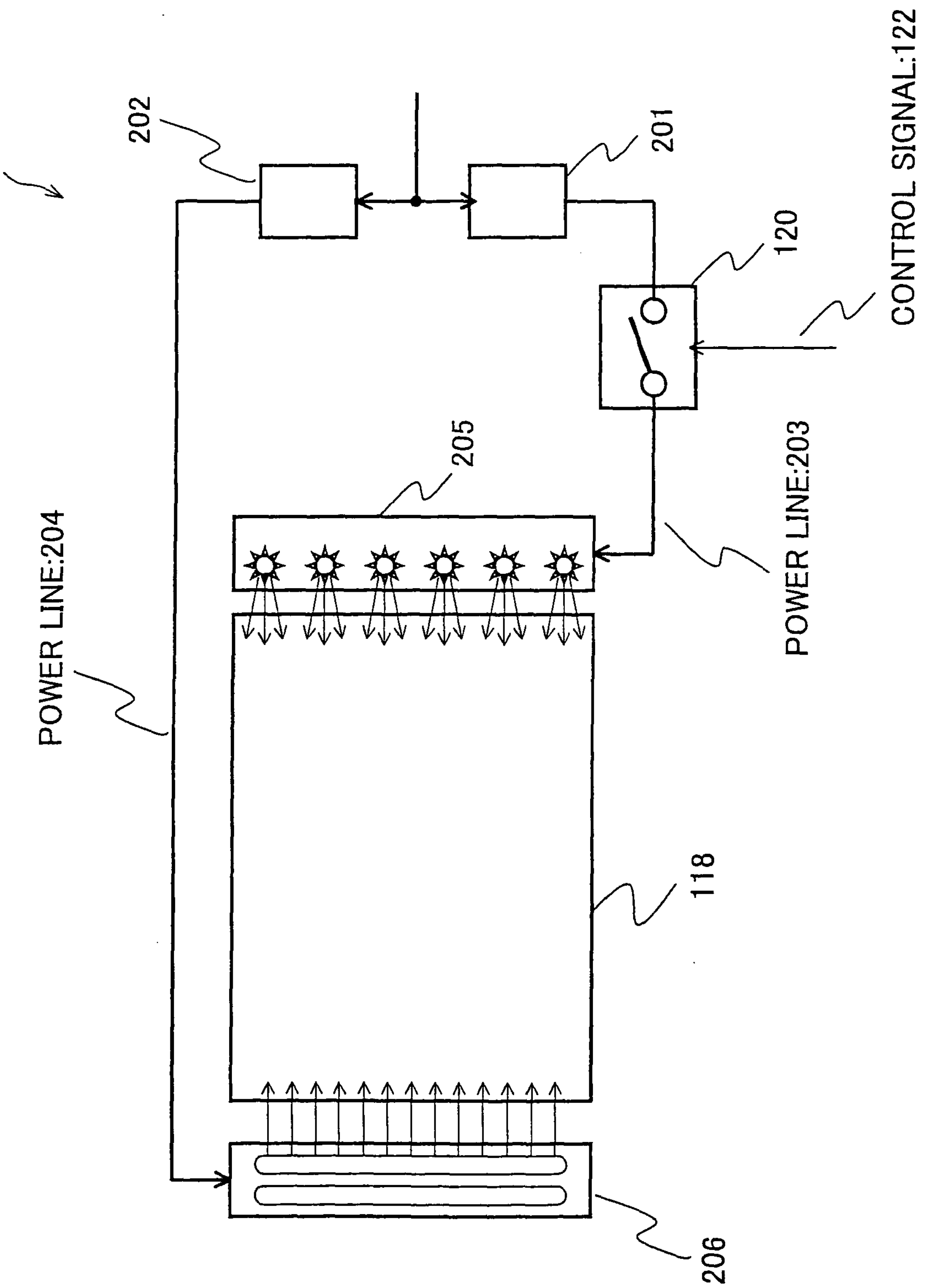
200
202
201
120
CONTROL SIGNAL:122
205
POWER LINE:203
POWER LINE:204
118
206

FIG. 50

FIG. 51

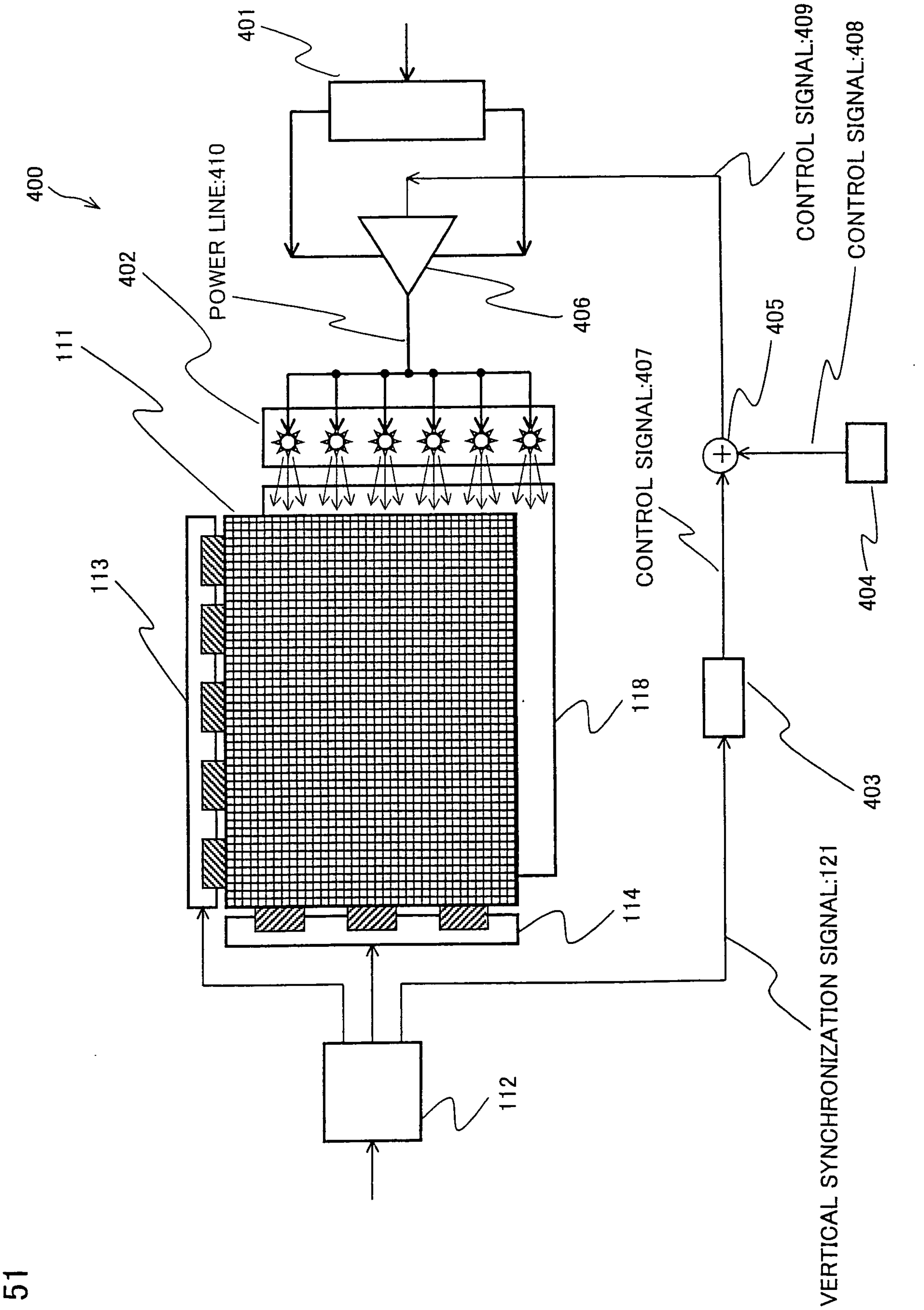
400
401
402
POWER LINE:410
406
111
113
CONTROL SIGNAL:409
CONTROL SIGNAL:408
405
CONTROL SIGNAL:407
404
118
403
114
112
VERTICAL SYNCHRONIZATION SIGNAL:121

FIG. 52

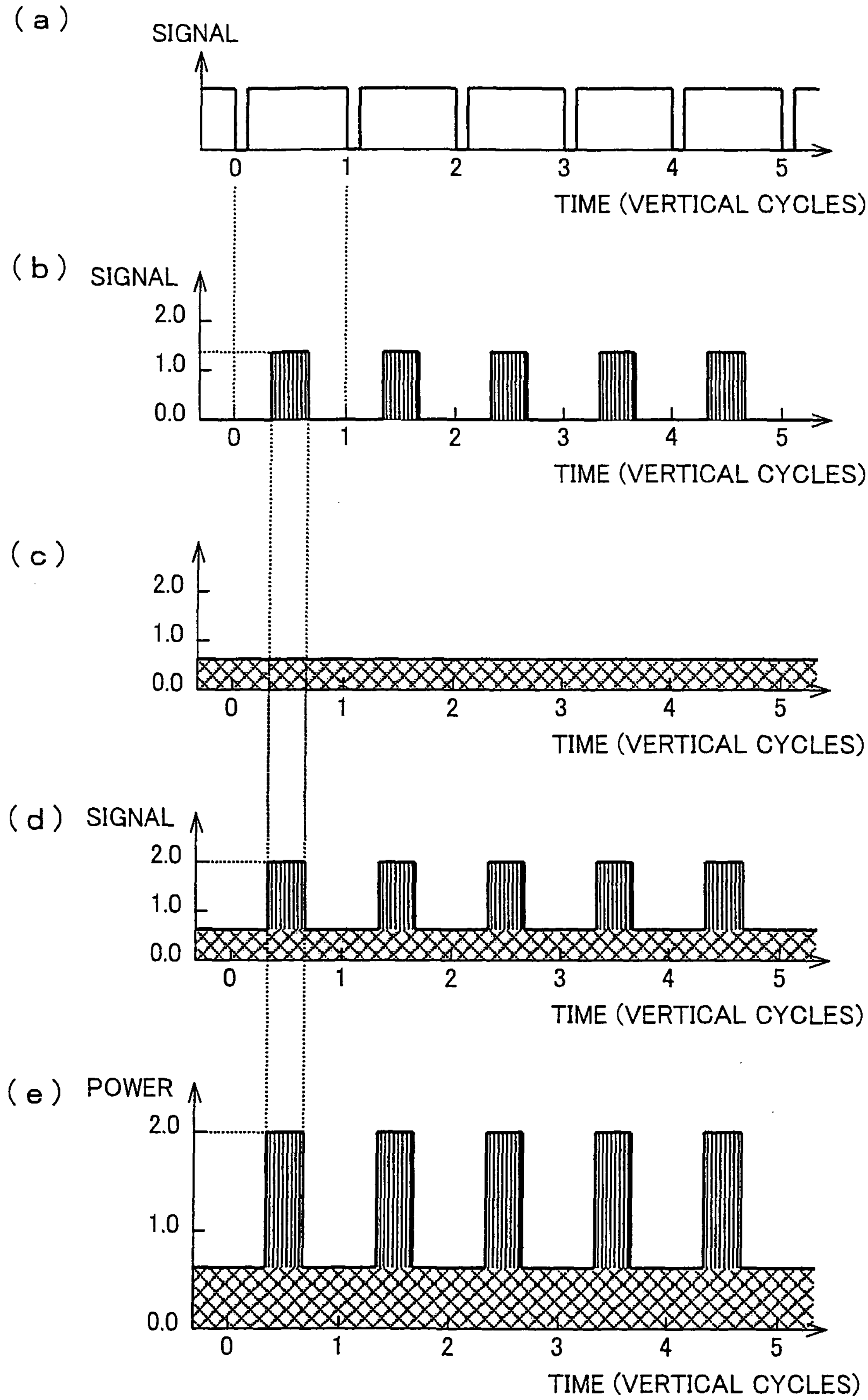
(a)
SIGNAL
0
1
2
3
4
5
TIME (VERTICAL CYCLES)
(b)
SIGNAL
2.0
1.0
0.0
0
1
2
3
4
5
TIME (VERTICAL CYCLES)
(c)
2.0
1.0
0.0
0
1
2
3
4
5
TIME (VERTICAL CYCLES)
(d)
SIGNAL
2.0
1.0
0.0
0
1
2
3
4
5
TIME (VERTICAL CYCLES)
(e)
POWER
2.0
1.0
0.0
0
1
2
3
4
5
TIME (VERTICAL CYCLES)

FIG. 53

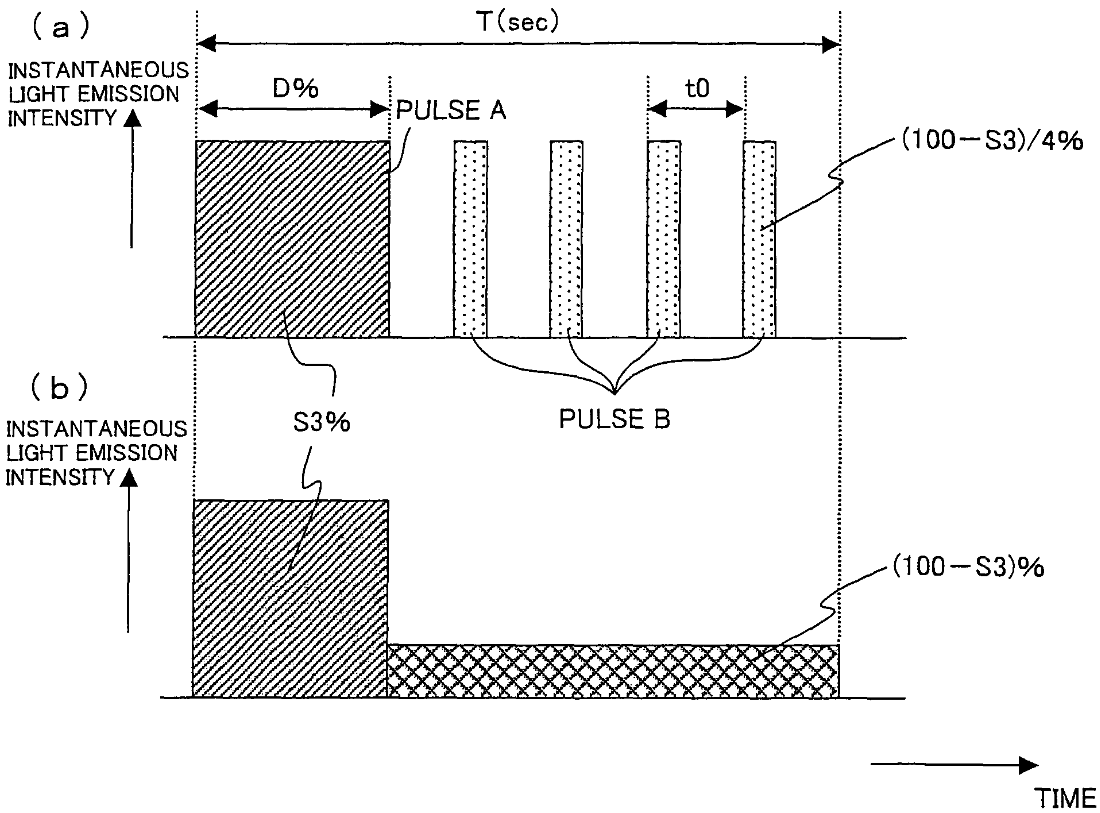
(a)
T(sec)
INSTANTANEOUS LIGHT EMISSION INTENSITY
D%
PULSE A
t0
(100−S3)/4%
S3%
PULSE B
(b)
INSTANTANEOUS LIGHT EMISSION INTENSITY
(100−S3)%
TIME

FIG. 54

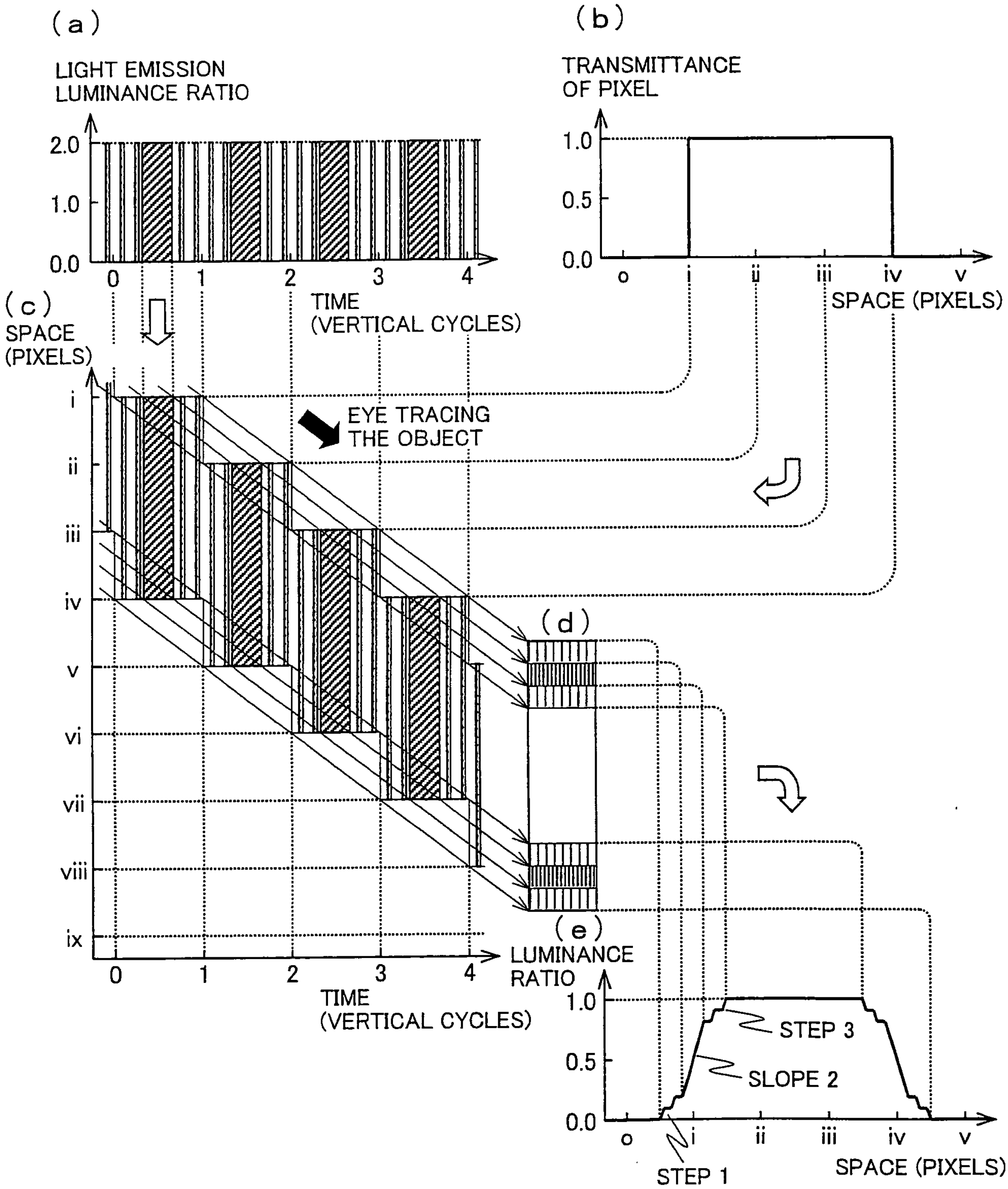
(a)
LIGHT EMISSION LUMINANCE RATIO
2.0
1.0
0.0
0
1
2
3
4
TIME (VERTICAL CYCLES)
(b)
TRANSMITTANCE OF PIXEL
1.0
0.5
0.0
o
i
ii
iii
iv
v
SPACE (PIXELS)
(c)
SPACE (PIXELS)
i
ii
iii
iv
v
vi
vii
viii
ix
EYE TRACING THE OBJECT
TIME (VERTICAL CYCLES)
(d)
(e)
LUMINANCE RATIO
1.0
0.5
0.0
STEP 3
SLOPE 2
STEP 1
SPACE (PIXELS)

FIG. 55 (a)

LIGHT EMISSION WAVEFORM OF PRESENT EMBODIMENT

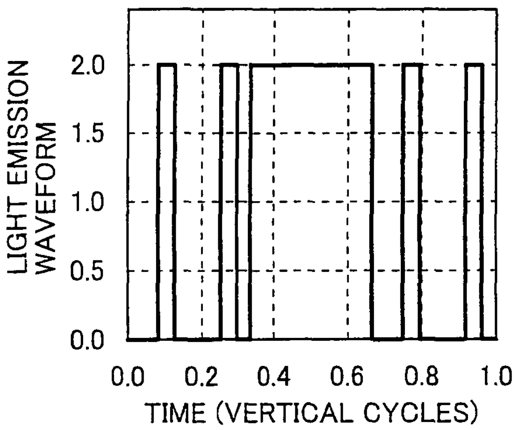


FIG. 55 (b)

CONVENTIONAL LIGHT EMISSION WAVEFORM

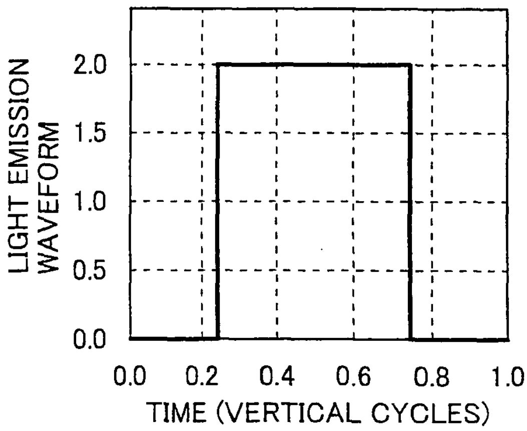


FIG. 55 (c)

COMPARISON OF HARMONICS

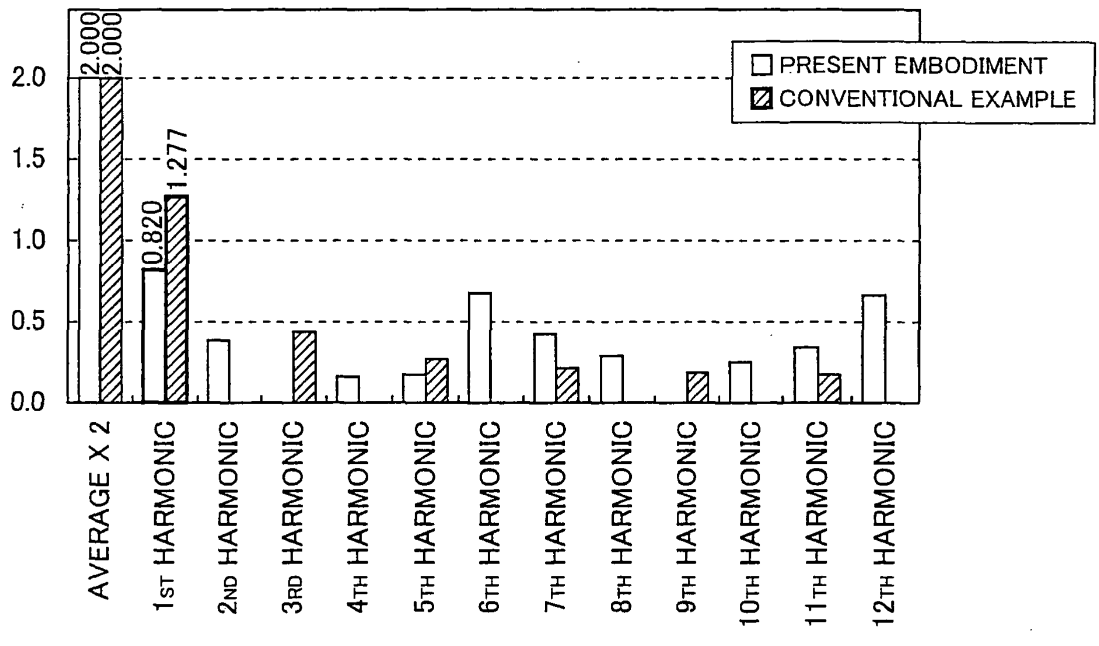

FIG. 56

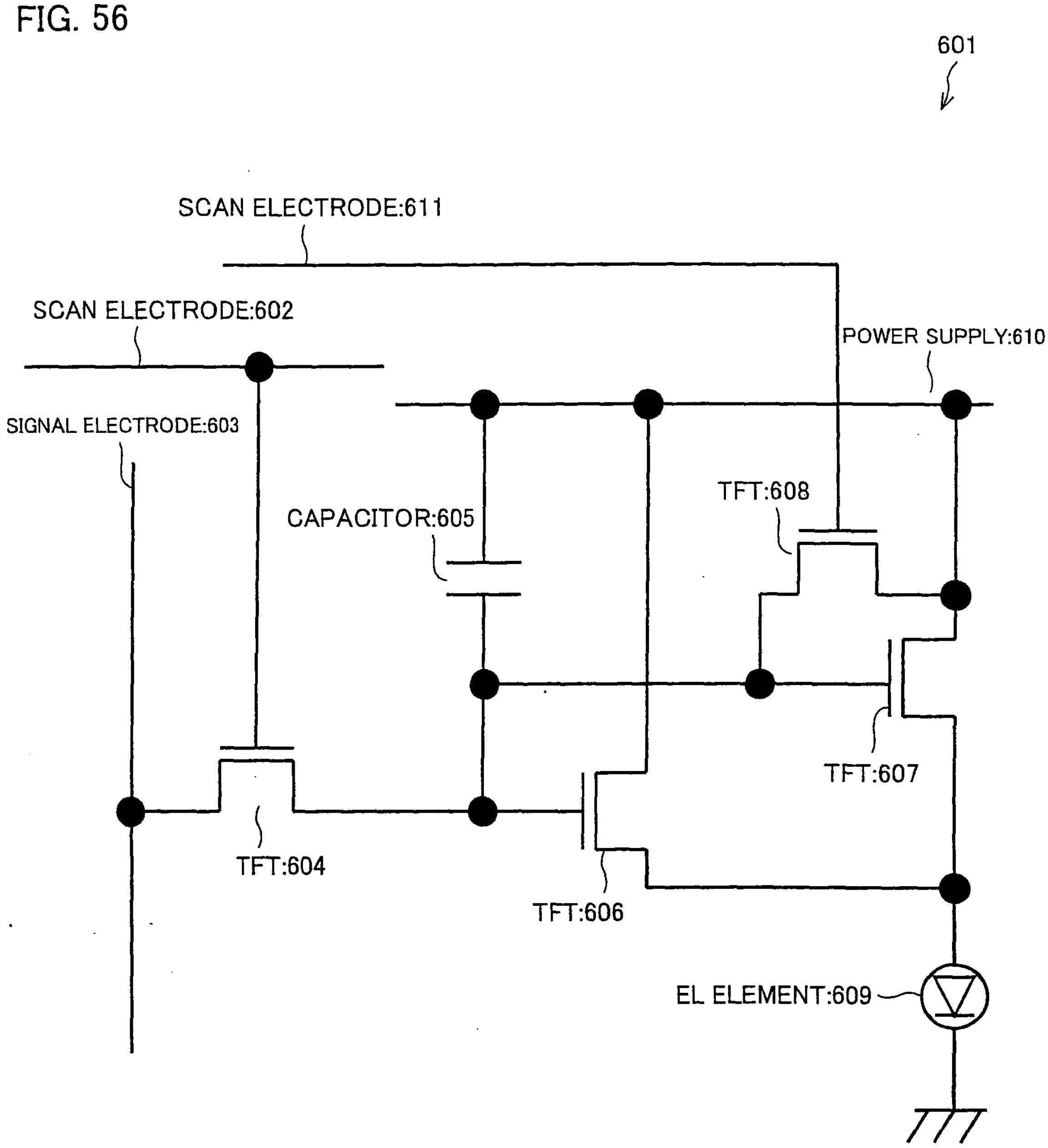
601
SCAN ELECTRODE:611
SCAN ELECTRODE:602
POWER SUPPLY:610
SIGNAL ELECTRODE:603
TFT:608
CAPACITOR:605
TFT:607
TFT:604
TFT:606
EL ELEMENT:609

FIG. 57

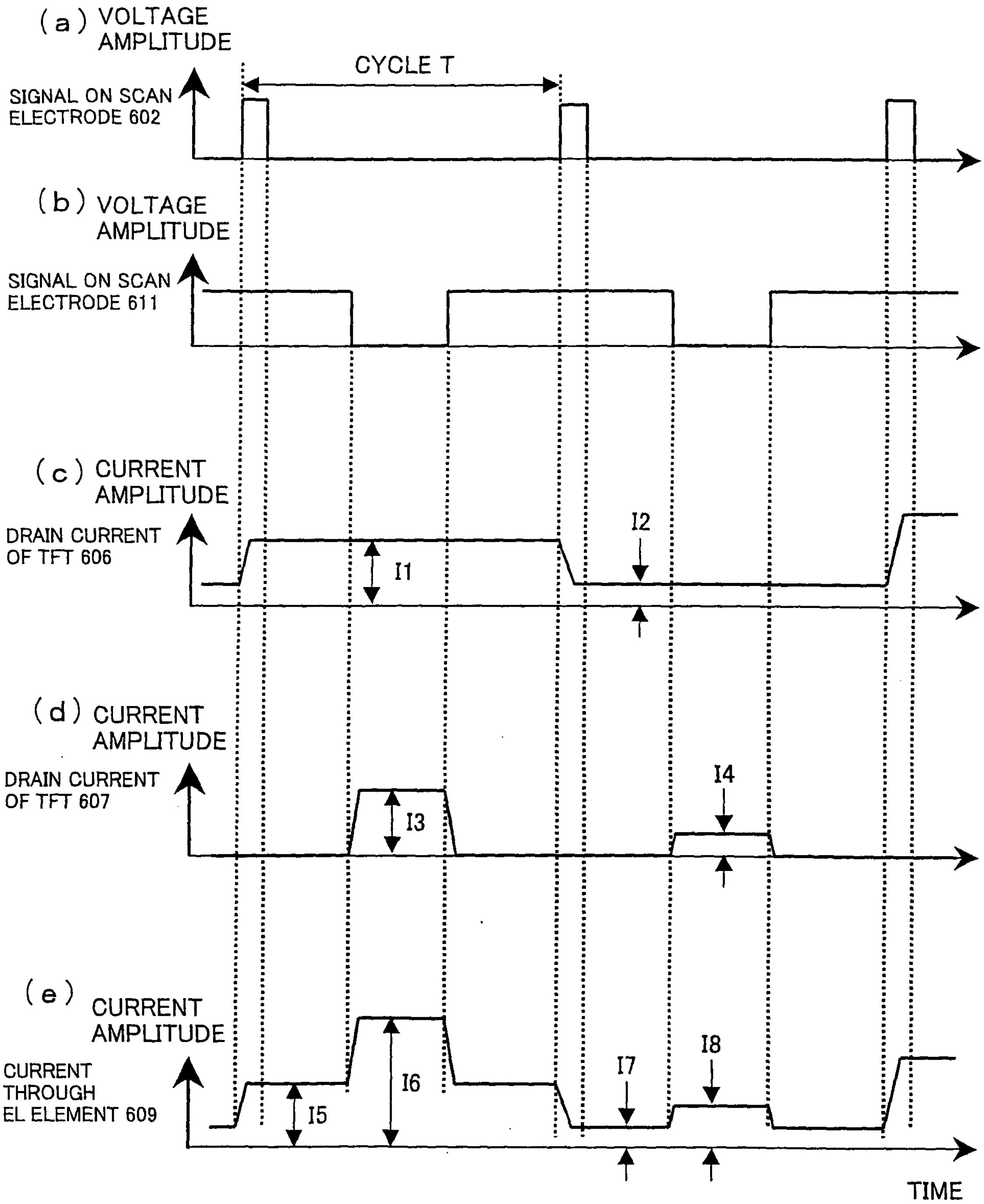
(a) VOLTAGE AMPLITUDE
CYCLE T
SIGNAL ON SCAN ELECTRODE 602
(b) VOLTAGE AMPLITUDE
SIGNAL ON SCAN ELECTRODE 611
(c) CURRENT AMPLITUDE
DRAIN CURRENT OF TFT 606
I1
I2
(d) CURRENT AMPLITUDE
DRAIN CURRENT OF TFT 607
I3
I4
(e) CURRENT AMPLITUDE
CURRENT THROUGH EL ELEMENT 609
I5
I6
I7
I8
TIME

FIG. 58

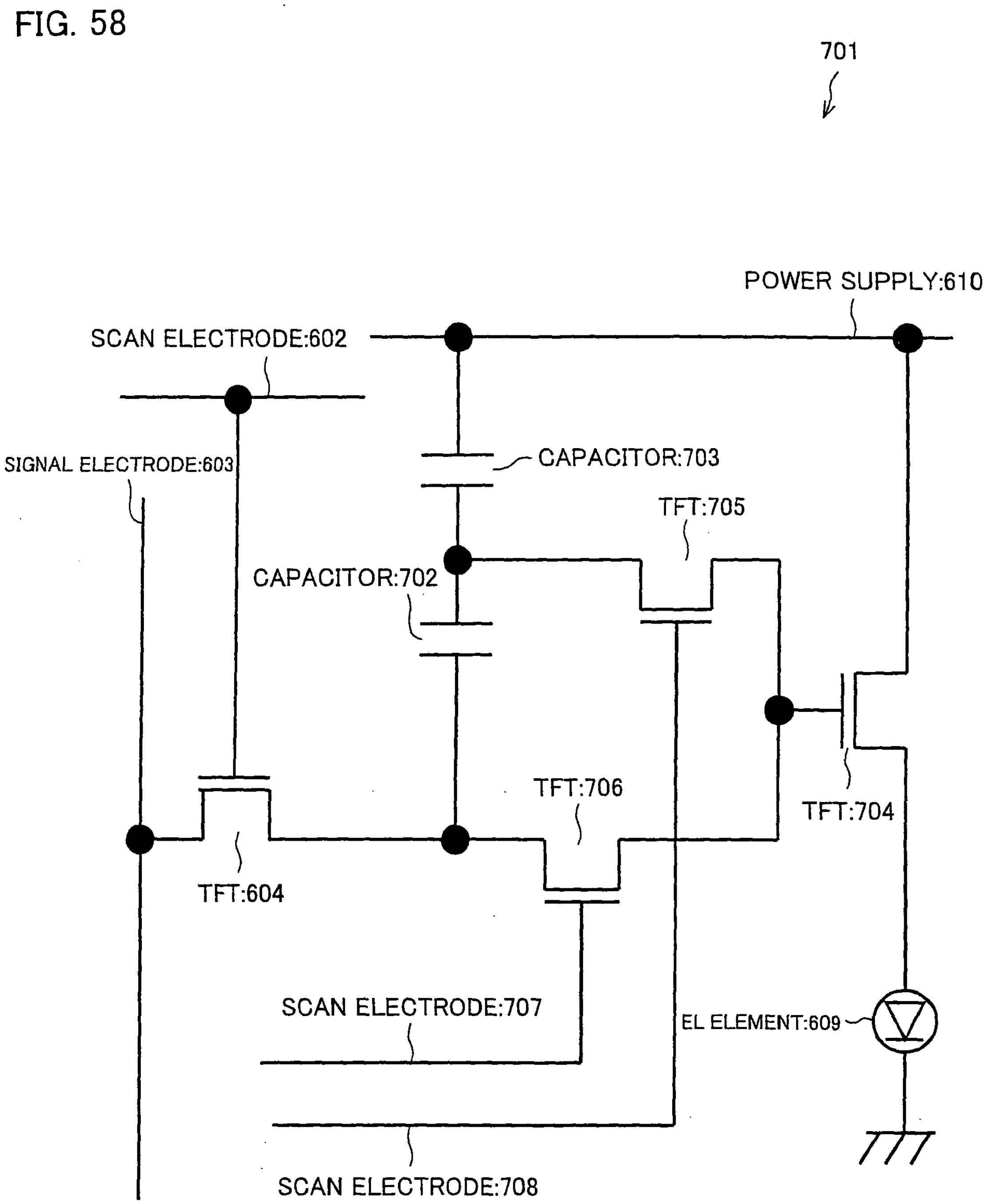
701
POWER SUPPLY:610
SCAN ELECTRODE:602
SIGNAL ELECTRODE:603
CAPACITOR:703
TFT:705
CAPACITOR:702
TFT:706
TFT:704
TFT:604
SCAN ELECTRODE:707
EL ELEMENT:609
SCAN ELECTRODE:708

FIG. 59

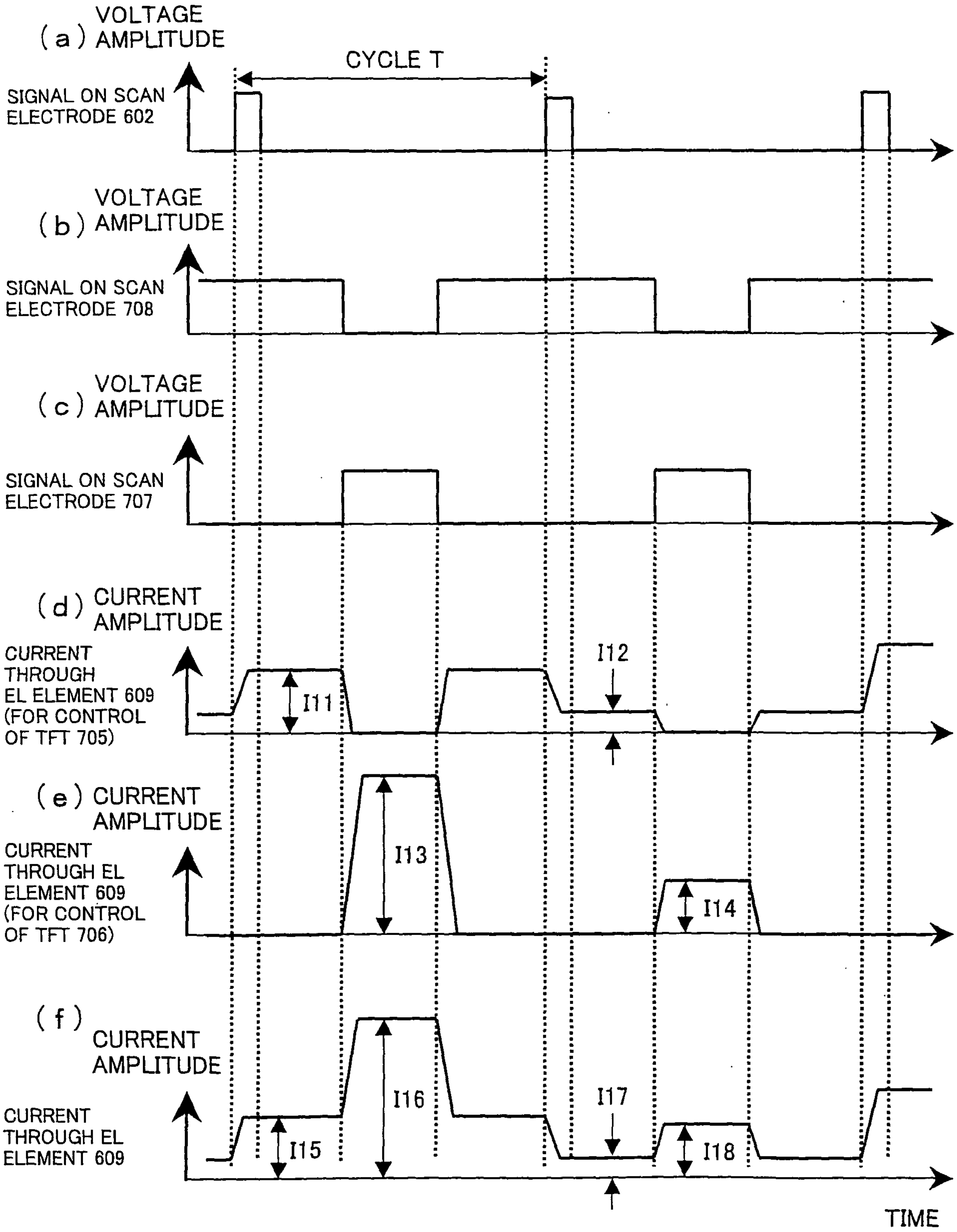
(a) VOLTAGE AMPLITUDE
CYCLE T
SIGNAL ON SCAN ELECTRODE 602
(b) VOLTAGE AMPLITUDE
SIGNAL ON SCAN ELECTRODE 708
(c) VOLTAGE AMPLITUDE
SIGNAL ON SCAN ELECTRODE 707
(d) CURRENT AMPLITUDE
CURRENT THROUGH EL ELEMENT 609 (FOR CONTROL OF TFT 705)
I11
I12
(e) CURRENT AMPLITUDE
CURRENT THROUGH EL ELEMENT 609 (FOR CONTROL OF TFT 706)
I13
I14
(f) CURRENT AMPLITUDE
CURRENT THROUGH EL ELEMENT 609
I15
I16
I17
I18
TIME

FIG. 60

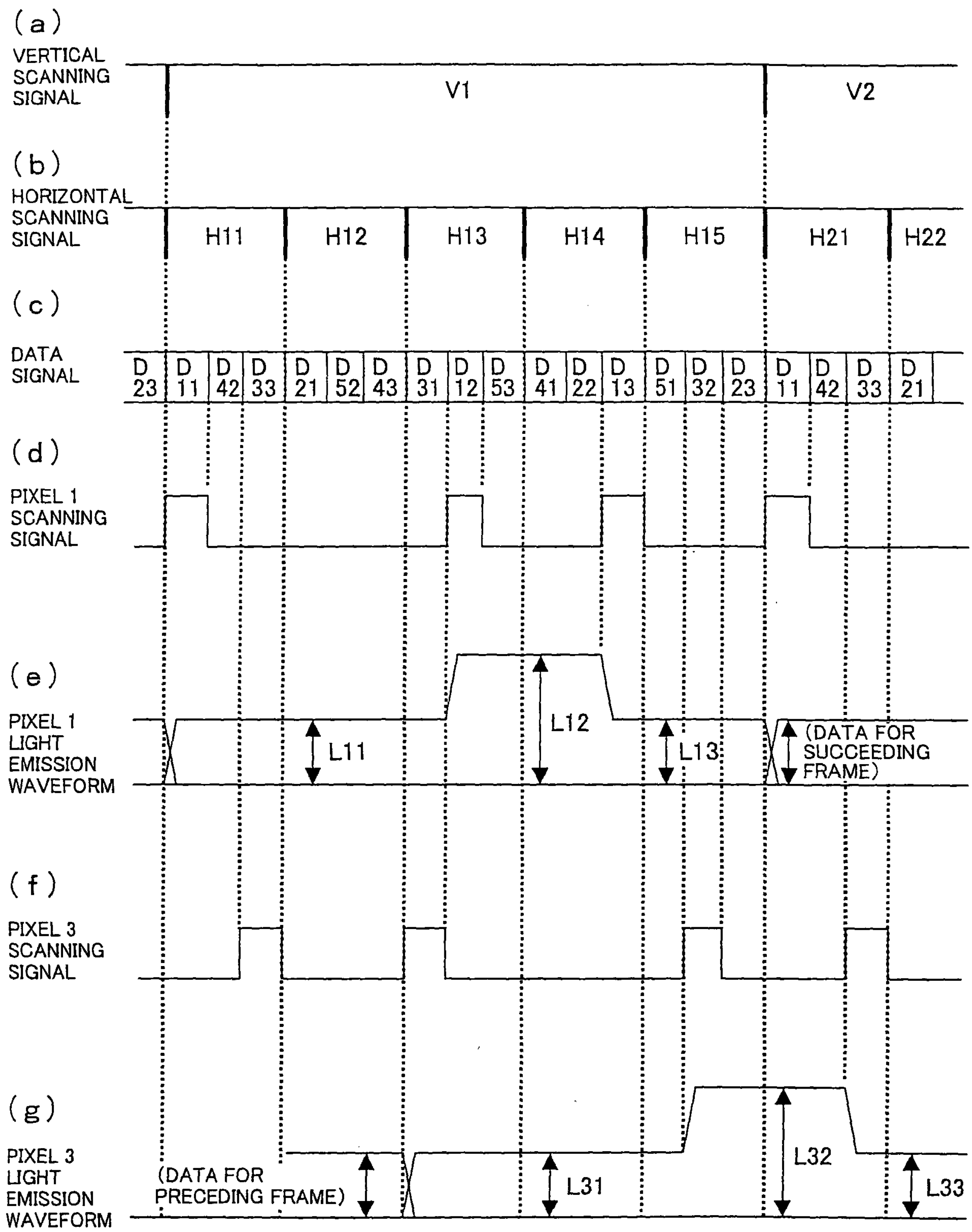
(a)
VERTICAL SCANNING SIGNAL
V1
V2
(b)
HORIZONTAL SCANNING SIGNAL
H11
H12
H13
H14
H15
H21
H22
(c)
DATA SIGNAL
D 23
D 11
D 42
D 33
D 21
D 52
D 43
D 31
D 12
D 53
D 41
D 22
D 13
D 51
D 32
D 23
D 11
D 42
D 33
D 21
(d)
PIXEL 1 SCANNING SIGNAL
(e)
PIXEL 1 LIGHT EMISSION WAVEFORM
L11
L12
L13
(DATA FOR SUCCEEDING FRAME)
(f)
PIXEL 3 SCANNING SIGNAL
(g)
PIXEL 3 LIGHT EMISSION WAVEFORM
(DATA FOR PRECEDING FRAME)
L31
L32
L33

FIG.61

(a)

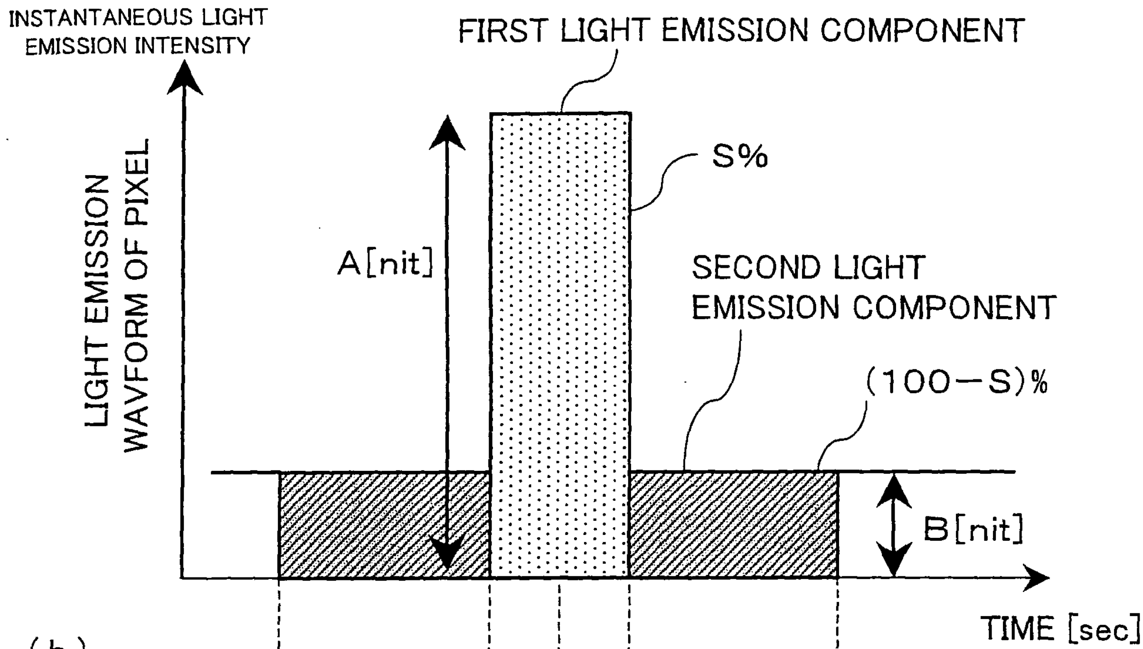
INSTANTANEOUS LIGHT EMISSION INTENSITY
LIGHT EMISSION WAVFORM OF PIXEL
FIRST LIGHT EMISSION COMPONENT
S%
A[nit]
SECOND LIGHT EMISSION COMPONENT
(100−S)%
B[nit]
TIME [sec]

(b)

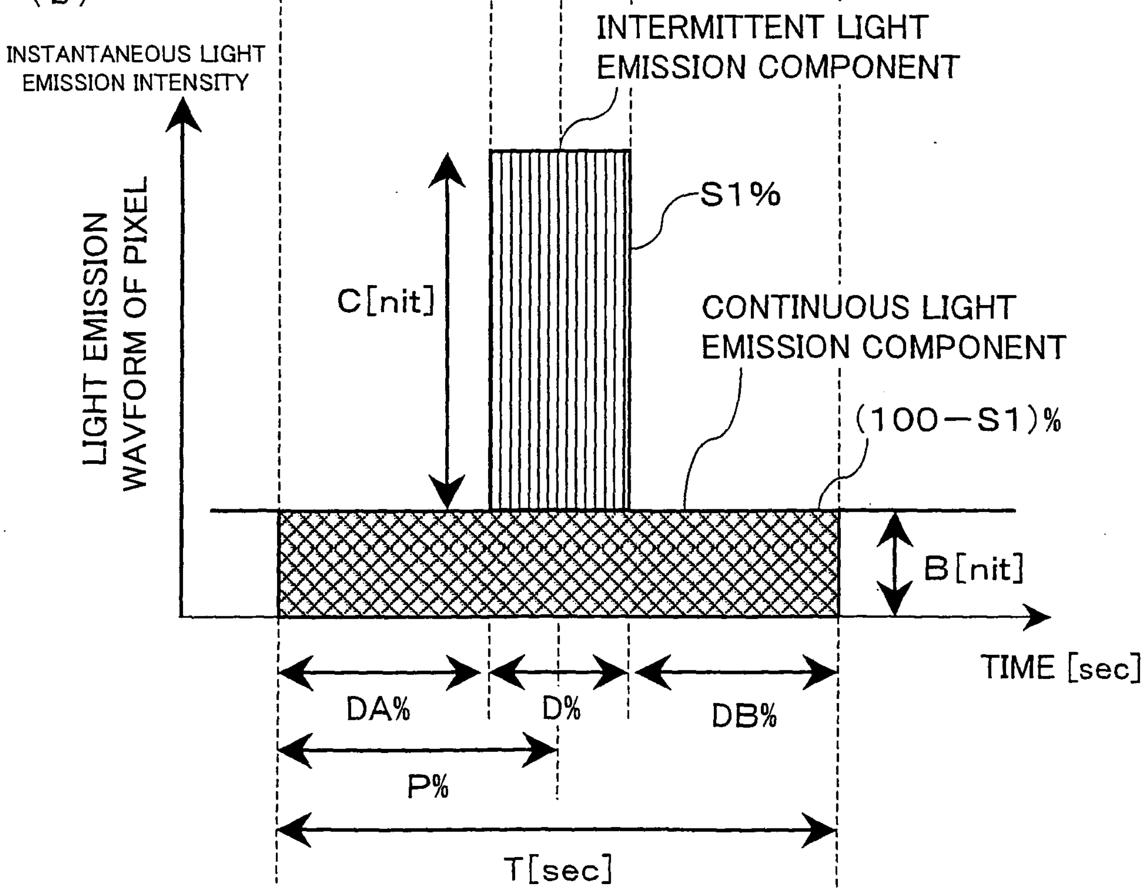
INSTANTANEOUS LIGHT EMISSION INTENSITY
LIGHT EMISSION WAVFORM OF PIXEL
INTERMITTENT LIGHT EMISSION COMPONENT
S1%
C[nit]
CONTINUOUS LIGHT EMISSION COMPONENT
(100−S1)%
B[nit]
TIME [sec]
DA%
D%
DB%
P%
T[sec]

FIG.62

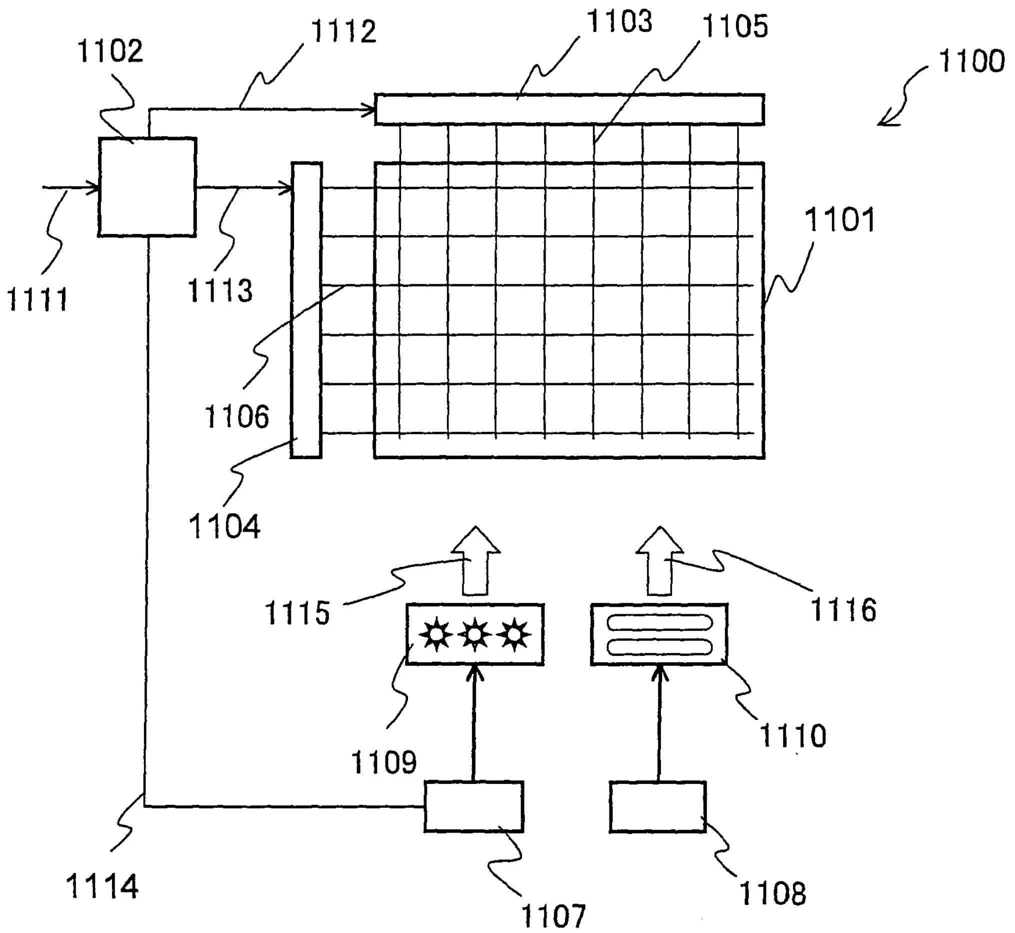
1100
1101
1102
1103
1104
1105
1106
1107
1108
1109
1110
1111
1112
1113
1114
1115
1116

FIG.63

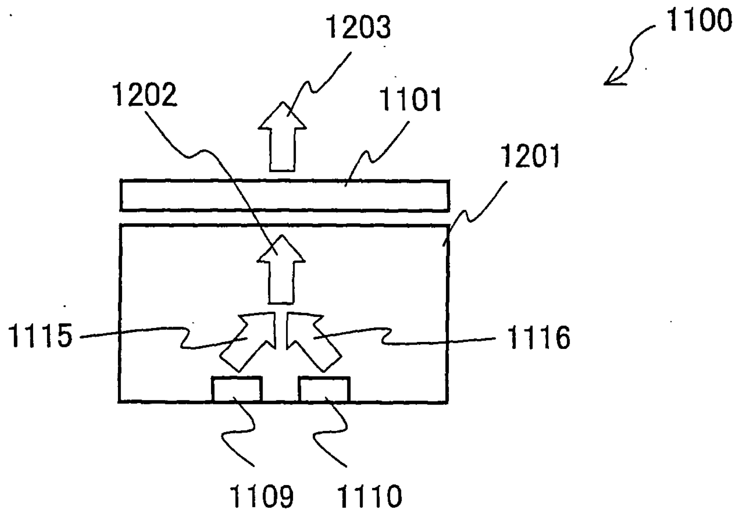
1100
1101
1109
1110
1115
1116
1201
1202
1203

FIG.64

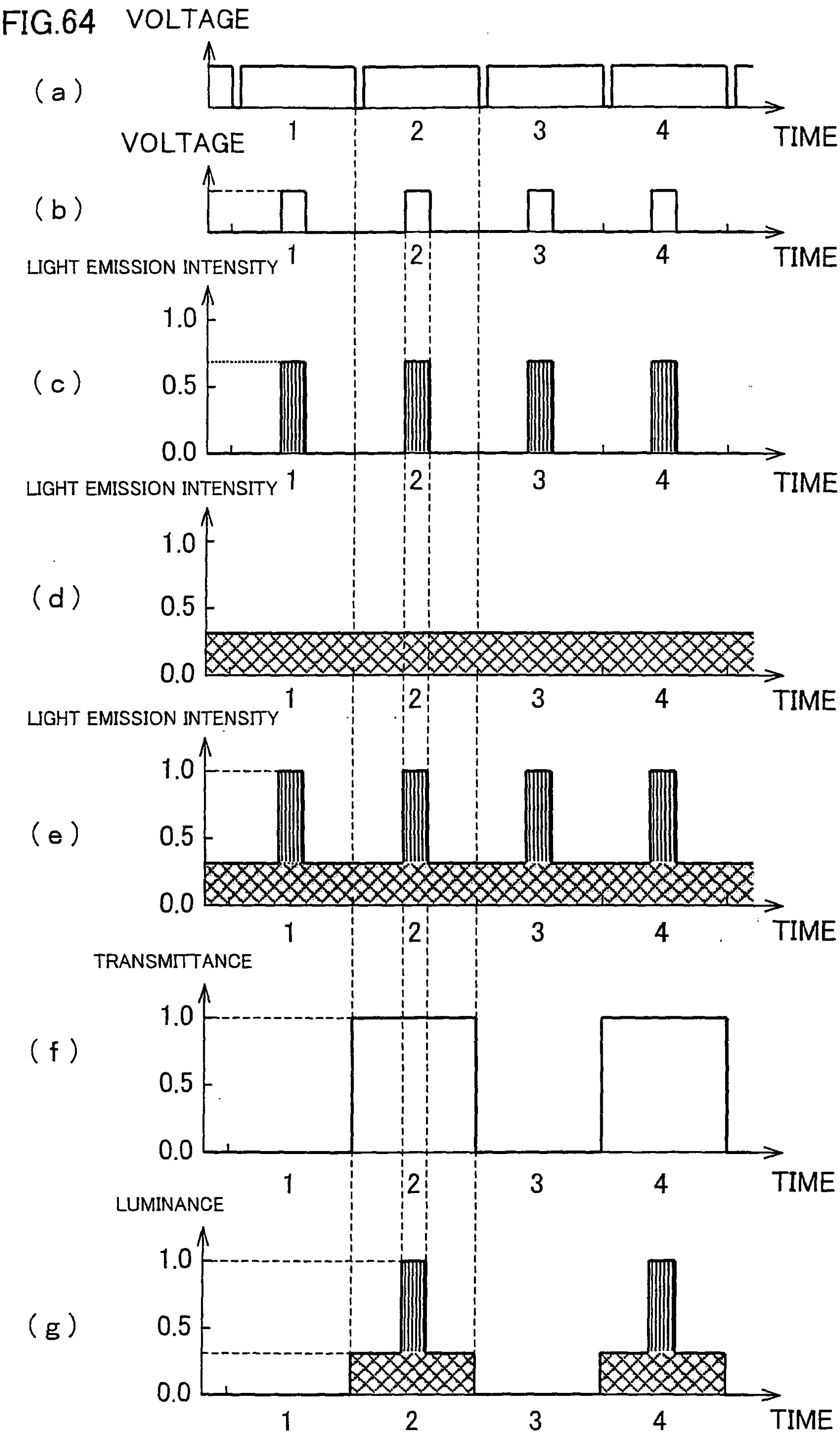
VOLTAGE
(a)
1
2
3
4
TIME
VOLTAGE
(b)
1
2
3
4
TIME
LIGHT EMISSION INTENSITY
1.0
(c)
0.5
0.0
1
2
3
4
TIME
LIGHT EMISSION INTENSITY
1.0
(d)
0.5
0.0
1
2
3
4
TIME
LIGHT EMISSION INTENSITY
1.0
(e)
0.5
0.0
1
2
3
4
TIME
TRANSMITTANCE
1.0
(f)
0.5
0.0
1
2
3
4
TIME
LUMINANCE
1.0
(g)
0.5
0.0
1
2
3
4
TIME

FIG.65

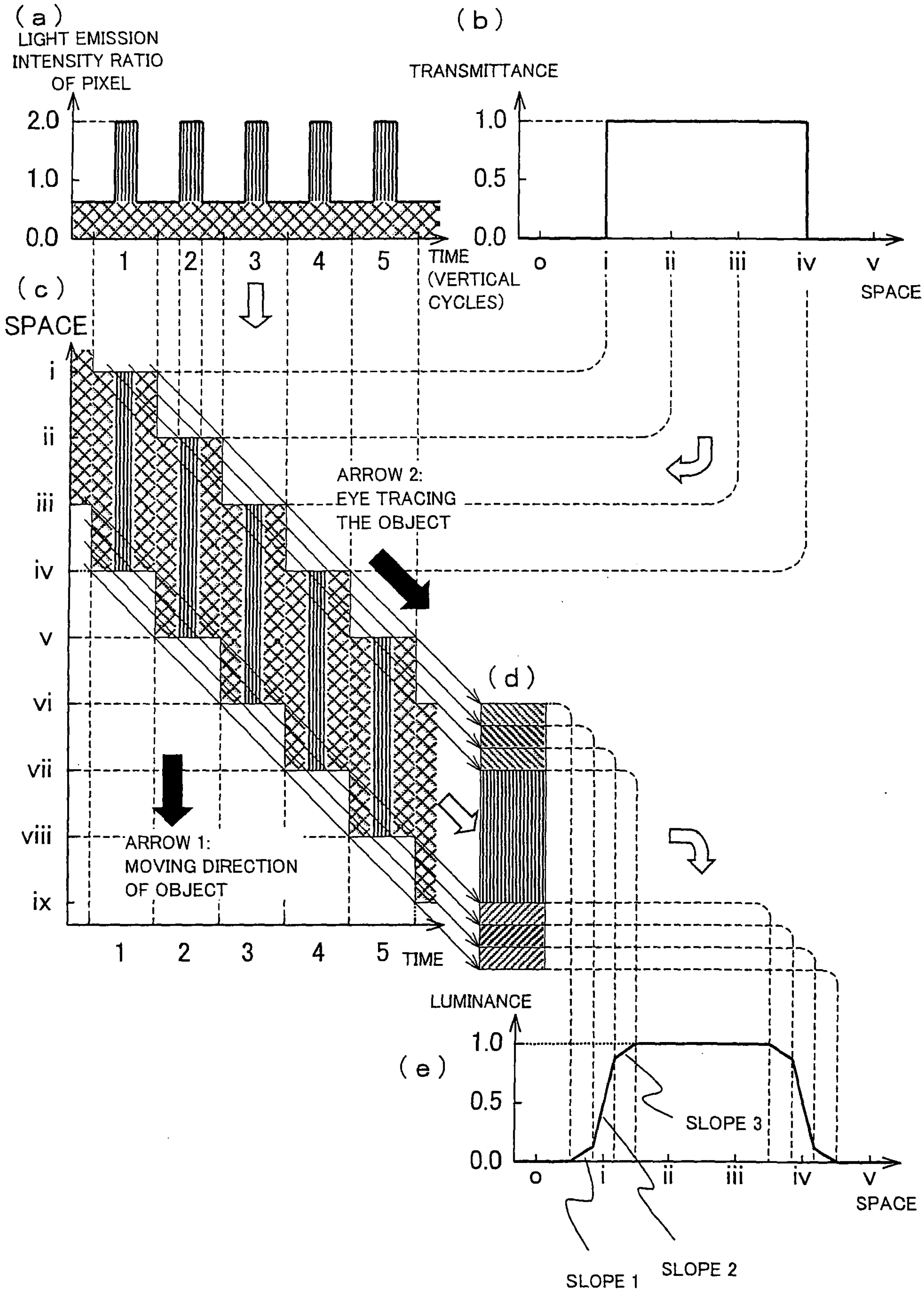

(a)
LIGHT EMISSION INTENSITY RATIO OF PIXEL
2.0
1.0
0.0
1
2
3
4
5
TIME (VERTICAL CYCLES)
(b)
TRANSMITTANCE
1.0
0.5
0.0
o
i
ii
iii
iv
v
SPACE
(c)
SPACE
i
ii
iii
iv
v
vi
vii
viii
ix
ARROW 2: EYE TRACING THE OBJECT
ARROW 1: MOVING DIRECTION OF OBJECT
1
2
3
4
5
TIME
(d)
LUMINANCE
1.0
0.5
0.0
(e)
SLOPE 3
o
i
ii
iii
iv
v
SPACE
SLOPE 1
SLOPE 2

FIG.66(a)

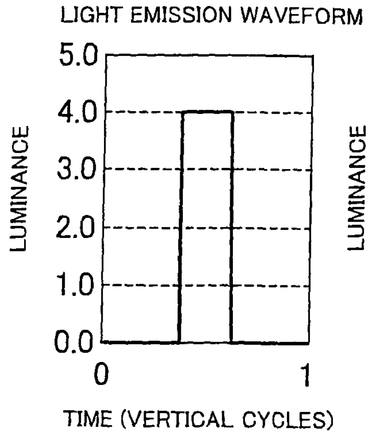


FIG.66(b)

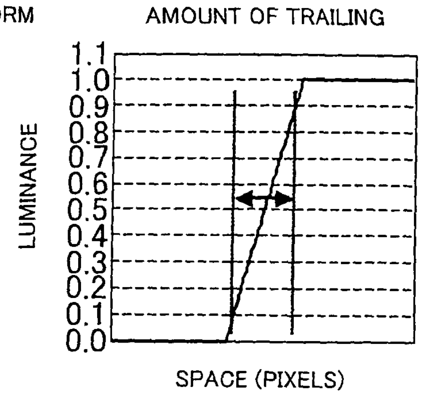


FIG.66(c)

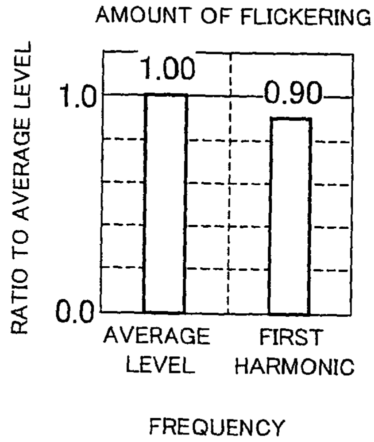


FIG.66(d)

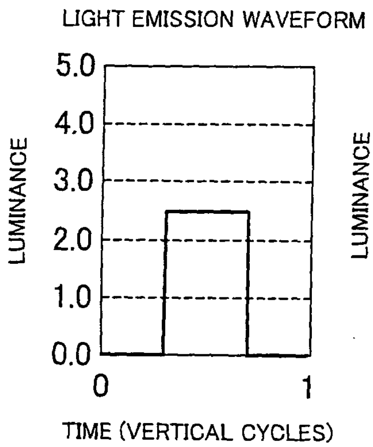


FIG.66(e)

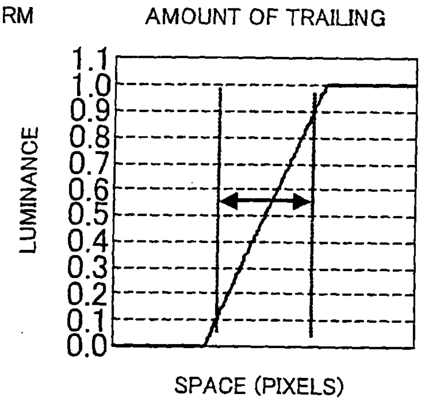


FIG.66(f)

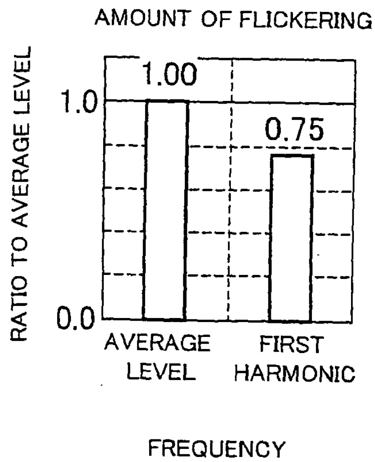


FIG.66(g)

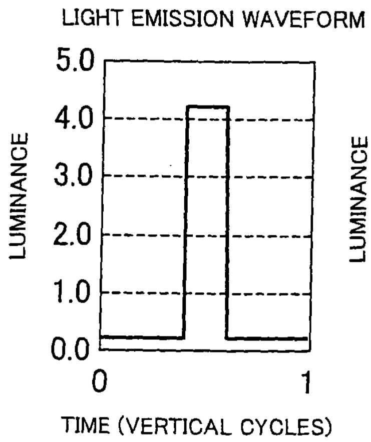


FIG.66(h)

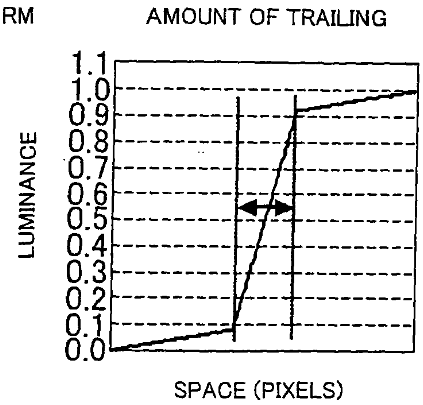


FIG.66(i)

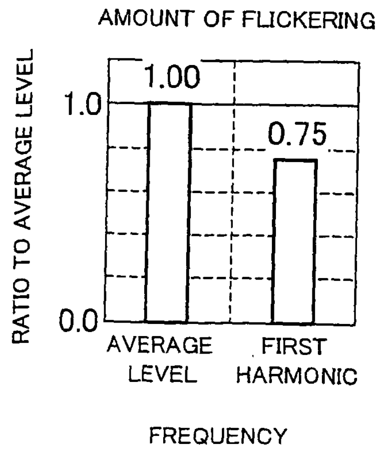

FIG.67

| | | COL. 1 | COL. 2 | COL. 3 | COL. 4 |
|---|---|---|---|---|---|
| | | DUTY RATIO D (%) OF INTERMITTENT LIGHT EMISSION COMPONENT | LIGHT EMISSION INTENSITY RATIO S1 (%) OF INTERMITTENT LIGHT EMISSION COMPONENT | AMOUNT OF TRAILING [PIXEL] | AMOUNT OF FLICKERING [%] |
| ROW 1 | CONVENTIONAL EX. | 25 | 100 | 0.20 | 90 |
| ROW 2 | CONVENTIONAL EX. | 40 | 100 | 0.32 | 75 |
| ROW 3 | PRESENT EMBODIMENT | 20 | 80 | 0.20 | 75 |

FIG.68

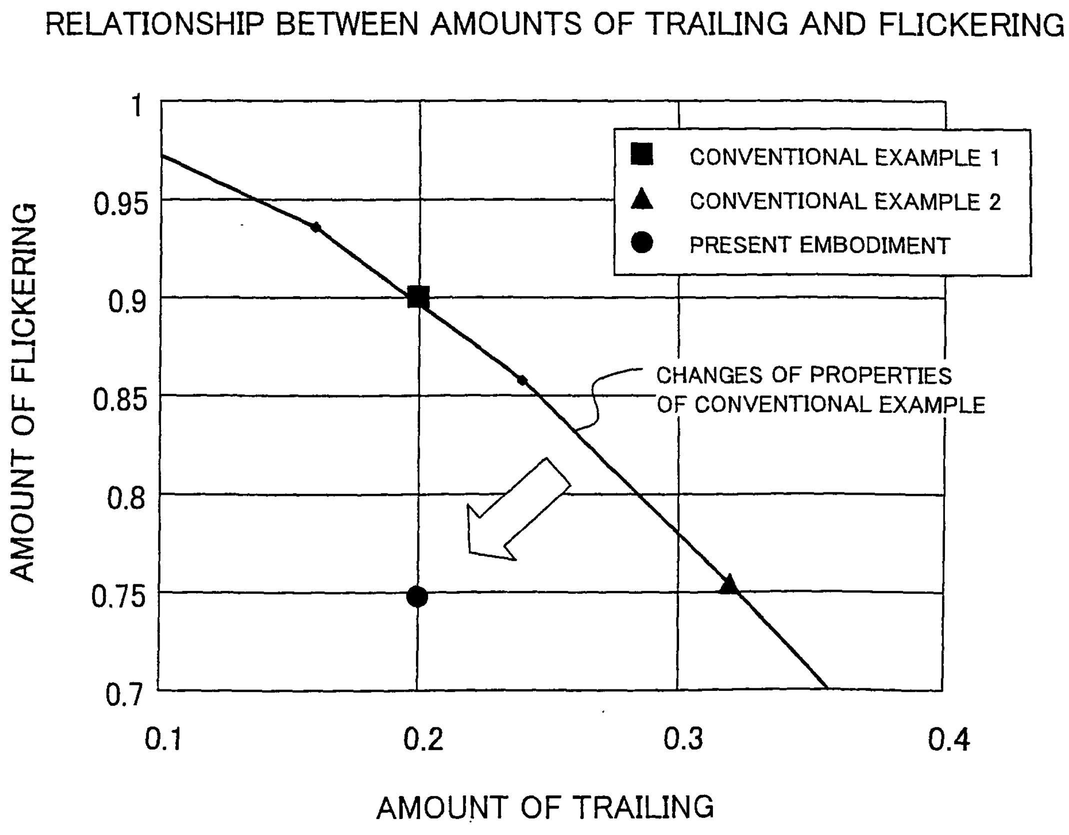

FIG.69(a)

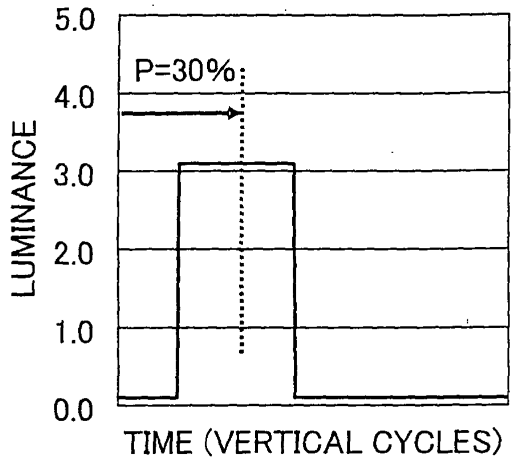


FIG.69(b)

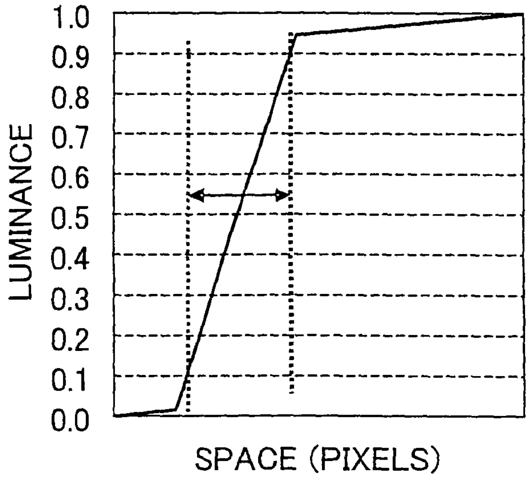


FIG.69(c)

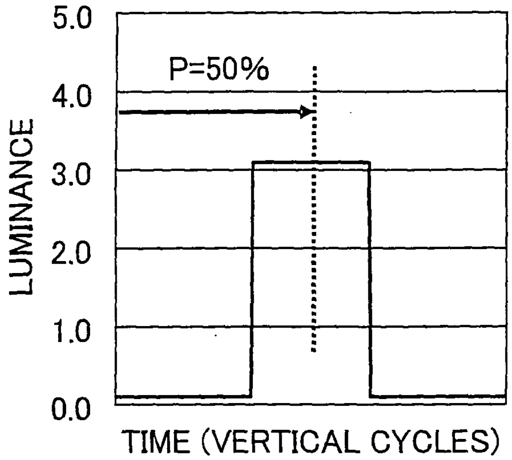


FIG.69(d)

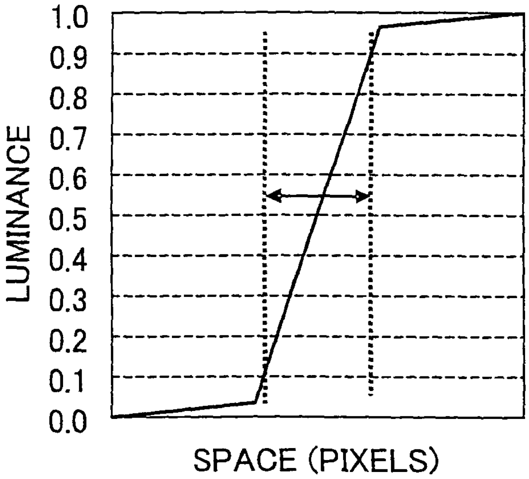


FIG.69(e)

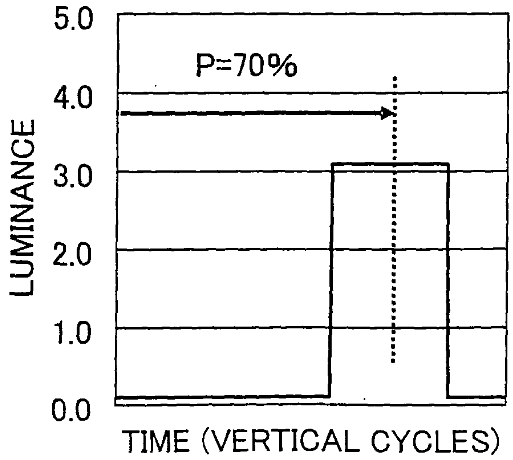


FIG.69(f)

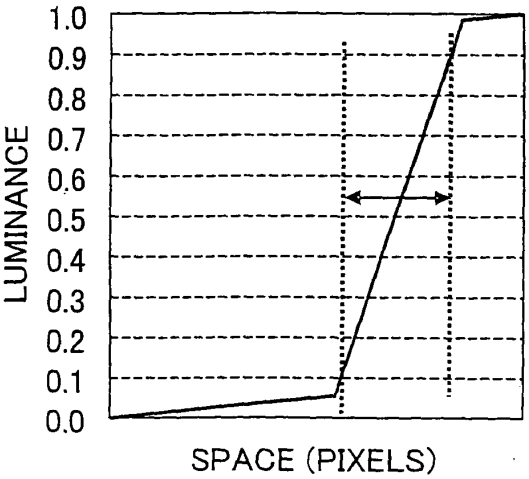

FIG.70(a)

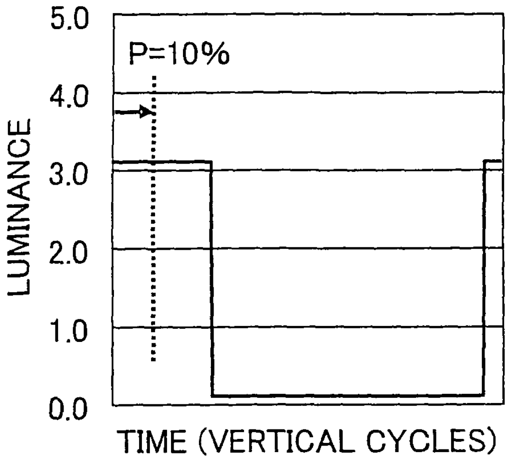


FIG.70(b)

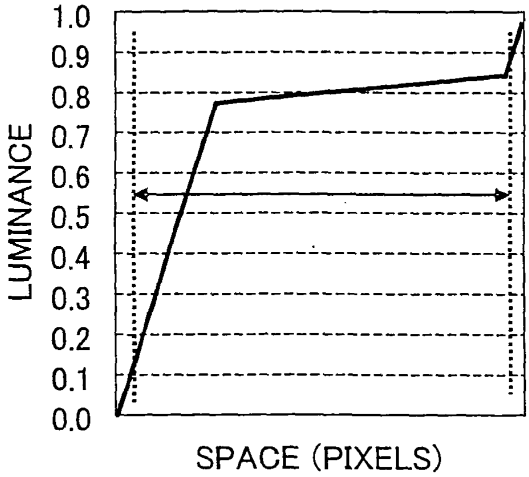


FIG.70(c)

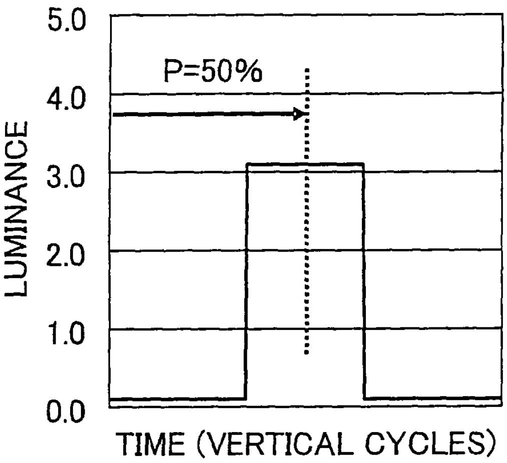


FIG.70(d)

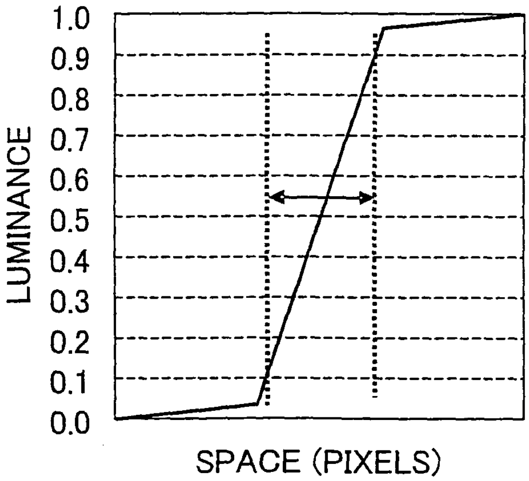


FIG.70(e)

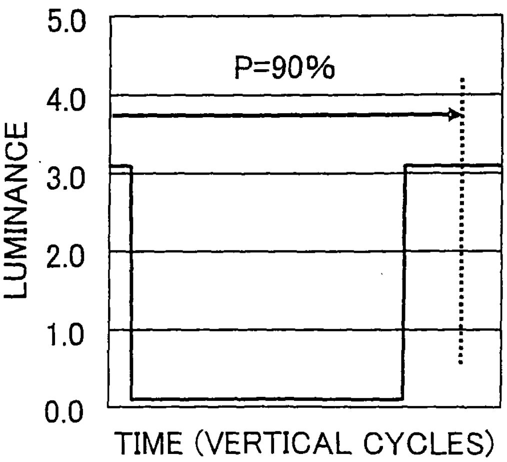


FIG.70(f)

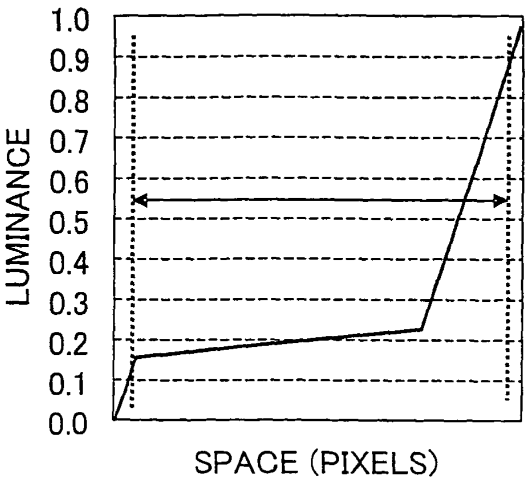

FIG.71 (a)

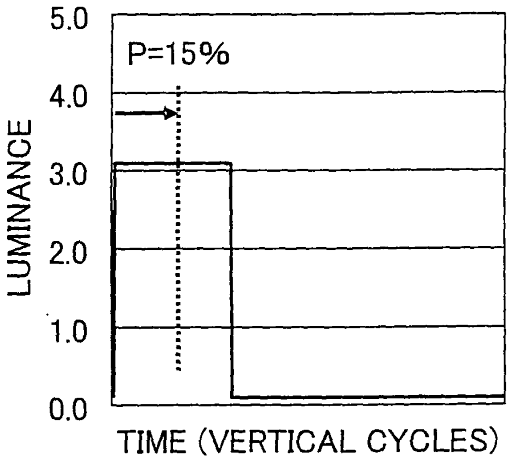


FIG.71 (b)

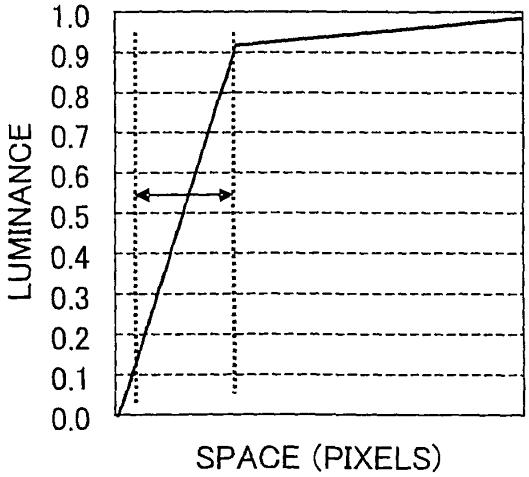


FIG.71 (c)

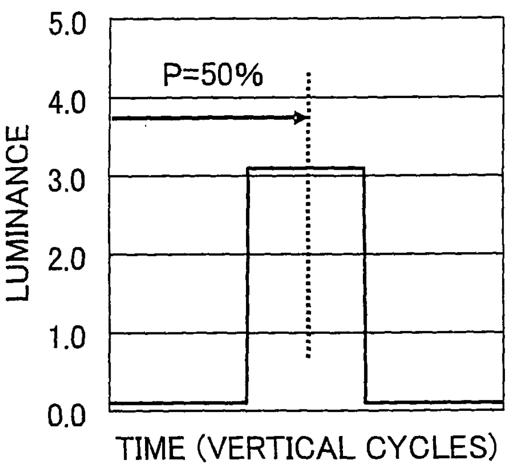


FIG.71 (d)

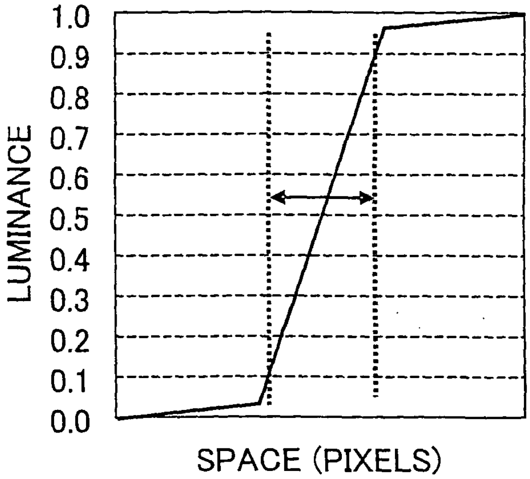


FIG.71 (e)

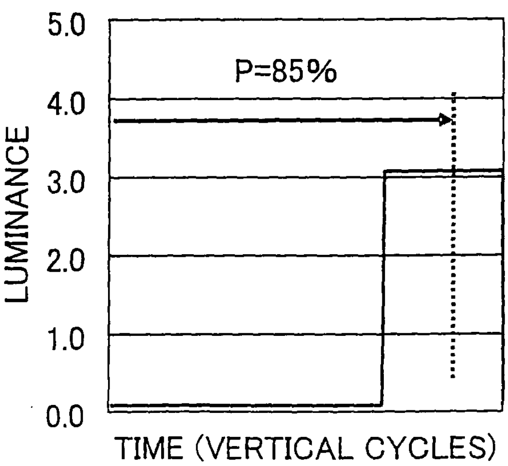


FIG.71 (f)

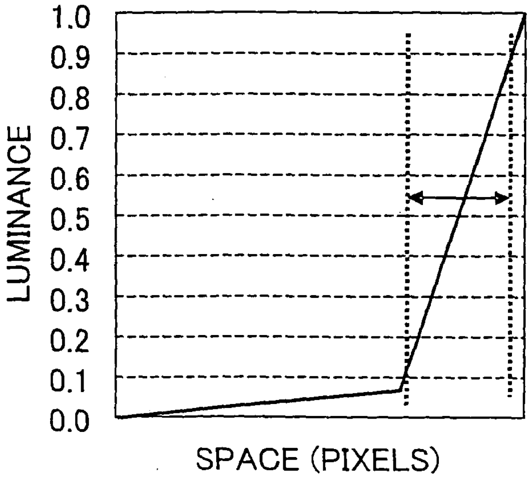

FIG.72

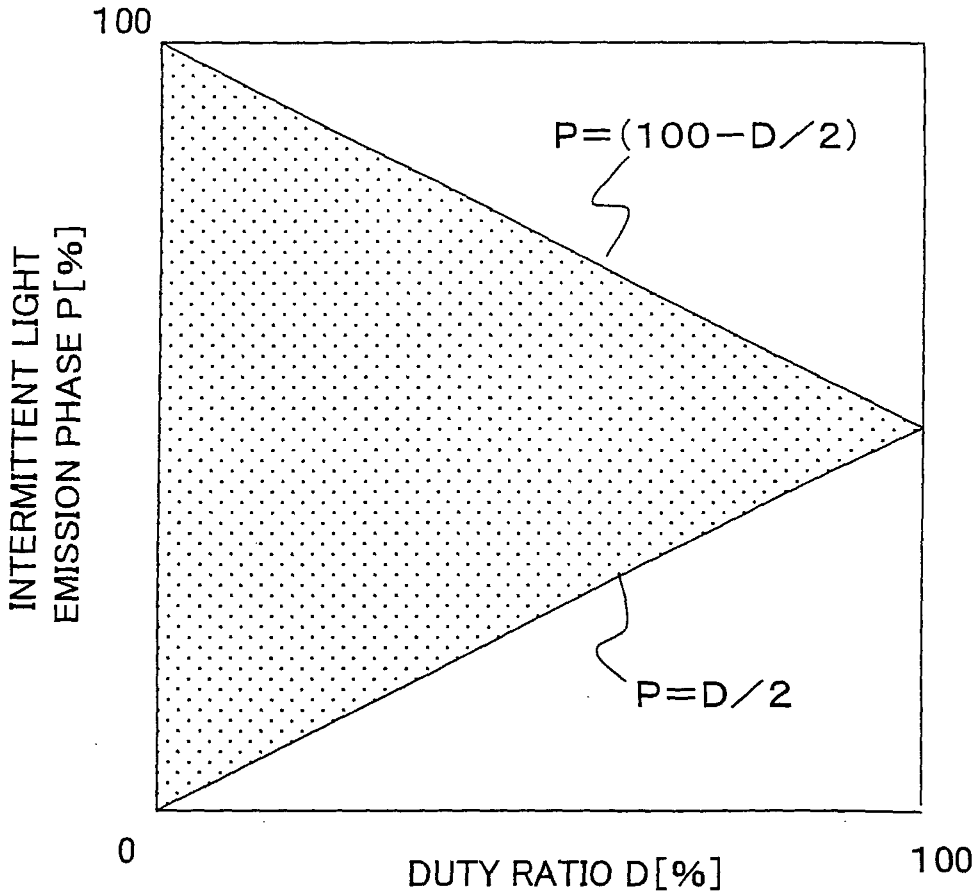
100
P=(100−D/2)
INTERMITTENT LIGHT
EMISSION PHASE P[%]
P=D/2
0
DUTY RATIO D[%]
100

FIG.73(a)

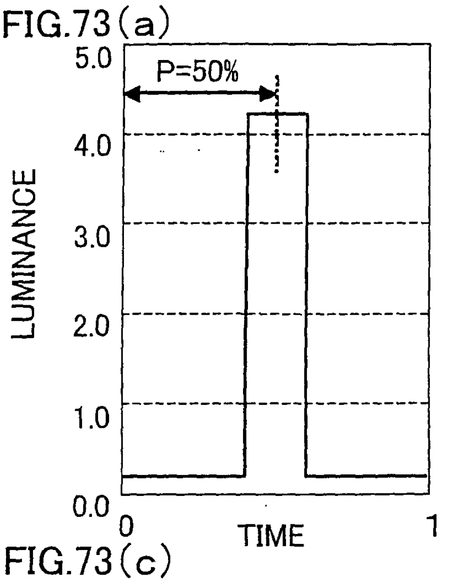


FIG.73(b)

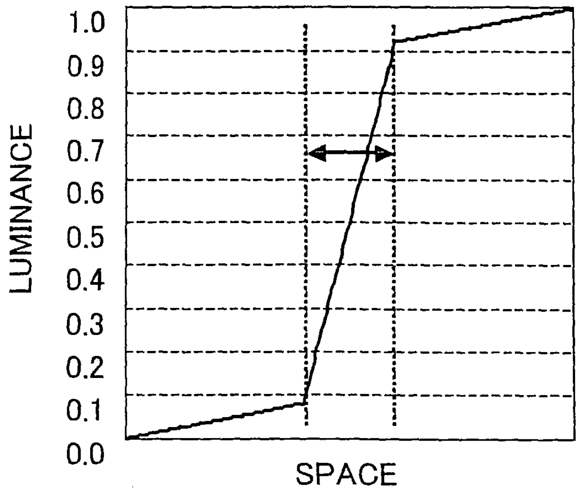


FIG.73(c)

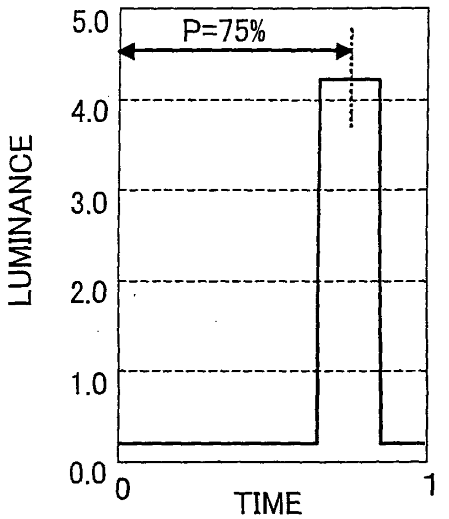


FIG.73(d)

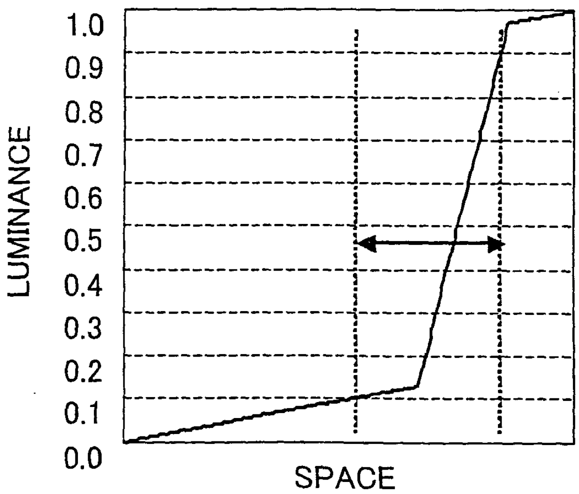


FIG.73(e)

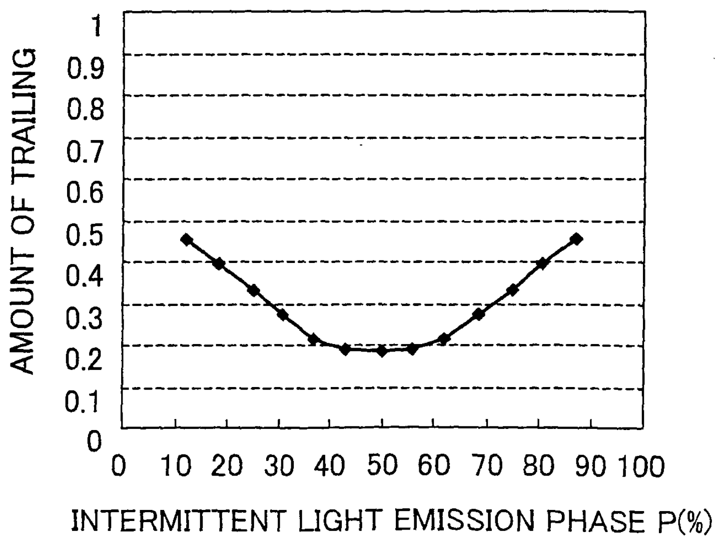

FIG.74

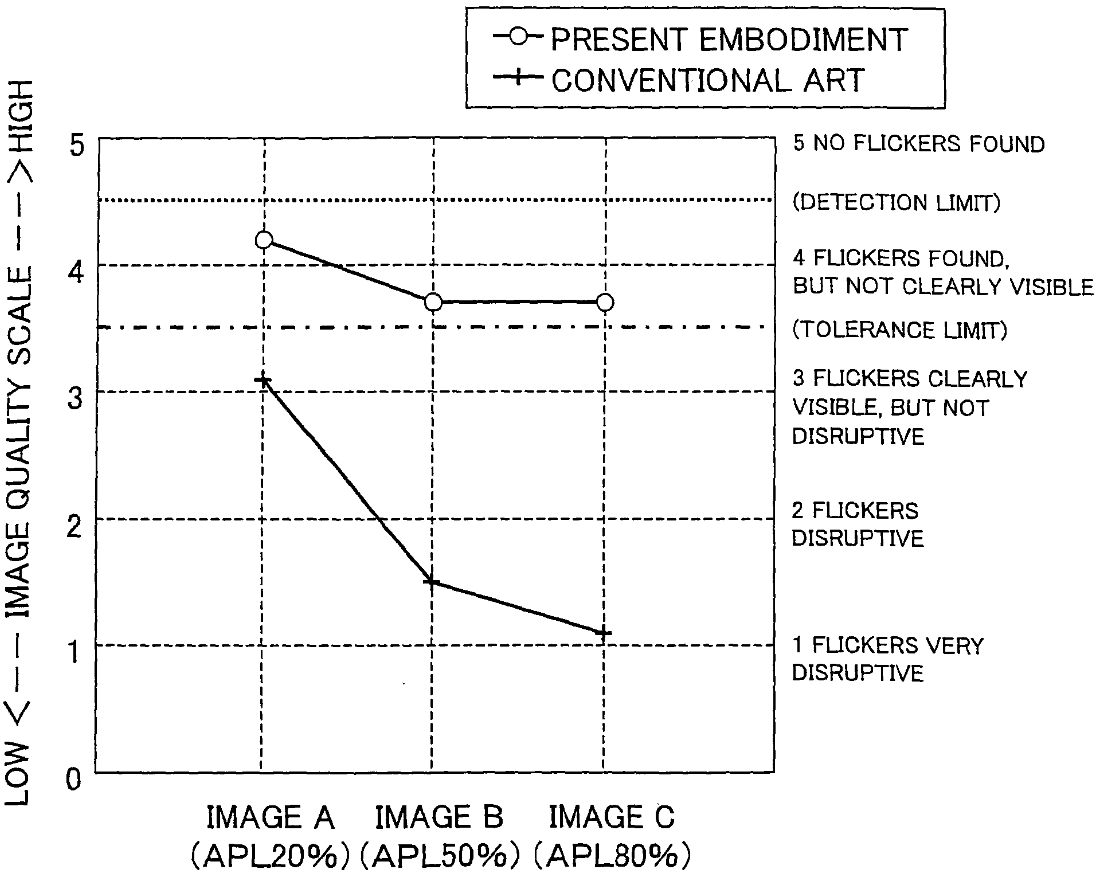
PRESENT EMBODIMENT
CONVENTIONAL ART
LOW <-- IMAGE QUALITY SCALE --> HIGH
5
4
3
2
1
0
5 NO FLICKERS FOUND
(DETECTION LIMIT)
4 FLICKERS FOUND, BUT NOT CLEARLY VISIBLE
(TOLERANCE LIMIT)
3 FLICKERS CLEARLY VISIBLE, BUT NOT DISRUPTIVE
2 FLICKERS DISRUPTIVE
1 FLICKERS VERY DISRUPTIVE
IMAGE A (APL20%)
IMAGE B (APL50%)
IMAGE C (APL80%)

FIG.75

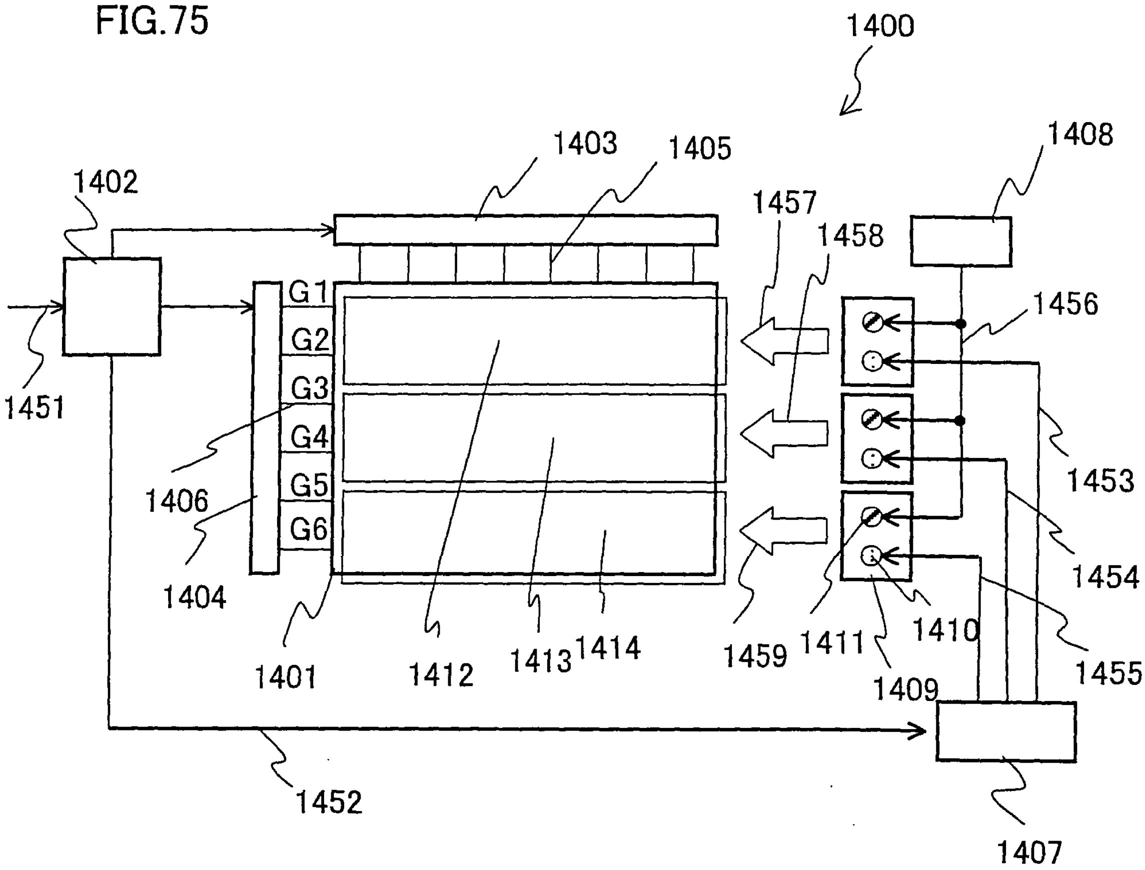
1400
1403
1405
1408
1402
1457
1458
G1
G2
G3
G4
G5
G6
1456
1451
1406
1404
1453
1454
1401
1412
1413
1414
1459
1411
1410
1409
1455
1452
1407

FIG.76

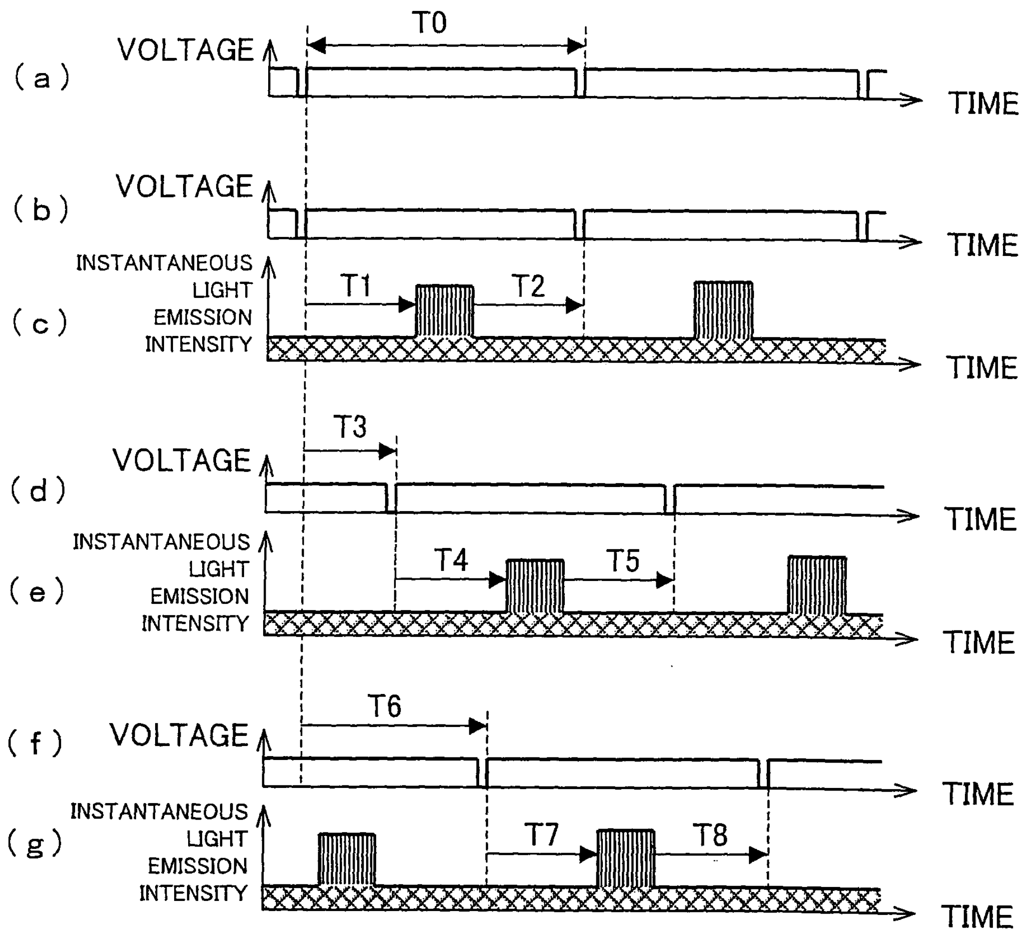
T0
(a)
VOLTAGE
TIME
(b)
VOLTAGE
TIME
(c)
INSTANTANEOUS
LIGHT
EMISSION
INTENSITY
T1
T2
TIME
T3
(d)
VOLTAGE
TIME
(e)
INSTANTANEOUS
LIGHT
EMISSION
INTENSITY
T4
T5
TIME
T6
(f)
VOLTAGE
TIME
(g)
INSTANTANEOUS
LIGHT
EMISSION
INTENSITY
T7
T8
TIME

FIG.77

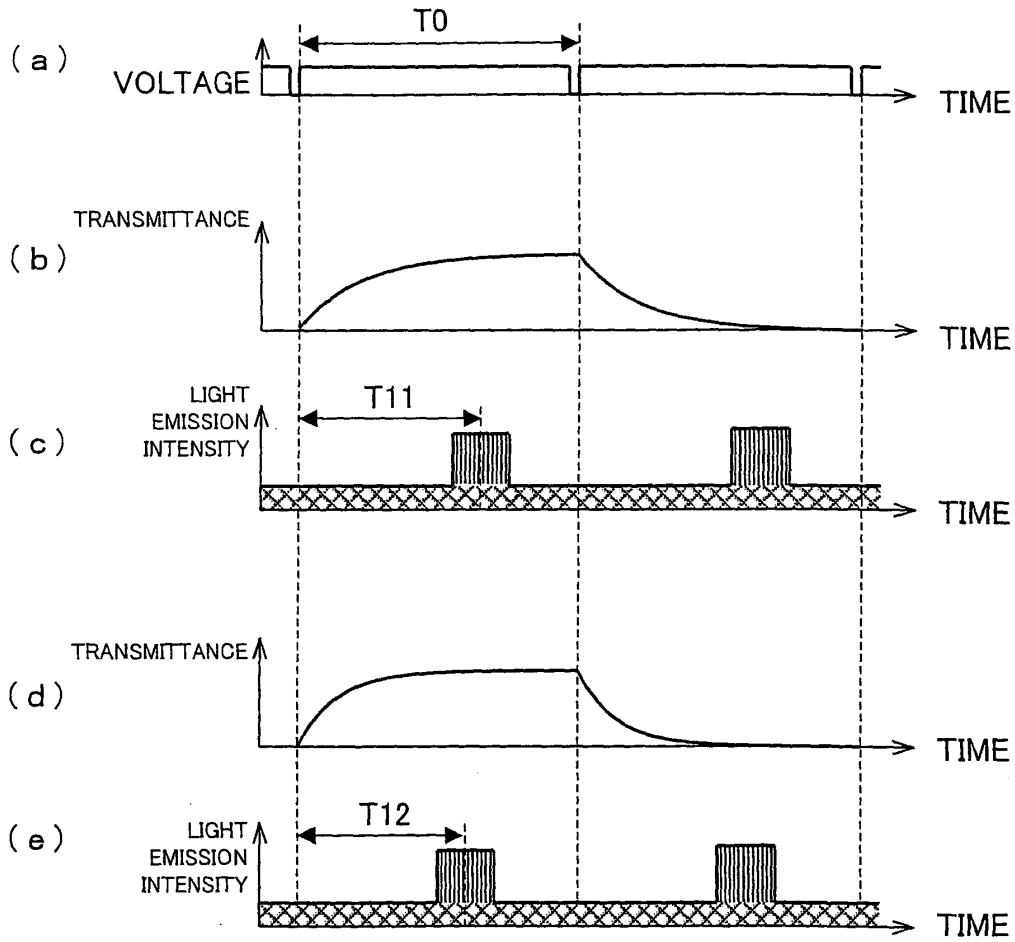
(a)
VOLTAGE
T0
TIME
(b)
TRANSMITTANCE
TIME
(c)
LIGHT EMISSION INTENSITY
T11
TIME
(d)
TRANSMITTANCE
TIME
(e)
LIGHT EMISSION INTENSITY
T12
TIME

FIG.78(a)

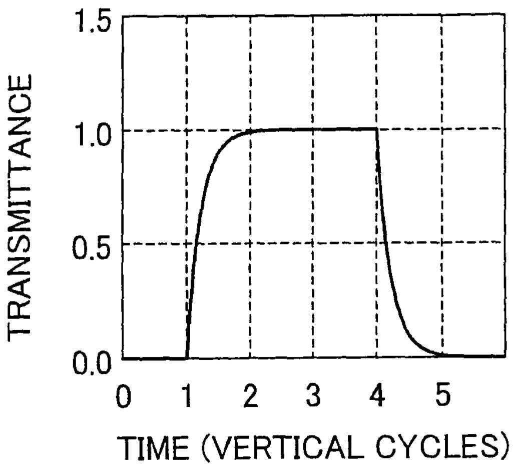


FIG.78(b)

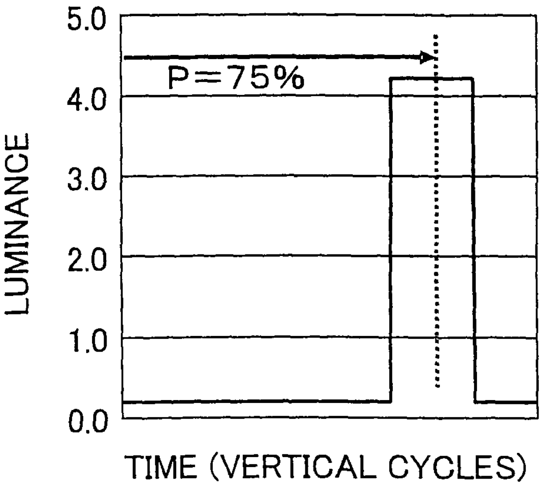


FIG.78(c)

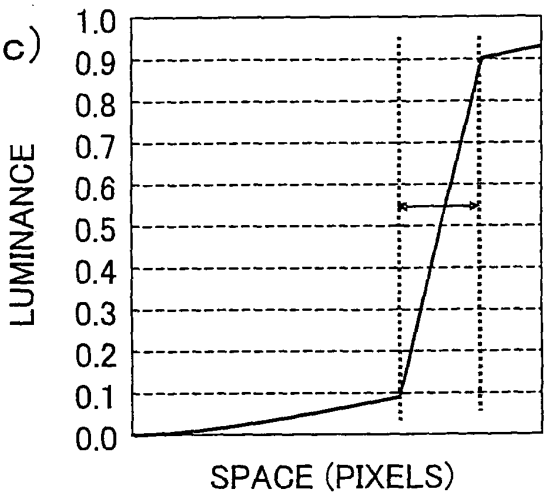


FIG.78(d)

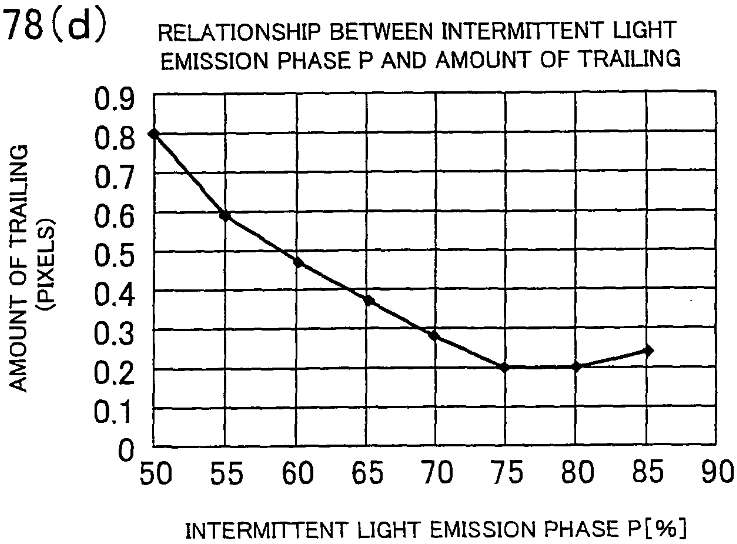

FIG.79(a)

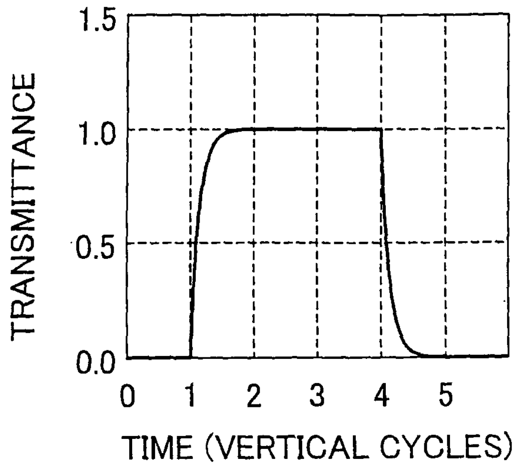


FIG.79(b)

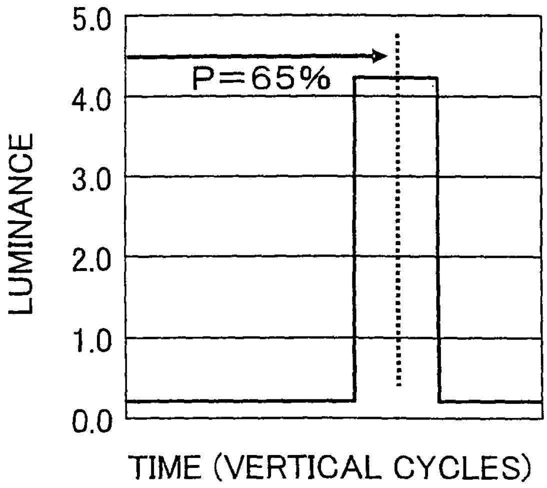


FIG.79(c)

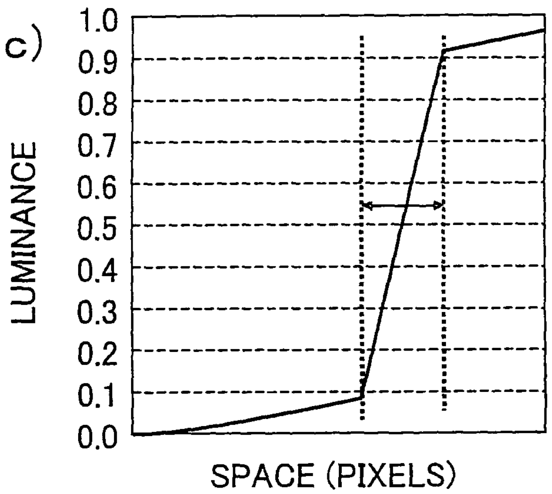


FIG.79(d)

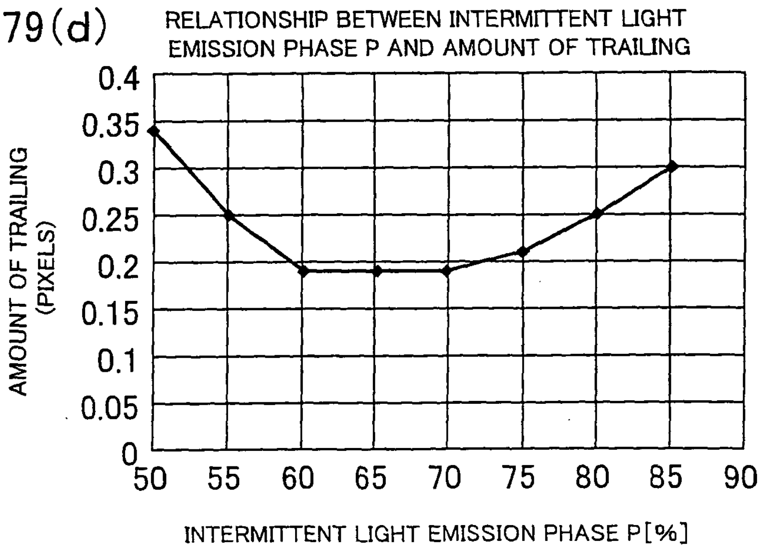

FIG. 80

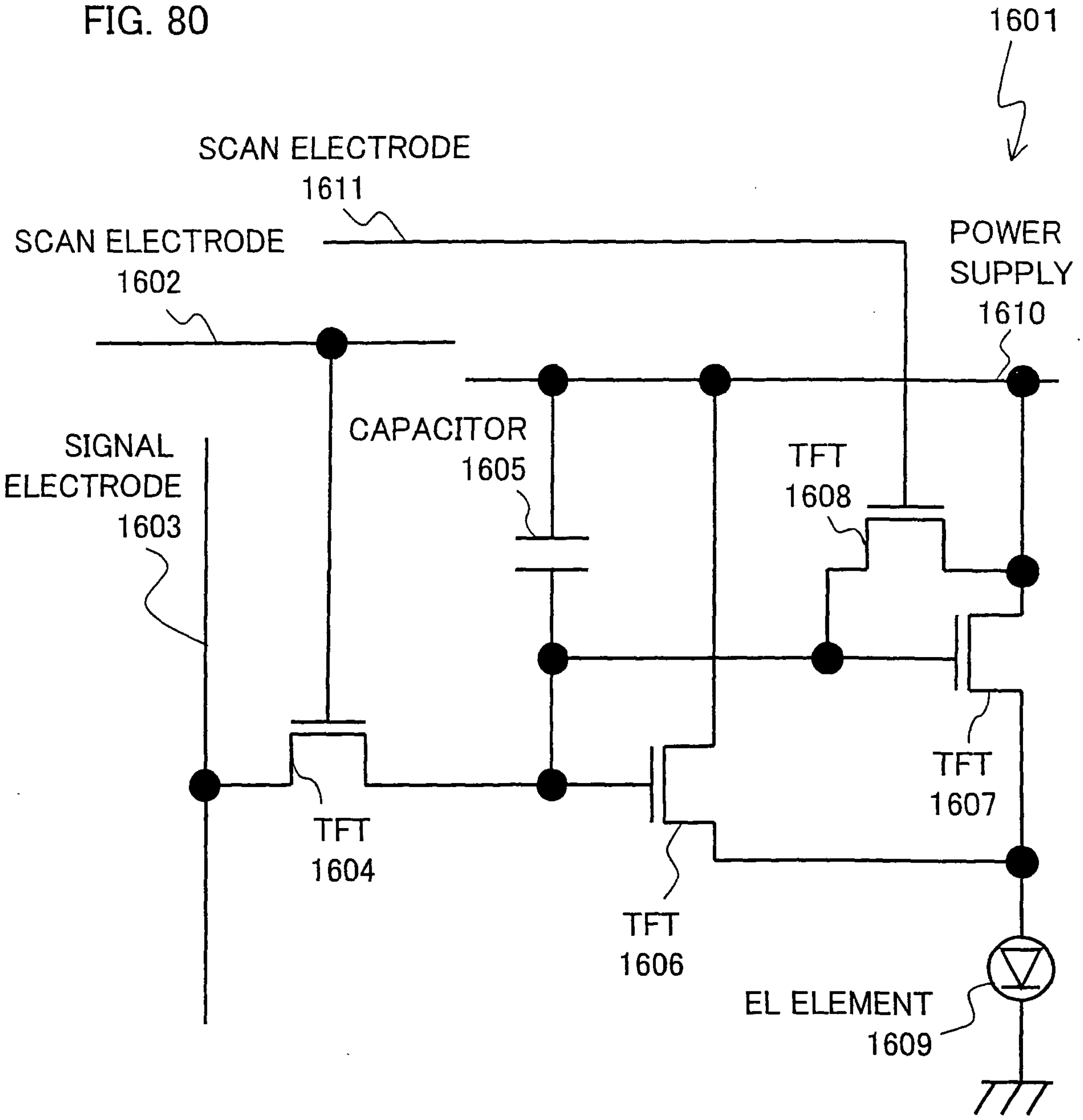
1601
SCAN ELECTRODE
1611
SCAN ELECTRODE
1602
POWER
SUPPLY
1610
SIGNAL
ELECTRODE
1603
CAPACITOR
1605
TFT
1608
TFT
1607
TFT
1604
TFT
1606
EL ELEMENT
1609

FIG. 81

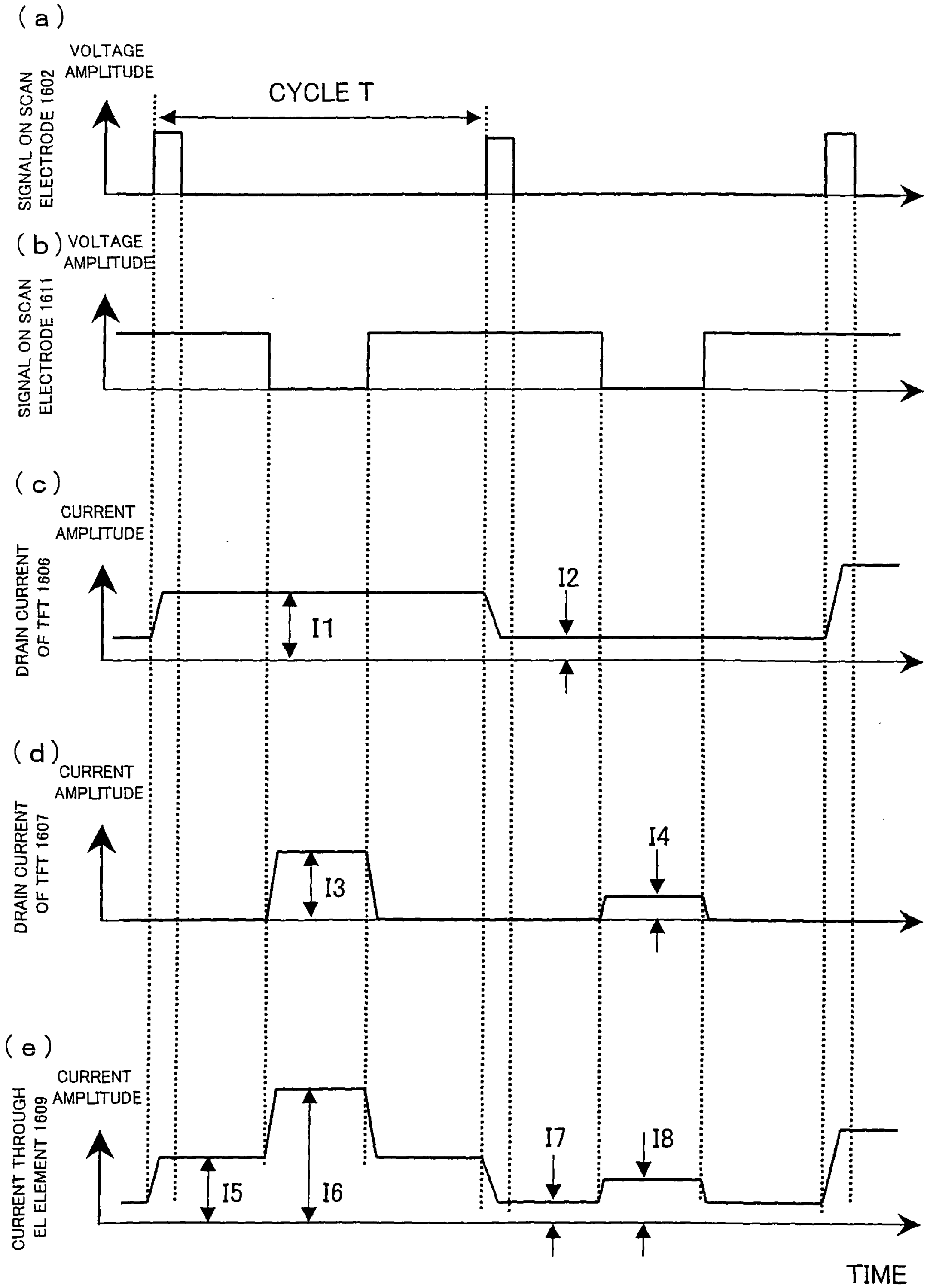
(a)
VOLTAGE AMPLITUDE
SIGNAL ON SCAN ELECTRODE 1602
CYCLE T
(b)
VOLTAGE AMPLITUDE
SIGNAL ON SCAN ELECTRODE 1611
(c)
CURRENT AMPLITUDE
DRAIN CURRENT OF TFT 1606
I1
I2
(d)
CURRENT AMPLITUDE
DRAIN CURRENT OF TFT 1607
I3
I4
(e)
CURRENT AMPLITUDE
CURRENT THROUGH EL ELEMENT 1609
I5
I6
I7
I8
TIME

FIG. 82

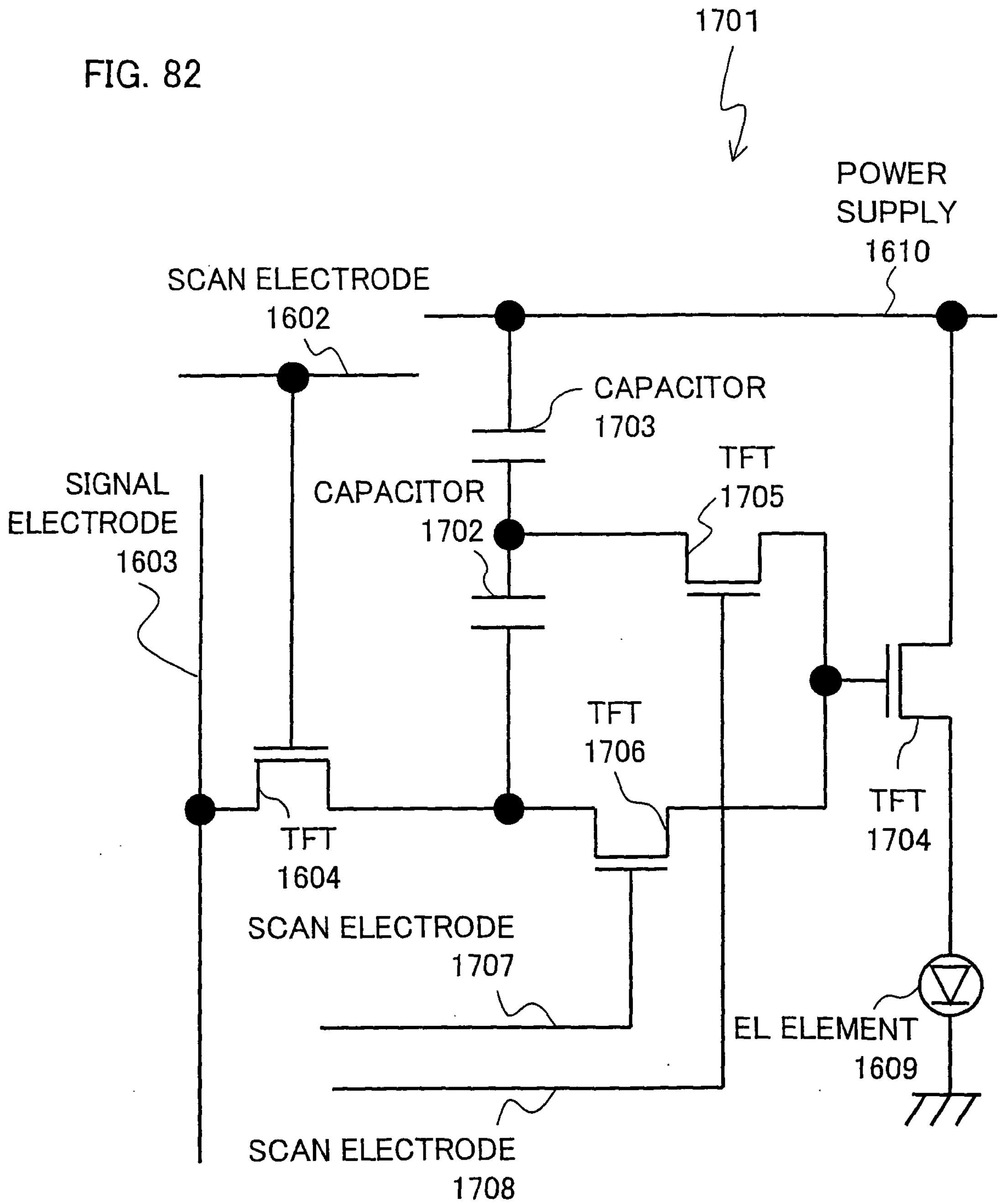
1701
POWER SUPPLY 1610
SCAN ELECTRODE 1602
CAPACITOR 1703
TFT 1705
SIGNAL ELECTRODE 1603
CAPACITOR 1702
TFT 1706
TFT 1604
TFT 1704
SCAN ELECTRODE 1707
EL ELEMENT 1609
SCAN ELECTRODE 1708

FIG. 83

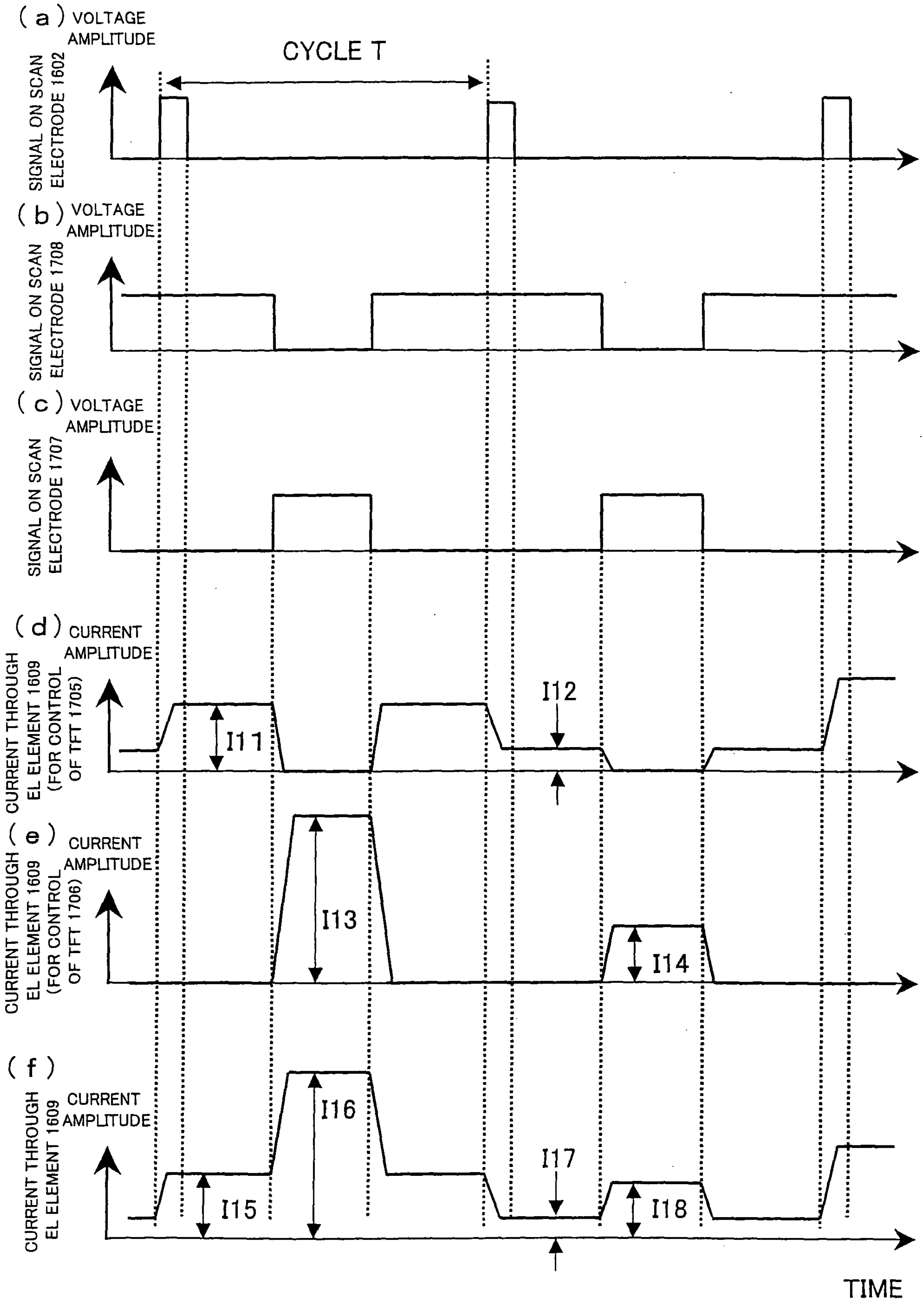

(a) VOLTAGE AMPLITUDE
SIGNAL ON SCAN ELECTRODE 1602
CYCLE T
(b) VOLTAGE AMPLITUDE
SIGNAL ON SCAN ELECTRODE 1708
(c) VOLTAGE AMPLITUDE
SIGNAL ON SCAN ELECTRODE 1707
(d) CURRENT AMPLITUDE
CURRENT THROUGH EL ELEMENT 1609 (FOR CONTROL OF TFT 1705)
I11
I12
(e) CURRENT AMPLITUDE
CURRENT THROUGH EL ELEMENT 1609 (FOR CONTROL OF TFT 1706)
I13
I14
(f) CURRENT AMPLITUDE
CURRENT THROUGH EL ELEMENT 1609
I15
I16
I17
I18
TIME

FIG. 84

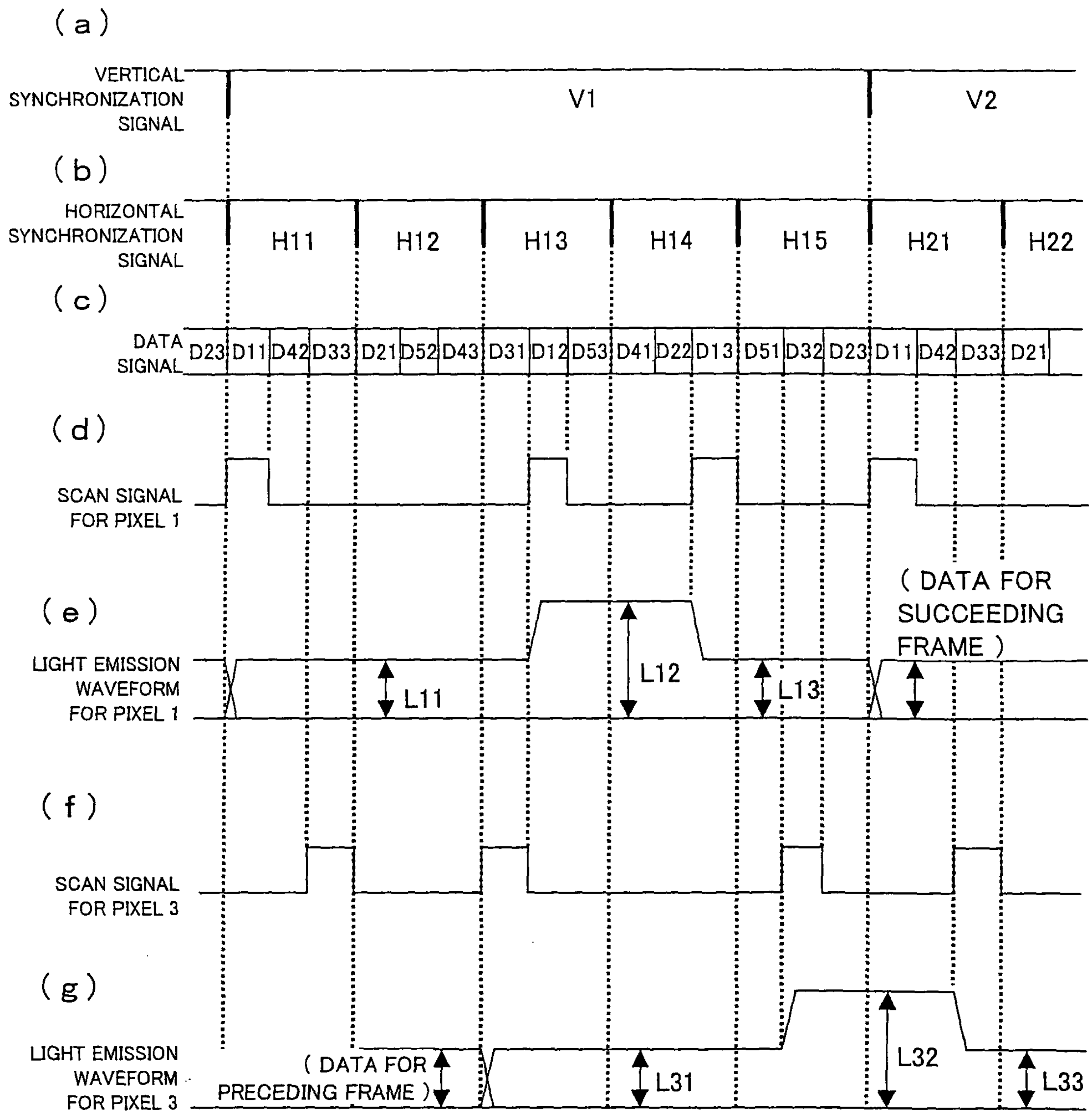
(a)
VERTICAL SYNCHRONIZATION SIGNAL
V1
V2
(b)
HORIZONTAL SYNCHRONIZATION SIGNAL
H11
H12
H13
H14
H15
H21
H22
(c)
DATA SIGNAL
D23 D11 D42 D33 D21 D52 D43 D31 D12 D53 D41 D22 D13 D51 D32 D23 D11 D42 D33 D21
(d)
SCAN SIGNAL FOR PIXEL 1
(e)
LIGHT EMISSION WAVEFORM FOR PIXEL 1
L11
L12
L13
( DATA FOR SUCCEEDING FRAME )
(f)
SCAN SIGNAL FOR PIXEL 3
(g)
LIGHT EMISSION WAVEFORM FOR PIXEL 3
( DATA FOR PRECEDING FRAME )
L31
L32
L33

FIG. 85(a)

RELATIONSHIP BETWEEN AMOUNTS OF TRAILING AND FLICKERING

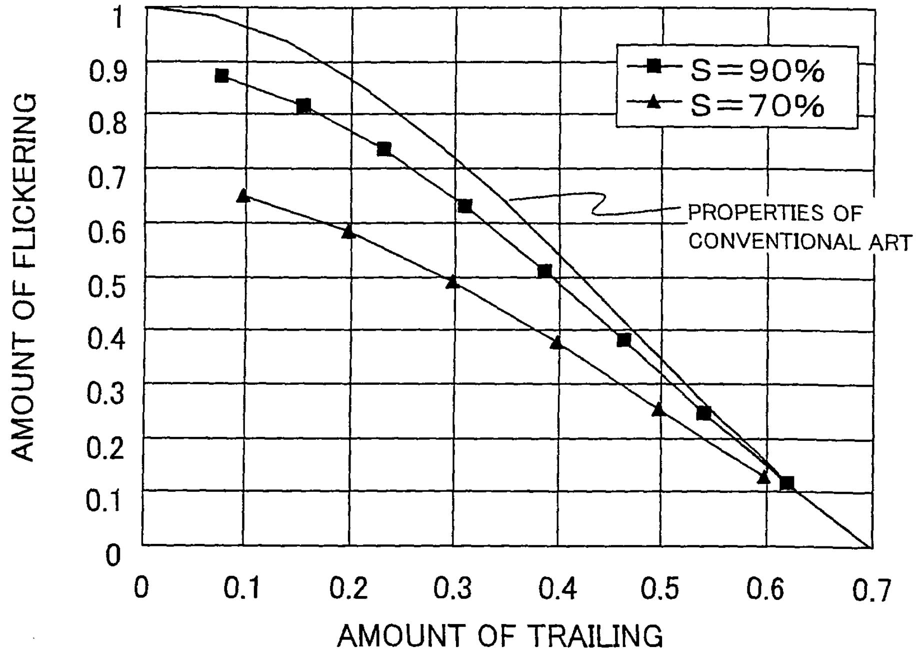


FIG. 85(b)

| DUTY RATIO D | AMOUNT OF TRAILING | AMOUNT OF FLICKERING |
|---|---|---|
| 10 | 0.08 | 0.87 |
| 20 | 0.16 | 0.82 |
| 30 | 0.23 | 0.74 |
| 40 | 0.31 | 0.63 |
| 50 | 0.39 | 0.51 |
| 60 | 0.47 | 0.38 |
| 70 | 0.54 | 0.25 |
| 80 | 0.62 | 0.12 |

DATA WHERE S FIXED AT 90%

FIG. 85(c)

| DUTY RATIO D | AMOUNT OF TRAILING | AMOUNT OF FLICKERING |
|---|---|---|
| 10 | 0.10 | 0.65 |
| 20 | 0.20 | 0.58 |
| 30 | 0.30 | 0.49 |
| 40 | 0.40 | 0.38 |
| 50 | 0.50 | 0.25 |
| 60 | 0.60 | 0.13 |

DATA WHERE S FIXED AT 70%

FIG. 86(a)

RELATIONSHIP BETWEEN AMOUNTS OF TRAILING AND FLICKERING

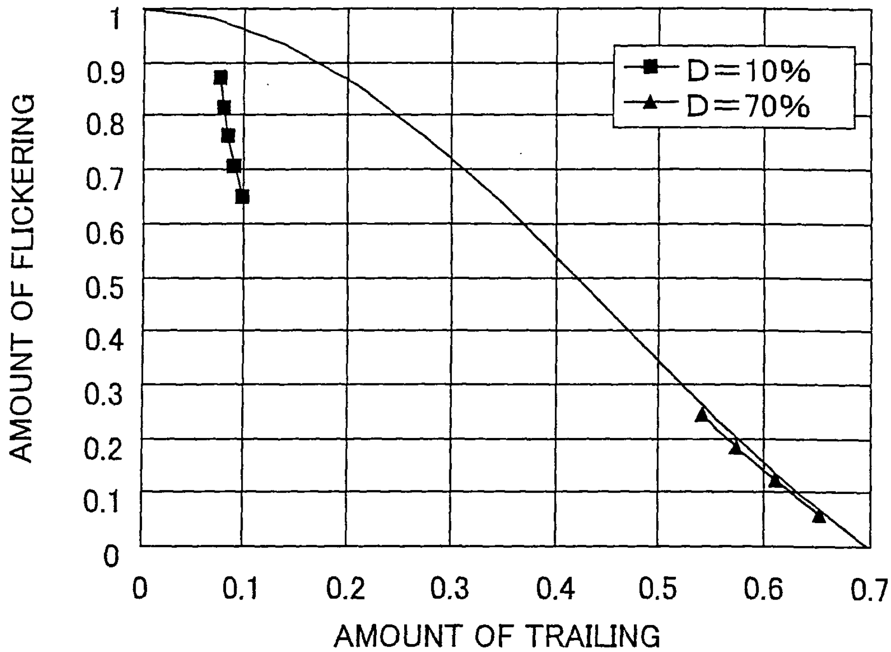


FIG. 86(b)

| INTENSITY RATIO S OF FIRST LIGHT | AMOUNT OF TRAILING | AMOUNT OF FLICKERING |
|---|---|---|
| 90 | 0.08 | 0.87 |
| 85 | 0.08 | 0.82 |
| 80 | 0.09 | 0.76 |
| 75 | 0.09 | 0.71 |
| 70 | 0.10 | 0.65 |

D FIXED AT 10%

FIG. 86(c)

| INTENSITY RATIO S OF FIRST LIGHT | AMOUNT OF TRAILING | AMOUNT OF FLICKERING |
|---|---|---|
| 90 | 0.54 | 0.25 |
| 85 | 0.58 | 0.18 |
| 80 | 0.61 | 0.12 |
| 75 | 0.65 | 0.06 |

D FIXED AT 70%

FIG. 87(a)

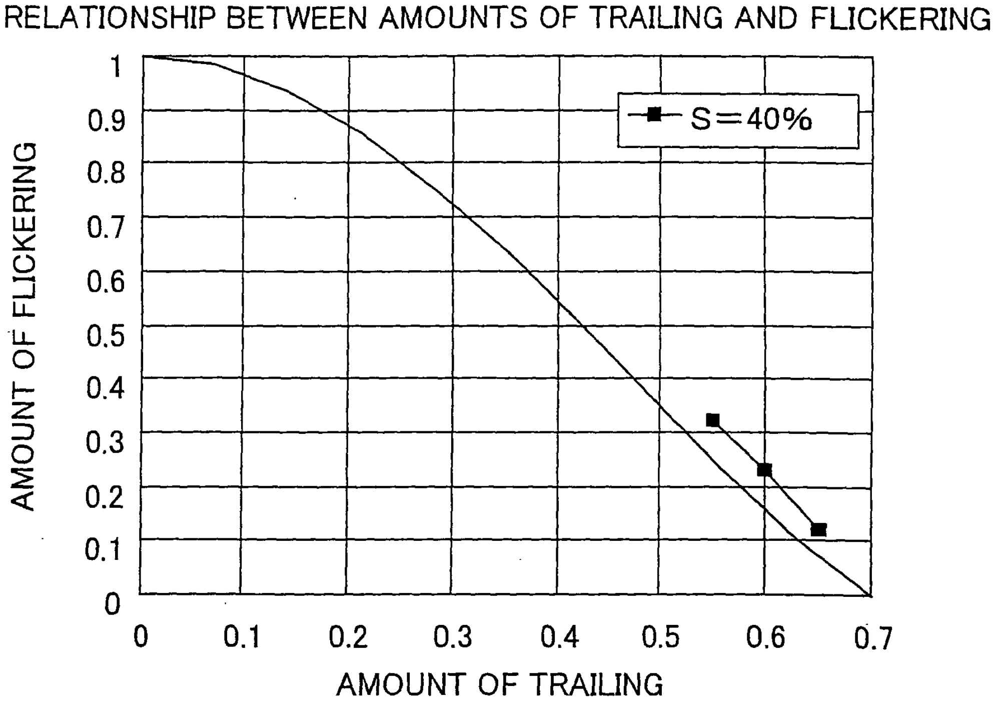


FIG. 87 (b)

| DUTY RATIO D | AMOUNT OF TRAILING | AMOUNT OF FLICKERING |
|---|---|---|
| 10 | 0.55 | 0.323 |
| 20 | 0.6 | 0.2333 |
| 30 | 0.65 | 0.1228 |

S FIXED AT 40%

FIG. 88(a)

RELATIONSHIP BETWEEN AMOUNTS OF TRAILING AND FLICKERING

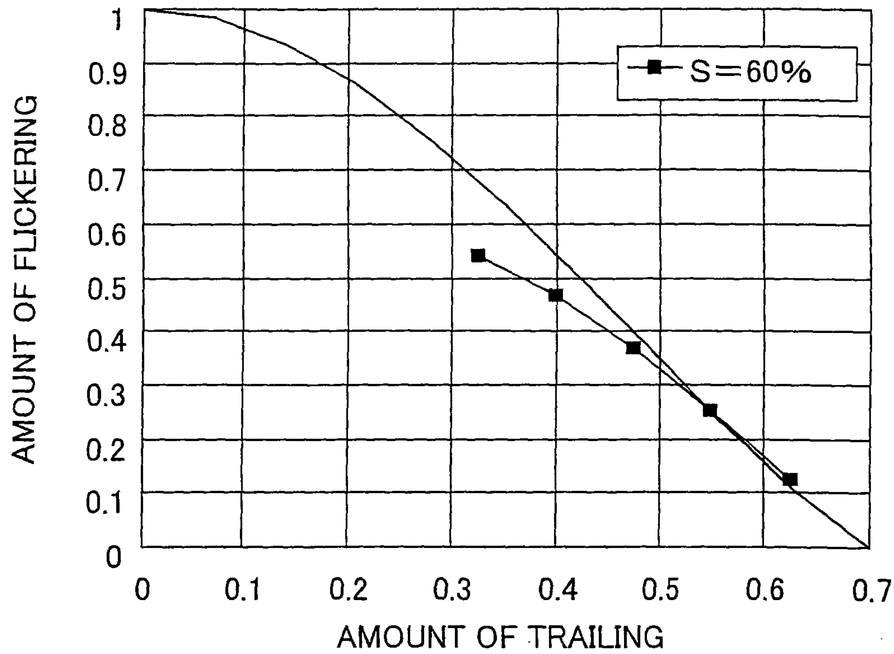


FIG. 88(b)

| DUTY RATIO D | AMOUNT OF TRAILING | AMOUNT OF FLICKERING |
|---|---|---|
| 10 | 0.325 | 0.5411 |
| 20 | 0.4 | 0.4671 |
| 30 | 0.475 | 0.3681 |
| 40 | 0.55 | 0.2524 |
| 50 | 0.625 | 0.1273 |

S FIXED AT 60%

FIG. 89

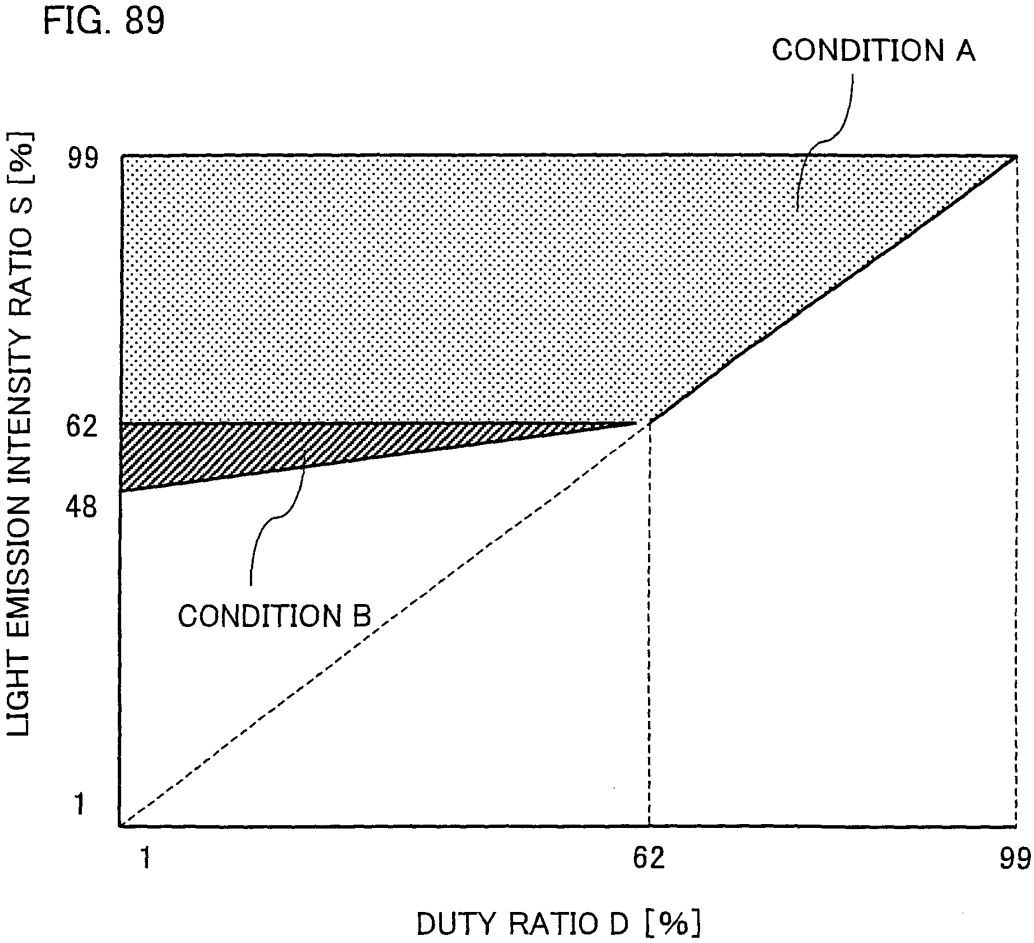
CONDITION A
LIGHT EMISSION INTENSITY RATIO S [%]
99
62
48
1
CONDITION B
1
62
99
DUTY RATIO D [%]

FIG. 90(a)

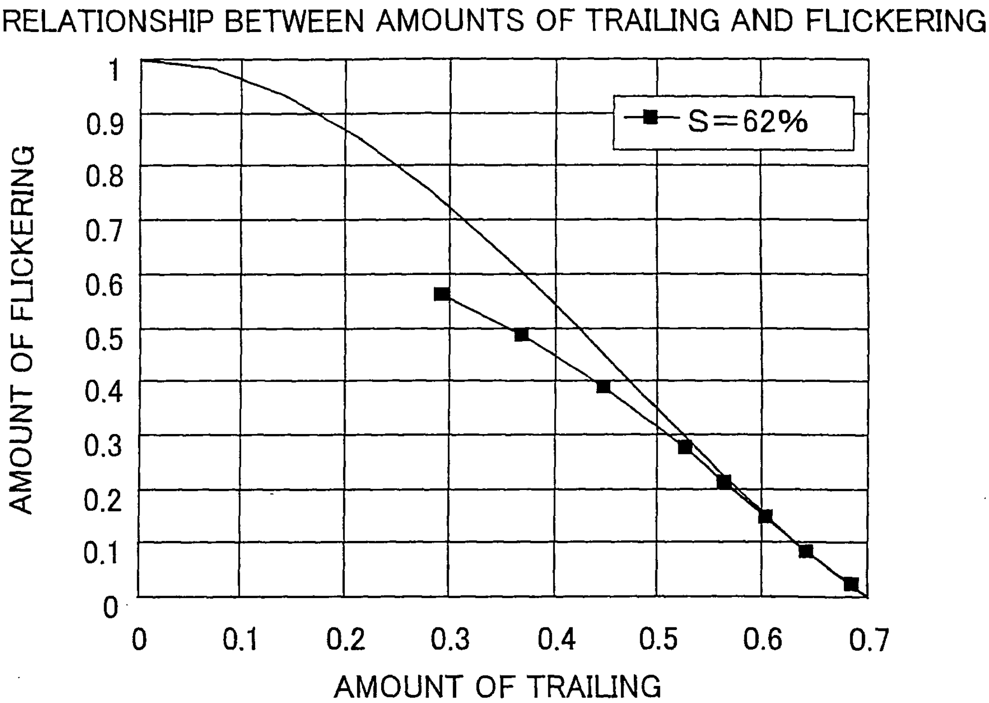


FIG. 90(b)

| DUTY RATIO D | AMOUNT OF TRAILING | AMOUNT OF FLICKERING |
|---|---|---|
| 10 | 0.29 | 0.56 |
| 20 | 0.37 | 0.49 |
| 30 | 0.45 | 0.39 |
| 40 | 0.53 | 0.28 |
| 45 | 0.57 | 0.22 |
| 50 | 0.60 | 0.15 |
| 55 | 0.64 | 0.09 |
| 60 | 0.68 | 0.03 |

S FIXED AT 62%

FIG. 91 (a)

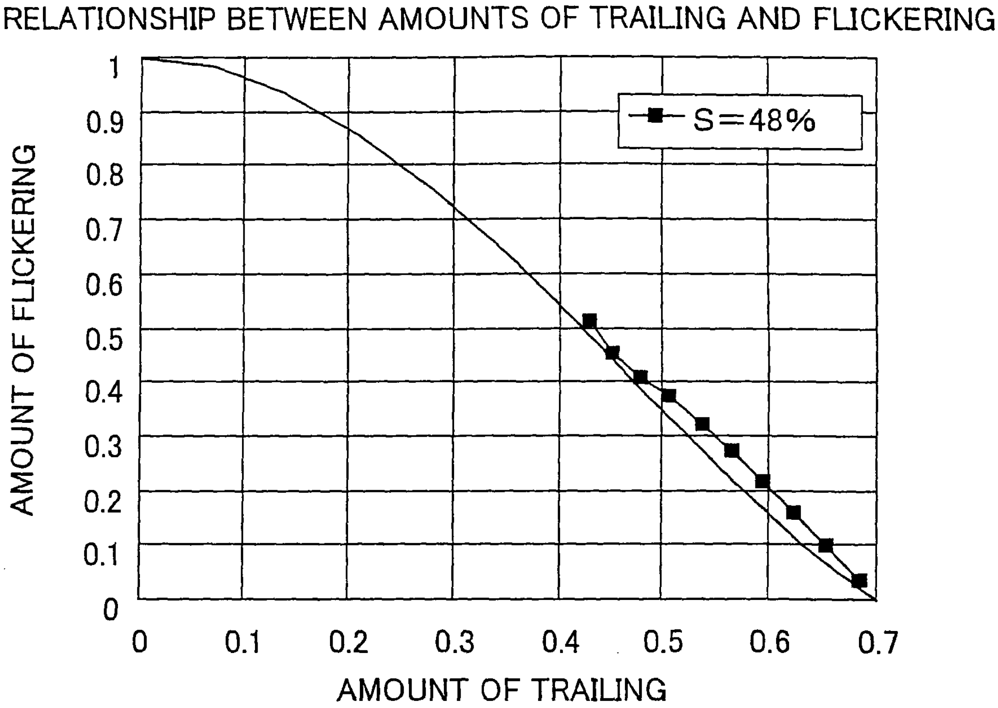


FIG. 91 (b)

| DUTY RATIO D | AMOUNT OF TRAILING | AMOUNT OF FLICKERING |
|---|---|---|
| 1 | 0.43 | 0.51 |
| 5 | 0.45 | 0.45 |
| 10 | 0.48 | 0.41 |
| 15 | 0.51 | 0.38 |
| 20 | 0.54 | 0.33 |
| 25 | 0.57 | 0.28 |
| 30 | 0.60 | 0.22 |
| 35 | 0.62 | 0.16 |
| 40 | 0.65 | 0.10 |
| 45 | 0.68 | 0.04 |

S FIXED AT 48%

FIG. 92(a)

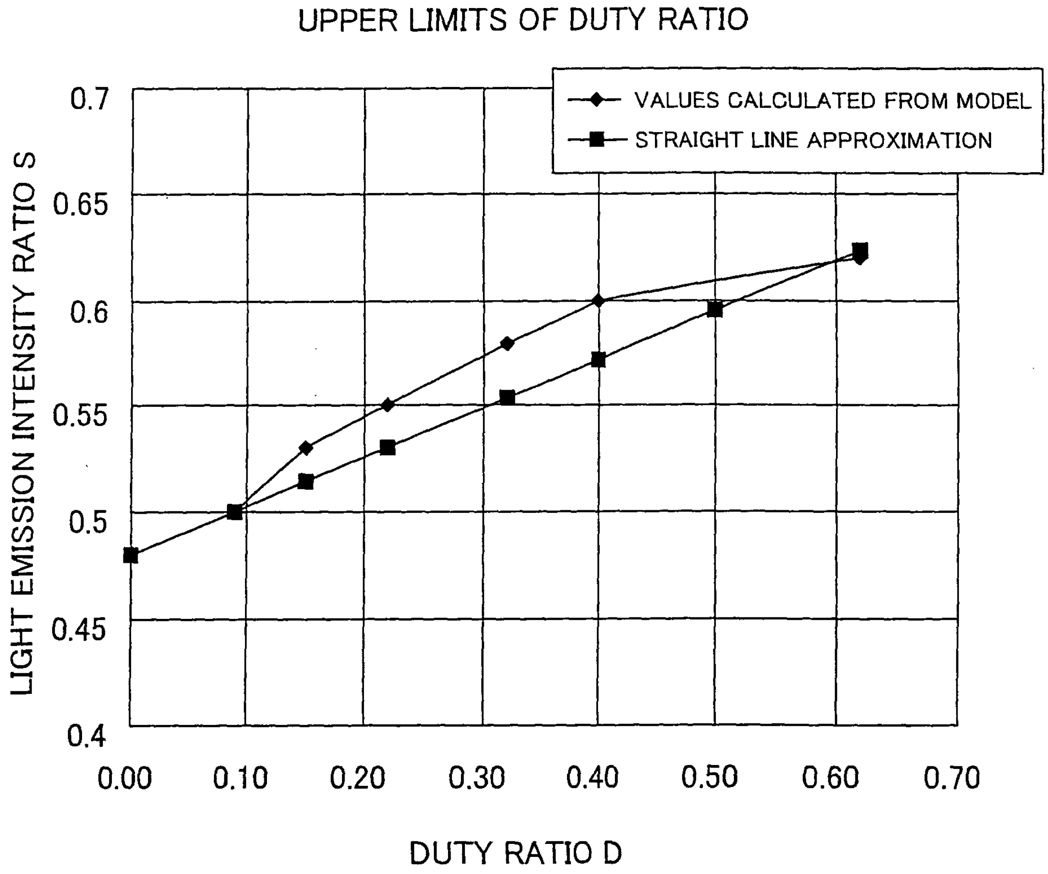


FIG. 92 (b)

| DUTY RATIO D | LIGHT EMISSION INTENSITY RATIO S |
|---|---|
| 0.09 | 0.5 |
| 0.15 | 0.53 |
| 0.22 | 0.55 |
| 0.32 | 0.58 |
| 0.4 | 0.6 |
| 0.619 | 0.62 |

VALUES CALCULATED FROM MODEL

FIG. 93(a)

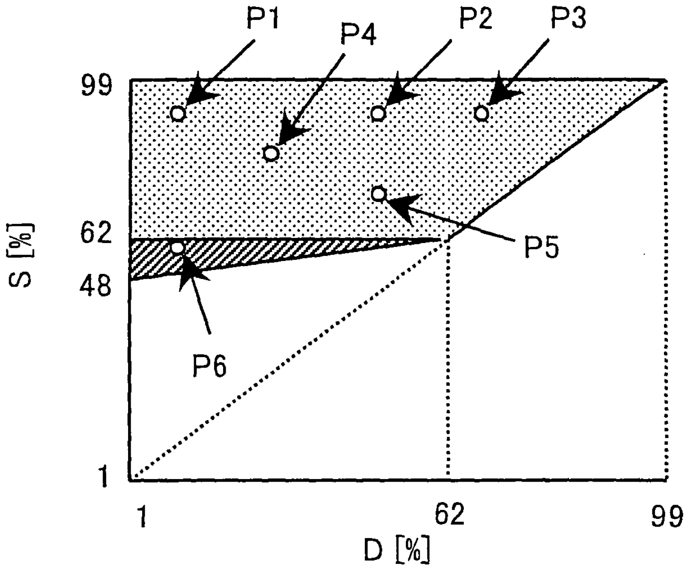


FIG. 93(b)

| POINT | D (%) | S (%) | AMOUNT OF TRAILING | AMOUNT OF FLICKERING |
|---|---|---|---|---|
| P1 | 0.1 | 0.9 | 0.08 | 0.87 |
| P2 | 0.5 | 0.9 | 0.39 | 0.51 |
| P3 | 0.7 | 0.9 | 0.54 | 0.25 |
| P4 | 0.3 | 0.8 | 0.26 | 0.61 |
| P5 | 0.5 | 0.7 | 0.5 | 0.25 |
| P6 | 0.1 | 0.6 | 0.33 | 0.54 |

FIG. 93(c)

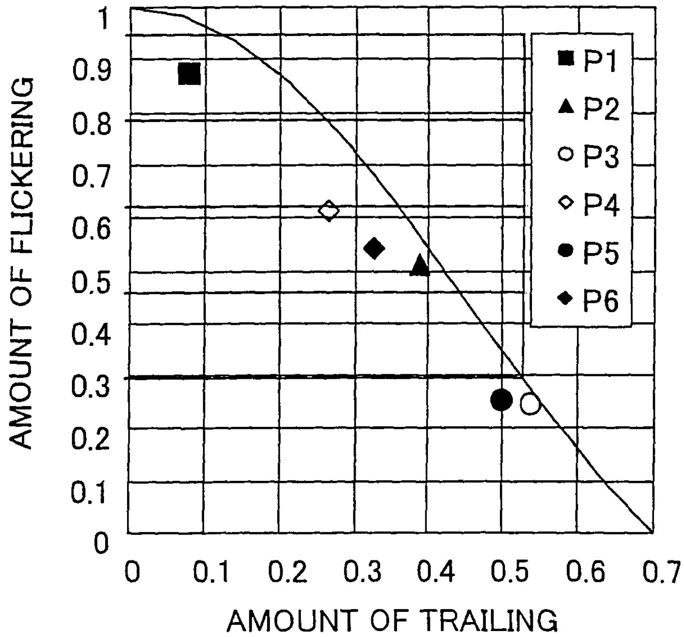

FIG. 94(a)

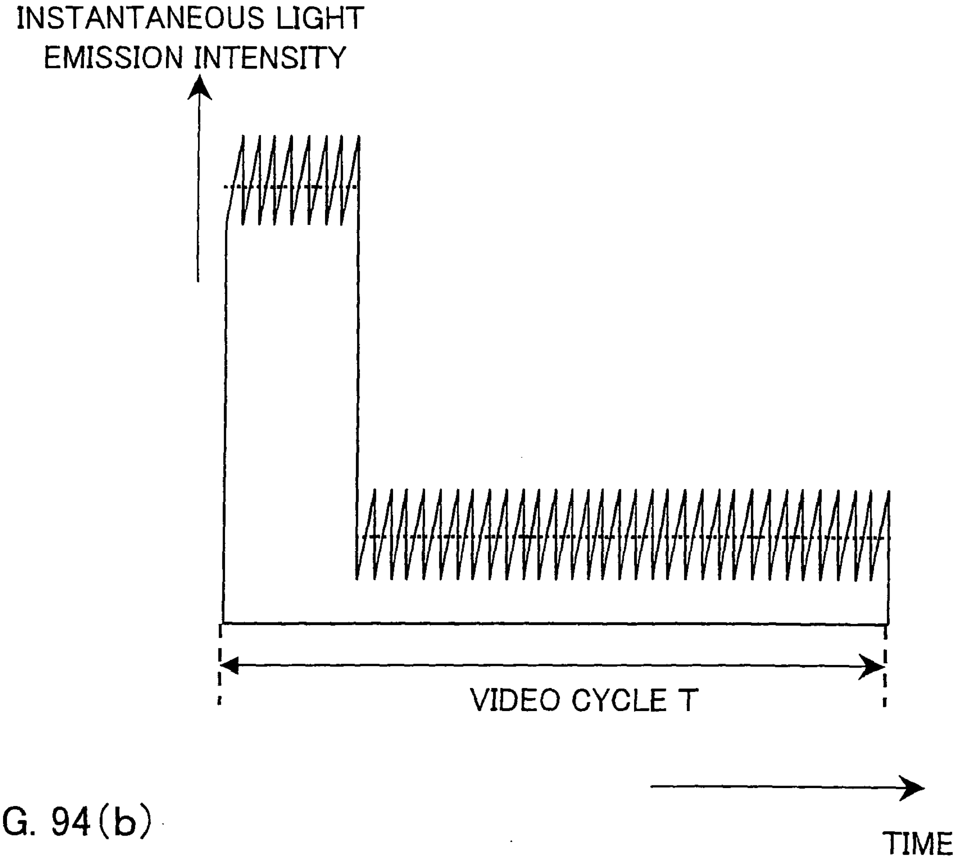


FIG. 94(b)

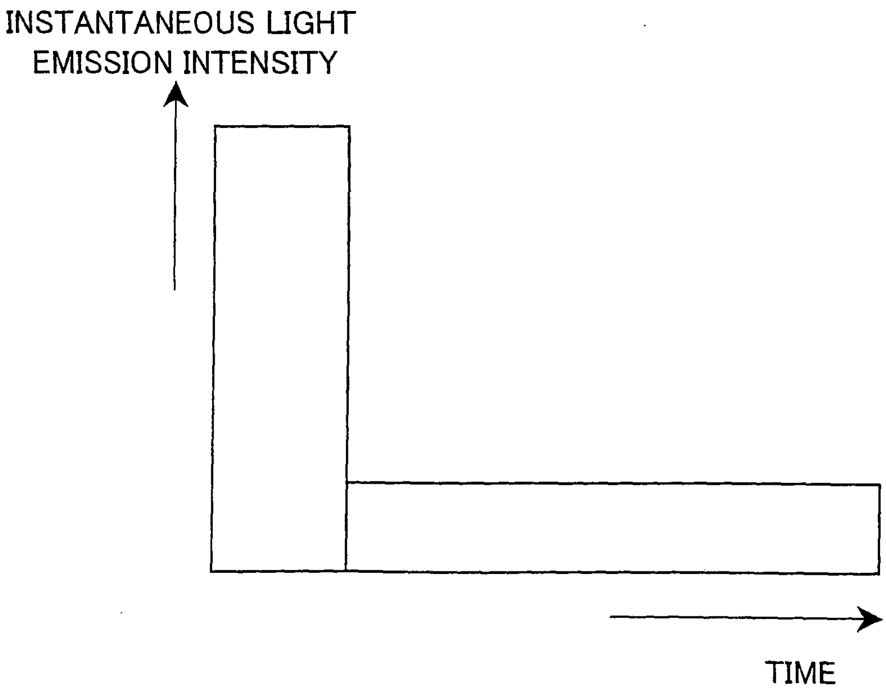

FIG. 95(a)

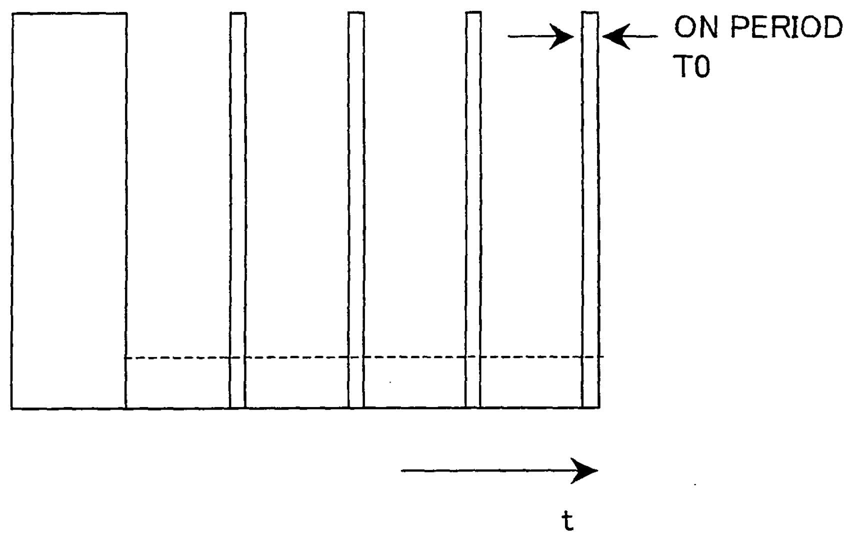


FIG. 95(b)

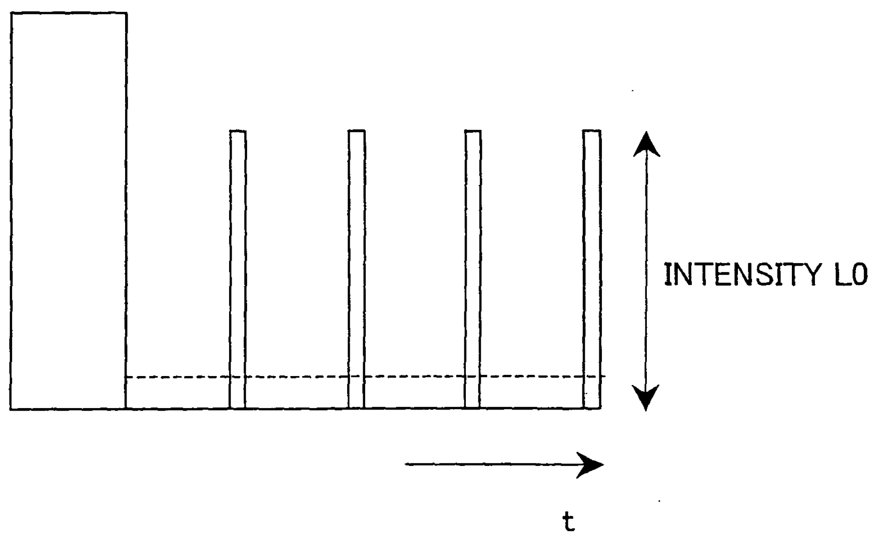

FIG. 96

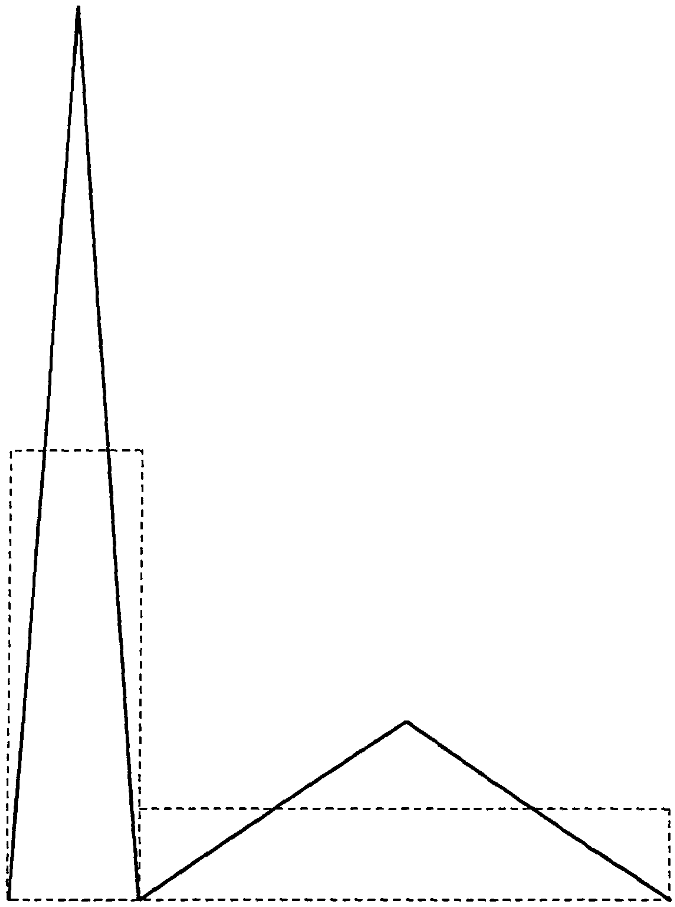

FIG. 97

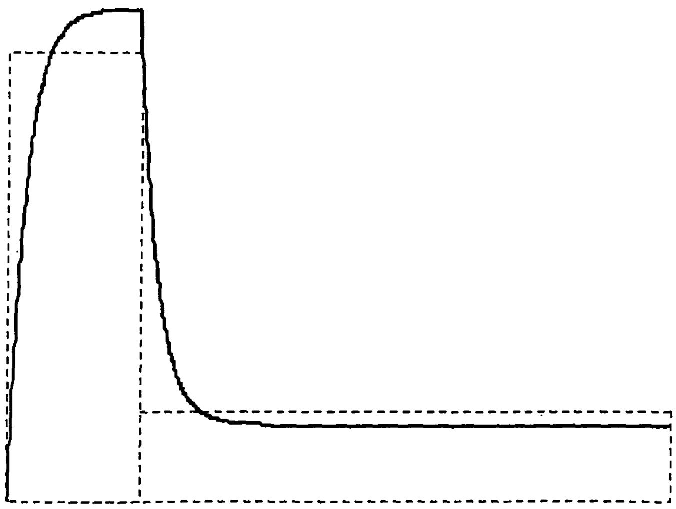

FIG. 98

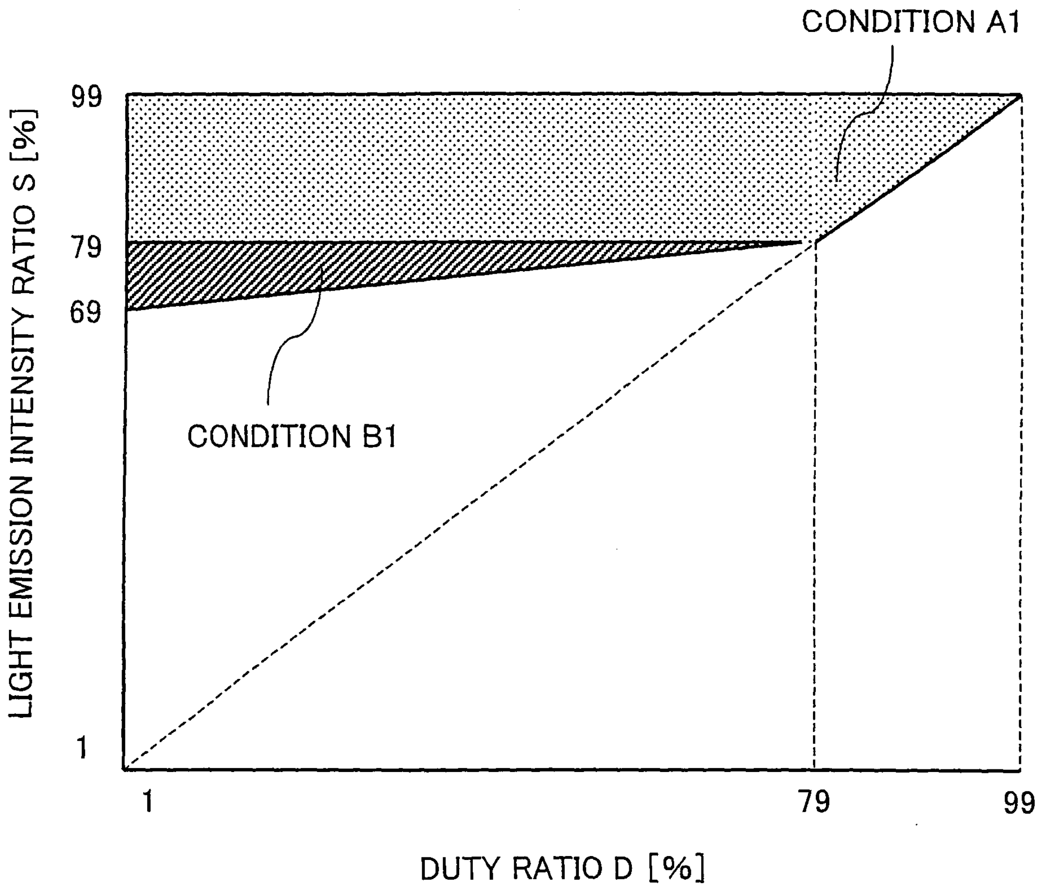
CONDITION A1
99
79
69
1
LIGHT EMISSION INTENSITY RATIO S [%]
CONDITION B1
1
79
99
DUTY RATIO D [%]

FIG. 99(a)

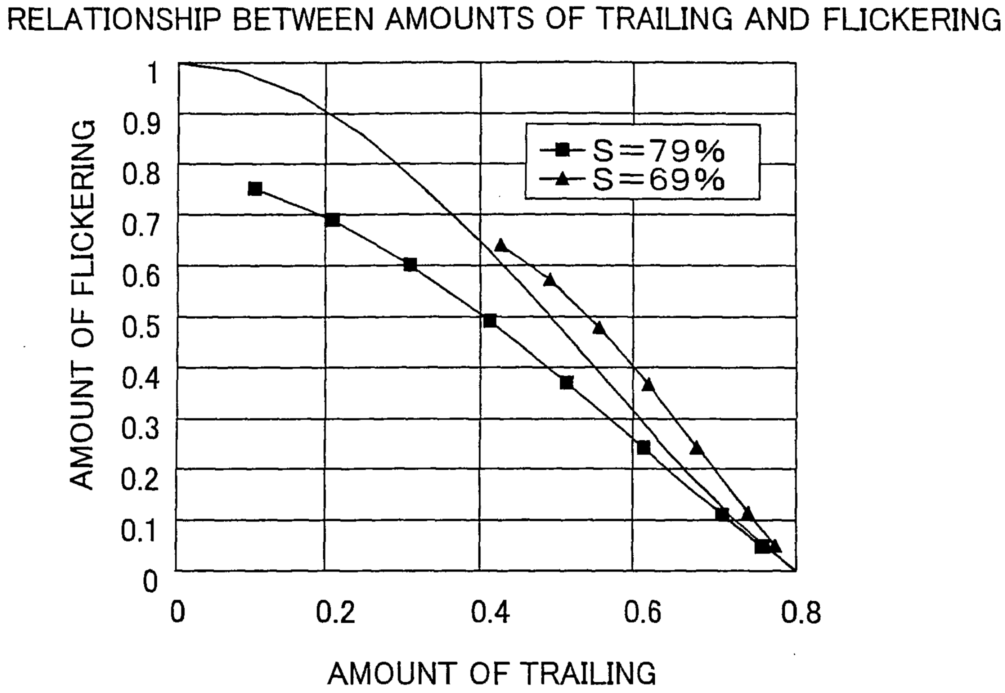


FIG. 99(b)

| DUTY RATIO D | AMOUNT OF TRAILING | AMOUNT OF FLICKERING |
|---|---|---|
| 10 | 0.42 | 0.64 |
| 20 | 0.48 | 0.57 |
| 30 | 0.55 | 0.48 |
| 40 | 0.61 | 0.37 |
| 50 | 0.68 | 0.24 |
| 60 | 0.74 | 0.11 |
| 65 | 0.77 | 0.05 |

S FIXED AT 69%

FIG. 99(c)

| DUTY RATIO D | AMOUNT OF TRAILING | AMOUNT OF FLICKERING |
|---|---|---|
| 10 | 0.10 | 0.75 |
| 20 | 0.20 | 0.69 |
| 30 | 0.30 | 0.60 |
| 40 | 0.41 | 0.49 |
| 50 | 0.51 | 0.37 |
| 60 | 0.61 | 0.24 |
| 70 | 0.71 | 0.11 |
| 75 | 0.76 | 0.05 |

S FIXED AT 79%

FIG. 100(a)

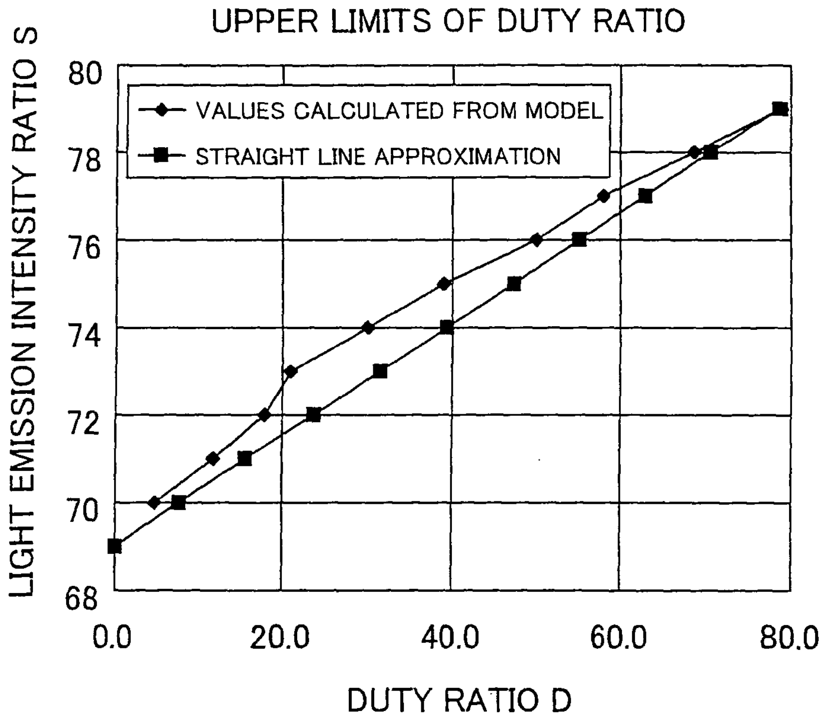


FIG. 100(b)

| LIGHT EMISSION INTENSITY RATIO S | DUTY RATIO D |
|---|---|
| 70 | 5.0 |
| 71 | 12.0 |
| 72 | 18.0 |
| 73 | 21.0 |
| 74 | 30.0 |
| 75 | 39.0 |
| 76 | 50.0 |
| 77 | 58.0 |
| 78 | 69.0 |
| 79 | 78.9 |

VALUES CALCULATED FROM MODEL

FIG. 101

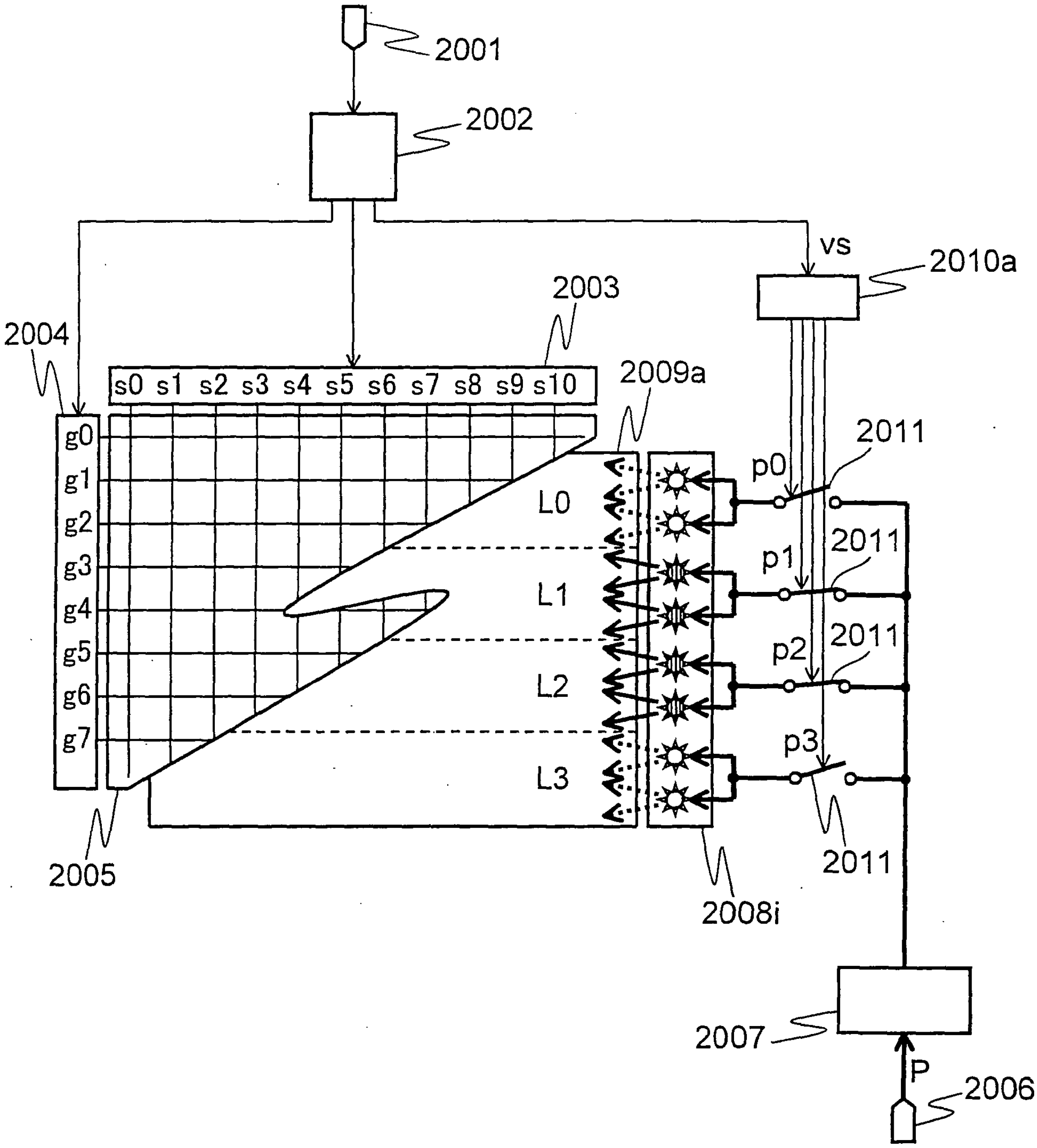
2001
2002
vs
2010a
2003
2004
s0 s1 s2 s3 s4 s5 s6 s7 s8 s9 s10
2009a
g0
g1
g2
g3
g4
g5
g6
g7
2011
p0
L0
p1
2011
L1
p2
2011
L2
p3
L3
2011
2005
2008i
2007
P
2006

FIG. 102

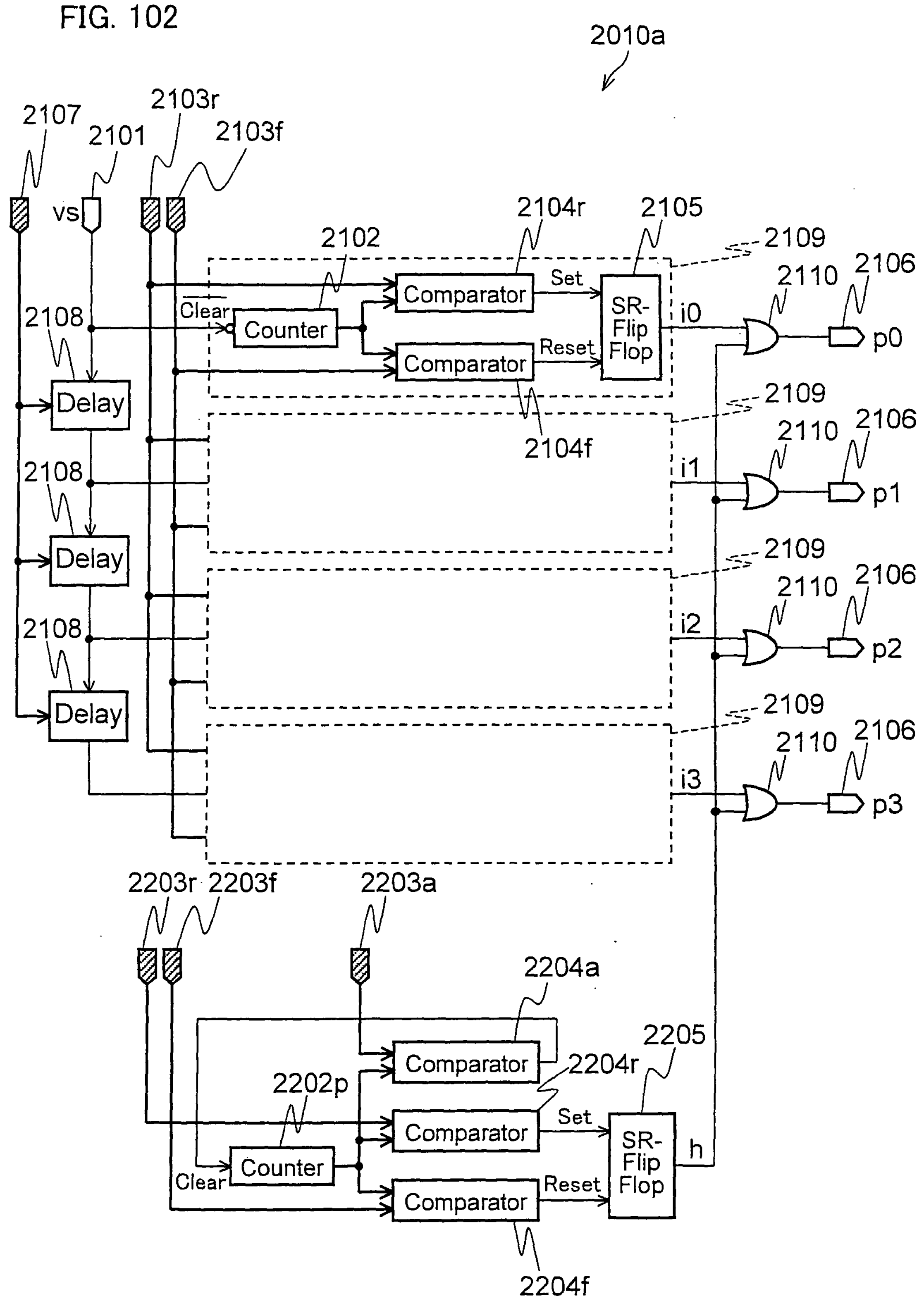
2010a
2107
2101
2103r
2103f
vs
2104r
2105
2102
2109
2110
2106
Set
Comparator
SR-
Flip
Flop
Clear
Counter
i0
p0
2108
Reset
Comparator
Delay
2104f
i1
p1
Delay
i2
p2
Delay
i3
p3
2203r
2203f
2203a
2204a
2205
Comparator
2204r
2202p
Set
Comparator
h
Counter
Clear
Reset
Comparator
2204f

FIG. 103

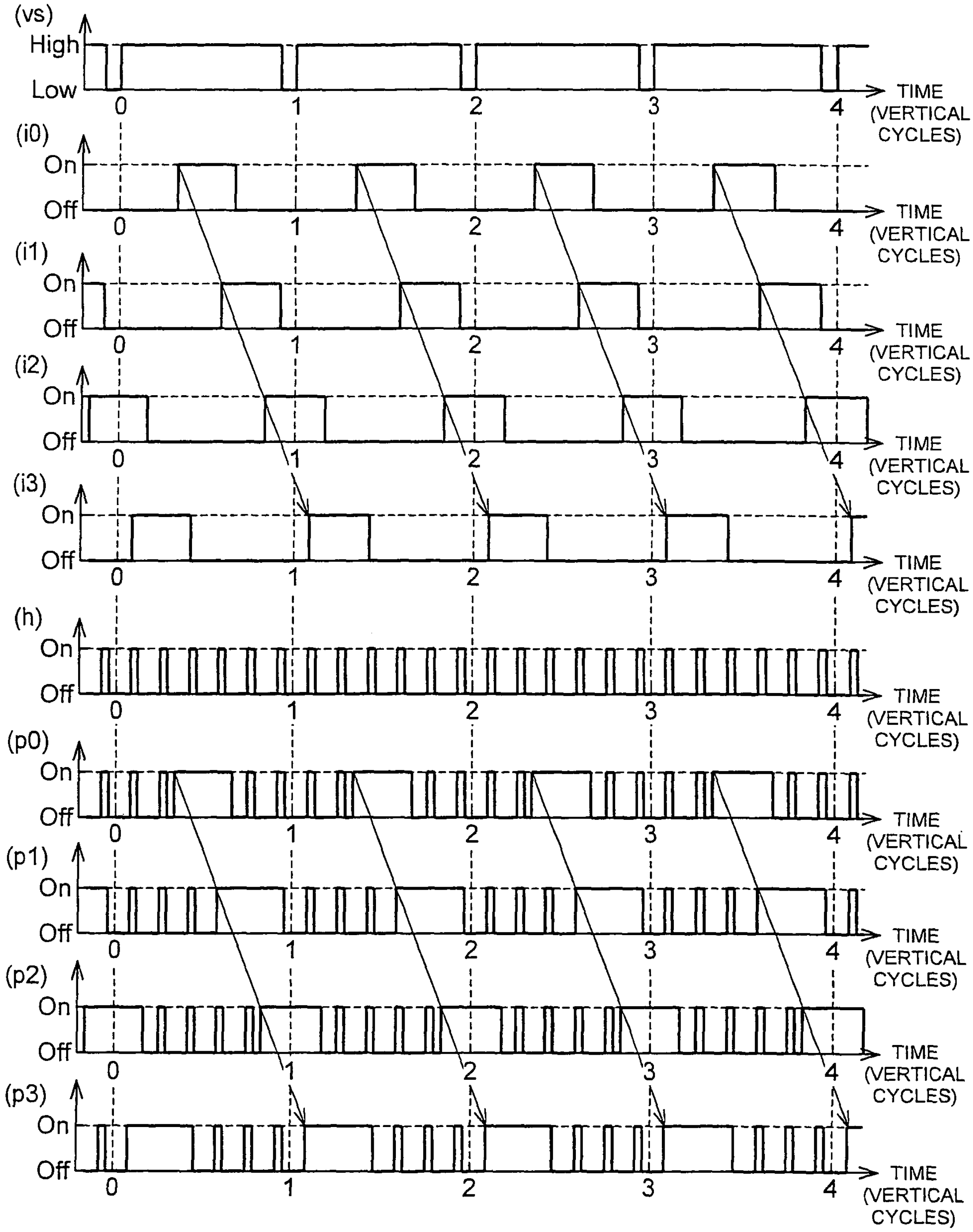
(vs)
High
Low
(i0)
(i1)
(i2)
(i3)
(h)
(p0)
(p1)
(p2)
(p3)
On
Off
0
1
2
3
4
TIME (VERTICAL CYCLES)

FIG. 104

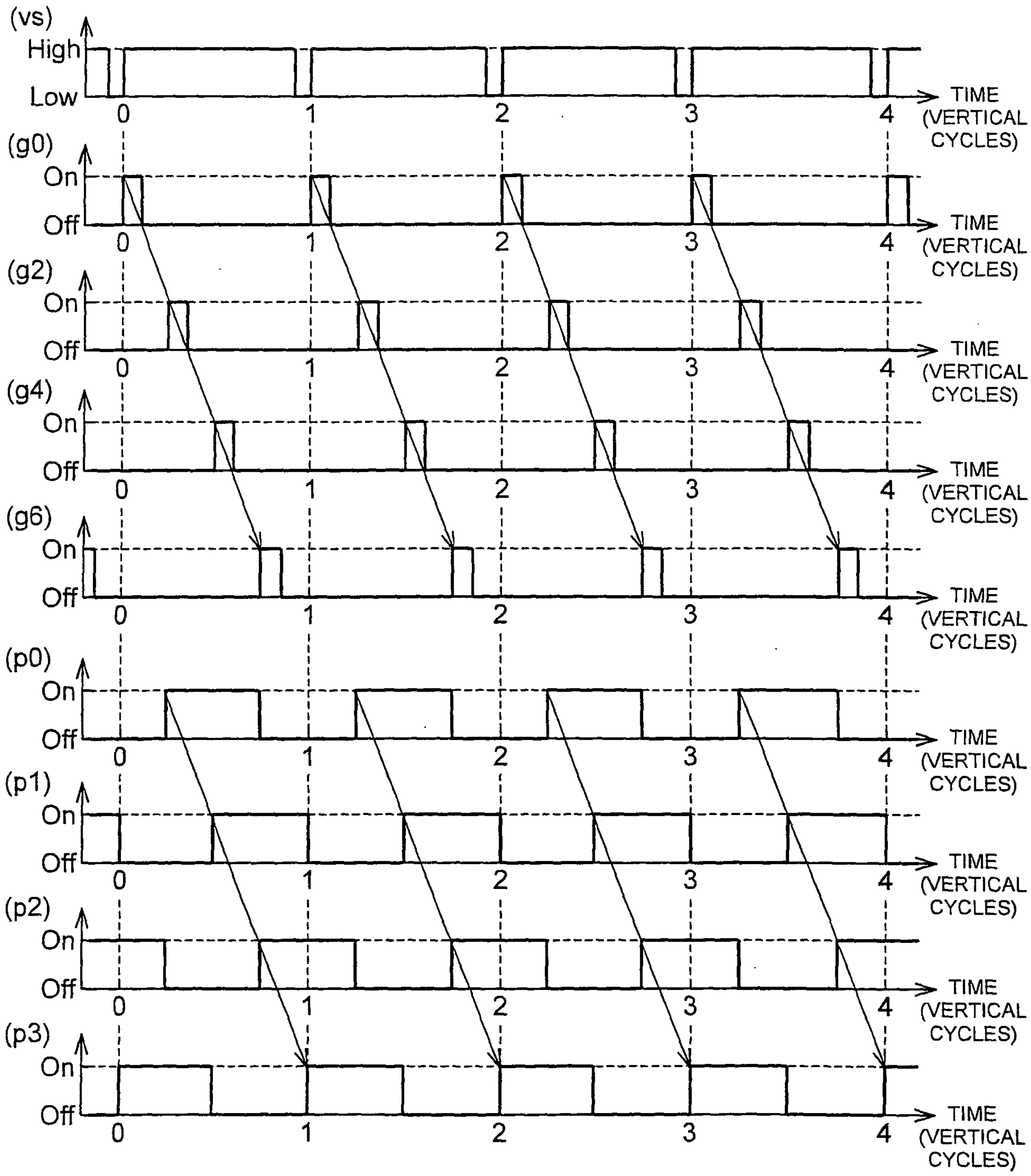
(vs)
High
Low
0
1
2
3
4
TIME (VERTICAL CYCLES)
(g0)
On
Off
(g2)
(g4)
(g6)
(p0)
(p1)
(p2)
(p3)

FIG. 105

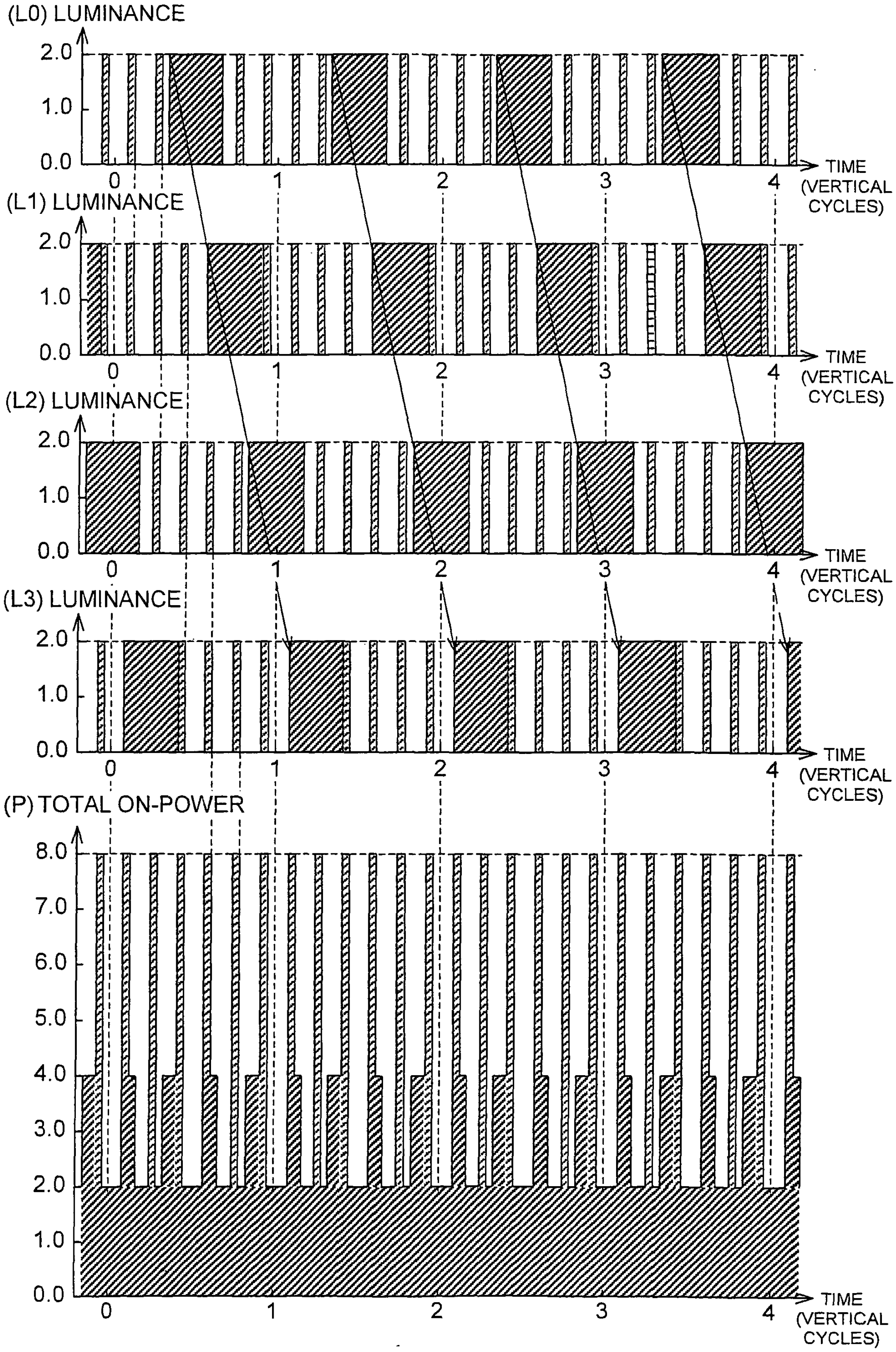
(L0) LUMINANCE
2.0
1.0
0.0
0
1
2
3
4
TIME (VERTICAL CYCLES)
(L1) LUMINANCE
2.0
1.0
0.0
0
1
2
3
4
TIME (VERTICAL CYCLES)
(L2) LUMINANCE
2.0
1.0
0.0
0
1
2
3
4
TIME (VERTICAL CYCLES)
(L3) LUMINANCE
2.0
1.0
0.0
0
1
2
3
4
TIME (VERTICAL CYCLES)
(P) TOTAL ON-POWER
8.0
7.0
6.0
5.0
4.0
3.0
2.0
1.0
0.0
0
1
2
3
4
TIME (VERTICAL CYCLES)

FIG. 106

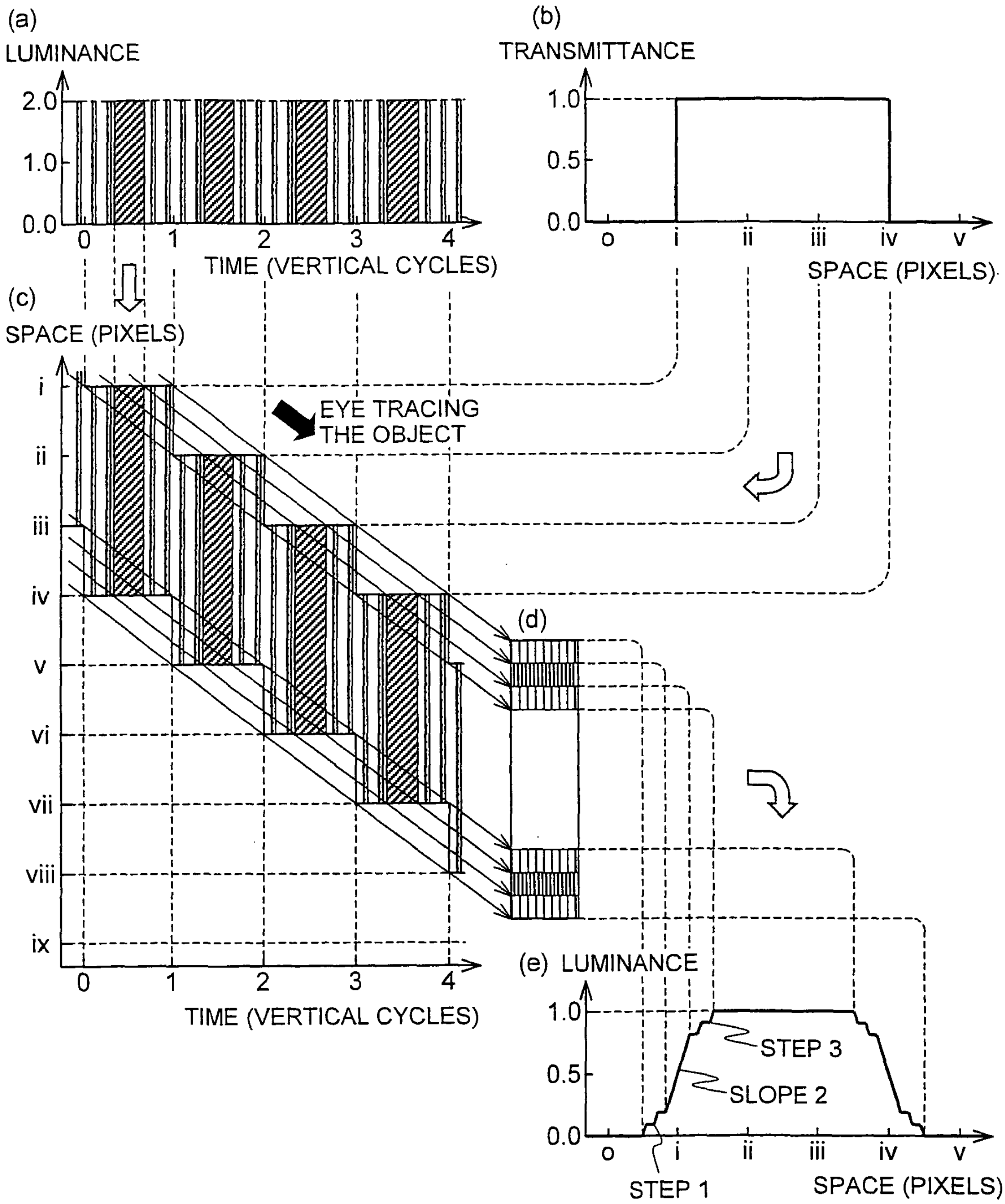
(a)
LUMINANCE
2.0
1.0
0.0
0
1
2
3
4
TIME (VERTICAL CYCLES)
(b)
TRANSMITTANCE
1.0
0.5
0.0
o
i
ii
iii
iv
v
SPACE (PIXELS)
(c)
SPACE (PIXELS)
i
ii
iii
iv
v
vi
vii
viii
ix
EYE TRACING THE OBJECT
0
1
2
3
4
TIME (VERTICAL CYCLES)
(d)
(e) LUMINANCE
1.0
0.5
0.0
STEP 3
SLOPE 2
STEP 1
o
i
ii
iii
iv
v
SPACE (PIXELS)

FIG. 107

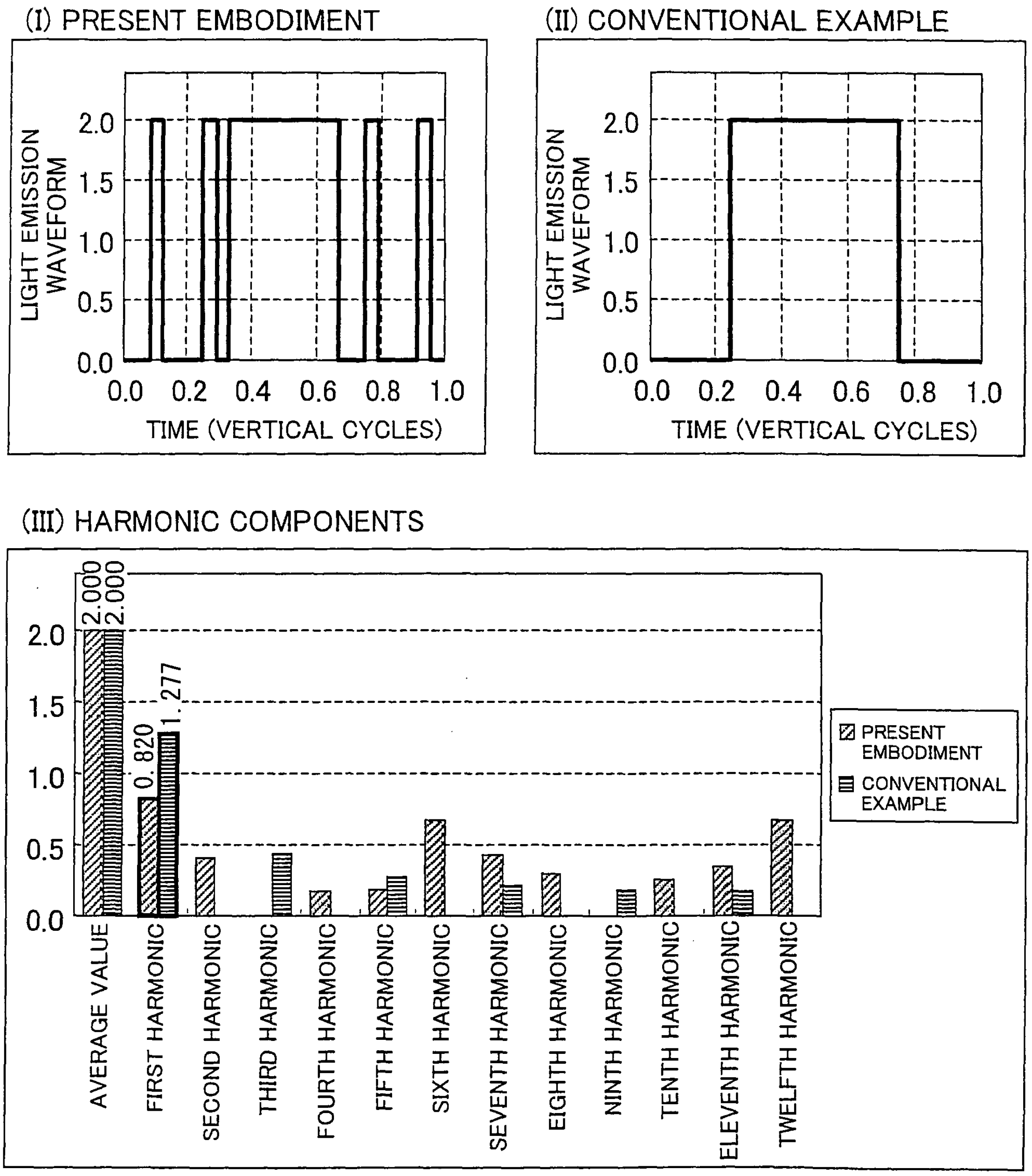
(I) PRESENT EMBODIMENT
LIGHT EMISSION WAVEFORM
2.0
1.5
1.0
0.5
0.0
0.0 0.2 0.4 0.6 0.8 1.0
TIME (VERTICAL CYCLES)
(II) CONVENTIONAL EXAMPLE
LIGHT EMISSION WAVEFORM
2.0
1.5
1.0
0.5
0.0
0.0 0.2 0.4 0.6 0.8 1.0
TIME (VERTICAL CYCLES)
(III) HARMONIC COMPONENTS
2.000
2.000
0. 820
1. 277
2.0
1.5
1.0
0.5
0.0
AVERAGE VALUE
FIRST HARMONIC
SECOND HARMONIC
THIRD HARMONIC
FOURTH HARMONIC
FIFTH HARMONIC
SIXTH HARMONIC
SEVENTH HARMONIC
EIGHTH HARMONIC
NINTH HARMONIC
TENTH HARMONIC
ELEVENTH HARMONIC
TWELFTH HARMONIC
PRESENT EMBODIMENT
CONVENTIONAL EXAMPLE

FIG. 108

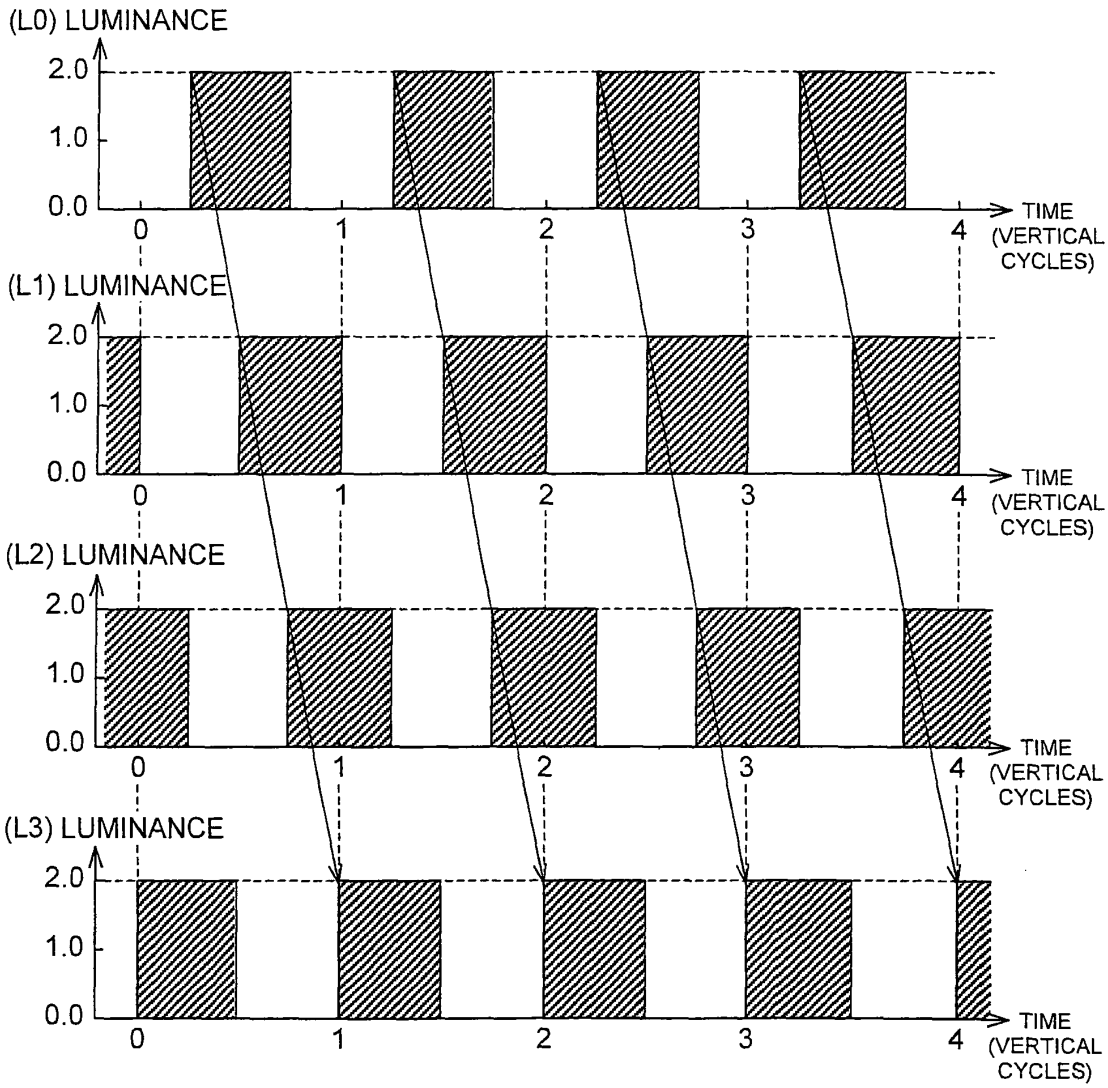
(L0) LUMINANCE
2.0
1.0
0.0
0
1
2
3
4
TIME (VERTICAL CYCLES)
(L1) LUMINANCE
2.0
1.0
0.0
0
1
2
3
4
TIME (VERTICAL CYCLES)
(L2) LUMINANCE
2.0
1.0
0.0
0
1
2
3
4
TIME (VERTICAL CYCLES)
(L3) LUMINANCE
2.0
1.0
0.0
0
1
2
3
4
TIME (VERTICAL CYCLES)

FIG. 109

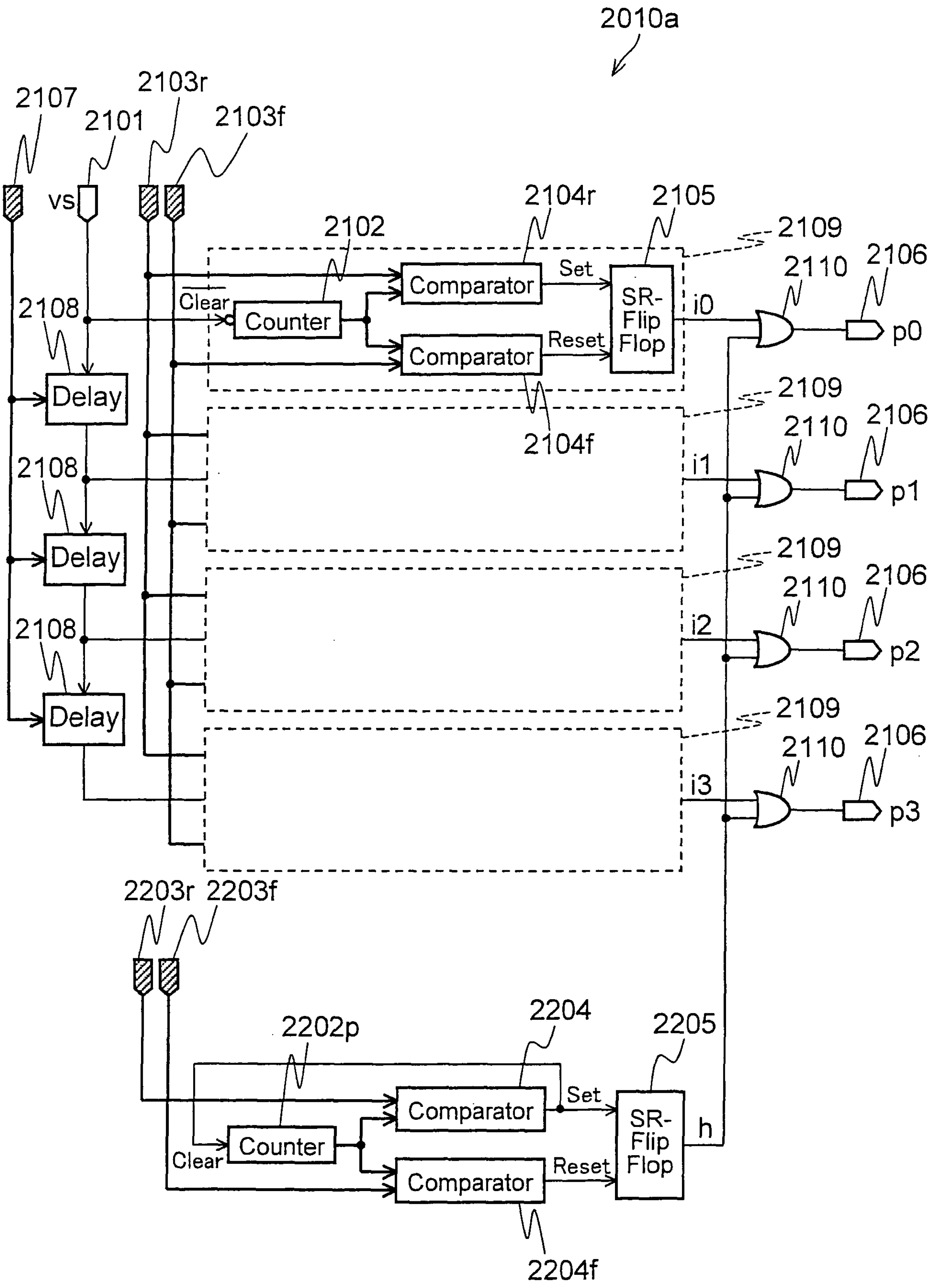
2010a
2107
2101
2103r
2103f
vs
2102
2104r
2105
2109
2110
2106
Clear
Counter
Comparator
Set
Reset
SR-
Flip
Flop
i0
p0
2108
Delay
2104f
i1
p1
i2
p2
i3
p3
2203r
2203f
2202p
2204
2205
h
2204f

FIG. 110

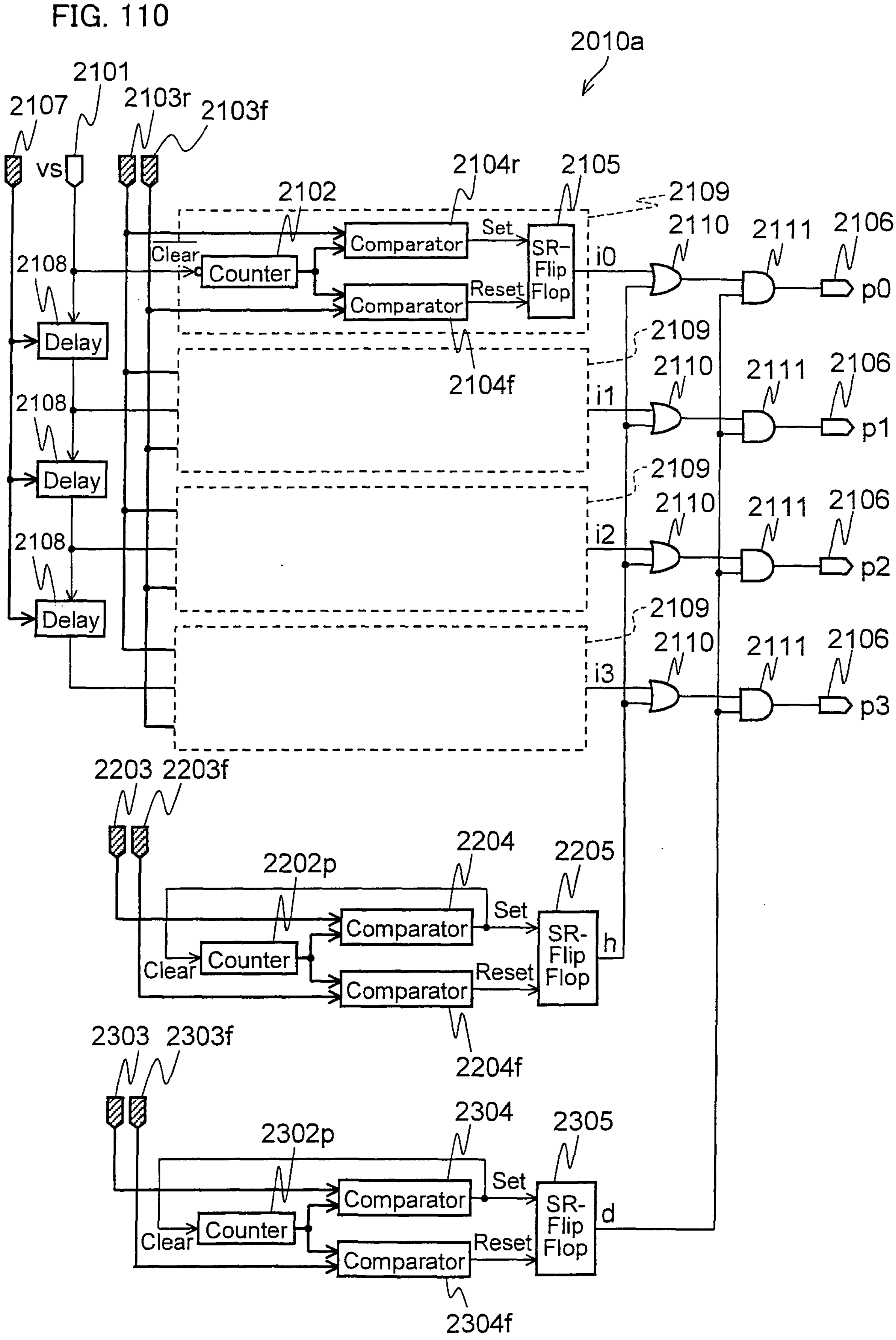
2010a
2101
2107
2103r
2103f
vs
2104r
2105
2102
2109
Set
Clear
Counter
Comparator
SR-Flip Flop
i0
2110
2111
2106
p0
2108
Reset
Comparator
2104f
Delay
i1
p1
i2
p2
i3
p3
2203 2203f
2202p
2204
2205
Set
h
Clear
Reset
2204f
2303 2303f
2302p
2304
2305
d
2304f

FIG. 111

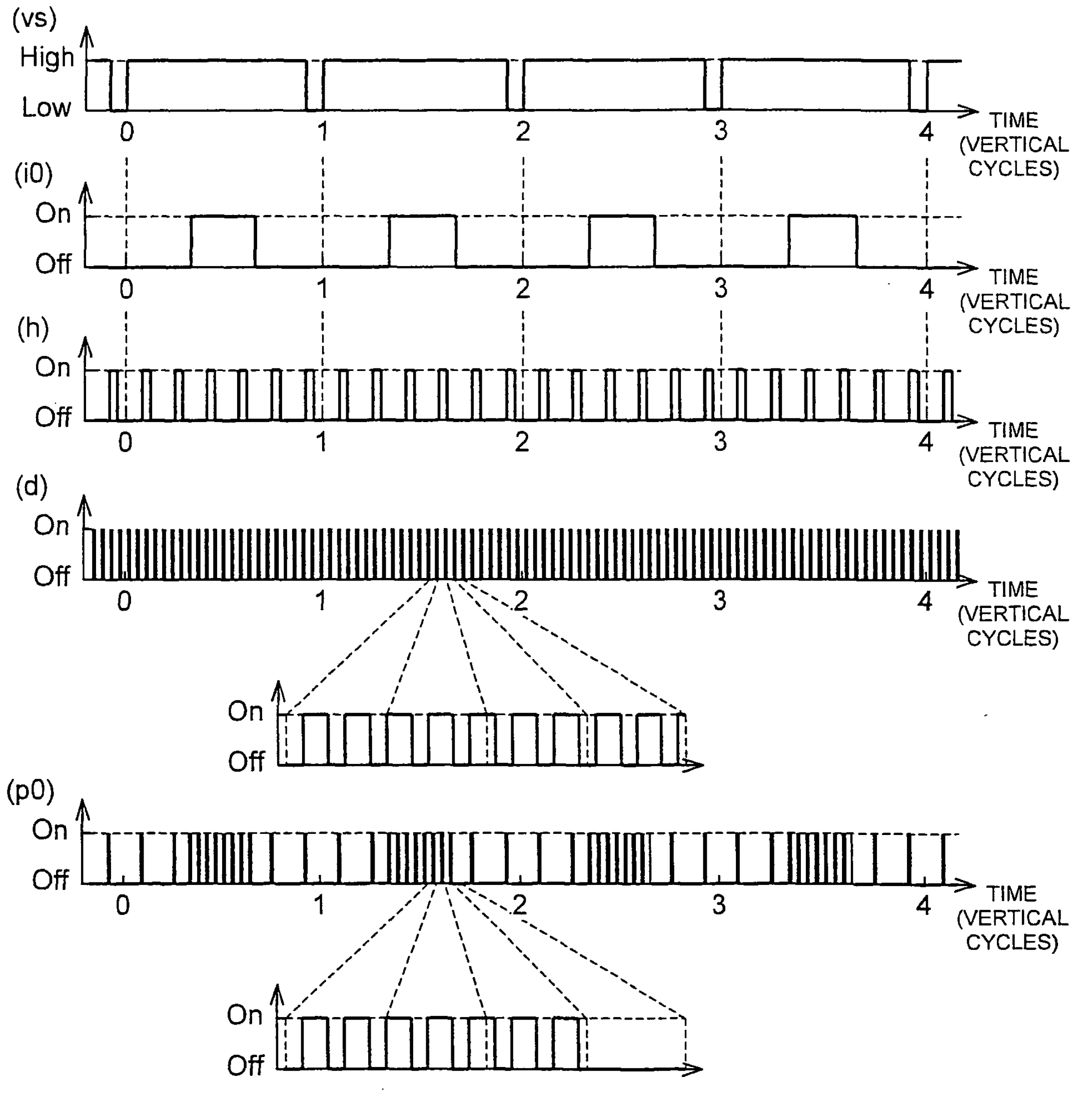
(vs)
High
Low
0
1
2
3
4
TIME (VERTICAL CYCLES)
(i0)
On
Off
0
1
2
3
4
TIME (VERTICAL CYCLES)
(h)
On
Off
0
1
2
3
4
TIME (VERTICAL CYCLES)
(d)
On
Off
0
1
2
3
4
TIME (VERTICAL CYCLES)
On
Off
(p0)
On
Off
0
1
2
3
4
TIME (VERTICAL CYCLES)
On
Off

FIG. 112

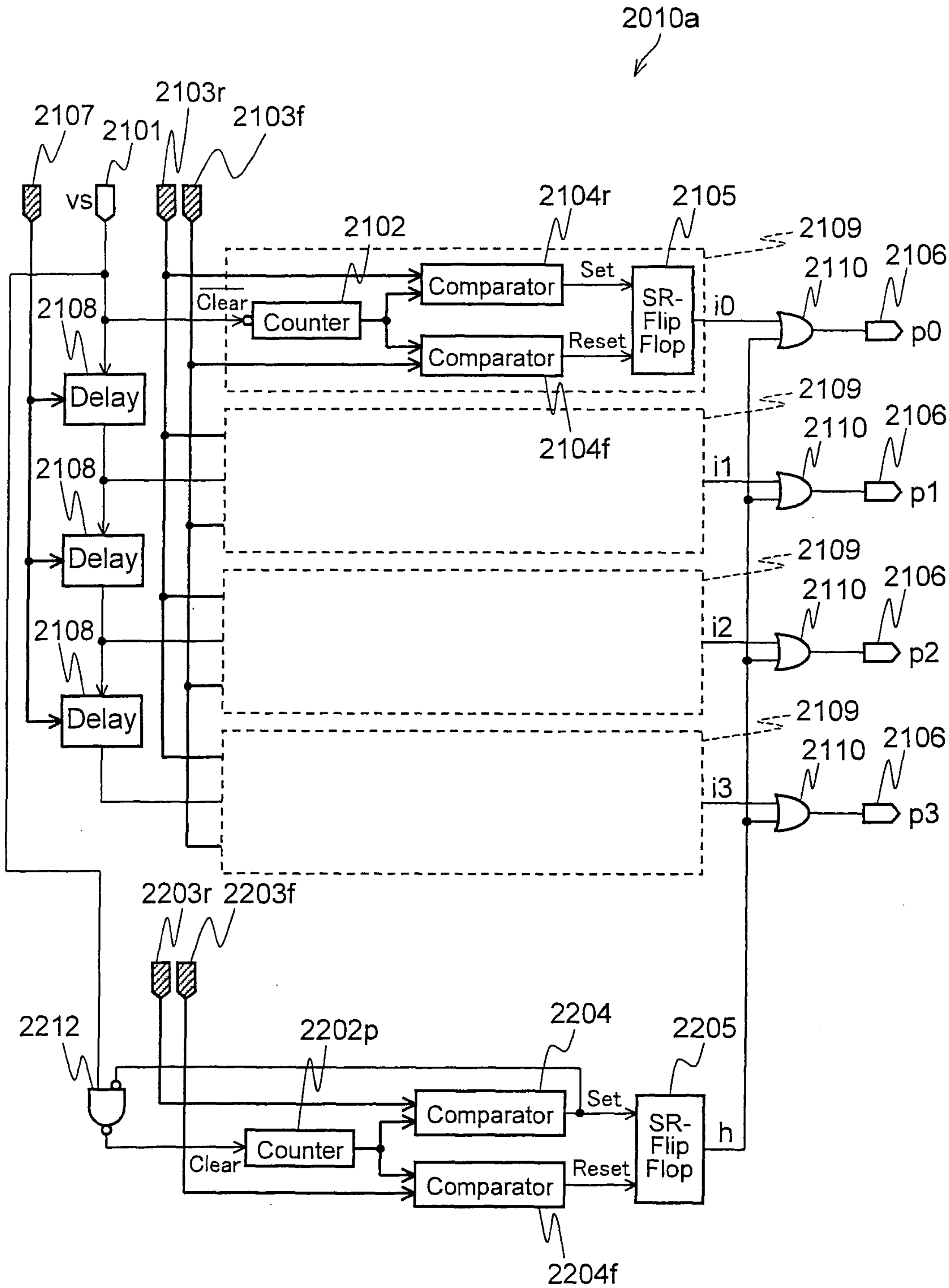
2010a
2107
2101
2103r
2103f
vs
2104r
2105
2102
2109
2110
2106
Set
Comparator
Clear
Counter
SR-
Flip
Flop
i0
p0
2108
Reset
Comparator
Delay
2104f
i1
p1
Delay
i2
p2
Delay
i3
p3
2203r
2203f
2212
2202p
2204
2205
Comparator
Set
SR-
Flip
Flop
h
Counter
Clear
Reset
Comparator
2204f

FIG. 113

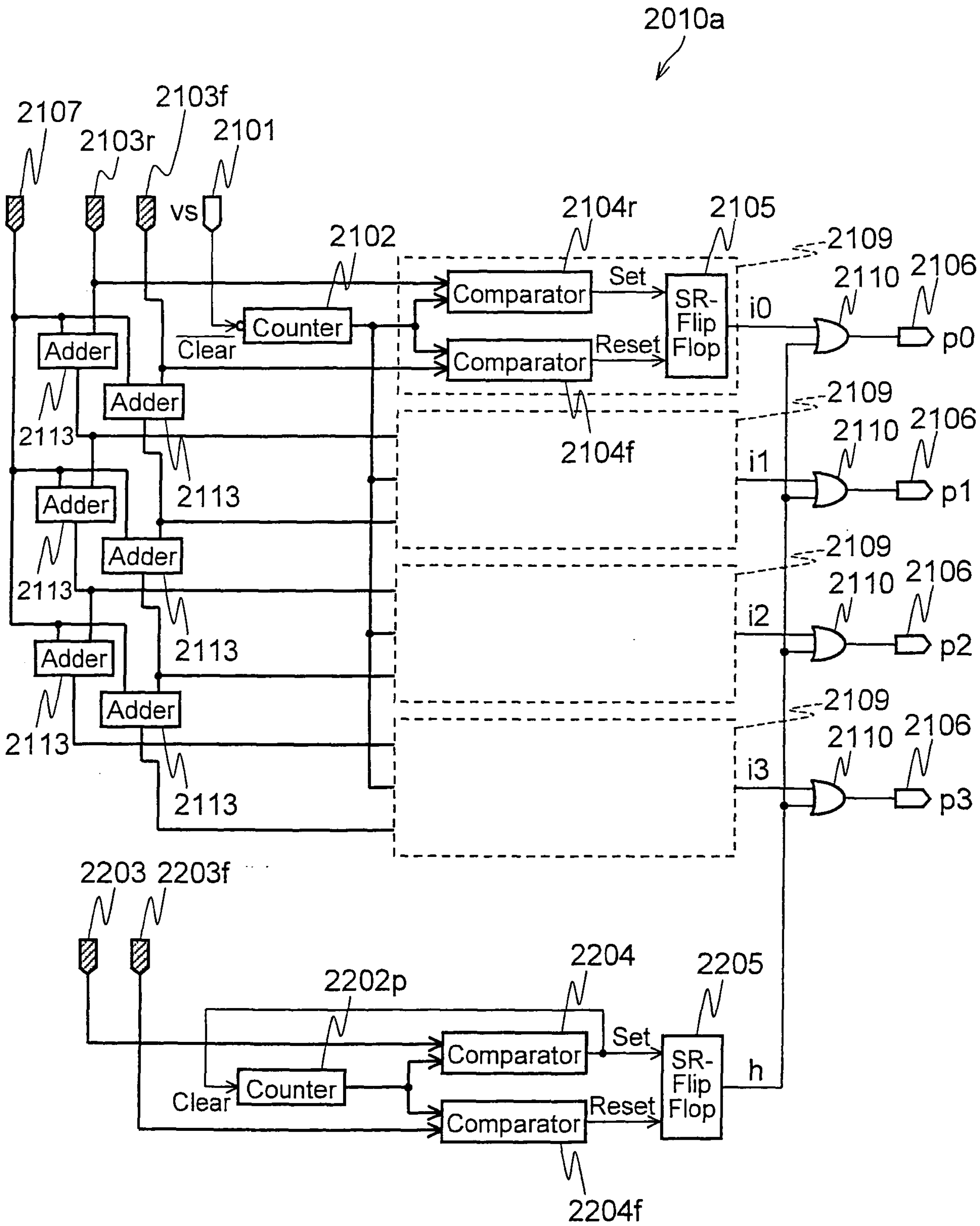
2010a
2107
2103r
2103f
2101
vs
2102
2104r
2105
2109
2110
2106
Comparator
Set
SR-Flip Flop
i0
p0
Counter
Clear
Adder
Reset
2113
2104f
i1
p1
i2
p2
i3
p3
2203
2203f
2204
2205
2202p
h
2204f

FIG. 114

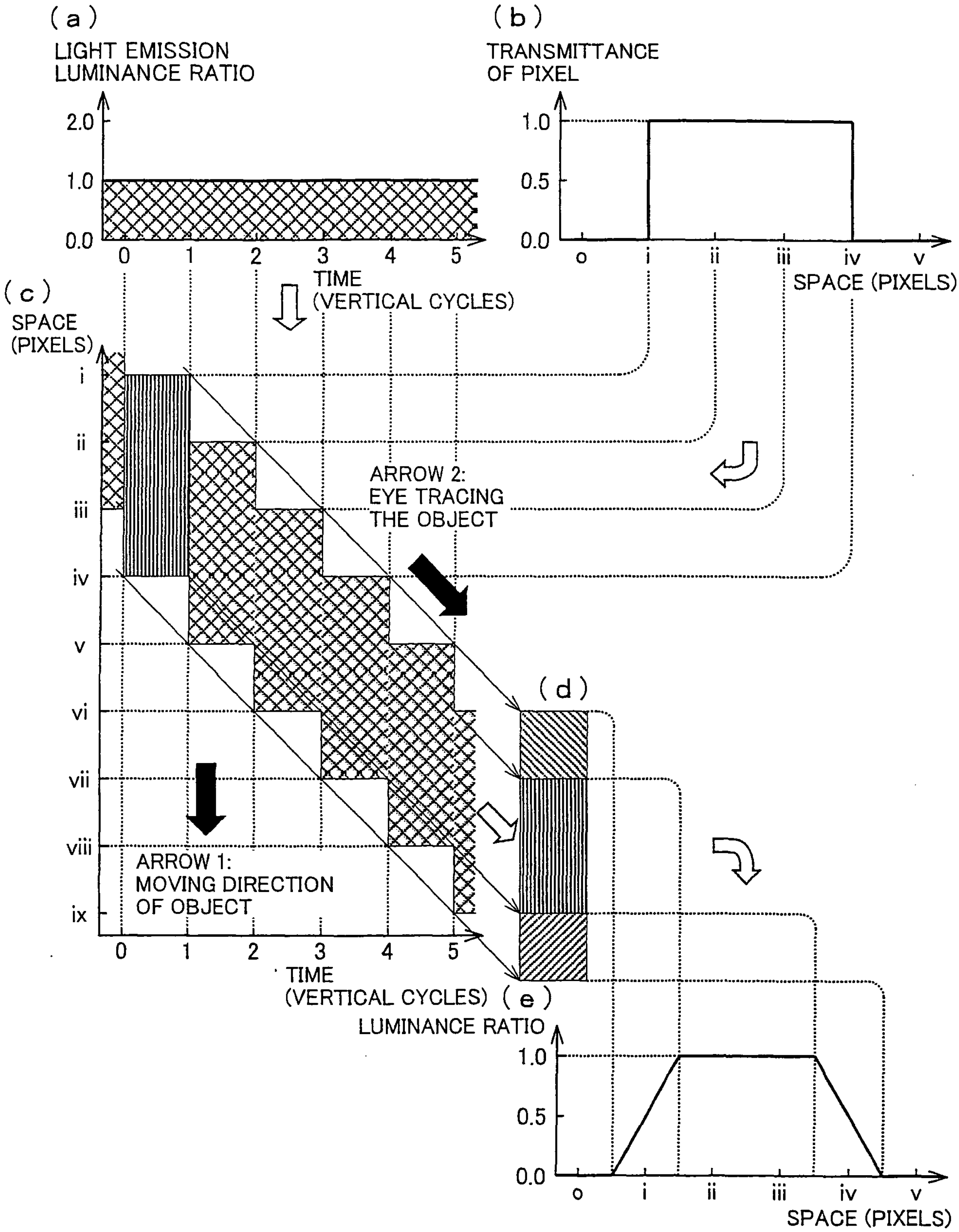
(a)
LIGHT EMISSION
LUMINANCE RATIO
2.0
1.0
0.0
0
1
2
3
4
5
TIME
(VERTICAL CYCLES)
(b)
TRANSMITTANCE
OF PIXEL
1.0
0.5
0.0
o
i
ii
iii
iv
v
SPACE (PIXELS)
(c)
SPACE
(PIXELS)
i
ii
iii
iv
v
vi
vii
viii
ix
ARROW 2:
EYE TRACING
THE OBJECT
ARROW 1:
MOVING DIRECTION
OF OBJECT
0
1
2
3
4
5
TIME
(VERTICAL CYCLES)
(d)
(e)
LUMINANCE RATIO
1.0
0.5
0.0
o
i
ii
iii
iv
v
SPACE (PIXELS)

FIG. 115

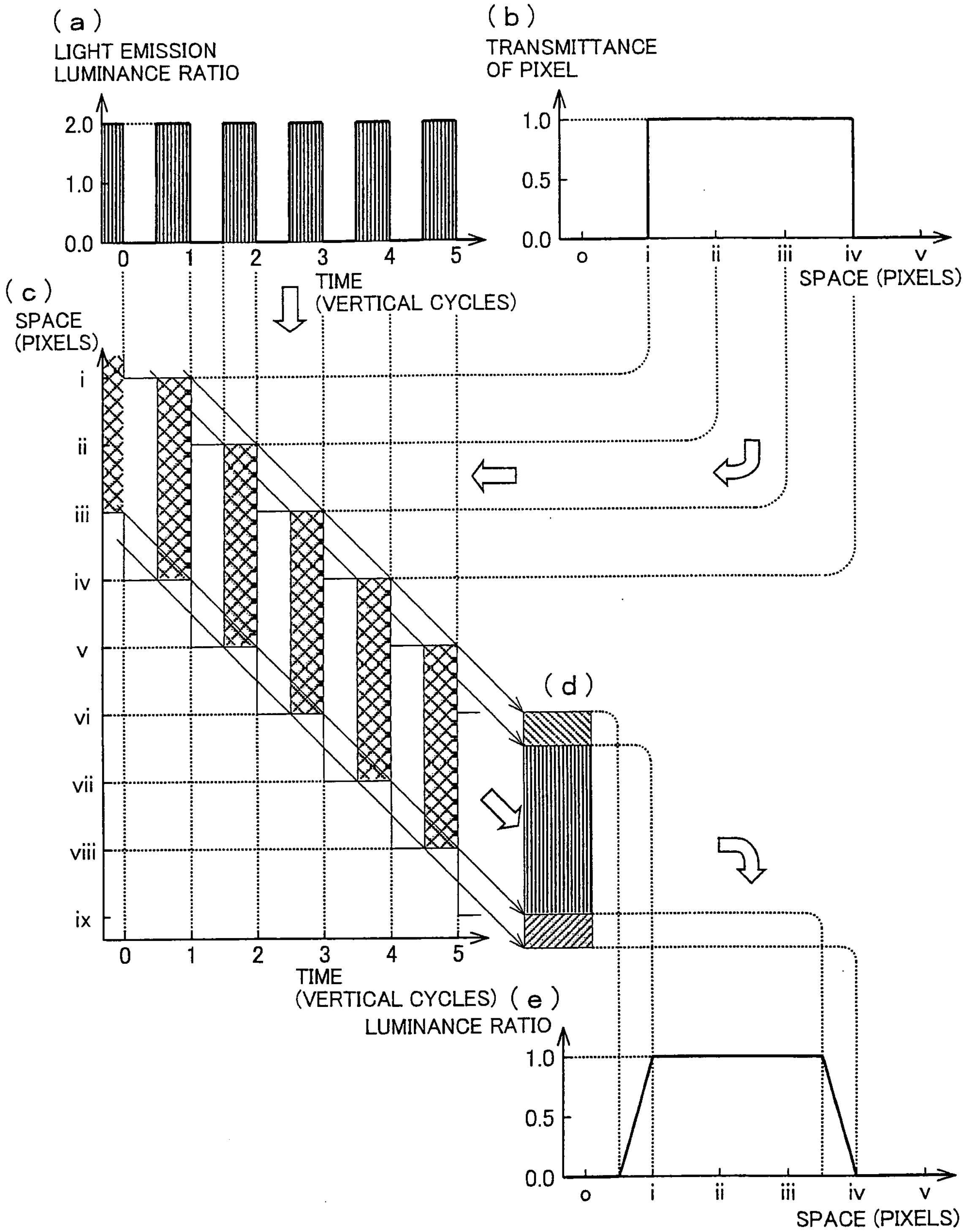
(a)
LIGHT EMISSION
LUMINANCE RATIO
2.0
1.0
0.0
0
1
2
3
4
5
TIME
(VERTICAL CYCLES)
(b)
TRANSMITTANCE
OF PIXEL
1.0
0.5
0.0
o
i
ii
iii
iv
v
SPACE (PIXELS)
(c)
SPACE
(PIXELS)
i
ii
iii
iv
v
vi
vii
viii
ix
0
1
2
3
4
5
TIME
(VERTICAL CYCLES)
(d)
(e)
LUMINANCE RATIO
1.0
0.5
0.0
o
i
ii
iii
iv
v
SPACE (PIXELS)

FIG. 116 (a)

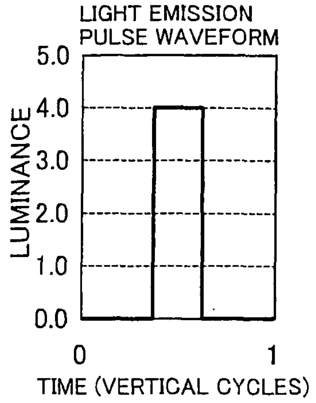


FIG. 116 (b)

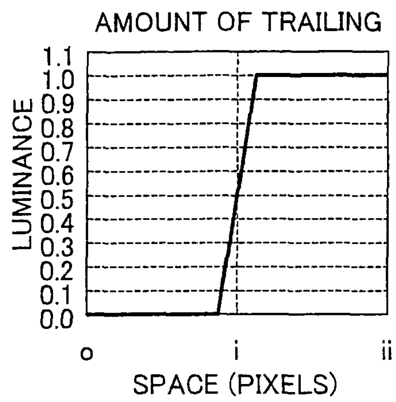


FIG. 116 (c)

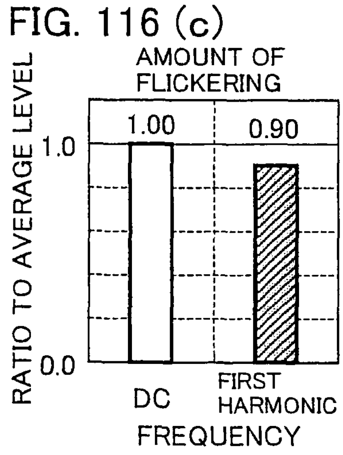


FIG. 116 (d)

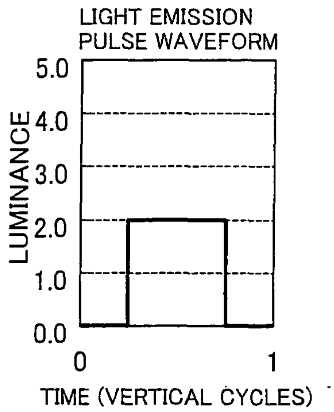


FIG. 116 (e)

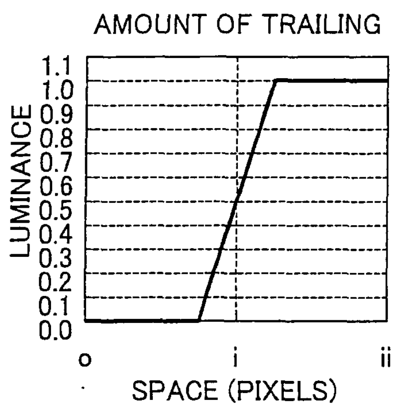


FIG. 116 (f)

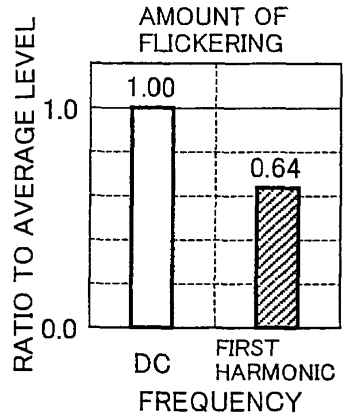


FIG. 116 (g)

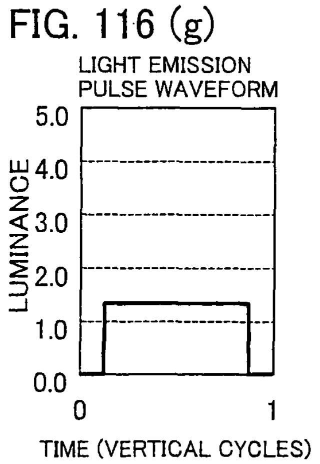


FIG. 116 (h)

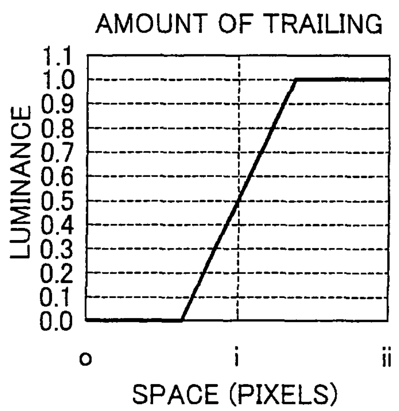


FIG. 116 (i)

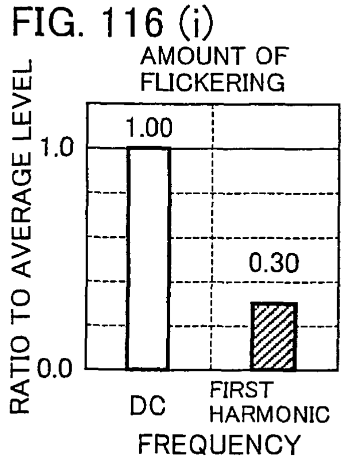

FIG. 117 (a)

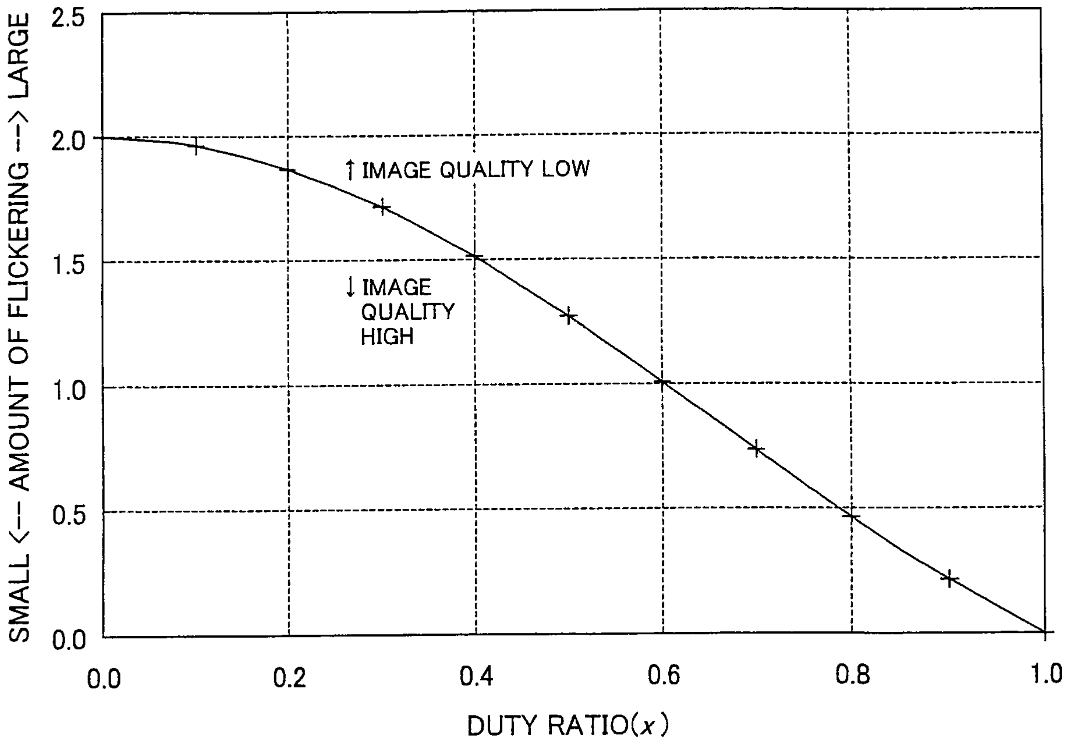


FIG. 117 (b)

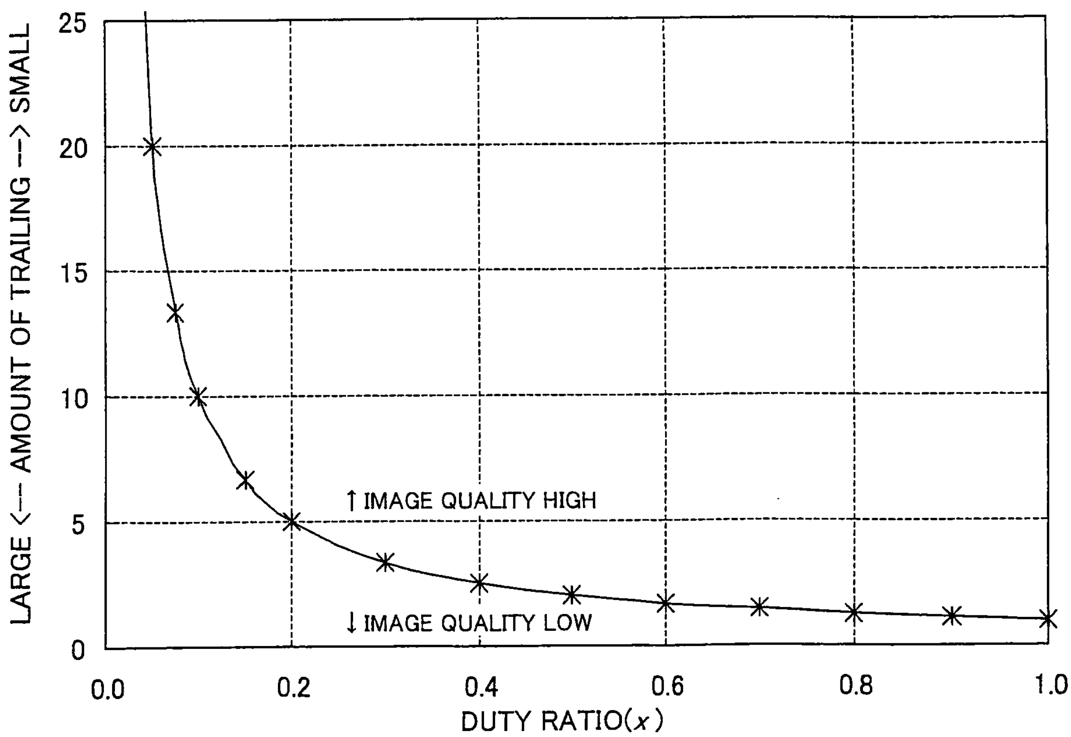

FIG. 118

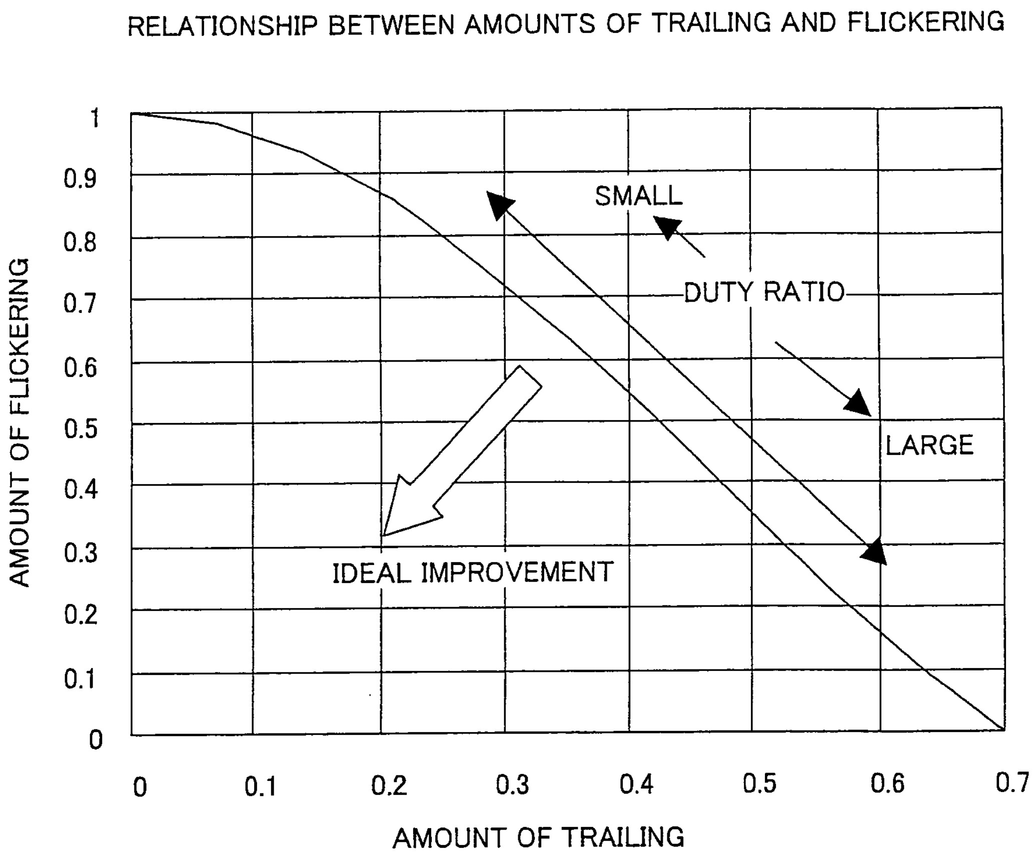
RELATIONSHIP BETWEEN AMOUNTS OF TRAILING AND FLICKERING
AMOUNT OF FLICKERING
1
0.9
0.8
0.7
0.6
0.5
0.4
0.3
0.2
0.1
0
SMALL
DUTY RATIO
LARGE
IDEAL IMPROVEMENT
0
0.1
0.2
0.3
0.4
0.5
0.6
0.7
AMOUNT OF TRAILING

**INTERNATIONAL SEARCH REPORT**

International application No.
PCT/JP2004/013856

A. CLASSIFICATION OF SUBJECT MATTER
Int.Cl[7] G09G3/36, 3/20, G02F1/133

According to International Patent Classification (IPC) or to both national classification and IPC

B. FIELDS SEARCHED

Minimum documentation searched (classification system followed by classification symbols)
Int.Cl[7] G09G3/36, 3/20, G02F1/133

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2002-156950 A (Hitachi, Ltd.), 31 May, 2002 (31.05.02), Par. Nos. [0064] to [0100]; Figs. 9 to 30 & US 2002/0057238 A1 & KR 2002020180 A | 1-5,61-68<br>6-60,69-75 |
| Y | JP 2003-316318 A (Sony Corp.), 07 November, 2003 (07.11.03), Par. Nos. [0006] to [0015]; Figs. 14 to 16 (Family: none) | 6-11,69-74 |
| Y | JP 2000-105575 A (International Business Machines Corp.), 11 April, 2000 (11.04.00), Par. Nos. [0015] to [0032]; Fig. 1 to 3 & US 6753835 B1 | 6-11,69-74 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 December, 2004 (21.12.04) | 18 January, 2005 (18.01.05) |
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

International application No.
PCT/JP2004/013856

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2000-56738 A (Alps Electric Co., Ltd.), 25 February, 2000 (25.02.00), Par. Nos. [0015] to [0023]; Figs. 1 to 5 & CN 1247362 A & TW 451180 A | 12-17,75 |
| Y | JP 3-284791 A (Matsushita Electric Industrial Co., Ltd.), 16 December, 1991 (16.12.91), Page 6, upper right column, line 17 to page 7, upper left column, line 5; Figs. 5 to 6, 13 (Family: none) | 12-17,75 |
| Y | JP 11-194317 A (Mitsubishi Electric Corp.), 21 July, 1999 (21.07.99), Par. Nos. [0036] to [0046]; Figs. 1 to 3 (Family: none) | 18-19,22-55 |
| Y | JP 2004-45634 A (Seiko Epson Corp.), 12 February, 2004 (12.02.04), Par. Nos. [0019] to [0031]; Figs. 3 to 6 (Family: none) | 20-21,56-60 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 112022851999 A
- JP 11202285 A
- JP 32847911991 A
- JP 3284791 A
- JP 93257151997 A
- JP 9325715 A
- JP 85009151996 W
- JP 8500915 A
- JP 2002287696 A


### Non-patent literature cited in the description


- LCDs offer better moving image display, PDPs fight back with lower power consumption. *Nikkei Electronics,* 18 November 2002, 110
- High quality moving image display technology on LCDs. *Display Device Monthly,* June 2003, 100